# EUROPEAN PATENT APPLICATION

(11) **EP 4 209 132 A1**
(43) Date of publication of application: **12.07.2023**
(21) Application number: 21864384.9
(22) Date of filing: 01.09.2021
(51) Int. Cl.: A23L 2/60, A23L 2/00, A23L 2/38, A23L 2/52, A23L 27/00, A23L 27/21, A23L 27/30

(54) **BEVERAGE WITH INCREASED SWEETNESS**

(30) Priority: 02.09.2020 JP 2020147855; 02.09.2020 JP 2020147857; 02.09.2020 JP 2020147865; 02.09.2020 JP 2020147870; 05.11.2020 JP 2020185326; 05.11.2020 JP 2020185329; 05.11.2020 JP 2020185301; 05.11.2020 JP 2020185305
(71) Applicant: Suntory Holdings Limited, Osaka 530-8203 (JP)
(72) Inventor: TERAMOTO Yuki, Kawasaki-shi, Kanagawa 211-0067 (JP); OHKURI Tadahiro, Kawasaki-shi, Kanagawa 211-0067 (JP); FUJIE Akiko, Kawasaki-shi, Kanagawa 211-0067 (JP); UTSUMI Yui, Kawasaki-shi, Kanagawa 211-0067 (JP); YOSHIDA Junki, Kawasaki-shi, Kanagawa 211-0067 (JP)
(74) Representative: Mewburn Ellis LLP
(86) International application number: PCT/JP2021/032209
(87) International publication number: WO 2022/050327

(57) **Abstract**

There has been a demand for development of a novel method to increase the sweetness of a beverage containing a sweetener. One aspect of the present invention provides a beverage that contains (a) a high intensity sweetener in an amount equivalent to sweetness intensity X1 and (b) an amino acid or a derivative or salt thereof in an amount of less than a taste perception threshold value, that has a sweetness corresponding to sweetness intensity X3 derived from the components (a) and (b), that satisfies 0.1 < X1 < X3, and that is one selected from effervescent beverages and flavored waters.

## Description

### Technical Field

The present invention relates to flavored water with an enhanced sweetness and a method for producing such flavored water. The present invention also relates to a method for enhancing a degree of sweetness of flavored water and a concentrate for providing flavored water.

The present invention also relates to a sparkling beverage with an enhanced sweetness and a method for producing such a sparkling beverage. The present invention also relates to a method for enhancing a degree of sweetness of a sparkling beverage and a concentrate for providing a sparkling beverage.

### Background Art

Humans have five sensory systems, and the sense of taste is one of the sensory systems of humans. The taste receptor organ to receive tastes is called taste buds, which exist on the fungiform papillae existing over a wide area, mainly on the tip of the tongue, on the vallate papillae existing on a limited area of the back of the tongue, and on the foliate papillae. The taste buds are a cell assembly composed of elongate cells, called taste cells, and basal cells. The taste cells protrude microvilli toward the tongue surface, and form synapses at bottom of the cells with taste nerve fibers entering the taste buds. Tastes we usually sense are transmitted as taste information via the taste nerves to the brain, where the tastes are perceived. Known taste receptors of sweetness include T1R2 and T1R3. T1R2 and T1R3 are reported to form hetero-dimers (Non-patent Literatures 1 to 3).

Although various studies have been made on the sense of taste, little has been revealed yet in this field. We usually experience various tastes of foods. Foods that seem to be tasty have appropriately mixed and well-harmonized tastes. The taste of foods may be tasted as a single taste in some cases, but is often tasted as a mixed taste of various tastes, which are associated with one another.

Meanwhile, foods have been required to have lower calories in addition to a good taste in recent years. This relates to a fact that lifestyle-related diseases such as obesity and diabetes are regarded as a problem.

However, to produce lower-calorie foods, their sugar concentration has to be maintained low. This is an obstruction in the case of providing foods that exhibit low calories and a good taste.

As an example of a contrast effect, which is an interaction of tastes, there has been long known a phenomenon in which addition of salt to sweet red-bean soup enhances sweetness. There is an example that reports the interaction between saltiness and sweetness by focusing on this phenomenon, and it is concluded that the interaction between sweetness and saltiness requires sweetness that is strong to a certain degree (a 150 solution) and a salt concentration that is high to a certain degree (0.1 to 0.2%) (Non Patent Literature 4).

Further, studies have been also made on the increase of a sweetness by adding sodium in a low concentration to a natural sugar and a specific high-intensity sweetener (Patent Literature 1).

### Citation List

### Patent Literature

[Patent Literature 1] International Publication No. WO2018/225817

### Non Patent Literature

[Non Patent Literature 1] Zhao G. Q., Zhang Y., Hoon M. A., Chandrashekar J., Erlenbach I., Ryba N. J. P., and Zuker1 C. S., Cell, 2003, Vol. 115, 255-266
[Non Patent Literature 2] Li X, Staszewski L, Xu H, Durick K, Zoller M, Adler E., Proc Natl Acad Sci U S A. 2002,99(7), 4692-4696.
[Non Patent Literature 3] Fernstrom J. D., Munger S. D., Sclafani A., de Araujo I. E., Roberts A., and Molinary S., J. Nutr. 2012. Vol. 142: 1134S-1141S
[Non Patent Literature 4] Ayumi Uchida, Nao Takagi, Rieko Horikiri, Miho Matsue, Yumiko Uchiyama and Masashi Omori, Research Bulletin of Otsuma Women's University for Home Economics -No.49 (2013. 3)

### Summary of Invention

### Problem to be Solved by the Invention

Under the above circumstances, the development of a novel method capable of enhancing a sweetness of beverage containing a sweetener has been much awaited.

### Means for Solving the Problems

The present inventors succeeded for the first time in enhancing a sweetness of flavored water containing a sweetener by containing a sweetener, and an amino acid or a derivative or a salt thereof in a concentration so low as to not be detectable by the human, or containing a sweetener, and sodium and an amino acid or a derivative or a salt thereof in concentrations so low as to not be detectable by the human.

The present inventors succeeded for the first time in enhancing a sweetness of a sparkling beverage containing a sweetener by containing a sweetener, and an amino acid or a derivative or a salt thereof in a concentration so low as to not be detectable by the human, or containing a sweetener, and sodium and an amino acid or a derivative or a salt thereof in concentrations so low as to not be detectable by the human.

That is, the present invention comprises inventions of the following embodiments.
[1] A beverage comprising:
   (a) a high-intensity sweetener in an amount corresponding to a sweetness intensity X1, and
   (b) an amino acid or a derivative or a salt thereof in an amount less than a taste recognition threshold,
      wherein the beverage has a sweetness of a sweetness intensity X3 exhibited by the components (a) and (b), 0.1 < X1 < X3 is satisfied, and the beverage is one selected from a sparkling beverage and flavored water.
[2] A beverage comprising:
   (a) a high-intensity sweetener in an amount corresponding to a sweetness intensity X1,
   (b) an amino acid or a derivative or a salt thereof in an amount less than a taste recognition threshold, and
   (c) 6 to 60 mg/100 ml of sodium,
      wherein the beverage has a sweetness of a sweetness intensity X2 exhibited by the components (a) to (c), 0.1 < X1 < X2 is satisfied, and the beverage is a sparkling beverage.
[3] A beverage comprising:
   (a) a high-intensity sweetener in an amount corresponding to a sweetness intensity X1,
   (b) an amino acid or a derivative or a salt thereof in an amount less than a taste recognition threshold, and
   (c) less than 50 mg/100 ml of sodium,
      wherein the beverage has a sweetness of a sweetness intensity X2 exhibited by the components (a) to (c), 0.1 < X1 < X2 is satisfied, and the beverage is flavored water.
[4] The beverage according to any one of [1] to [3], further comprising a low-intensity sweetener.
[5] The beverage according to any one of [1] to [4], wherein the amino acid comprises an amino acid selected from a basic amino acid, a neutral amino acid having an alkyl group, an OH group or an amide group on a side chain, and a combination thereof.
[6] The beverage according to any one of [1] to [5], wherein the amino acid is one or more selected from an amino acid having a molecular weight of 70 to 260.
[7] The oral composition according to any one of [1] to [6], wherein the amino acid comprises an amino acid selected from glycine, alanine, valine, isoleucine, leucine, serine, threonine, glutamine, asparagine, arginine, lysine, histidine, and a combination thereof.
[8] The beverage according to any one of [1] to [7], wherein an energy is 50 Kcal/100 ml or less.
[9] The beverage according to any one of [4] to [8], wherein a sweetness intensity of the low-intensity sweetener is 0.1 to 5.9.
[10] The beverage according to [2], wherein a gas pressure is 2.2 to 4.0 kgf/cm².
[11] The beverage according to [2] or [10], wherein the beverage is an orange-flavored, lemon-flavored, lime-flavored, grape-flavored, ginger ale-flavored, energy drink-flavored, blackcurrant-flavored or cola-flavored beverage.
[12] The beverage according to [3], wherein an absorbance at a wavelength of 660 nm of the flavored water is 0.06 or less.
[13] The beverage according to [3] or [12], wherein a carbon dioxide pressure at 20°C of the flavored water is less than 1.0 kgf/cm².
[14] The beverage according to any one of [4] to [9], wherein the low-intensity sweetener comprises at least one selected from the group consisting of glucose, sucrose, fructose, maltose, an oligosaccharide, a high-fructose corn syrup, lactose, psicose, allose, tagatose, and a combination thereof.
[15] The beverage according to any one of [1] to [14], wherein the high-intensity sweetener comprises at least one selected from the group consisting of steviol glycoside, a luo han guo extract, mogrol glycoside, a Thaumataococcus daniellii Benth plant-containing sweet component, a Pentadiplandra brazzeana plant-containing sweet component, an artificial sweetener, and a combination thereof.
[16] The beverage according to any one of [1] to [15], wherein the high-intensity sweetener comprises at least one selected from the group consisting of rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, Dulcoside A, Dulcoside C, rubusoside, steviol monoside, steviol bioside, stevioside, a luo han guo extract, mogroside V, thaumatin, brazzein, a Glycyrrhiza extract, saccharine, aspartame, acesulfame K, sucralose, and a combination thereof.
[17] The beverage according to any one of [4] to [16], wherein the beverage comprises one or more amino acids selected from alanine, serine, and glycine, an energy is 50 Kcal/100 ml or less, and the total sweetness intensity of the high-intensity sweetener and the low-intensity sweetener is 6 or more.
[18] The beverage according to any one of [1] to [17], wherein the beverage is packed in a container.
[19] A method for producing the beverage according to any one of [1] and [4] to [18], comprising, to a raw material,
   (a) adding a high-intensity sweetener in an amount corresponding to a sweetness intensity X1, and
   (b) adding an amino acid or a derivative or a salt thereof in an amount less than a taste recognition threshold.
[20] A method for producing the beverage according to any one of [2] and [4] to [18], comprising, to a raw material,
   (a) adding a high-intensity sweetener in an amount corresponding to a sweetness intensity X1,
   (b) adding an amino acid or a derivative or a salt thereof in an amount less than a taste recognition threshold, and
   (c) adding sodium so that a content of sodium in the beverage is 6 to 60 mg/100 ml.
[21] A method for producing the beverage according to any one of [3] to [18], comprising, to a raw material,
   (a) adding a high-intensity sweetener in an amount corresponding to a sweetness intensity X1,
   (b) adding an amino acid or a derivative or a salt thereof in an amount less than a taste recognition threshold, and
   (c) adding sodium so that a content of sodium in the beverage is less than 50 mg/100 ml.
[22] A concentrate for providing the beverage according to any one of [1] and [4] to [18], comprising:
   (a) a high-intensity sweetener in an amount corresponding to a sweetness intensity X1a, and
   (b) an amino acid or a derivative or a salt thereof in an amount less than 10 fold of a taste recognition threshold.
[23] A concentrate for providing the beverage according to any one of [2] and [4] to [18], comprising:
   (a) a high-intensity sweetener in an amount corresponding to a sweetness intensity X1a,
   (b) an amino acid or a derivative or a salt thereof in an amount less than 10 fold of a taste recognition threshold, and
   (c) 60 to 600 mg/100 ml of sodium.
[24] A concentrate for providing the beverage according to any one of [3] to [18], comprising:
   (a) a high-intensity sweetener in an amount corresponding to a sweetness intensity X1a,
   (b) an amino acid or a derivative or a salt thereof in an amount less than 10 fold of a taste recognition threshold, and
   (c) less than 500 mg/100 ml of sodium.

[A1] (Corresponding to Japanese Patent Applications No. 2020-147865/2020-185301)
   Flavored water comprising:
   (a) a high-intensity sweetener in an amount corresponding to a sweetness intensity Xa, and
   (b) an amino acid or a derivative or a salt thereof in an amount less than a taste recognition threshold,
      wherein the flavored water has a sweetness of a sweetness intensity Xb exhibited by the components (a) and (b) and 0.1 < Xa < Xb is satisfied.
[A2] The flavored water according to [A1], further comprising a low-intensity sweetener.
[A3] The flavored water according to [A1] or [A2], wherein the amino acid comprises an amino acid selected from a basic amino acid, a neutral amino acid having an alkyl group, an OH group or an amide group on a side chain, and a combination thereof.
[A4] The flavored water according to any of [A1] to [A3], wherein the amino acid is one or more selected from an amino acid having a molecular weight of 70 to 260.
[A5] The flavored water according to any of [A1] to [A4], wherein the amino acid comprises an amino acid selected from glycine, alanine, valine, isoleucine, leucine, serine, threonine, glutamine, asparagine, arginine, lysine, histidine, and a combination thereof.
[A6] The flavored water according to any of [A1] to [A5], wherein an energy is 50 Kcal/100 ml or less.
[A7] The flavored water according to any of [A2] to [A6], wherein a sweetness intensity of the low-intensity sweetener is 0.1 to 5.9.
[A8] The flavored water according to any of [A1] to [A7], wherein an absorbance at a wavelength of 660 nm of the flavored water is 0.06 or less.
[A9] The flavored water according to any of [A1] to [A8], wherein a carbon dioxide pressure at 20°C of the flavored water is less than 1.0 kgf/cm².
[A10] The flavored water according to any of [A2] to [A9], wherein the low-intensity sweetener comprises at least one selected from the group consisting of glucose, sucrose, fructose, maltose, an oligosaccharide, a high-fructose corn syrup, lactose, psicose, allose, tagatose, and a combination thereof.
[A11] The flavored water according to any of [A1] to [A10], wherein the high-intensity sweetener comprises at least one selected from the group consisting of steviol glycoside, a luo han guo extract, mogrol glycoside, a Thaumataococcus daniellii Benth plant-containing sweet component, a Pentadiplandra brazzeana plant-containing sweet component, an artificial sweetener, and a combination thereof.
[A12] The flavored water according to any of [A1] to [A11], wherein the high-intensity sweetener comprises at least one selected from the group consisting of rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, Dulcoside A, Dulcoside C, rubusoside, steviol monoside, steviol bioside, stevioside, a luo han guo extract, mogroside V, thaumatin, brazzein, a Glycyrrhiza extract, saccharine, aspartame, acesulfame K, sucralose, and a combination thereof.
[A13] The flavored water according to any of [A2] to [A12], wherein the flavored water comprises one or more amino acids selected from alanine, serine, and glycine, an energy is 50 Kcal/100 ml or less, and the total sweetness intensity of the high-intensity sweetener and the low-intensity sweetener is 6 or more.
[A14] The flavored water according to any of [A1] to [A13], wherein the flavored water is packed in a container.
[A15] A method for producing the flavored water according to any of [A1] to [A14], comprising, to a raw material,
   (a) adding a high-intensity sweetener in an amount corresponding to a sweetness intensity Xa, and
   (b) adding an amino acid or a derivative or a salt thereof in an amount less than a taste recognition threshold.
[A16] A concentrate for providing the flavored water according to any of [A1] to [A15], comprising:
   (a) a high-intensity sweetener in an amount corresponding to a sweetness intensity Xaa, and
   (b) an amino acid or a derivative or a salt thereof in an amount less than 10 fold of a taste recognition threshold.
[A17] A method for enhancing a sweetness intensity of flavored water, wherein the flavored water contains
   (a) a high-intensity sweetener in an amount corresponding to a sweetness intensity Xa, and
   (b) an amino acid or a derivative or a salt thereof in an amount less than a taste recognition threshold.
[A18] Flavored water comprising:
   (a) a high-intensity sweetener in an amount corresponding to a sweetness intensity Xa,
   (b) an amino acid or a derivative or a salt thereof in an amount less than a taste recognition threshold, and
   (c) a low-intensity sweetener in an amount corresponding to a sweetness intensity Xc,
      wherein the flavored water has a sweetness of a sweetness intensity Xd exhibited by the components (a) to (c) and 0.1 < Xa + Xc < Xd is satisfied.
[A19] The flavored water according to [A18], wherein the amino acid comprises an amino acid selected from a basic amino acid, a neutral amino acid having an alkyl group, an OH group or an amide group on a side chain, and a combination thereof.
[A20] The flavored water according to [A18] or [A19], wherein the amino acid is one or more selected from an amino acid having a molecular weight of 70 to 260.
[A21] The flavored water according to any of [A18] to [A20], wherein the amino acid comprises an amino acid selected from glycine, alanine, valine, isoleucine, leucine, serine, threonine, glutamine, asparagine, arginine, lysine, histidine, and a combination thereof.
[A22] The flavored water according to any of [A18] to [A21], wherein an energy is 50 Kcal/100 ml or less.
[A23] The flavored water according to any of [A18] to [A22],
   wherein Xc is 0.1 to 5.9.
[A24] The flavored water according to any of [A18] to [A23], wherein an absorbance at a wavelength of 660 nm of the flavored water is 0.06 or less.
[A25] The flavored water according to any of [A18] to [A24], wherein a carbon dioxide pressure at 20°C of the flavored water is less than 1.0 kgf/cm².
[A26] The flavored water according to any of [A18] to [A25], wherein the low-intensity sweetener comprises at least one selected from the group consisting of glucose, sucrose, fructose, maltose, an oligosaccharide, a high-fructose corn syrup, lactose, psicose, allose, tagatose, and a combination thereof.
[A27] The flavored water according to any of [A18] to [A26], wherein the high-intensity sweetener comprises at least one selected from the group consisting of steviol glycoside, a luo han guo extract, mogrol glycoside, a Thaumataococcus daniellii Benth plant-containing sweet component, a Pentadiplandra brazzeana plant-containing sweet component, an artificial sweetener, and a combination thereof.
[A28] The flavored water according to any of [A18] to [A27], wherein the high-intensity sweetener comprises at least one selected from the group consisting of rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, Dulcoside A, Dulcoside C, rubusoside, steviol monoside, steviol bioside, stevioside, a luo han guo extract, mogroside V, thaumatin, brazzein, a Glycyrrhiza extract, saccharine, aspartame, acesulfame K, sucralose, and a combination thereof.
[A29] The flavored water according to any of [A18] to [A28], wherein the flavored water comprises one or more amino acids selected from alanine, serine, and glycine, an energy is 50 Kcal/100 ml or less, and Xa + Xc is 6 or more.
[A30] The flavored water according to any of [A18] to [A29], wherein the flavored water is packed in a container.
[A31] A method for producing the flavored water according to any of [A18] to [A30], comprising, to a raw material,
   (a) adding a high-intensity sweetener in an amount corresponding to a sweetness intensity Xa, and
   (b) adding an amino acid or a derivative or a salt thereof in an amount less than a taste recognition threshold.
[A32] A concentrate for providing the flavored water according to any of [A18] to [A30], comprising:
   (a) a high-intensity sweetener in an amount corresponding to a sweetness intensity Xaa, and
   (b) an amino acid or a derivative or a salt thereof in an amount less than 10 fold of a taste recognition threshold.

[B1] (Corresponding to Japanese Patent Applications No. 2020-147870/2020-185305)
   Flavored water comprising:
   (a) a high-intensity sweetener in an amount corresponding to a sweetness intensity X1,
   (b) an amino acid or a derivative or a salt thereof in an amount less than a taste recognition threshold, and
   (c) less than 50 mg/100 ml of sodium,
      wherein the flavored water has a sweetness of a sweetness intensity X2 exhibited by the components (a) to (c) and 0.1 < X1 < X2 is satisfied.
[B2] The flavored water according to [B1], wherein the flavored water has a sweetness of a sweetness intensity X3 exhibited by the components (a) and (b) and 0.1 < X1 < X3 < X2 is satisfied.
[B3] The flavored water according to [B1] or [B2], further comprising a low-intensity sweetener.
[B4] The flavored water according to any of [B1] to [B3], wherein the amino acid comprises an amino acid selected from a basic amino acid, a neutral amino acid having an alkyl group, an OH group or an amide group on a side chain, and a combination thereof.
[B5] The flavored water according to any of [B1] to [B4], wherein the amino acid is one or more selected from an amino acid having a molecular weight of 70 to 260.
[B6] The flavored water according to any of [B1] to [B5], wherein the amino acid comprises an amino acid selected from glycine, alanine, valine, isoleucine, leucine, serine, threonine, glutamine, asparagine, arginine, lysine, histidine, and a combination thereof.
[B7] The flavored water according to any of [B1] to [B6], wherein a content of sodium is 1 to 25 mg/100 ml.
[B8] The flavored water according to any of [B1] to [B7], wherein an energy is 50 Kcal/100 ml or less.
[B9] The flavored water according to any of [B3] to [B8], wherein a sweetness intensity of the low-intensity sweetener is 0.1 to 5.9.
[B10] The flavored water according to any of [B1] to [B9], wherein an absorbance at a wavelength of 660 nm of the flavored water is 0.06 or less.
[B11] The flavored water according to any of [B1] to [B10], wherein a carbon dioxide pressure at 20°C of the flavored water is less than 1.0 kgf/cm².
[B12] The flavored water according to any of [B3] to [B11], wherein the low-intensity sweetener comprises at least one selected from the group consisting of glucose, sucrose, fructose, maltose, an oligosaccharide, a high-fructose corn syrup, lactose, psicose, allose, tagatose, and a combination thereof.
[B13] The flavored water according to any of [B1] to [B12], wherein the high-intensity sweetener comprises at least one selected from the group consisting of steviol glycoside, a luo han guo extract, mogrol glycoside, a Thaumataococcus daniellii Benth plant-containing sweet component, a Pentadiplandra brazzeana plant-containing sweet component, an artificial sweetener, and a combination thereof.
[B14] The flavored water according to any of [B1] to [B13], wherein the high-intensity sweetener comprises at least one selected from the group consisting of rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, Dulcoside A, Dulcoside C, rubusoside, steviol monoside, steviol bioside, stevioside, a luo han guo extract, mogroside V, thaumatin, brazzein, a Glycyrrhiza extract, saccharine, aspartame, acesulfame K, sucralose, and a combination thereof.
[B15] The flavored water according to any of [B1] to [B14], wherein the sodium is contained in the form of at least one selected from the group consisting of sodium chloride, sodium hydroxide, sodium malate, sodium sulfate, sodium citrate, sodium phosphate, sodium carbonate, sodium disulfide, sodium bicarbonate, sodium alginate, sodium arginate, sodium glucoheptanoate, sodium gluconate, monosodium glutamate, sodium tartrate, monosodium aspartate, sodium lactate, sodium caseinate, sodium ascorbate, and a mixture thereof.
[B16] The flavored water according to any of [B3] to [B15], wherein the flavored water comprises one or more amino acids selected from alanine, serine, and glycine, and 1 to 25 mg/100 ml of sodium, an energy is 50 Kcal/100 ml or less, and the total sweetness intensity of the high-intensity sweetener and the low-intensity sweetener is 6 or more.
[B17] The flavored water according to any of [B1] to [B16], wherein the flavored water is packed in a container.
[B18] A method for producing the flavored water according to any of [B1] to [B17], comprising, to a raw material,
   (a) adding a high-intensity sweetener in an amount corresponding to a sweetness intensity X1,
   (b) adding an amino acid or a derivative or a salt thereof in an amount less than a taste recognition threshold, and
   (c) adding sodium so that a content of sodium in the beverage is less than 50 mg/100 ml.
[B19] A concentrate for providing the flavored water according to any of [B1] to [B18], comprising:
   (a) a high-intensity sweetener in an amount corresponding to a sweetness intensity X1a,
   (b) an amino acid or a derivative or a salt thereof in an amount less than 10 fold of a taste recognition threshold, and
   (c) less than 500 mg/100 ml of sodium.
[B20] A method for enhancing a sweetness intensity of flavored water, wherein the flavored water contains
   (a) a high-intensity sweetener in an amount corresponding to a sweetness intensity X1,
   (b) an amino acid or a derivative or a salt thereof in an amount less than a taste recognition threshold, and
   (c) less than 50 mg/100 ml of sodium.
[B21] Flavored water comprising:
   (a) a high-intensity sweetener in an amount corresponding to a sweetness intensity X1,
   (b) an amino acid or a derivative or a salt thereof in an amount less than a taste recognition threshold,
   (c) less than 50 mg/100 ml of sodium, and
   (d) a low-intensity sweetener in an amount corresponding to a sweetness intensity X4,
      wherein the flavored water has a sweetness of a sweetness intensity X5 exhibited by the components (a) to (d) and 0.1 < X1 + X4 < X5 is satisfied.
[B22] The flavored water according to [B21], wherein the amino acid comprises an amino acid selected from a basic amino acid, a neutral amino acid having an alkyl group, an OH group or an amide group on a side chain, and a combination thereof.
[B23] The flavored water according to [B21] or [B22], wherein the amino acid is one or more selected from an amino acid having a molecular weight of 70 to 260.
[B24] The flavored water according to any of [B21] to [B23], wherein the amino acid comprises an amino acid selected from glycine, alanine, valine, isoleucine, leucine, serine, threonine, glutamine, asparagine, arginine, lysine, histidine, and a combination thereof.
[B25] The flavored water according to any of [B21] to [B24], wherein a content of sodium is 1 to 25 mg/100 ml.
[B26] The flavored water according to any of [B21] to [B25], wherein an energy is 50 Kcal/100 ml or less.
[B27] The flavored water according to any of [B21] to [B26], wherein X4 is 0.1 to 5.9.
[B28] The flavored water according to any of [B21] to [B27], wherein an absorbance at a wavelength of 660 nm of the flavored water is 0.06 or less.
[B29] The flavored water according to any of [B21] to [B28], wherein a carbon dioxide pressure at 20°C of the flavored water is less than 1.0 kgf/cm².
[B30] The flavored water according to any of [B21] to [B29], wherein the low-intensity sweetener comprises at least one selected from the group consisting of glucose, sucrose, fructose, maltose, an oligosaccharide, a high-fructose corn syrup, lactose, psicose, allose, tagatose, and a combination thereof.
[B31] The flavored water according to any of [B21] to [B30], wherein the high-intensity sweetener comprises at least one selected from the group consisting of steviol glycoside, a luo han guo extract, mogrol glycoside, a Thaumataococcus daniellii Benth plant-containing sweet component, a Pentadiplandra brazzeana plant-containing sweet component, an artificial sweetener, and a combination thereof.
[B32] The flavored water according to any of [B21] to [B31], wherein the high-intensity sweetener comprises at least one selected from the group consisting of rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, Dulcoside A, Dulcoside C, rubusoside, steviol monoside, steviol bioside, stevioside, a luo han guo extract, mogroside V, thaumatin, brazzein, a Glycyrrhiza extract, saccharine, aspartame, acesulfame K, sucralose, and a combination thereof.
[B33] The flavored water according to any of [B21] to [B32], wherein the sodium is contained in the form of at least one selected from the group consisting of sodium chloride, sodium hydroxide, sodium malate, sodium sulfate, sodium citrate, sodium phosphate, sodium carbonate, sodium disulfide, sodium bicarbonate, sodium alginate, sodium arginate, sodium glucoheptanoate, sodium gluconate, monosodium glutamate, sodium tartrate, monosodium aspartate, sodium lactate, sodium caseinate, sodium ascorbate, and a mixture thereof.
[B34] The flavored water according to any of [B21] to [B33], wherein the flavored water comprises one or more amino acids selected from alanine, serine, and glycine, and 1 to 25 mg/100 ml of sodium, an energy is 50 Kcal/100 ml or less, and X1 + X4 is 6 or more.
[B35] The flavored water according to any of [B21] to [B34], wherein the flavored water is packed in a container.
[B36] A method for producing the flavored water according to any of [B21] to [B35], comprising, to a raw material,
   (a) adding a high-intensity sweetener in an amount corresponding to a sweetness intensity X1,
   (b) adding an amino acid or a derivative or a salt thereof in an amount less than a taste recognition threshold, and
   (c) adding sodium so that a content of sodium in the beverage is less than 50 mg/100 ml.
[B37] A concentrate for providing the flavored water according to any of [B21] to [B35], comprising:
   (a) a high-intensity sweetener in an amount corresponding to a sweetness intensity X1a,
   (b) an amino acid or a derivative or a salt thereof in an amount less than 10 fold of a taste recognition threshold, and
   (c) less than 500 mg/100 ml of sodium.
[C1] (Corresponding to Japanese Patent Applications No. 2020-147855/2020-185326)
   A sparkling beverage comprising:
   (a) a high-intensity sweetener in an amount corresponding to a sweetness intensity Xa, and
   (b) an amino acid or a derivative or a salt thereof in an amount less than a taste recognition threshold,
      wherein the sparkling beverage has a sweetness of a sweetness intensity Xb exhibited by the components (a) and (b) and 0.1 < Xa < Xb is satisfied.
[C2] The sparkling beverage according to [C1], further comprising a low-intensity sweetener.
[C3] The sparkling beverage according to [C1] or [C2], wherein the amino acid comprises an amino acid selected from a basic amino acid, a neutral amino acid having an alkyl group, an OH group or an amide group on a side chain, and a combination thereof.
[C4] The sparkling beverage according to any of [C1] to [C3], wherein the amino acid is one or more selected from an amino acid having a molecular weight of 70 to 260.
[C5] The sparkling beverage according to any of [C1] to [C4], wherein the amino acid comprises an amino acid selected from glycine, alanine, valine, isoleucine, leucine, serine, threonine, glutamine, asparagine, arginine, lysine, histidine, and a combination thereof.
[C6] The sparkling beverage according to any of [C1] to [C5], wherein an energy is 50 Kcal/100 ml or less.
[C7] The sparkling beverage according to any of [C2] to [C6], wherein a sweetness intensity of the low-intensity sweetener is 0.1 to 5.9.
[C8] The sparkling beverage according to any of [C1] to [C7], wherein a gas pressure is 2.2 to 4.0 kgf/cm².
[C9] The sparkling beverage according to any of [C1] to [C8], wherein the sparkling beverage is an orange-flavored, lemon-flavored, lime-flavored, grape-flavored, ginger ale-flavored, energy drink-flavored, blackcurrant-flavored or cola-flavored beverage.
[C10] The sparkling beverage according to any of [C2] to [C9], wherein the low-intensity sweetener comprises at least one selected from the group consisting of glucose, sucrose, fructose, maltose, an oligosaccharide, a high-fructose corn syrup, lactose, psicose, allose, tagatose, and a combination thereof.
[C11] The sparkling beverage according to any of [C1] to [C10], wherein the high-intensity sweetener comprises at least one selected from the group consisting of steviol glycoside, a luo han guo extract, mogrol glycoside, a Thaumataococcus daniellii Benth plant-containing sweet component, a Pentadiplandra brazzeana plant-containing sweet component, an artificial sweetener, and a combination thereof.
[C12] The sparkling beverage according to any of [C1] to [C11], wherein the high-intensity sweetener comprises at least one selected from the group consisting of rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, Dulcoside A, Dulcoside C, rubusoside, steviol monoside, steviol bioside, stevioside, a luo han guo extract, mogroside V, thaumatin, brazzein, a Glycyrrhiza extract, saccharine, aspartame, acesulfame K, sucralose, and a combination thereof.
[C13] The sparkling beverage according to any of [C2] to [C12], wherein the sparkling beverage comprises one or more amino acids selected from alanine, serine, and glycine, an energy is 50 Kcal/100 ml or less, and the total sweetness intensity of the high-intensity sweetener and the low-intensity sweetener is 6 or more.
[C14] The sparkling beverage according to any of [C1] to [C13], wherein the sparkling beverage is packed in a container.
[C15] A method for producing the sparkling beverage according to any of [C1] to [C14], comprising, to a raw material,
   (a) adding a high-intensity sweetener in an amount corresponding to a sweetness intensity Xa, and
   (b) adding an amino acid or a derivative or a salt thereof in an amount less than a taste recognition threshold.
[C16] A concentrate for providing the sparkling beverage according to any of [C1] to [C15], comprising:
   (a) a high-intensity sweetener in an amount corresponding to a sweetness intensity Xaa, and
   (b) an amino acid or a derivative or a salt thereof in an amount less than 10 fold of a taste recognition threshold.
[C17] A method for enhancing a sweetness intensity of sparkling beverage, wherein the sparkling beverage contains
   (a) a high-intensity sweetener in an amount corresponding to a sweetness intensity Xa, and
   (b) an amino acid or a derivative or a salt thereof in an amount less than a taste recognition threshold.
[C18] A sparkling beverage comprising:
   (a) a high-intensity sweetener in an amount corresponding to a sweetness intensity Xa,
   (b) an amino acid or a derivative or a salt thereof in an amount less than a taste recognition threshold, and
   (c) a low-intensity sweetener in an amount corresponding to a sweetness intensity Xc,
      wherein the sparkling beverage has a sweetness of a sweetness intensity Xd exhibited by the components (a) to (c) and 0.1 < Xa + Xc < Xd is satisfied.
[C19] The sparkling beverage according to [C18], wherein the amino acid comprises an amino acid selected from a basic amino acid, a neutral amino acid having an alkyl group, an OH group or an amide group on a side chain, and a combination thereof.
[C20] The sparkling beverage according to [C18] or [C19], wherein the amino acid is one or more selected from an amino acid having a molecular weight of 70 to 260.
[C21] The sparkling beverage according to any of [C18] to [C20], wherein the amino acid comprises an amino acid selected from glycine, alanine, valine, isoleucine, leucine, serine, threonine, glutamine, asparagine, arginine, lysine, histidine, and a combination thereof.
[C22] The sparkling beverage according to any of [C18] to [C21], wherein an energy is 50 Kcal/100 ml or less.
[C23] The sparkling beverage according to any of [C18] to [C22], wherein Xc is 0.1 to 5.9.
[C24] The sparkling beverage according to any of [C18] to [C23], wherein a gas pressure is 2.2 to 4.0 kgf/cm².
[C25] The sparkling beverage according to any of [C18] to [C24], wherein the sparkling beverage is an orange-flavored, lemon-flavored, lime-flavored, grape-flavored, ginger ale-flavored, energy drink-flavored, blackcurrant-flavored or cola-flavored beverage.
[C26] The sparkling beverage according to any of [C18] to [C25], wherein the low-intensity sweetener comprises at least one selected from the group consisting of glucose, sucrose, fructose, maltose, an oligosaccharide, a high-fructose corn syrup, lactose, psicose, allose, tagatose, and a combination thereof.
[C27] The sparkling beverage according to any of [C18] to [C26], wherein the high-intensity sweetener comprises at least one selected from the group consisting of steviol glycoside, a luo han guo extract, mogrol glycoside, a Thaumataococcus daniellii Benth plant-containing sweet component, a Pentadiplandra brazzeana plant-containing sweet component, an artificial sweetener, and a combination thereof.
[C28] The sparkling beverage according to any of [C18] to [C27], wherein the high-intensity sweetener comprises at least one selected from the group consisting of rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, Dulcoside A, Dulcoside C, rubusoside, steviol monoside, steviol bioside, stevioside, a luo han guo extract, mogroside V, thaumatin, brazzein, a Glycyrrhiza extract, saccharine, aspartame, acesulfame K, sucralose, and a combination thereof.
[C29] The sparkling beverage according to any of [C18] to [C28], wherein the sparkling beverage comprises one or more amino acids selected from alanine, serine, and glycine, an energy is 50 Kcal/100 ml or less, and Xa + Xc is 6 or more.
[C30] The sparkling beverage according to any of [C18] to [C29], wherein the sparkling beverage is packed in a container.
[C31] A method for producing the sparkling beverage according to any of [C18] to [C30], comprising, to a raw material,
   (a) adding a high-intensity sweetener in an amount corresponding to a sweetness intensity Xa, and
   (b) adding an amino acid or a derivative or a salt thereof in an amount less than a taste recognition threshold.
[C32] A concentrate for providing the sparkling beverage according to any of [C18] to [C30], comprising:
   (a) a high-intensity sweetener in an amount corresponding to a sweetness intensity Xaa, and
   (b) an amino acid or a derivative or a salt thereof in an amount less than 10 fold of a taste recognition threshold.
[D1] (Corresponding to Japanese Patent Applications No. 2020-147857/2020-185329)
   A sparkling beverage comprising:
   (a) a high-intensity sweetener in an amount corresponding to a sweetness intensity X1,
   (b) an amino acid or a derivative or a salt thereof in an amount less than a taste recognition threshold, and
   (c) 6 to 60 mg/100 ml of sodium,
      wherein the sparkling beverage has a sweetness of a sweetness intensity X2 exhibited by the components (a) to (c) and 0.1 < X1 < X2 is satisfied.
[D2] The sparkling beverage according to [D1], wherein the sparkling beverage has a sweetness of a sweetness intensity X3 exhibited by the components (a) and (b) and 0.1 < X1 < X3 < X2 is satisfied.
[D3] The sparkling beverage according to [D1] or [D2], further comprising a low-intensity sweetener.
[D4] The sparkling beverage according to any of [D1] to [D3], wherein the amino acid comprises an amino acid selected from a basic amino acid, a neutral amino acid having an alkyl group, an OH group or an amide group on a side chain, and a combination thereof.
[D5] The sparkling beverage according to any of [D1] to [D4], wherein the amino acid is one or more selected from an amino acid having a molecular weight of 70 to 260.
[D6] The sparkling beverage according to any of [D1] to [D5], wherein the amino acid comprises an amino acid selected from glycine, alanine, valine, isoleucine, leucine, serine, threonine, glutamine, asparagine, arginine, lysine, histidine, and a combination thereof.
[D7] The sparkling beverage according to any of [D1] to [D6], wherein a content of sodium is 6 to 50 mg/100 ml.
[D8] The sparkling beverage according to any of [D1] to [D7], wherein an energy is 50 Kcal/100 ml or less.
[D9] The sparkling beverage according to any of [D3] to [D8], wherein a sweetness intensity of the low-intensity sweetener is 0.1 to 5.9.
[D10] The sparkling beverage according to any of [D1] to [D9], wherein a gas pressure is 2.2 to 4.0 kgf/cm².
[D11] The sparkling beverage according to any of [D1] to [D10], wherein the sparkling beverage is an orange-flavored, lemon-flavored, lime-flavored, grape-flavored, ginger ale-flavored, energy drink-flavored, blackcurrant-flavored or cola-flavored beverage.
[D12] The sparkling beverage according to any of [D3] to [D11], wherein the low-intensity sweetener comprises at least one selected from the group consisting of glucose, sucrose, fructose, maltose, an oligosaccharide, a high-fructose corn syrup, lactose, psicose, allose, tagatose, and a combination thereof.
[D13] The sparkling beverage according to any of [D1] to [D12], wherein the high-intensity sweetener comprises at least one selected from the group consisting of steviol glycoside, a luo han guo extract, mogrol glycoside, a Thaumataococcus daniellii Benth plant-containing sweet component, a Pentadiplandra brazzeana plant-containing sweet component, an artificial sweetener, and a combination thereof.
[D14] The sparkling beverage according to any of [D1] to [D13], wherein the high-intensity sweetener comprises at least one selected from the group consisting of rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, Dulcoside A, Dulcoside C, rubusoside, steviol monoside, steviol bioside, stevioside, a luo han guo extract, mogroside V, thaumatin, brazzein, a Glycyrrhiza extract, saccharine, aspartame, acesulfame K, sucralose, and a combination thereof.
[D15] The sparkling beverage according to any of [D1] to [D14], wherein the sodium is contained in the form of at least one selected from the group consisting of sodium chloride, sodium hydroxide, sodium malate, sodium sulfate, sodium citrate, sodium phosphate, sodium carbonate, sodium disulfide, sodium bicarbonate, sodium alginate, sodium arginate, sodium glucoheptanoate, sodium gluconate, monosodium glutamate, sodium tartrate, monosodium aspartate, sodium lactate, sodium caseinate, sodium ascorbate, and a mixture thereof.
[D16] The sparkling beverage according to any of [D3] to [D15], wherein the sparkling beverage comprises one or more amino acids selected from alanine, serine, and glycine, and 6 to 50 mg/100 ml of sodium, an energy is 50 Kcal/100 ml or less, and the total sweetness intensity of the high-intensity sweetener and the low-intensity sweetener is 6 or more.
[D17] The sparkling beverage according to any of [D1] to [D16], wherein the sparkling beverage is packed in a container.
[D18] A method for producing the sparkling beverage according to any of [D1] to [D17], comprising, to a raw material,
   (a) adding a high-intensity sweetener in an amount corresponding to a sweetness intensity X1,
   (b) adding an amino acid or a derivative or a salt thereof in an amount less than a taste recognition threshold, and
   (c) adding sodium so that a content of sodium in the beverage is 6 to 60 mg/100 ml.
[D19] A concentrate for providing the sparkling beverage according to any of [D1] to [D18], comprising:
   (a) a high-intensity sweetener in an amount corresponding to a sweetness intensity X1a,
   (b) an amino acid or a derivative or a salt thereof in an amount less than 10 fold of a taste recognition threshold, and
   (c) 60 to 600 mg/100 ml of sodium.
[D20] A method for enhancing a sweetness intensity of a sparkling beverage, wherein the sparkling beverage contains
   (a) a high-intensity sweetener in an amount corresponding to a sweetness intensity X1,
   (b) an amino acid or a derivative or a salt thereof in an amount less than a taste recognition threshold, and
   (c) 6 to 60 mg/100 ml of sodium.
[D21] A sparkling beverage comprising:
   (a) a high-intensity sweetener in an amount corresponding to a sweetness intensity X1,
   (b) an amino acid or a derivative or a salt thereof in an amount less than a taste recognition threshold,
   (c) 6 to 60 mg/100 ml of sodium, and
   (d) a low-intensity sweetener in an amount corresponding to a sweetness intensity X4,
      wherein the sparkling beverage has a sweetness of a sweetness intensity X5 exhibited by the components (a) to (d) and 0.1 < X1 + X4 < X5 is satisfied.
[D22] The sparkling beverage according to [D21], wherein the amino acid comprises an amino acid selected from a basic amino acid, a neutral amino acid having an alkyl group, an OH group or an amide group on a side chain, and a combination thereof.
[D23] The sparkling beverage according to [D21] or [D22], wherein the amino acid is one or more selected from an amino acid having a molecular weight of 70 to 260.
[D24] The sparkling beverage according to any of [D21] to [D23], wherein the amino acid comprises an amino acid selected from glycine, alanine, valine, isoleucine, leucine, serine, threonine, glutamine, asparagine, arginine, lysine, histidine, and a combination thereof.
[D25] The sparkling beverage according to any of [D21] to [D24], wherein a content of sodium is 6 to 50 mg/100 ml.
[D26] The sparkling beverage according to any of [D21] to [D25], wherein an energy is 50 Kcal/100 ml or less.
[D27] The sparkling beverage according to any of [D21] to [D26], wherein X4 is 0.1 to 5.9.
[D28] The sparkling beverage according to any of [D21] to [D27], wherein a gas pressure is 2.2 to 4.0 kgf/cm².
[D29] The sparkling beverage according to any of [D21] to [D28], wherein the sparkling beverage is an orange-flavored, lemon-flavored, lime-flavored, grape-flavored, ginger ale-flavored, energy drink-flavored, blackcurrant-flavored or cola-flavored beverage.
[D30] The sparkling beverage according to any of [D21] to [D29], wherein the low-intensity sweetener comprises at least one selected from the group consisting of glucose, sucrose, fructose, maltose, an oligosaccharide, a high-fructose corn syrup, lactose, psicose, allose, tagatose, and a combination thereof.
[D31] The sparkling beverage according to any of [D21] to [D30], wherein the high-intensity sweetener comprises at least one selected from the group consisting of steviol glycoside, a luo han guo extract, mogrol glycoside, a Thaumataococcus daniellii Benth plant-containing sweet component, a Pentadiplandra brazzeana plant-containing sweet component, an artificial sweetener, and a combination thereof.
[D32] The sparkling beverage according to any of [D21] to [D31], wherein the high-intensity sweetener comprises at least one selected from the group consisting of rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, Dulcoside A, Dulcoside C, rubusoside, steviol monoside, steviol bioside, stevioside, a luo han guo extract, mogroside V, thaumatin, brazzein, a Glycyrrhiza extract, saccharine, aspartame, acesulfame K, sucralose, and a combination thereof.
[D33] The sparkling beverage according to any of [D21] to [D32], wherein the sodium is contained in the form of at least one selected from the group consisting of sodium chloride, sodium hydroxide, sodium malate, sodium sulfate, sodium citrate, sodium phosphate, sodium carbonate, sodium disulfide, sodium bicarbonate, sodium alginate, sodium arginate, sodium glucoheptanoate, sodium gluconate, monosodium glutamate, sodium tartrate, monosodium aspartate, sodium lactate, sodium caseinate, sodium ascorbate, and a mixture thereof.
[D34] The sparkling beverage according to any of [D21] to [D33], wherein the sparkling beverage comprises one or more amino acids selected from alanine, serine, and glycine, and 6 to 50 mg/100 ml of sodium, an energy is 50 Kcal/100 ml or less, and X1 + X4 is 6 or more.
[D35] The sparkling beverage according to any of [D21] to [D34], wherein the sparkling beverage is packed in a container.
[D36] A method for producing the sparkling beverage according to any of [D21] to [D35], comprising, to a raw material,
   (a) adding a high-intensity sweetener in an amount corresponding to a sweetness intensity X1,
   (b) adding an amino acid or a derivative or a salt thereof in an amount less than a taste recognition threshold, and
   (c) adding sodium so that a content of sodium in the beverage is 6 to 60 mg/100 ml.
[D37] A concentrate for providing the sparkling beverage according to any of [D21] to [D35], comprising:
   (a) a high-intensity sweetener in an amount corresponding to a sweetness intensity X1a,
   (b) an amino acid or a derivative or a salt thereof in an amount less than 10 fold of a taste recognition threshold, and
   (c) 60 to 600 mg/100 ml of sodium.

### Advantageous Effects of Invention

According to the method of the present invention, a method for enhancing, not a plain sweetness obtained by an additional amount of a sugar or a high-intensity sweetener used, but a sweetness of flavored water, to exhibit a good taste is provided. The method of the present invention provides flavored water having a good taste with an enhanced sweetness, by means other than control of amounts of a sugar and a sweetener used.

As the method of the present invention, a method for enhancing, not a plain sweetness obtained by an additional amount of a sugar or a high-intensity sweetener used, but a sweetness of a sparkling beverage, to exhibit a good taste is provided. The method of the present invention provides a sparkling beverage having a good taste with an enhanced sweetness, by means other than control of amounts of a sugar and a sweetener used.

### Brief Description of Drawings

Figure 1 is a graph showing sensory evaluation results of Example A2 to Example A7 with respect to Example A1 in Example 1.
Figure 2 is a graph showing sensory evaluation results of Example B2 to Example B7 with respect to Example B1 in Example 1.
Figure 3 is a graph showing sensory evaluation results of Example C2 to Example C7 with respect to Example C1 in Example 2.
Figure 4 is a graph showing sensory evaluation results of Example D2 to Example D7 with respect to Example D1 in Example 2.
Figure 5 is a graph showing sensory evaluation results of Example E2 and Example E3 with respect to Example E1 in Example 3.
Figure 6 is a graph showing sensory evaluation results of Example F2 and Example F3 with respect to Example F1 in Example 3.
Figure 7 is a graph showing sensory evaluation results of Example G2 and Example G3 with respect to Example G1 in Example 3.
Figure 8 is a graph showing sensory evaluation results of Example H2 and Example H3 with respect to Example H1 in Example 3.
Figure 9 is a graph showing sensory evaluation results of Example I2 and Example I3 with respect to Example I1 in Example 3.
Figure 10 is a graph showing sensory evaluation results of Example J2 and Example J3 with respect to Example J1 in Example 3.
Figure 11 is a graph showing sensory evaluation results of Example K2 and Example K3 with respect to Example K1 in Example 4.
Figure 12 is a graph showing sensory evaluation results of Example A2 to Example A7 with respect to Example A1 in Example 5.
Figure 13 is a graph showing sensory evaluation results of Example B2 to Example B7 with respect to Example B1 in Example 5.
Figure 14 is a graph showing sensory evaluation results of Example C2 to Example C7 with respect to Example C1 in Example 6.
Figure 15 is a graph showing sensory evaluation results of Example D2 to Example D7 with respect to Example D1 in Example 6.
Figure 16 is a graph showing sensory evaluation results of Example E2 and Example E3 with respect to Example E1 in Example 7.
Figure 17 is a graph showing sensory evaluation results of Example F2 and Example F3 with respect to Example F1 in Example 7.
Figure 18 is a graph showing sensory evaluation results of Example G2 and Example G3 with respect to Example G1 in Example 7.
Figure 19 is a graph showing sensory evaluation results of Example H2 and Example H3 with respect to Example H1 in Example 7.
Figure 20 is a graph showing sensory evaluation results of Example I2 and Example I3 with respect to Example I1 in Example 7.
Figure 21 is a graph showing sensory evaluation results of Example J2 and Example J3 with respect to Example J1 in Example 7.
Figure 22 is a graph showing sensory evaluation results of Example K2 and Example K3 with respect to Example K1 in Example 8.

### Description of Embodiments

Hereinafter, the present invention will be described in detail. The following embodiments are examples to describe the present invention and do not intend to limit the present invention only to these embodiments. The present invention can be carried out in various embodiments without departing from the spirit of the present invention.

Note that all of the literatures, laid-open publications, patent publications, and other patent literatures cited herein are deemed to be incorporated by reference into the present description. The present specification incorporates the contents of the specifications and the drawings of Japanese Patent Application No. 2020-147865, Japanese Patent Application No. 2020-147870, Japanese Patent Application No. 2020-147855 and Japanese Patent Application No. 2020-147857, each filed on September 2, 2020, from which the present application claims priority, and Japanese Patent Application No. 2020-185301, Japanese Patent Application No. 2020-185305, Japanese Patent Application No. 2020-185326 and Japanese Patent Application No. 2020-185329, each filed on November 5, 2020, from which the present application claims priority.

As used herein, for example, the designation "content of a component A is X mg/100 ml" means that "X mg of a component A is contained in 100 ml of a beverage". A specific gravity of a beverage is approximately 1, and thus "mg/100 g" in a beverage is considered to be the same as "mg/100 ml". For example, the designation "content of a component B is Y ppm" means that "Y ppm of a component B is contained with respect to the total amount (100 mass%) of a beverage".

### 1. Beverage with an enhanced sweetness

### <<First embodiment>>

The present invention provides the following beverage (hereinafter referred to as "the beverage of the present invention") as the first embodiment.

A beverage comprising:
(a) a high-intensity sweetener in an amount corresponding to a sweetness intensity X1, and
(b) an amino acid or a derivative or a salt thereof in an amount less than a taste recognition threshold,
   wherein the beverage has a sweetness of a sweetness intensity X3 exhibited by the components (a) and (b), 0.1 < X1 < X3 is satisfied, and the beverage is one selected from a sparkling beverage and flavored water. In the present embodiment, X1 and X3 respectively correspond to Xa and Xb in the A1-th embodiment (Corresponding to Japanese Patent Applications No. 2020-147865/2020-185301) and the C1-th embodiment (Corresponding to Japanese Patent Applications No. 2020-147855/2020-185326).

### 1-1. Flavored water with an enhanced sweetness

### <<A1-th embodiment>>

The present invention provides the following flavored water (hereinafter also referred to as "the flavored water A of the present invention") as the A1-th embodiment.

Flavored water comprising:
(a) a high-intensity sweetener in an amount corresponding to a sweetness intensity Xa, and
(b) an amino acid or a derivative or a salt thereof in an amount less than a taste recognition threshold,
   wherein the flavored water has a sweetness of a sweetness intensity Xb exhibited by the components (a) and (b) and 0.1 < Xa < Xb is satisfied.

In other words, in the flavored water of the A1-th embodiment of the present invention, the component having a sweetness is (a) a high-intensity sweetener in an amount corresponding to a sweetness intensity Xa, and the sweetness of the flavored water of the present invention is supposed to be a sweetness intensity Xa when calculated. However, the presence of (b) an amino acid or a derivative or a salt thereof in an amount less than a taste recognition threshold, in the flavored water even in a low concentration enhances the sweetness of (a) a high-intensity sweetener in an amount corresponding to a sweetness intensity Xa, to a sweetness intensity Xb (0.1 < Xa < Xb is satisfied herein). The present invention means to possibly include additional components such as a sweetener other than (a), an acidulant, a flavor, vitamin, a coloring, an antioxidant, an emulsifier, a preservative, a seasoning agent, an extract, a pH adjuster, and a quality stabilizer, in addition to these components (a) and (b). The flavored water in an embodiment of the present invention does not contain a substance having a sweetness, as a sweetener, other than the component (a).

Furthermore, the flavored water in a preferable embodiment of the present invention exerts the effect of improving a taste, other than enhancing a sweetness. For example, in the flavored water in an embodiment of the present invention, at least one of "total sweetness", "reduced aftertaste of sweetness", "body, thickness", "flavor intensity", "reduced unpleasant tastes (bitterness, astringency, and the like)" and "saltiness" is preferably improved. In a preferable embodiment of the present invention, "total sweetness" is improved by alanine, glycine or serine. In another preferable embodiment of the present invention, "total sweetness", "body, thickness" and "flavor intensity" are improved by glycine or serine.

### (Flavored water)

In the present invention, the "flavored water" is a beverage obtained by adding a flavor, a fruit juice, an extract, or the like to water such as mineral water (including natural mineral water), and is a beverage which is also called near water and which has an appearance like that of water. In general, the flavored water not only is colorless and clear like water, but also has a flavor, a sweetness, and a sourness of a fruit or the like. The flavored water has a clean taste so as to be capable of being drunk instead of water, and has the property of being drunk easily at the same level as water, or more easily than water.

The flavor which can be included in the flavored water of the present invention is not particularly limited, and examples thereof include fruit-based flavors, citrus-based flavors, mint-based flavors, coffee flavors, cocoa flavors, and tea flavors (including English tea flavors).

In particular, examples of the fruit-based flavor include one or more selected from valencene as a flavor contained in essential oil of orange or the like, linalool as a flavor contained in essential oil of rosewood, lavender, bergamot, coriander or the like, and nootkatone having grapefruit-like aroma, such as d-nootkatone.

The fruit juice which can be included in the flavored water of the present invention is not particularly limited, and examples thereof include fruit juices of one or more selected from orange, tangerine, lemon, grapefruit, lime, pineapple, strawberry, raspberry, blueberry, blackcurrant, cranberry, blueberry, guava, banana, acerola, papaya, passion fruit, mango, apple, grape, peach, ume, pear, apricot, plum, melon, kiwifruit, and quince.

A straight fruit juice, a concentrated fruit juice, or the like can be herein used for the fruit juice, regardless of a production method. The concentrated fruit juice may be prepared by any of a heating concentration method and a freezing concentration method.

In a case where the fruit juice is here used, a clear fruit juice subjected to a clearing treatment in consideration of the influence on a liquid color of the beverage is preferably used. The fruit juice may be subjected to a decoloration treatment. The content of a clear fruit juice is preferably 5.0 mass% or less, more preferably 2.0 mass% or less, further preferably 1.5 mass% or less, and still further preferably 1.0 mass% or less with reference to the total amount (100 mass%) of the flavored water from the viewpoint that the liquid color is kept colorless and clear and from the viewpoint that the liquid color is kept colorless and clear during long storage.

The extract which can be included in the flavored water of the present invention is not particularly limited, and examples thereof include one or more selected from an algae extract, a dried fish extract, a mushroom extract, a grain extract, a tea extract, a vegetable extract, a fruit extract, a herb extract, a mesophyll extract, a bean extract, nut and seed extracts, a yeast extract, and the like.

The absorbance at a wavelength of 660 nm of the flavored water of the present invention is preferably 0.06 or less, more preferably 0.02 or less, and further preferably 0.01 or less. The absorbance at a wavelength of 660 nm serves as an index of clearness, and flavored water having an absorbance of 0.06 or less can be said to be a clear beverage. The lower limit of the absorbance at a wavelength of 660 nm of the flavored water of the present invention is 0.

The absorbance at a wavelength of 660 nm can be herein measured with an ultraviolet-visible spectrophotometer UV-1600, UV-1800, UV-1850 (each manufactured by Shimadzu Corporation), or the like.

The ΔE value of transmitted light of the flavored water of the present invention may be 3.5 or less. Flavored water exhibiting a ΔE value of transmitted light of 3.5 or less can be said to be a colorless beverage. The lower limit of the ΔE value of transmitted light of the flavored water of the present invention is 0.

As used herein, the ΔE value of transmitted light is a value measured according to JIS Z 8722, and can be measured with an ultraviolet-visible spectrophotometer such as ZE2000 (manufactured by Nippon Denshoku Industries Co., Ltd.).

The flavored water of the present invention may be a carbonated beverage, or may be an uncarbonated beverage or a jelly beverage.

The carbon dioxide pressure at 20°C of the flavored water as a carbonated beverage may be 1.0 to 5.0 kgf/cm², 1.0 to 4.5 kgf/cm², 1.0 to 4.0 kgf/cm², 1.0 to 3.5 kgf/cm², 1.0 to 3.0 kgf/cm², 1.0 to 2.5 kgf/cm², 1.0 to 2.0 kgf/cm², 1.2 to 5.0 kgf/cm², 1.2 to 4.5 kgf/cm², 1.2 to 4.0 kgf/cm², 1.2 to 3.5 kgf/cm², 1.2 to 3.0 kgf/cm², 1.2 to 2.5 kgf/cm², 1.2 to 2.0 kgf/cm², 1.5 to 5.0 kgf/cm², 1.5 to 4.5 kgf/cm², 1.5 to 4.0 kgf/cm², 1.5 to 3.5 kgf/cm², 1.5 to 3.0 kgf/cm², 1.5 to 2.5 kgf/cm².

The carbon dioxide pressure at 20°C of the flavored water as an uncarbonated beverage may be less than 1.0 kgf/cm², 0 to 0.9 kgf/cm², 0 to 0.8 kgf/cm², 0 to 0.7 kgf/cm², 0 to 0.6 kgf/cm², 0 to 0.5 kgf/cm², 0 to 0.4 kgf/cm², 0 to 0.3 kgf/cm², 0.1 to 0.9 kgf/cm², 0.1 to 0.8 kgf/cm², 0.1 to 0.7 kgf/cm², 0.1 to 0.6 kgf/cm², 0.1 to 0.5 kgf/cm², 0.1 to 0.4 kgf/cm², 0.1 to 0.3 kgf/cm², 0.2 to 0.9 kgf/cm², 0.2 to 0.8 kgf/cm², 0.2 to 0.7 kgf/cm², 0.2 to 0.6 kgf/cm², 0.2 to 0.5 kgf/cm², 0.2 to 0.4 kgf/cm², or 0.2 to 0.3 kgf/cm².

The carbon dioxide pressure can be herein measured with a gas volume measurement apparatus such as GVA-500A from Kyoto Electronics Manufacturing Co., Ltd. For example, the carbon dioxide pressure may be measured after setting of a sample temperature to 20°C, degassing (snifting) in air in a container in the gas volume measurement apparatus, and shaking.

The flavored water of the present invention may be an alcoholic beverage. The alcoholic beverages refer to beverages containing an alcohol raw material. Examples of the alcohol raw material include brewed liquors, distilled liquors, and mixed liquors. Examples of the brewed liquor include wines and beers. Example of the distilled liquor include spirits (for example, gins, vodkas, rums, tequilas and new spirits, and material alcohols), liquors, whiskies (for example, whiskies and brandies), and *shochus.* The alcoholic beverages herein can be any beverages containing detectable alcohol and, for examples, contain alcohol of 1 vol% or more, 2 vol% or more, 3 vol% or more, 4 vol% or more, and 5 vol% or more.

The form of the flavored water of the present invention is not limited, and may be, for example, a beverage form where a concentrate is dissolved, or a flavored water form packed in a container, which is contained and packed in a container such as a may or a PET bottle.

### [Sweetness intensity]

As used herein, the "sweetness intensity" means an intensity of sweetness of a substance. For example, when the sweetness intensity of sucrose per unit concentration Brix 1 is defined as a degree of sweetness of 1, a degree of sweetness of glucose is 0.6 to 0.7 (median value 0.65). A numerical value obtained by multiplying this degree of sweetness by a concentration Brix value of glucose is the sweetness intensity of glucose. Thus, when a concentration of glucose is Brix 1.5, the sweetness intensity of glucose is 0.65 x 1.5 = 0.975.

**Table 1**

| Sugar (D-configuration) | Degree of sweetness |
|---|---|
| Sucrose | 1 |
| Glucose | 0.6-0.7 |
| Fructose | 1.3-1.7 |
| Maltose | 0.4 |
| Fructooligosaccharide | 0.6 |
| Maltooligosaccharide | 0.3 |
| Isomaltooligosaccharide | 0.4-0.5 |
| Galactooligosaccharide | 0.7 |
| High-fructose corn syrup | 0.8-0.9 |
| Lactose | 0.2-0.3 |
| Psicose | 0.7 |
| Allose | 0.8 |
| Tagatose | 0.9 |

The flavored water of the present invention contains, as described above, a high-intensity sweetener in an amount corresponding to a sweetness intensity Xa and has a sweetness having a sweetness intensity Xb exhibited by the components (a) and (b) and 0.1 < Xa < Xb is satisfied.

The Xa in the "sweetness intensity Xa" may be more than 0.1 and 0.5 or less, more than 0.1 and 1.0 or less, more than 0.1 and 1.5 or less, more than 0.1 and 2.0 or less, more than 0.1 and 2.5 or less, more than 0.1 and 3.0 or less, more than 0.1 and 3.5 or less, more than 0.1 and 4.0 or less, more than 0.1 and 4.5 or less, more than 0. 1 and 5.0 or less, more than 0.1 and 5.5 or less, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 2.0 to 2.5, 2.0 to 3.0, 2.0 to 3.5, 2.0 to 4.0, 2.0 to 4.5, 2.0 to 5.0, 2.0 to 5.5, 2.5 to 3.0, 2.5 to 3.5, 2.5 to 4.0, 2.5 to 4.5, 2.5 to 5.0, 2.5 to 5.5, 3.0 to 3.5, 3.0 to 4.0, 3.0 to 4.5, 3.0 to 5.0, 3.0 to 5.5, 2.0 to 6.5, 2.0 to 7.0, 2.0 to 7.5, 2.0 to 6.0, 2.5 to 7.0, 2.5 to 7.5, 2.5 to 6.0, 2.5 to 6.5, 3.0 to 6.0, 3.0 to 6.5, 3.0 to 7.0, 3.0 to 7.5, 3.0 to 8.0, 3.0 to 8.5, 3.0 to 9.0, 3.0 to 9.5, 3.5 to 7.0, 3.5 to 7.5, 3.5 to 8.0, 4.5 to 8.5, 3.5 to 9.0, 3.5 to 9.5, 4.0 to 7.5, 4.0 to 8.0, 4.0 to 8.5, 4.0 to 9.0, 4.0 to 9.5, 3.5 to 8.5, 3.5 to 10.0, 3.5 to 10.5, 3.5 to 11.0, 3.5 to 11.5 or 4.0 to 11.5.

The Xa may also be more than 0.1 and 6.0 or less, more than 0.1 and 6.5 or less, more than 0.1 and 7.0 or less, more than 0.1 and 7.5 or less, more than 0.1 and 8.0 or less, more than 0.1 and 8.5 or less, more than 0.1 and 9.0 or less, more than 0.1 and 9.5 or less, more than 0.1 and 10.0 or less, more than 0.1 and 10.5 or less, more than 0.1 and 11.0 or less, more than 0.1 and 11.5 or less, more than 0.1 and 12.0 or less, more than 0.1 and 13.0 or less, more than 0.1 and 14.0 or less, more than 0.1 and 15.0 or less, more than 0.1 and 16.0 or less, more than 0.1 and 17.0 or less, more than 0.1 and 18.0 or less, 0.5 to 6.0, 0.5 to 6.5, 0.5 to 7.0, 0.5 to 7.5, 0.5 to 8.0, 0.5 to 8.5, 0.5 to 9.0, 0.5 to 9.5, 0.5 to 10.0, 0.5 to 10.5, 0.5 to 11.0, 0.5 to 11.5, 0.5 to 12.0, 0.5 to 13.0, 0.5 to 14.0, 0.5 to 15.0, 0.5 to 16.0, 0.5 to 17.0, 0.5 to 18.0, 1.0 to 6.0, 1.0 to 6.5, 1.0 to 7.0, 1.0 to 7.5, 1.0 to 8.0, 1.0 to 8.5, 1.0 to 9.0, 1. 0 to 9.5, 1.0 to 10.0, 1.0 to 10.5, 1.0 to 11.0, 1.0 to 11.5, 1.0 to 12.0, 1.0 to 13.0, 1.0 to 14.0, 1.0 to 15.0, 1.0 to 16.0, 1.0 to 17.0, 1.0 to 18.0, 1.5 to 6.0, 1.5 to 6.5, 1.5 to 7.0, 1.5 to 7.5, 1.5 to 8.0, 1.5 to 8.5, 1.5 to 9.0, 1.5 to 9.5, 1.5 to 10.0, 1.5 to 10.5, 1.5 to 11.0, 1.5 to 11.5, 1.5 to 12.0, 1.5 to 13.0, 1.5 to 14.0, 1.5 to 15.0, 1.5 to 16.0, 1.5 to 17.0, 1.5 to 18.0, 2.0 to 8.0, 2.0 to 8.5, 2.0 to 9.0, 2.0 to 9.5, 2.0 to 10.0, 2.0 to 10.5, 2.0 to 11. 0, 2.0 to 11.5, 2.0 to 12.0, 2.0 to 13.0, 2.0 to 14.0, 2.0 to 15.0, 2.0 to 16.0, 2.0 to 17.0, 2.0 to 18.0, 2.5 to 8.0, 2.5 to 8.5, 2.5 to 9.0, 2.5 to 9.5, 2.5 to 10.0, 2.5 to 10.5, 2.5 to 11.0, 2.5 to 11.5, 2.5 to 12.0, 2.5 to 13.0, 2.5 to 14.0, 2.5 to 15.0, 2.5 to 16.0, 2.5 to 17.0, 2.5 to 18.0, 3.0 to 10.0, 3.0 to 10.5, 3.0 to 11.0, 3.0 to 11.5, 3.0 to 12.0, 3.0 to 13.0, 3.0 to 14.0, 3.0 to 15.0, 3.0 to 16.0, 3.0 to 17.0, 3.0 to 18.0, 3.5 to 4.0, 3.5 to 4.5, 3.5 to 5.0, 3.5 to 5.5, 3.5 to 6.0, 3.5 to 6.5, 3.5 to 12.0, 3.5 to 13.0, 3.5 to 14.0, 3.5 to 15.0, 3. 5 to 16.0, 3.5 to 17.0, 3.5 to 18.0, 4.0 to 4.5, 4.0 to 5.0, 4.0 to 5.5, 4.0 to 6.0, 4.0 to 6.5, 4.0 to 7.0, 4.0 to 10.0, 4.0 to 10.5, 4.0 to 11.0, 4.0 to 12.0, 4.0 to 13.0, 4.0 to 14.0, 4. 0 to 15.0, 4.0 to 16.0, 4.0 to 17.0 or 4.0 to 18.0.

In an embodiment of the present invention, the X1 is preferably 0.5 to 10.0, more preferably 1.5 to 9.0, and still more preferably 2.0 to 8.0. Further, in another embodiment of the present invention, the X1 is preferably 0.5 to 5.5, more preferably 1.0 to 5.5, and still more preferably 2.0 to 5.0.

The amount corresponding to a sweetness intensity Xa of a high-intensity sweetener refers to an amount which provides a sweetness of a sweetness intensity Xa under the conditions when the high-intensity sweetener is dissolved in water having the same volume as the flavored water of the present invention at 20°C.

Further, the amount of a high-intensity sweetener may be Pa ppm and Pa ppm herein refers to an amount corresponding to a sweetness intensity X1. The Pa herein may be a value of about 20 to about 800, about 25 to about 800, about 30 to about 800, about 35 to about 800, about 40 to about 800, about 45 to about 800, about 50 to about 800, about 55 to about 800, about 20 to about 750, about 25 to about 750, about 30 to about 750, about 35 to about 750, about 40 to about 750, about 45 to about 750, about 50 to about 750, about 55 to about 750, about 20 to about 700, about 25 to about 700, about 30 to about 700, about 35 to about 700, about 40 to about 700, about 45 to about 700, about 50 to about 700, about 55 to about 700, about 20 to about 650, about 25 to about 650, about 30 to about 650, about 35 to about 650, about 40 to about 650, about 45 to about 650, about 50 to about 650, about 55 to about 650, about 20 to about 600, about 25 to about 600, about 30 to about 600, about 35 to about 600, about 40 to about 600, about 45 to about 600, about 50 to about 600, about 55 to about 600, about 20 to about 550, about 25 to about 550, about 30 to about 550, about 35 to about 550, about 40 to about 550, about 45 to about 550, about 50 to about 550, about 55 to about 550, about 20 to about 540, about 25 to about 540, about 30 to about 540, about 35 to about 540, about 40 to about 540, about 45 to about 540, about 50 to about 540, about 55 to about 540, about 20 to about 530, about 25 to about 530, about 30 to about 530, about 35 to about 530, about 40 to about 530, about 45 to about 530, about 50 to about 530, about 55 to about 530, about 20 to about 520, about 25 to about 520, about 30 to about 520, about 35 to about 520, about 40 to about 520, about 45 to about 520, about 50 to about 520, about 55 to about 520, about 20 to about 510, about 25 to about 510, about 30 to about 510, about 35 to about 510, about 40 to about 510, about 45 to about 510, about 50 to about 510, about 55 to about 510, about 20 to about 505, about 25 to about 505, about 30 to about 505, about 35 to about 505, about 40 to about 505, about 45 to about 505, about 50 to about 505, about 55 to about 505, about 20 to about 500, about 25 to about 500, about 30 to about 500, about 35 to about 500, about 40 to about 500, about 45 to about 500, about 50 to about 500, about 55 to about 500, about 20 to about 495, about 25 to about 495, about 30 to about 495, about 35 to about 495, about 40 to about 495, about 45 to about 495, about 50 to about 495, about 55 to about 495, about 20 to about 490, about 25 to about 490, about 30 to about 490, about 35 to about 490, about 40 to about 490, about 45 to about 490, about 50 to about 490 or about 55 to about 490.

The Pa may also be a value of 1 to 1500, 1 to 1200, 5 to 1200, 1 to 1000, 5 to 1000, 10 to 1000, 1 to 900, 5 to 900, 10 to 900, 15 to 900, 20 to 900, 25 to 900, 30 to 900, 35 to 900, 40 to 900, 45 to 900, 50 to 900, 55 to 900, 1 to 800, 5 to 800, 10 to 800, 15 to 800, 20 to 800, 25 to 800, 30 to 800, 35 to 800, 40 to 800, 45 to 800, 50 to 800, 55 to 800, 1 to 700, 5 to 700, 10 to 700, 15 to 700, 20 to 700, 25 to 700, 30 to 700, 35 to 700, 40 to 700, 45 to 700, 50 to 700, 55 to 700, 1 to 600, 5 to 600, 10 to 600, 15 to 600, 20 to 600, 25 to 600, 30 to 600, 35 to 600, 40 to 600, 45 to 600, 50 to 600, 55 to 600, 1 to 550, 1 to 540, 1 to 530, 1 to 520, 1 to 510, 1 to 505, 1 to 500, 1 to 495, 1 to 490, 5 to 550, 5 to 540, 5 to 530, 5 to 520, 5 to 510, 5 to 505, 5 to 500, 5 to 495, 5 to 490, 10 to 550, 10 to 540, 10 to 530, 10 to 520, 10 to 510, 10 to 505, 10 to 500, 10 to 495, 10 to 490, 15 to 550, 15 to 550, 15 to 530, 15 to 520, 15 to 510, 15 to 505, 15 to 500, 15 to 495 or 15 to 490.

The Pa may also be a value of about 20 to about 200, about 100 to about 500, about 100 to about 450, about 100 to about 400, about 100 to about 350, about 100 to about 300, about 100 to about 250, about 100 to about 200, about 150 to about 500, about 150 to about 450, about 150 to about 400, about 150 to about 350, about 150 to about 300, about 150 to about 250, about 150 to about 200, about 200 to about 500, about 200 to about 450, about 200 to about 400, about 200 to about 350, about 200 to about 300 or about 200 to about 250.

The Xb is not particularly limited as long as it is greater than the Xa and may be 0.5 to 6.0, 0.5 to 6.5, 0.5 to 7.0, 0.5 to 7.5, 0.5 to 8.0, 0.5 to 8.5, 0.5 to 9.0, 0.5 to 9.5, 0.5 to 10.0, 0.5 to 10.5, 0.5 to 11.0, 0.5 to 11.5, 0.5 to 12.0, 0.5 to 13.0, 0.5 to 14.0, 0.5 to 15.0, 0.5 to 16.0, 0.5 to 17.0, 0.5 to 18.0, 1.0 to 6.0, 1.0 to 6.5, 1.0 to 7.0, 1.0 to 7.5, 1.0 to 8.0, 1.0 to 8.5, 1.0 to 9.0, 1. 0 to 9.5, 1.0 to 10.0, 1.0 to 10.5, 1.0 to 11.0, 1.0 to 11.5, 1.0 to 12.0, 1.0 to 13.0, 1.0 to 14.0, 1.0 to 15.0, 1.0 to 16.0, 1.0 to 17.0, 1.0 to 18.0, 1.5 to 6.0, 1.5 to 6.5, 1.5 to 7.0, 1.5 to 7.5, 1.5 to 8.0, 1.5 to 8.5, 1.5 to 9.0, 1.5 to 9.5, 1.5 to 10.0, 1.5 to 10.5, 1.5 to 11.0, 1.5 to 11.5, 1.5 to 12.0, 1.5 to 13.0, 1.5 to 14.0, 1.5 to 15.0, 1.5 to 16.0, 1.5 to 17.0, 1.5 to 18.0, 2.0 to 8.0, 2.0 to 8.5, 2.0 to 9.0, 2.0 to 9.5, 2.0 to 10.0, 2.0 to 10.5, 2.0 to 11. 0, 2.0 to 11.5, 2.0 to 12.0, 2.0 to 13.0, 2.0 to 14.0, 2.0 to 15.0, 2.0 to 16.0, 2.0 to 17.0, 2.0 to 18.0, 2.5 to 8.0, 2.5 to 8.5, 2.5 to 9.0, 2.5 to 9.5, 2.5 to 10.0, 2.5 to 10.5, 2.5 to 11.0, 2.5 to 11.5, 2.5 to 12.0, 2.5 to 13.0, 2.5 to 14.0, 2.5 to 15.0, 2.5 to 16.0, 2.5 to 17.0, 2.5 to 18.0, 3.0 to 10.0, 3.0 to 10.5, 3.0 to 11.0, 3.0 to 11.5, 3.0 to 12.0, 3.0 to 13.0, 3.0 to 14.0, 3.0 to 15.0, 3.0 to 16.0, 3.0 to 17.0, 3.0 to 18.0, 3.5 to 4.0, 3.5 to 4.5, 3.5 to 5.0, 3.5 to 5.5, 3.5 to 6.0, 3.5 to 6.5, 3.5 to 12.0, 3.5 to 13.0, 3.5 to 14.0, 3.5 to 15.0, 3. 5 to 16.0, 3.5 to 17.0, 3.5 to 18.0, 4.0 to 20, 4.0 to 15, 4.0 to 12.5, 4.0 to 10, 4.5 to 20, 4.5 to 15, 4.5 to 12.5, 4.5 to 10, 5.0 to 20, 5.0 to 15, 5.0 to 12.5, 5.0 to 10, 5.5 to 20, 5.5 to 15, 5.5 to 12.5, 5.5 to 10, 6.0 to 20, 6.0 to 15, 6.0 to 12.5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8.0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15, 10.5 to 12.5. The Xb may also be 4.0 to 18, 4.0 to 16, 4.0 to 15.5, 4.0 to 14, 4.5 to 18, 4.5 to 16, 4.5 to 15.5, 4.5 to 14, 5.0 to 18, 5.0 to 16, 5.0 to 15.5, 5.0 to 14, 5. 5 to 18, 5.5 to 16, 5.5 to 15.5, 5.5 to 14, 6.0 to 18, 6.0 to 16, 6.0 to 15.5, 6.0 to 14, 6.5 to 18, 6.5 to 16, 6.5 to 15.5, 6.5 to 14, 7.0 to 18, 7.0 to 16, 7.0 to 15.5, 7.0 to 14, 7.5 to 18, 7.5 to 16, 7.5 to 15.5, 7.5 to 14, 7.5 to 9, 7.5 to 8, 8.0 to 18, 8.0 to 18, 8.0 to 16, 8.0 to 15.5, 8.0 to 14, 8.5 to 18, 8.5 to 16, 8.5 to 15.5, 8.5 to 14, 9.0 to 18, 9.0 to 16, 9.0 to 15.5, 9. 0 to 14, 9.5 to 18, 9.5 to 16, 9.5 to 15.5, 9.5 to 14, 10.0 to 18, 10.0 to 16, 10.0 to 15.5, 10.5 to 18, 10.5 to 16 or 10.5 to 15.5.

The flavored water of the present invention has an enhanced sweetness as having been already mentioned. Whether or not the sweetness of the flavored water of the present invention is enhanced can be evaluated by panelists who received sensory trainings. Further, for the sweetness intensity of the flavored water of the present invention, each standard flavored water to be the sweetness standard is prepared with each of sucrose concentrations assigned as sweetness intensities 1, 2, 3, 4, 5, 6, 7, 8, 9, 10, 11, 12, 13, 14, and 15 and panelists compare the sweetness of the flavored water of the present invention with the sweetness of such each standard flavored water thereby to measure the sweetness of the flavored water of the present invention. Note that such each standard flavored water having a sweetness intensity of 1, 2, ... 15 is prepared by adding sucrose in such a way that a sucrose content is 1 g/100 g, 2 g/100 g, ... 15 g/100 g to the flavored water to which sucrose is not added.

Furthermore, of such standard flavored water having a lower sweetness than the flavored water of the present invention in the above measurement, the standard flavored water having the closest sweetness to that of the flavored water of the present invention is selected and adjusted in such a way as to have the same sweetness as that of the flavored water of the present invention by adding sucrose to the selected standard flavored water, during which a sweetness intensity of the flavored water of the present invention can also be measured from a sucrose content in the adjusted standard flavored water.

Other examples of the method for measuring a sweetness of the flavored water of the present invention include a sweetness intensity rating using Visual Analogue Scale (VAS method). For the VAS method, literatures in The journal of Japanese Society of Stomatognathic Function (2014) 20 pp. 115-129 ("Construction of a Screening Test for Gustatory Function in Four Basic Tastes" by Toyota et al.) and the like can be referred. Specifically, in the measurement of sweetness intensity by the VAS method, for example, evaluators define sweetness intensities as "not sweet at all" at the lower end and "nothing is sweeter than this" at the upper end and, using a piece of paper on which a vertical line indicating the intensities of sweetness on the straight line, assess a sweetness intensity sensed at that time by showing a position on the straight line.

The sweetness intensity of the flavored water of the present invention is not particularly limited as long as it is acceptable as flavored water and may be, in terms of the degree of sweetness, for example, 4.0 to 20, 4.0 to 15, 4.0 to 12.5, 4.0 to 10, 4.5 to 20, 4.5 to 15, 4.5 to 12.5, 4.5 to 10, 5.0 to 20, 5.0 to 15, 5.0 to 12.5, 5.0 to 10, 5.5 to 20, 5.5 to 15, 5.5 to 12.5, 5.5 to 10, 6.0 to 20, 6.0 to 15, 6.0 to 12.5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8.0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15 or 10.5 to 12.5. The sweetness intensity of the flavored water is provided by the above components (a) and (b) and optional additional components.

An energy (total energy) of the flavored water of the present invention may be, depending on an embodiment, 0 to 50 Kcal/100 ml, 0 to 45 Kcal/100 ml, 0 to 40 Kcal/100 ml, 0 to 35 Kcal/100 ml, 0 to 30 Kcal/100 ml, 0 to 24 Kcal/100 ml, 0 to 22 Kcal/100 ml, 0 to 20 Kcal/100 ml, 0 to 15 Kcal/100 ml, 0 to 10 Kcal/100 ml, 0 to 5 Kcal/100 ml, 0.1 to 50 Kcal/100 ml, 0.1 to 45 Kcal/100 ml, 0.1 to 40 Kcal/100 ml, 0.1 to 35 Kcal/100 ml, 0.1 to 30 Kcal/100 ml, 0.1 to 24 Kcal/100 ml, 0.1 to 22 Kcal/100 ml, 0.1 to 20 Kcal/100 ml, 0.1 to 15 Kcal/100 ml, 0.1 to 10 Kcal/100 ml, 0.1 to 5 Kcal/100 ml, 1 to 50 Kcal/100 ml, 1 to 45 Kcal/100 ml, 1 to 40 Kcal/100 ml, 1 to 35 Kcal/100 ml, 1 to 30 Kcal/100 ml, 1 to 24 Kcal/100 ml, 1 to 22 Kcal/100 ml, 1 to 20 Kcal/100 ml, 1 to 15 Kcal/100 ml, 1 to 10 Kcal/100 ml, 1 to 5 Kcal/100 ml, 5 to 50 Kcal/100 ml, 5 to 45 Kcal/100 ml, 5 to 40 Kcal/100 ml, 5 to 35 Kcal/100 ml, 5 to 30 Kcal/100 ml, 5 to 24 Kcal/100 ml, 5 to 20 Kcal/100 ml, 5 to 15 Kcal/100 ml, 5 to 10 Kcal/100 ml, 10 to 50 Kcal/100 ml, 10 to 45 Kcal/100 ml, 10 to 40 Kcal/100 ml, 10 to 35 Kcal/100 ml, 10 to 30 Kcal/100 ml, 10 to 24 Kcal/100 ml, 10 to 20 Kcal/100 ml, 10 to 15 Kcal/100 ml, 15 to 50 Kcal/100 ml, 15 to 45 Kcal/100 ml, 15 to 40 Kcal/100 ml, 15 to 35 Kcal/100 ml, 15 to 30 Kcal/100 ml, 15 to 24 Kcal/100 ml, 15 to 20 Kcal/100 ml, 20 to 50 Kcal/100 ml, 20 to 45 Kcal/100 ml, 20 to 40 Kcal/100 ml, 20 to 35 Kcal/100 ml, 20 to 30 Kcal/100 ml, 20 to 24 Kcal/100 ml, 24 to 50 Kcal/100 ml, 24 to 45 Kcal/100 ml, 24 to 40 Kcal/100 ml, 24 to 35 Kcal/100 ml or 24 to 30 Kcal/100 ml.

Further, an energy (total energy, TE) of the flavored water of the present invention may be, depending on an embodiment (for example, an embodiment containing a caloric sweetener), 0 < TE ≤ 50 Kcal/100 ml, 0 < TE ≤ 45 Kcal/100 ml, 0 < TE ≤ 40 Kcal/100 ml, 0 < TE ≤ 35 Kcal/100 ml, 0 < TE ≤ 30 Kcal/100 ml, 0 < TE ≤ 24 Kcal/100 ml, 0 < TE ≤ 22 Kcal/100 ml, 0 < TE ≤ 20 Kcal/100 ml, 0 < TE ≤ 15 Kcal/100 ml, 0 < TE ≤ 10 Kcal/100 ml or 0 < TE ≤ 5 Kcal/100 ml (that is, it never is completely 0).

The components (a) and (b) can be in any combinations. As shown in examples to be described later, the addition of the component (b) to the component (a) enables to provide a sweetness intensity Xb, which is higher than the sweetness intensity Xa of the component (a) alone. That is, the sweetness of the component (a) can be enhanced by the component (b). For this reason, flavored water can be produced without using or with a reduced amount of highly caloric sucrose while maintaining the sweetness equal to flavored water containing sucrose. Thus, the design of new low-caloric flavored water is enabled. In the case of designing zero-calorie flavored water, a high-intensity sweetener having particularly good-taste quality such as rebaudioside D (hereinafter, rebaudioside is sometimes abbreviated as "Reb") and rebaudioside M is used for the component (a) and D-allulose or erythritol is used as an additional sweet substance thereby to improve a sweetness with a low-concentration amino acid. In the case of adjusting flavored water to be not zero calories but a low calorie, a caloric sweetener such as sucrose, glucose, fructose, or sorbitol can be contained as an additional sweet substance.

### [High-intensity sweetener]

The high-intensity sweetener (hereinafter, sometimes abbreviated as the "sweetener (a)" or "component (a)") means a compound having a more intense sweetness than sucrose and encompasses naturally occurring compounds, synthetic compounds, and combinations of naturally occurring compounds and synthetic compounds. The high-intensity sweetener has, in the same amount as sucrose, a sweetness 5 times or more, 10 times or more, 50 times or more, 100 times or more, 500 times or more, 1000 times or more, 5000 times or more, 10000 times or more, 50000 times or more or 100000 times or more, of that of sucrose.

Specific examples of the high-intensity sweetener include peptide-based sweeteners such as aspartame, neotame, and advantame;sucrose derivatives such as sucralose;synthetic sweeteners (including those naturally occurring but also those whose synthetic products are mostly distributed such as neohesperidin dihydrochalcone) such as acesulfame K, saccharine, saccharin sodium, sodium cyclamate, dulcin, disodium glycyrrhizin, trisodium glycyrrhizin, and neohesperidin dihydrochalcone; sweeteners extracted from plants such as thaumatin, monellin, curculin, mabinlin, brazzein, pentagin, hernandulcin, 4β-hydroxyhernandulcin, miraculin, glycyrrhizin, rubusoside, and phyllodulcin; and plant extracts containing a high-intensity sweetener component, for example, Stevia rebaudiana extract, Siraitia grosvenorii (Luo han guo) extract, Glycyrrhiza (licorice) glabra extract, Rubus suavissimus S. Lee extract, Hydrangea macrophylla var. thunbergii extract, Sclerochiton ilicifolius extract, Thaumataococcus daniellii Benth extract, Dioscoreophyllum volkensii (serendipity berry) extract, Curculigo latifolia extract, Richadella dulcifica (miracle fruit) extract, Pentadiplandra brazzeana (West African fruit) extract, Capparis masaikai (Mabinlang) extract, Lippia dulcis (Aztec sweet herb) extract; sweet components in these extracts, for example, steviol glycosides such as stevia derivatives like enzymatically-treated stevia in which a stevia extract and stevia are treated with an enzyme and glucose is added thereto, mogrosides obtained by treating Luo han guo and a Luo han guo extract, glycosides obtained from plant extracts such as phyllodulcin glycosides, Glycyrrhiza glabra plant-containing sweet components (for example, triterpene glycosides such as glycyrrhizin), Rubus suavissimus S. Lee plant-containing sweet components (for example, diterpene glycosides such as rubusoside), Hydrangea macrophylla var. thunbergii plant-containing sweet components (for example, dihydroisocoumarin such as phyllodulcin), Sclerochiton ilicifolius plant-containing sweet components (for example, amino acids such as monatin), Thaumataococcus daniellii Benth plant-containing sweet components (for example, proteins such as thaumatin), Dioscoreophyllum volkensii plant-containing sweet components (for example, proteins such as monellin), Curculigo latifolia plant-containing sweet components (for example, proteins such as curculin), Richadella dulcifica plant-containing sweet components (for example, proteins such as miraculin), Pentadiplandra brazzeana plant-containing sweet components (for example, proteins such as brazzein and pentagin), Capparis masaikai plant-containing sweet components (for example, proteins such as mabinlin), and Lippia dulcis plant-containing sweet components (for example, sesquiterpenes such as hernandulcin and 4β-hydroxyhernandulcin).

Examples of the steviol glycoside include rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, Dulcoside A, Dulcoside C, rubusoside, steviol, steviol monoside, steviol bioside and stevioside. Examples of the mogroside include mogroside IV and mogroside V.

The Glycyrrhiza (licorice) extract refers to those obtained from roots or rhizomes of Glycyrrhiza uralensis Fisher, Glycyrrhiza inflata Batalin, and Glycyrrhiza glabra Linne and having glycyrrhizic acid as the main component. Examples of the Glycyrrhiza extract include Glycyrrhiza extracts, Glycyrrhizin, and licorice extracts.

The sucrose derivative includes, for example, those obtained by substituting the OH group or the H group of sucrose with other substituents and examples thereof include halogen derivatives of sucrose (sucralose), oxathiazinonedioxide derivatives.

In a preferable embodiment of the present invention, the high-intensity sweetener is selected from a high-intensity sweetener having a good taste quality. As used herein, the "high-intensity sweetener having a good taste quality" means a high-intensity sweet substance having one or more taste qualities selected from, when compared with rebaudioside A (RebA), (1) less astringent taste, (2) less metallic taste, (3) less aftertaste of sweetness, and (4) less bitterness. Whether or not a certain sweet substance has the above taste quality is already known or can be determined based on a sensory evaluation. Nonrestrictive examples of the high-intensity sweetener having a good taste include RebD, RebM, a luo han guo extract, a mogroside (for example, mogroside V), thaumatin, brazzein or a combination thereof.

In an embodiment of the present invention, the high-intensity sweetener may be those naturally occurring in plants and the like or those artificially produced (for example, bioconversion or chemosynthesis) but is preferably a naturally occurring sweetener. As used herein, the "naturally occurring" does not mean that a high-intensity sweet substance contained in the flavored water of the present invention is a natural product but a high-intensity sweet substance contained in the flavored water of the present invention may be a product artificially (for example, by bioconversion) produced (non-naturally occurring product) as long as the same substance naturally occurs.

Nonrestrictive examples of the sweetener (a) include rebaudioside A (RebA), rebaudioside D (RebD), rebaudioside M (RebM), neohesperidin dihydrochalcone, glycyrrhizin, thaumatin, monellin, mogroside, rubusoside, curculin, mabinlin, brazzein, pentagin, phyllodulcin, hernandulcin, miraculin, Stevia rebaudiana plant-containing sweet components, Siraitia grosvenorii plant-containing sweet components, Glycyrrhiza glabra plant-containing sweet components, Rubus suavissimus S. Lee plant-containing sweet components, Hydrangea macrophylla var. thunbergii plant-containing sweet components, Sclerochiton ilicifolius plant-containing sweet components, Thaumataococcus daniellii Benth plant-containing sweet components, Dioscoreophyllum volkensii plant-containing sweet components, Curculigo latifolia plant-containing sweet components, Richardella dulcifica plant-containing sweet components, Pentadiplandra brazzeana plant-containing sweet components, Capparis masaikai plant-containing sweet components, Lippia dulcis plant-containing sweet components and derivatives thereof, and combinations thereof. In a specific embodiment, the sweetener (a) contains RebA, RebD, RebM, a mogroside (for example, mogroside V) or a combination thereof. In another specific embodiment, the sweetener (a) contains RebD, RebM, a mogroside (for example, mogroside V), thaumatin or a combination thereof. In a preferable embodiment of the present invention, a high-intensity sweetener having a good taste quality contains at least one selected from the group consisting of RebD, RebM, mogroside V, a luo han guo extract, and a combination thereof. In an embodiment of the present invention, the sweetener (a) consists essentially of a sweetener other than major components of Stevia sweeteners such as RebA and stevioside. As used herein, the "consists essentially of ... " means that the sweetener used in the present invention may contain major component(s) of Stevia sweeteners as long as the effects of the invention are not affected. For example, preferably 90% or more, more preferably 95% or more, or further preferably 98% or more of the sweetener (a) for use in the present invention consists of a sweetener other than RebA and stevioside.

RebA, RebD and RebM may be directly extracted from Stevia, or may be obtained by adding glucose to a compound having another structure, contained in a Stevia extract.

The Luo han guo extract as a sweetener is an extract of Luo han guo containing a sweet substance derived from Luo han guo, approved in various countries including Japan as a food additive and commercially available. Examples of the sweet substance derived from Luo han guo include mogroside V, mogroside IV, 11-oxo-mogroside V, and Siamenoside I.

Mogroside V is a kind of the major mogrol glycosides contained in Luo han guo and documented to have a good-quality sweetness property close to sucrose when compared with rebaudioside A. Mogroside V may be obtained from a luo han guo extract (for example, an alcohol extract of Luo han guo) by purification with chromatography or the like. Alternatively, mogroside V may be obtained by adding glucose to a compound having another structure, contained in a luo han guo extract.

The luo han guo extract preferably contains mogroside V and the ratio thereof is not limited and may be 10 wt% or more, 15 wt% or more, 20 wt% or more, 25 wt% or more, 30 wt% or more, 35 wt% or more, 40 wt% or more, 45 wt% or more, 50 wt% or more, 55 wt% or more, 60 wt% or more, 65 wt% or more, 70 wt% or more or 75 wt% or more, of the total dry weight of a luo han guo extract. The content of mogroside V may be determined by a known technique such as liquid chromatography. The luo han guo extract may be obtained by extracting a fruit of Luo han guo (Siraitia grosvenorii) with a suitable solvent (for example, an aqueous solvent such as water, an alcohol solvent such as ethanol or methanol, or a mixed solvent of an aqueous solvent and an alcohol solvent such as water-containing ethanol or water-containing methanol), and then optionally carrying out a treatment such as degreasing, purification, concentration, and drying.

Mogroside V may be one having a high purity, and may be, for example, one having a purity of 80% or more, 85% or more, 90% or more, 910 or more, 92% or more, 93% or more, 94% or more, 95% or more, 96% or more, 97% or more or 98% or more. Mogroside V obtained by purification of a luo han guo extract, of course, has a smaller amount of incorporation of a luo han guo extract component other than mogroside V, as it has a higher purity.

In other embodiments of the present invention, mogroside V may also be one having a lower purity, and may be, for example, one having a purity of 50% or more, 55% or more, 60% or more, 65% or more, 70% or more or 75% or more. For example, when the sweetness intensity of sucrose per unit concentration Brix 1 is defined as a degree of sweetness of 1, the degree of sweetness of Mog V having a purity of about 65% is about 175. In other embodiments of the present invention, a luo han guo extract containing about 30 wt% of Mog V may be used as the high-intensity sweetener, and, when the sweetness intensity of sucrose per unit concentration Brix 1 is defined as a degree of sweetness of 1, the degree of sweetness of the luo han guo extract is about 100.

The high-intensity sweetener is contained in an amount corresponding to a sweetness intensity Xa, as described above. When the sweetness intensity of sucrose per unit concentration Brix 1 is defined as a degree of sweetness of 1, a degree of sweetness of rebaudioside D is about 225, a degree of sweetness of rebaudioside M is about 230, a degree of sweetness of rebaudioside B is about 325, a degree of sweetness of rebaudioside A is 200 to 300 (median value 250), a degree of sweetness of rebaudioside N is 200 to 250 (median value 225), a degree of sweetness of rebaudioside O is 200 to 250 (median value 225), a degree of sweetness of rebaudioside E is 70 to 80 (median value 75), a degree of sweetness of a luo han guo extract (containing 40% of Mog V) is about 130, a degree of sweetness of mogroside V is about 270, a degree of sweetness of thaumatin is 2,000, and a degree of sweetness of brazzein is 500 to 2000 (median value 1250). The numerical value obtained by multiplying these degrees of sweetness by a concentration (w/v% (considered to be the same as w/w% in the case of a beverage)) of the high-intensity sweetener in the flavored water is a sweetness intensity of the high-intensity sweetener. When Xa of such a sweetener is herein determined, the above degree of sweetness (median value when a numerical value range is shown) is used. A relative ratio of a degree of sweetness of each sweetener to a degree of sweetness of 1 of sucrose can be determined from, for example, a known sugar sweetness conversion table (for example, information "Beverage term dictionary", page 11, Beverage Japan, Inc.). When a numerical range of a degree of sweetness is herein shown, a median value is adopted. Herein, in the case of a sweetener whose degree of sweetness is different with respect to each literature, a relative ratio of a degree of sweetness to a degree of sweetness of 1 of sucrose can be determined by a sensory test. Examples of such a sensory test include a method involving preparing samples where sucrose is added to pure water so that Brix is 3.0 to 5.0 by 0.5, and selecting a sample where sucrose is added, having a sweetness intensity equal to that of an aqueous solution having a predetermined concentration of a sweetener, among such samples.

In an embodiment of the present invention, the high-intensity sweetener comprises at least one selected from the group consisting of steviol glycoside, a luo han guo extract, mogrol glycoside, a Thaumataococcus daniellii Benth plant-containing sweet component, a Pentadiplandra brazzeana plant-containing sweet component, an artificial sweetener, and a combination thereof. In a preferable embodiment of the present invention, the high-intensity sweetener comprises at least one selected from the group consisting of rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, Dulcoside A, Dulcoside C, rubusoside, steviol monoside, steviol bioside, stevioside, a luo han guo extract, mogroside V, thaumatin, brazzein, aspartame, acesulfame K, sucralose, a Glycyrrhiza extract, saccharine, and a combination thereof.

In some embodiments, the sweetener (a) contains the following combination: RebA and RebM, RebA and RebD, RebD and RebM, RebA and RebD and RebM, RebA and mogroside V, RebD and mogroside V, RebM and mogroside V, RebA and RebM and mogroside V, RebA and RebD and mogroside V, RebD and RebM and mogroside V, RebA and neohesperidin dihydrochalcone, RebD and neohesperidin dihydrochalcone, RebM and neohesperidin dihydrochalcone, RebA and RebM and neohesperidin dihydrochalcone, RebA and RebD and neohesperidin dihydrochalcone, RebD and RebM and neohesperidin dihydrochalcone, mogroside V and neohesperidin dihydrochalcone, RebD and RebM and mogroside V and neohesperidin dihydrochalcone, RebA and brazzein, RebD and brazzein, RebM and brazzein, mogroside V and brazzein, neohesperidin dihydrochalcone and brazzein, RebM and RebD and brazzein, RebM and RebD and brazzein and mogroside V, RebM and RebD and brazzein and neohesperidin dihydrochalcone, or RebM and RebD and brazzein and mogroside V and neohesperidin dihydrochalcone.

In another embodiment, the sweetener (a) contains the following combination: RebA and thaumatin, RebD and thaumatin, RebM and thaumatin, mogroside V and thaumatin, RebA and RebM and thaumatin, RebA and RebD and thaumatin, RebD and RebM and thaumatin, RebA and mogroside V and thaumatin, RebD and mogroside V and thaumatin, RebM and mogroside V and thaumatin, or RebD and RebM and mogroside V and thaumatin.

In an embodiment of the present invention, the high-intensity sweetener (a) may contain a high-intensity sweetener selected from rebaudioside A, rebaudioside D, rebaudioside M, mogroside V, a luo han guo extract, and a combination thereof, preferably one or more high-intensity sweeteners selected from rebaudioside D, rebaudioside M, and a combination thereof.

The amount of the sweetener (a) contained in the flavored water in an embodiment of the present invention is, in the case when the sweetener (a) contains a combination of a plurality of sweet substances, an amount of all of these sweet substances combined. When an amount of the sweetener (a) is Pa (ppm), Pa may be a value of, for example, about 20 to about 800, about 25 to about 800, about 30 to about 800, about 35 to about 800, about 40 to about 800, about 45 to about 800, about 50 to about 800, about 55 to about 800, about 20 to about 750, about 25 to about 750, about 30 to about 750, about 35 to about 750, about 40 to about 750, about 45 to about 750, about 50 to about 750, about 55 to about 750, about 20 to about 700, about 25 to about 700, about 30 to about 700, about 35 to about 700, about 40 to about 700, about 45 to about 700, about 50 to about 700, about 55 to about 700, about 20 to about 650, about 25 to about 650, about 30 to about 650, about 35 to about 650, about 40 to about 650, about 45 to about 650, about 50 to about 650, about 55 to about 650, about 20 to about 600, about 25 to about 600, about 30 to about 600, about 35 to about 600, about 40 to about 600, about 45 to about 600, about 50 to about 600, about 55 to about 600, about 20 to about 550, about 25 to about 550, about 30 to about 550, about 35 to about 550, about 40 to about 550, about 45 to about 550, about 50 to about 550, about 55 to about 550, about 20 to about 540, about 25 to about 540, about 30 to about 540, about 35 to about 540, about 40 to about 540, about 45 to about 540, about 50 to about 540, about 55 to about 540, about 20 to about 530, about 25 to about 530, about 30 to about 530, about 35 to about 530, about 40 to about 530, about 45 to about 530, about 50 to about 530, about 55 to about 530, about 20 to about 520, about 25 to about 520, about 30 to about 520, about 35 to about 520, about 40 to about 520, about 45 to about 520, about 50 to about 520, about 55 to about 520, about 20 to about 510, about 25 to about 510, about 30 to about 510, about 35 to about 510, about 40 to about 510, about 45 to about 510, about 50 to about 510, about 55 to about 510, about 20 to about 505, about 25 to about 505, about 30 to about 505, about 35 to about 505, about 40 to about 505, about 45 to about 505, about 50 to about 505, about 55 to about 505, about 20 to about 500, about 25 to about 500, about 30 to about 500, about 35 to about 500, about 40 to about 500, about 45 to about 500, about 50 to about 500, about 55 to about 500, about 20 to about 495, about 25 to about 495, about 30 to about 495, about 35 to about 495, about 40 to about 495, about 45 to about 495, about 50 to about 495, about 55 to about 495, about 20 to about 490, about 25 to about 490, about 30 to about 490, about 35 to about 490, about 40 to about 490, about 45 to about 490, about 50 to about 490, about 55 to about 490, about 100 to about 500, about 100 to about 450, about 100 to about 400, about 100 to about 350, about 100 to about 300, about 100 to about 250, about 100 to about 200, about 150 to about 500, about 150 to about 450, about 150 to about 400, about 150 to about 350, about 150 to about 300, about 150 to about 250, about 150 to about 200, about 20 to about 200, about 200 to about 500, about 200 to about 450, about 200 to about 400, about 200 to about 350, about 200 to about 300 or about 200 to about 250.

In an embodiment of the present invention, an amount Pa ppm of the high-intensity sweetener may be about 20 to about 600 ppm, about 30 to about 550 ppm, about 55 to about 490 ppm, about 20 to about 200 ppm, about 100 to about 500 ppm or about 150 to about 350 ppm.

### [Amino acids or derivatives or salts thereof]

The flavored water of the present invention contains (b) an amino acid or a derivative or a salt thereof in an amount less than a taste recognition threshold. The amino acids or amino acid salts used in the present invention are organic compounds having both functional groups of an amino group and a carboxyl group, or salts thereof, and not particularly limited as long as a sweetness enhancement effect may be obtained. Additionally, proline and hydroxyproline, which form a cyclic structure in which the hydrogen of the amino group is substituted with a side chain moiety in a molecule, are also encompassed in the amino acid in the present description. The amino acid derivatives which may be used in the present invention encompass derivatives having no carboxyl group such as taurine. In an embodiment of the present invention, the amino acid means a free amino acid.

The amino acids used in the present invention may be the D-configuration, the L-configuration, or the racemic configuration consisting of the D-configuration and the L-configuration (in the present description, also referred to as the DL-amino acid). In an embodiment of the present invention, the amino acid may be selected from neutral amino acids, basic amino acids, and acidic amino acids. In a preferable embodiment of the present invention, the amino acids are selected from the neutral amino acids or the basic amino acids. In other preferable embodiments of the present invention, the amino acids include amino acids selected from, of the basic amino acids or the neutral amino acids, amino acids having an alkyl group, an OH group or an amide group on a side chain, and combinations thereof. Of the neutral amino acids, examples of those having an alkyl group on a side chain include glycine, alanine, valine, isoleucine and leucine, those having an OH group on a side chain include serine and threonine, and those having an amide group on a side chain include glutamine and asparagine.

The amino acid contained in the flavored water in an embodiment of the present invention is one or more of the 22 amino acids forming proteins. Specific examples include the L-configuration of alanine (Ala), arginine (Arg), asparagine (Asn), aspartic acid (Asp), cysteine (Cys), glutamine (Gln), glutamic acid (Glu), glycine (Gly), histidine (His), isoleucine (Ile), leucine (Leu), lysine (Lys), methionine (Met), phenylalanine (Phe), proline (Pro), serine (Ser), threonine (Thr), tryptophan (Trp), tyrosine (Tyr), valine (Val), selenosysteine (Sec), and pyrrolysine (Pyl).

The amino acid contained in the flavored water in an embodiment of the present invention is one or more selected from an amino acid having a molecular weight of 70 to 260. Examples of such an amino acid include alanine (molecular weight: 89), arginine (molecular weight: 174), asparagine (molecular weight: 132), aspartic acid (molecular weight: 133), cysteine (molecular weight: 121), glutamine (molecular weight: 146), glutamic acid (molecular weight: 147), glycine (molecular weight: 75), histidine (molecular weight: 155), isoleucine (molecular weight: 131), leucine (molecular weight: 131), lysine (molecular weight: 146), methionine (molecular weight: 149), phenylalanine (molecular weight: 165), proline (molecular weight: 115), serine (molecular weight: 105), threonine (molecular weight: 119), tryptophan (molecular weight: 204), tyrosine (molecular weight: 181), valine (molecular weight: 117), selenosysteine (molecular weight: 168) and pyrrolysine (molecular weight: 255). In a preferable embodiment of the present invention, the amino acid is one or more selected from amino acids having molecular weights of 75 to 204, more preferably one or more selected from amino acids having molecular weights of 75 to 174, and further preferably one or more selected from amino acids having molecular weights of 75 to 146.

Preferably, the amino acid or a salt thereof is one or more selected from L-asparagine, L-aspartic acid, monosodium L-aspartate, DL-alanine, L-alanine, L-alanine solution, L-arginine, L-arginine L-glutamate, L-glutamine, L-cystine, L-cysteine monohydrochloride, L-serine, L-tyrosine, L-glutamic acid, monoammonium L-glutamate, monopotassium L-glutamate, monocalcium Di-L-glutamate, monosodium L-glutamate (also known as sodium glutamate), monomagnesium Di-L-glutamate, glycine, L-histidine, L-histidine monohydrochloride, L-hydroxyproline, L-isoleucine, L-lysine, L-lysine solution, L-lysine L-aspartate, L-lysine hydrochloride (L-lysine monohydrochloride), L-lysine L-glutamate, L-leucine, DL-methionine, L-methionine, L-phenylalanine, L-proline, L-proline solution, DL-threonine, L-threonine, DL-tryptophan, L-tryptophan, L-valine, L-theanine, L-ornithine, and taurine. In an embodiment of the present invention, a plurality species of amino acids may be used in combination. In an embodiment of the present invention, the amino acid includes an amino acid selected from glycine, alanine, valine, isoleucine, leucine, serine, threonine, glutamine, asparagine, arginine, lysine, histidine, and a combination thereof.

In an embodiment of the present invention, the amino acid or a derivative or a salt thereof may include an amino acid selected from DL-alanine, L-serine, glycine, L-arginine, L-glutamic acid, L-valine, and L-glutamine. In another embodiment of the present invention, the amino acid or a derivative or a salt thereof may include one or more amino acids selected from arginine, lysine, histidine, phenylalanine, tyrosine, leucine, isoleucine, methionine, valine, alanine, glycine, proline, glutamic acid, serine, threonine, aspartic acid, and tryptophan. In still another embodiment of the present invention, the amino acid or a derivative or a salt thereof may include one or more amino acids selected from arginine, valine, alanine, glycine, proline, glutamic acid, serine, threonine, aspartic acid, and tryptophan.

As used herein, the threshold of amino acids means a detection threshold or a taste recognition threshold. The detection threshold means a minimum concentration at which the difference from water can be clearly identified but a type of the taste (for example, bitterness, sourness, and sweetness) does not have to be always recognized, and the taste recognition threshold means a minimum concentration at which a taste can be recognized (for example, Eur J Clin Nutr (2004) 58, 629-636). The threshold (detection threshold) of amino acids is organized by Susan S. Schiffman et al. in "Comparison of Taste Qualities and Thresholds of D- and L-Amino Acids", Physiology & Behavior, Vol. 27, pp. 51-59 (1981). For example, a detection threshold of each amino acid is as follows: glycine (30.9 mM), L-threonine (25.7 mM), L-serine (20.9 mM), L-alanine (16.2 mM), L-proline (15.1 mM), L-glutamine (9.77 mM), L-isoleucine (7.41 mM), L-phenylalanine (6.61 mM), L-leucine (6.45 mM), L-valine (4.16 mM), L-methionine (3.72 mM), L-tryptophan (2.29 mM), L-asparagine (1.62 mM), L-histidine (1.23 mM), L-arginine (1.20 mM), L-lysine (0.708 mM), L-aspartic acid (0.182 mM), L-glutamic acid (0.063 mM), L-cysteine (0.063 mM). Additionally, the taste recognition threshold is known to be about 1.5 to 2 times the detection threshold (Yuki Yamauchi et al., "WHOLE MOUTH GUSTATORY TEST (PART1) - BASIC CONSIDERATIONS AND PRINCIPAL COMPONENT ANALYSIS -", Journal of The Oto-Rhino-Laryngological Society of Japan, vol. 98 (1995) No. 1, p.119-129, and Reiko Ohmori, "Comparisons of the taste sensitivity between three generations", The bulletin of the Faculty of Education, Utsunomiya University, Section 1 (2013) Vol. 63 p.201-210)).

In the present invention, it is preferable that a measured value be used as the taste recognition threshold of an amino acid. A taste recognition threshold of an amino acid can be determined by preparing amino acid-containing aqueous solutions in several concentration levels and tasting in the order from low concentrations to high concentrations to carry out a sensory test by which the taste can be sensed or not. A concentration at which a difference from water is detected is defined as a detection threshold and a concentration at which a taste is recognized is defined as a recognition threshold. For example, for an amino acid for which a theoretical value (a literature value) is already established, aqueous solutions in several concentration levels close to such a concentration are prepared and several persons who received sensory trainings carry out the test thereby to determine these thresholds. In the case of L-alanine, a detection threshold described in literatures is 16.2 mM and a theoretical recognition threshold calculated from such a detection threshold is 32.4 mM, and a sensory test using aqueous solutions in several levels selected from 5 mM, 10 mM, 15 mM, 20 mM, 25 mM, 30 mM, and 35 mM is carried out thereby to measure a recognition threshold. In an embodiment of the present invention, the taste recognition threshold of an amino acid means a taste recognition threshold in pure water. The taste recognition threshold in pure water means a minimum concentration at which such a taste can be recognized when only an amino acid is added to water without addition of any sweetener or the like.

In an embodiment of the present invention, the flavored water contains glycine and a content of glycine may be more than 0 mM and 80 mM or less, 75 mM or less, less than 75 mM, 70 mM or less, 65 mM or less, 60 mM or less, 55 mM or less, 50 mM or less, less than 50 mM, 45 mM or less, 40 mM or less, 35 mM or less, 30 mM or less, 25 mM or less, 20 mM or less, 15 mM or less, or 10 mM or less. Alternatively, such a content may be 10 to 80 mM, 20 to 80 mM, 30 to 80 mM, 40 to 80 mM, 50 to 80 mM, 60 to 80 mM, 70 to 80 mM, 10 to 70 mM, 20 to 70 mM, 30 to 70 mM, 40 to 70 mM, 50 to 70 mM, 60 to 70 mM, 10 to 60 mM, 20 to 60 mM, 30 to 60 mM, 40 to 60 mM, 50 to 60 mM, 10 to 50 mM, 20 to 50 mM, 30 to 50 mM, 40 to 50 mM, 10 to 40 mM, 20 to 40 mM, 30 to 40 mM, 10 to 30 mM or 20 to 30 mM.

In an embodiment of the present invention, the flavored water contains alanine and a content of alanine may be more than 0 mM and 32.4 mM or less, 30 mM or less, less than 30 mM, 25 mM or less, 20 mM or less, less than 20 mM, 15 mM or less, or 10 mM or less. Alternatively, such a content may be 1 to 30 mM, 5 to 30 mM, 10 to 30 mM, 15 to 30 mM, 20 to 30 mM, 25 to 30 mM, 1 to 25 mM, 5 to 25 mM, 10 to 25 mM, 15 to 25 mM, 20 to 25 mM, 1 to 20 mM, 5 to 20 mM, 10 to 20 mM, 15 to 20 mM, 1 mM or more and less than 20 mM, 1 to 19 mM, 5 to 19 mM, 10 to 19 mM, 15 to 19 mM, 1 to 18 mM, 5 to 18 mM, 10 to 18 mM, 15 to 18 mM, 1 to 17 mM, 5 to 17 mM, 10 to 17 mM, 15 to 17 mM, 1 to 16 mM, 5 to 16 mM, 10 to 16 mM, or 15 to 16 mM. Alanine may be either the L-configuration, the D-configuration, or the racemic configuration (DL-configuration) but is preferably the L-configuration.

In an embodiment of the present invention, the flavored water contains valine and a content of valine may be more than 0 mM and 50 mM or less, less than 50 mM, 45 mM or less, 40 mM or less, less than 40 mM, 35 mM or less, 30 mM or less, 25 mM or less, 20 mM or less, 15 mM or less, or 10 mM or less. Alternatively, such a content may be 1 to 50 mM, 5 to 50 mM, 10 to 50 mM, 15 to 50 mM, 20 to 50 mM, 25 to 50 mM, 1 to 50 mM, 5 to 50 mM, 10 to 50 mM, 15 to 50 mM, 20 to 50 mM, 25 to 50 mM, 30 to 50 mM, 35 to 50 mM, 40 to 50 mM, 45 to 50 mM, 1 to 45 mM, 5 to 45 mM, 10 to 45 mM, 15 to 45 mM, 20 to 45 mM, 25 to 45 mM, 1 to 45 mM, 5 to 45 mM, 10 to 45 mM, 15 to 45 mM, 20 to 45 mM, 25 to 45 mM, 30 to 45 mM, 35 to 45 mM, 40 to 45 mM, 1 to 40 mM, 1 mM or more and less than 40 mM, 5 to 40 mM, 10 to 40 mM, 15 to 40 mM, 20 to 40 mM, 25 to 40 mM, 1 to 40 mM, 5 to 40 mM, 10 to 40 mM, 15 to 40 mM, 20 to 40 mM, 25 to 40 mM, 30 to 40 mM, 35 to 40 mM, 1 to 40 mM, 5 to 40 mM, 10 to 40 mM, 15 to 40 mM, 20 to 40 mM, 25 to 40 mM, 1 to 35 mM, 5 to 35 mM, 10 to 35 mM, 15 to 35 mM, 20 to 35 mM, 25 to 35 mM, 30 to 35 mM, 1 to 30 mM, 5 to 30 mM, 10 to 30 mM, 15 to 30 mM, 20 to 30 mM, 25 to 30 mM, 1 to 25 mM, 5 to 25 mM, 10 to 25 mM, 15 to 25 mM, 20 to 25 mM, 1 to 20 mM, 5 to 20 mM, 10 to 20 mM, 10 to 15 mM, or 15 to 20 mM. Valine may be either the L-configuration, the D-configuration, or the racemic configuration (DL-configuration) but is preferably the L-configuration.

In an embodiment of the present invention, the flavored water contains isoleucine and a content of isoleucine may be more than 0 mM and 25 mM or less, 20 mM or less, 15 mM or less, 10 mM or less, or 5 mM or less. Alternatively, such a content may be 1 to 25 mM, 5 to 25 mM, 10 to 25 mM, 15 to 25 mM, 20 to 25 mM, 1 to 20 mM, 5 to 20 mM, 10 to 20 mM, 15 to 20 mM, 1 to 15 mM, 5 to 15 mM, or 10 to 15 mM. Isoleucine may be either the L-configuration, the D-configuration, or the racemic configuration (DL-configuration) but is preferably the L-configuration.

In an embodiment of the present invention, the flavored water contains leucine and a content of leucine may be more than 0 mM and 50 mM or less, 45 mM or less, 40 mM or less, 35 mM or less, 30 mM or less, less than 30 mM, 25 mM or less, 20 mM or less, less than 20 mM, 15 mM or less, 13 mM or less, 12 mM or less, 11 mM or less, 10 mM or less, 9 mM or less, 8 mM or less, 7 mM or less, 6 mM or less, 5 mM or less, 4 mM or less, 3 mM or less, 2 mM or less, or 1 mM or less. Alternatively, such a content may be 1 to 50 mM, 2 to 50 mM, 3 to 50 mM, 4 to 50 mM, 5 to 50 mM, 6 to 50 mM, 7 to 50 mM, 8 to 50 mM, 9 to 50 mM, 10 to 50 mM, 1 to 40 mM, 2 to 40 mM, 3 to 40 mM, 4 to 40 mM, 5 to 40 mM, 6 to 40 mM, 7 to 40 mM, 8 to 40 mM, 9 to 40 mM, 10 to 40 mM, 1 to 30 mM, 2 to 30 mM, 3 to 30 mM, 4 to 30 mM, 5 to 30 mM, 6 to 30 mM, 7 to 30 mM, 8 to 30 mM, 9 to 30 mM, 1 to 20 mM, 1 mM or more and less than 20 mM, 2 to 20 mM, 3 to 20 mM, 4 to 20 mM, 5 to 20 mM, 6 to 20 mM, 7 to 20 mM, 8 to 20 mM, 9 to 20 mM, 15 to 50 mM, 15 to 45 mM, 15 to 40 mM, 15 to 35 mM, 15 to 30 mM, 15 to 25 mM, 15 to 20 mM, 1 to 15 mM, 2 to 15 mM, 3 to 15 mM, 4 to 15 mM, 5 to 15 mM, 6 to 15 mM, 7 to 15 mM, 8 to 15 mM, 9 to 15 mM, 10 to 15 mM, 1 to 12 mM, 2 to 12 mM, 3 to 12 mM, 4 to 12 mM, 5 to 12 mM, 6 to 12 mM, 7 to 12 mM, 8 to 12 mM, 9 to 12 mM, 10 to 12 mM, 1 to 10 mM, 2 to 10 mM, 3 to 10 mM, 4 to 10 mM, 5 to 10 mM, 6 to 10 mM, 7 to 10 mM, 8 to 10 mM, or 9 to 10 mM. Leucine may be either the L-configuration, the D-configuration, or the racemic configuration (DL-configuration) but is preferably the L-configuration.

In an embodiment of the present invention, the flavored water contains serine and a content of serine may be more than 0 mM and 130 mM or less, 100 mM or less, 80 mM or less, 50 mM or less, less than 50 mM, 45 mM or less, 40 mM or less, less than 40 mM, 35 mM or less, 30 mM or less, 25 mM or less, 20 mM or less, 15 mM or less, or 10 mM or less. Alternatively, such a content may be 10 to 130 mM, 10 to 100 mM, 10 to 80 mM, 20 to 80 mM, 30 to 80 mM, 40 to 80 mM, 50 to 80 mM, 60 to 80 mM, 70 to 80 mM, 10 to 70 mM, 20 to 70 mM, 30 to 70 mM, 40 to 70 mM, 50 to 70 mM, 60 to 70 mM, 10 to 60 mM, 20 to 60 mM, 30 to 60 mM, 40 to 60 mM, 50 to 60 mM, 10 to 50 mM, 20 to 50 mM, 30 to 50 mM, 40 to 50 mM, 10 to 40 mM, 20 to 40 mM, 30 to 40 mM, 10 to 30 mM, 20 to 30 mM, 5 to 45 mM, 5 to 40 mM, 5 to 35 mM, 5 to 30 mM, 5 to 25 mM, 5 to 20 mM, 5 to 15 mM, 5 to 10 mM, 1 to 45 mM, 1 to 40 mM, 1 mM or more and less than 40 mM, 1 to 35 mM, 1 to 30 mM, 1 to 25 mM, 1 to 20 mM, 1 to 15 mM, or 1 to 10 mM. Serine may be either the L-configuration, the D-configuration, or the racemic configuration (DL-configuration) but is preferably the L-configuration.

In an embodiment of the present invention, the flavored water contains threonine and a content of threonine may be more than 0 mM and 70 mM or less, 65 mM or less, 60 mM or less, 55 mM or less, 50 mM or less, less than 50 mM, 45 mM or less, 40 mM or less, less than 40 mM, 35 mM or less, 30 mM or less, 25 mM or less, 20 mM or less, 15 mM or less, or 10 mM or less. Alternatively, such a content may be 1 to 70 mM, 1 to 65 mM, 1 to 60 mM, 1 to 55 mM, 1 to 50 mM, 5 to 50 mM, 10 to 50 mM, 15 to 50 mM, 20 to 50 mM, 25 to 50 mM, 1 to 50 mM, 5 to 50 mM, 10 to 50 mM, 15 to 50 mM, 20 to 50 mM, 25 to 50 mM, 30 to 50 mM, 35 to 50 mM, 40 to 50 mM, 45 to 50 mM, 1 to 45 mM, 5 to 45 mM, 10 to 45 mM, 15 to 45 mM, 20 to 45 mM, 25 to 45 mM, 1 to 45 mM, 5 to 45 mM, 10 to 45 mM, 15 to 45 mM, 20 to 45 mM, 25 to 45 mM, 30 to 45 mM, 35 to 45 mM, 40 to 45 mM, 1 to 40 mM, 1 mM or more and less than 40 mM, 5 to 40 mM, 10 to 40 mM, 15 to 40 mM, 20 to 40 mM, 25 to 40 mM, 1 to 40 mM, 5 to 40 mM, 10 to 40 mM, 15 to 40 mM, 20 to 40 mM, 25 to 40 mM, 30 to 40 mM, 35 to 40 mM, 1 to 40 mM, 5 to 40 mM, 10 to 40 mM, 15 to 40 mM, 20 to 40 mM, 25 to 40 mM, 1 to 35 mM, 5 to 35 mM, 10 to 35 mM, 15 to 35 mM, 20 to 35 mM, 25 to 35 mM, 30 to 35 mM, 1 to 30 mM, 5 to 30 mM, 10 to 30 mM, 15 to 30 mM, 20 to 30 mM, 25 to 30 mM, 1 to 25 mM, 5 to 25 mM, 10 to 25 mM, 15 to 25 mM, 20 to 25 mM, 1 to 20 mM, 5 to 20 mM, 10 to 20 mM, or 15 to 20 mM. Threonine may be either the L-configuration, the D-configuration, or the racemic configuration (DL-configuration) but is preferably the L-configuration.

In an embodiment of the present invention, the flavored water contains phenylalanine and a content of phenylalanine may be more than 0 mM and 15 mM or less, 13 mM or less, 12 mM or less, 11 mM or less, 10 mM or less, 9 mM or less, 8 mM or less, 7 mM or less, 6 mM or less, 5 mM or less, 4 mM or less, 3 mM or less, 2 mM or less, or 1 mM or less. Alternatively, such a content may be 1 to 15 mM, 2 to 15 mM, 3 to 15 mM, 4 to 15 mM, 5 to 15 mM, 6 to 15 mM, 7 to 15 mM, 8 to 15 mM, 9 to 15 mM, 10 to 15 mM, 1 to 12 mM, 2 to 12 mM, 3 to 12 mM, 4 to 12 mM, 5 to 12 mM, 6 to 12 mM, 7 to 12 mM, 8 to 12 mM, 9 to 12 mM, 10 to 12 mM, 1 to 10 mM, 2 to 10 mM, 3 to 10 mM, 4 to 10 mM, 5 to 10 mM, 6 to 10 mM, 7 to 10 mM, 8 to 10 mM, or 9 to 10 mM. Phenylalanine may be either the L-configuration, the D-configuration, or the racemic configuration (DL-configuration) but is preferably the L-configuration.

In an embodiment of the present invention, the flavored water contains tryptophan and a content of tryptophan may be more than 0 mM and 5 mM or less, 4 mM or less, 3 mM or less, 2 mM or less, or 1 mM or less. Alternatively, such a content may be 1 to 5 mM, 2 to 5 mM, 3 to 5 mM, or 4 to 5 mM. Tryptophan may be either the L-configuration, the D-configuration, or the racemic configuration (DL-configuration) but is preferably the L-configuration.

In an embodiment of the present invention, the flavored water contains methionine and a content of methionine may be more than 0 mM and 10 mM or less, 9 mM or less, 8 mM or less, 7 mM or less, 6 mM or less, 5 mM or less, 4 mM or less, 3 mM or less, 2 mM or less, or 1 mM or less. Alternatively, such a content may be 1 to 10 mM, 2 to 10 mM, 3 to 10 mM, 4 to 10 mM, 5 to 10 mM, 6 to 10 mM, 7 to 10 mM, 8 to 10 mM, or 9 to 10 mM. Methionine may be either the L-configuration, the D-configuration, or the racemic configuration (DL-configuration) but is preferably the L-configuration.

In an embodiment of the present invention, the flavored water contains proline and a content of proline may be more than 0 mM and 120 mM or less, 100 mM or less, 80 mM or less, 50 mM or less, less than 50 mM, 45 mM or less, 40 mM or less, less than 40 mM, 35 mM or less, 30 mM or less, 25 mM or less, 20 mM or less, 15 mM or less, or 10 mM or less. Alternatively, such a content may be 10 to 120 mM, 10 to 100 mM, 10 to 80 mM, 20 to 80 mM, 30 to 80 mM, 40 to 80 mM, 50 to 80 mM, 60 to 80 mM, 70 to 80 mM, 10 to 70 mM, 20 to 70 mM, 30 to 70 mM, 40 to 70 mM, 50 to 70 mM, 60 to 70 mM, 10 to 60 mM, 20 to 60 mM, 30 to 60 mM, 40 to 60 mM, 50 to 60 mM, 10 to 50 mM, 20 to 50 mM, 30 to 50 mM, 40 to 50 mM, 1 mM or more and less than 40 mM, 10 to 40 mM, 20 to 40 mM, 30 to 40 mM, 1 to 30 mM, 5 to 30 mM, 10 to 30 mM, 15 to 30 mM, 20 to 30 mM, or 25 to 30 mM. Proline may be either the L-configuration, the D-configuration, or the racemic configuration (DL-configuration) but is preferably the L-configuration.

In an embodiment of the present invention, the flavored water contains glutamine and a content of glutamine may be more than 0 mM and 20 mM or less, 19 mM or less, 18 mM or less, 17 mM or less, 16 mM or less, 15 mM or less, 14 mM or less, 13 mM or less, 12 mM or less, 11 mM or less, 10 mM or less, less than 10 mM, 9 mM or less, 8 mM or less, 7 mM or less, 6 mM or less, 5 mM or less, less than 5 mM, 4 mM or less, 3 mM or less, 2 mM or less, or 1 mM or less. Alternatively, such a content may be 1 to 20 mM, 1 to 18 mM, 1 to 15 mM, 2 to 15 mM, 3 to 15 mM, 4 to 15 mM, 5 to 15 mM, 6 to 15 mM, 7 to 15 mM, 8 to 15 mM, 9 to 15 mM, 10 to 15 mM, 1 to 12 mM, 2 to 12 mM, 3 to 12 mM, 4 to 12 mM, 5 to 12 mM, 6 to 12 mM, 7 to 12 mM, 8 to 12 mM, 9 to 12 mM, 10 to 12 mM, 1 to 10 mM, 2 to 10 mM, 3 to 10 mM, 4 to 10 mM, 5 to 10 mM, 6 to 10 mM, 7 to 10 mM, 8 to 10 mM, 9 to 10 mM, 1 to 8 mM, 2 to 8 mM, 3 to 8 mM, 4 to 8 mM, 5 to 8 mM, 6 to 8 mM, 7 to 8 mM, 1 to 7 mM, 2 to 7 mM, 3 to 7 mM, 4 to 7 mM, 5 to 7 mM, 6 to 7 mM, 1 to 6 mM, 2 to 6 mM, 3 to 6 mM, 4 to 6 mM, 5 to 6 mM, 1 to 5 mM, 1 mM or more and less than 5 mM, 2 to 5 mM, 3 to 5 mM, 4 to 5 mM, 1 to 4 mM, 2 to 4 mM, 3 to 4 mM, 1 to 3 mM, or 2 to 3 mM. Glutamine may be either the L-configuration, the D-configuration, or the racemic configuration (DL-configuration) but is preferably the L-configuration.

In an embodiment of the present invention, the flavored water contains asparagine and a content of asparagine may be more than 0 mM and 20 mM or less, less than 20 mM, 19 mM or less, 18 mM or less, 17 mM or less, 16 mM or less, 15 mM or less, 14 mM or less, 13 mM or less, 12 mM or less, 11 mM or less, 10 mM or less, less than 10 mM, 9 mM or less, 8 mM or less, 7 mM or less, 6 mM or less, 5 mM or less, 4 mM or less, 5 mM or less, 2 mM or less, or 1 mM or less. Alternatively, such a content may be 1 to 20 mM, 1 to 18 mM, 1 to 15 mM, 2 to 15 mM, 3 to 15 mM, 4 to 15 mM, 5 to 15 mM, 6 to 15 mM, 7 to 15 mM, 8 to 15 mM, 9 to 15 mM, 10 to 15 mM, 1 to 12 mM, 2 to 12 mM, 3 to 12 mM, 4 to 12 mM, 5 to 12 mM, 6 to 12 mM, 7 to 12 mM, 8 to 12 mM, 9 to 12 mM, 10 to 12 mM, 1 to 10 mM, 1 mM or more and less than 10 mM, 2 to 10 mM, 3 to 10 mM, 4 to 10 mM, 5 to 10 mM, 6 to 10 mM, 7 to 10 mM, 8 to 10 mM, 9 to 10 mM, 0.1 to 3.0 mM, 0.1 to 2.5 mM, 0.1 to 2.0 mM, 0.1 to 1.5 mM, 0.1 to 1.0 mM, 0.1 to 0.5 mM, 0.5 to 3.0 mM, 0.5 to 2.5 mM, 0.5 to 2.0 mM, 0.5 to 1.5 mM, or 0.5 to 1.0 mM. Asparagine may be either the L-configuration, the D-configuration, or the racemic configuration (DL-configuration) but is preferably the L-configuration.

In an embodiment of the present invention, the flavored water contains arginine and a content of arginine may be more than 0 mM and 4.0 mM or less, 3.5 mM or less, 3.0 mM or less, 2.5 mM or less, less than 2.5 mM, 2.0 mM or less, 1.5 mM or less, 1.0 mM or less, less than 1.0 mM, or 0.5 mM or less. Alternatively, such a content may be 0.1 to 4.0 mM, 0.1 to 3.5 mM, 0.1 to 3.0 mM, 0.1 to 2.5 mM, 0.1 to 2.0 mM, 0.1 to 1.5 mM, 0.1 to 1.0 mM, 0.1 mM or more and 1.0 mM, 0.1 to 0.5 mM, 0.5 to 4.0 mM, 0.5 to 3.5 mM, 0.5 to 3.0 mM, 0.5 to 2.5 mM, 0.5 to 2.0 mM, 0.5 to 1.5 mM, or 0.5 to 1.0 mM. Arginine may be either the L-configuration, the D-configuration, or the racemic configuration (DL-configuration) but is preferably the L-configuration.

In an embodiment of the present invention, the flavored water contains lysine and a content of lysine may be more than 0 mM and 3.0 mM or less, 2.5 mM or less, 2.0 mM or less, 1.5 mM or less, 1.0 mM or less, or 0.5 mM or less. Alternatively, such a content may be 0.1 to 3.0 mM, 0.1 to 2.5 mM, 0.1 to 2.0 mM, 0.1 to 1.5 mM, 0.1 to 1.0 mM, 0.1 to 0.5 mM, 0.5 to 3.0 mM, 0.5 to 2.5 mM, 0.5 to 2.0 mM, 0.5 to 1.5 mM, or 0.5 to 1.0 mM. Lysine may be either the L-configuration, the D-configuration, or the racemic configuration (DL-configuration) but is preferably the L-configuration.

In an embodiment of the present invention, the flavored water contains lysine hydrochloride and a content of lysine hydrochloride may be more than 0 mM and 1.0 mM or less, 0.9 mM or less, 0.8 mM or less, 0.7 mM or less, 0.6 mM or less, 0.5 mM or less, less than 0.5 mM, 0.4 mM or less, less than 0.4 mM, 0.3 mM or less, or 0.2 mM or less. Alternatively, such a content may be 0.1 to 1.0 mM, 0.1 to 0.9 mM, 0.1 to 0.8 mM, 0.1 to 0.7 mM, 0.1 to 0.6 mM, 0.1 to 0.5 mM, 0.1 to 0.4 mM, 0.1 mM or more and less than 0.4 mM, 0.1 to 0.3 mM, 0.1 to 0.2 mM, 0.2 to 1.0 mM, 0.5 to 0.8 mM, 0.2 to 0.6 mM, 0.2 to 0.4 mM, or 0.3 to 0.5 mM. Lysine may be either the L-configuration, the D-configuration, or the racemic configuration (DL-configuration) but is preferably the L-configuration.

In an embodiment of the present invention, the flavored water contains histidine and a content of histidine may be more than 0 mM and 4.0 mM or less, 3.5 mM or less, 3.0 mM or less, 2.5 mM or less, 2.0 mM or less, 1.5 mM or less, 1.0 mM or less, or 0.5 mM or less. Alternatively, such a content may be 0.1 to 4.0 mM, 0.1 to 3.5 mM, 0.1 to 3.0 mM, 0.1 to 2.5 mM, 0.1 to 2.0 mM, 0.1 to 1.5 mM, 0.1 to 1.0 mM, 0.1 to 0.5 mM, 0.5 to 4.0 mM, 0.5 to 3.5 mM, 0.5 to 3.0 mM, 0.5 to 2.5 mM, 0.5 to 2.0 mM, 0.5 to 1.5 mM, or 0.5 to 1.0 mM. Histidine may be either the L-configuration, the D-configuration, or the racemic configuration (DL-configuration) but is preferably the L-configuration.

In an embodiment of the present invention, the flavored water contains glutamic acid and a content of glutamic acid may be more than 0 mM and 0.50 mM or less, less than 0.50 mM, 0.40 mM or less, less than 0.40 mM, 0.35 mM or less, 0.30 mM or less, 0.25 mM or less, less than 0.25 mM, 0.20 mM or less, 0.15 mM or less, 0.14 mM or less, 0.13 mM or less, 0.12 mM or less, 0.11 mM or less, 0.10 mM or less, 0.09 mM or less, 0.08 mM or less, 0.07 mM or less, 0.06 mM or less, 0.05 mM or less, 0.04 mM or less, 0.03 mM or less, 0.02 mM or less, or 0.01 mM or less. Alternatively, such a content may be 0.01 to 0.15 mM, 0.02 to 0.15 mM, 0.03 to 0.15 mM, 0.04 to 0.15 mM, 0.05 to 0.15 mM, 0.06 to 0.15 mM, 0.07 to 0.15 mM, 0.08 to 0.15 mM, 0.09 to 0.15 mM, 0.10 to 0.15 mM, 0.01 to 0.12 mM, 0.02 to 0.12 mM, 0.03 to 0.12 mM, 0.04 to 0.12 mM, 0.05 to 0.12 mM, 0.06 to 0.12 mM, 0.07 to 0.12 mM, 0.08 to 0.12 mM, 0.09 to 0.12 mM, 0.10 to 0.12 mM, 0.01 to 0.10 mM, 0.02 to 0.10 mM, 0.03 to 0.10 mM, 0.04 to 0.10 mM, 0.05 to 0.10 mM, 0.06 to 0.10 mM, 0.07 to 0.10 mM, 0.08 to 0.10 mM, 0.09 to 0.10 mM, 0.10 to 0.40 mM, 0.10 to 0.35 mM, 0.10 to 0.30 mM, 0.10 to 0.25 mM, 0.10 mM or more and less than 0.25 mM, 0.10 to 0.20 mM, 0.10 to 0.15 mM, 0.20 to 0.40 mM, 0.20 to 0.35 mM, 0.20 to 0.30 mM, 0.20 to 0.25 mM, or 0.30 to 0.40 mM. Glutamic acid may be either the L-configuration, the D-configuration, or the racemic configuration (DL-configuration) but is preferably the L-configuration.

In an embodiment of the present invention, the flavored water contains aspartic acid and a content of aspartic acid may be more than 0 mM and 1.5 mM or less, 1.4 mM or less, 1.3 mM or less, 1.2 mM or less, 1.1 mM or less, 1.0 mM or less, 0.9 mM or less, 0.8 mM or less, 0.7 mM or less, 0.6 mM or less, 0.5 mM or less, 0.4 mM or less, 0.3 mM or less, 0.2 mM or less, or 0.1 mM or less. Alternatively, such a content may be 0.1 to 1.5 mM, 0.2 to 1.5 mM, 0.3 to 1.5 mM, 0.4 to 1.5 mM, 0.5 to 1.5 mM, 0.6 to 1.5 mM, 0.7 to 1.5 mM, 0.8 to 1.5 mM, 0.9 to 1.5 mM, 1.0 to 1.5 mM, 0.1 to 1.2 mM, 0.2 to 1.2 mM, 0.3 to 1.2 mM, 0.4 to 1.2 mM, 0.5 to 1.2 mM, 0.6 to 1.2 mM, 0.7 to 1.2 mM, 0.8 to 1.2 mM, 0.9 to 1.2 mM, 1.0 to 1.2 mM, 0.1 to 1.0 mM, 0.2 to 1.0 mM, 0.3 to 1.0 mM, 0.4 to 1.0 mM, 0.5 to 1.0 mM, 0.6 to 1.0 mM, 0.7 to 1.0 mM, 0.8 to 1.0 mM, or 0.9 to 1.0 mM. Aspartic acid may be either the L-configuration, the D-configuration, or the racemic configuration (DL-configuration) but is preferably the L-configuration.

The flavored water in an embodiment of the present invention does not contain monosodium aspartate as the amino acid salt.

An amino acid content can be measured by an amino acid automatic analysis method or high-performance liquid chromatography. When an amount of the amino acid contained in the beverage is known, a value calculated from the amount contained may be adopted.

In an embodiment of the present invention, when the flavored water contains a fruit juice and a fruit-derived amino acid is contained in the fruit juice, such an amino acid is also encompassed in the amino acid in the flavored water of the present invention. In this case, an amount of the amino acid contained in the flavored water of the present invention is a total value of amounts of fruit juice-derived one and one added externally. In an embodiment of the present invention, also when the flavored water contains an extract and the extract contains an amino acid, the above may apply. In an embodiment of the present invention, when a plurality of amino acids are contained in the flavored water, a content of at least one of such amino acids may be less than the taste recognition threshold, or contents of some of such amino acids may be more than the taste recognition threshold. In other embodiments of the present invention, when a plurality of amino acids are contained in the flavored water, a content of each of such amino acids may be less than the taste recognition threshold. The flavored water in still other embodiment of the present invention may contain one or more amino acids selected from less than 20 mM of DL-alanine, less than 40 mM of L-serine, less than 50 mM of glycine, less than 1.0 mM of L-arginine, less than 0.25 mM of L-glutamic acid, less than 40 mM of L-valine, less than 5 mM of L-glutamine, less than 20 mM of L-leucine, less than 40 mM of L-threonine, less than 40 mM of L-proline, less than 10 mM of L-asparagine, and less than 0.4 mM of L-lysine hydrochloride. The flavored water in still other embodiment of the present invention may contain one or more amino acids selected from 1 mM or more and less than 20 mM of DL-alanine, 1 mM or more and less than 40 mM of L-serine, 1 mM or more and less than 50 mM of glycine, 0.1 mM or more and less than 1.0 mM of L-arginine, 0.10 mM or more and less than 0.25 mM of L-glutamic acid, 1 mM or more and less than 40 mM of L-valine, 1 mM or more and less than 5 mM of L-glutamine, 1 mM or more and less than 20 mM of L-leucine, 1 mM or more and less than 40 mM of L-threonine, 1 mM or more and less than 40 mM of L-proline, 1 mM or more and less than 10 mM of L-asparagine, and 0.1 mM or more and less than 0.4 mM of L-lysine hydrochloride. In an embodiment of the present invention, when the flavored water does not contain a fruit juice and an extract, an amount of the amino acid contained in the flavored water of the present invention is an amount of an amino acid added externally.

### [Optional component]

### (Sweetener)

The flavored water of the present invention may contain a sweetener other than the high-intensity sweetener of the component (a). In the present description, the "sweetener" means any substance or a substance group which causes a sweetness response. Sweeteners can be classified into carbohydrate sweeteners and non-carbohydrate sweeteners based on structural characteristics and also into low-intensity sweeteners and high-intensity sweeteners based on the degree of sweetness. Further, sweet substances can also be classified based on the energy (calorie) into caloric sweeteners and non-caloric sweeteners. Further, sweet substances can also be classified based on the availability into natural sweeteners and artificial sweeteners. Note that, when the flavored water comprises a fruit juice and the fruit juice contains a fruit-derived sweetener (fructose or the like), such a sweetener is also encompassed in the sweetener here described. Also when the flavored water contains an extract and the extract contains a sweetener, the above may apply.

The carbohydrate sweetener is not limited and examples include starch sugars such as sucrose, lactose, glucose, maltose, starch syrup, a high-fructose corn syrup, and fructose, sugar alcohols such as erythritol, sorbitol, mannitol, maltitol, xylitol, and palatinit, sucrose, palatinose, fructooligosaccharide, Coupling Sugar^{(R)}, galactooligosaccharide, lactosucrose, raffinose, soyoligosaccharide, and honey. Further, the carbohydrate sweetener includes rare sugars.

The rare sugar refers to a monosaccharide that occurs in very small quantities in nature and derivatives thereof. For example, the rare sugar includes naturally occurring aldoses other than D-glucose, D-galactose, D-mannose, D-ribose, D-xylose, and L-arabinose, naturally occurring ketoses other than D-fructose, and naturally occurring sugar alcohols other than D-sorbitol. Nonrestrictive examples of the rare sugar include ketoses such as D-tagatose, D-sorbose, D-allulose (D-psicose), L-fructose, L-allulose (L-psicose), L-tagatose, and L-sorbose, aldoses such as altrose and D-allose, and sugar alcohols such as xylitol, erythritol, and D-talitol.

The caloric sweetener typically means sweet substances having an energy of 4 kcal/g. An energy of a sweet substance is already known or can be determined by measuring a content by HPLC or the like and calculating by multiplying the content by an energy conversion factor, or measuring a heat of physical combustion using a calorie meter (for example, bomb calorimeter) and correcting the heat with a digestion-absorption rate, an excreted heat or the like. Nonrestrictive examples of the caloric sweetener include sucrose, lactose, glucose, maltose, starch syrup, a high-fructose corn syrup, and fructose.

The non-caloric sweeteners typically refer to those having the nature of being difficult to be digested in the body and consequently having a reduced energy to be taken into and means sweet substances having an energy of less than 2 kcal/g, preferably less than 1 kcal/g, and further preferably less than 0.5 kcal/g. Nonrestrictive examples of the non-caloric sweetener include non-caloric hexoses such as allulose (psicose) and allose, non-caloric pentoses such as xylose and arabinose, non-caloric tetroses such as erythrose and threose, and non-caloric sugar alcohols such as erythritol and allitol.

Further, the sweet substances can also be classified based on the energy (calorie) level. For example, the sweet substances can be classified into sweet substances having an energy of 4 kcal/g or more and sweet substances having an energy of less than 4 kcal/g. The sweet substances having an energy of less than 4 kcal/g can further be classified into sweet substances having an energy of less than 3 kcal/g, sweet substances having an energy of less than 2.5 kcal/g, sweet substances having an energy of less than 2 kcal/g, sweet substances having an energy of less than 1.5 kcal/g, sweet substances having an energy of less than 1 kcal/g, sweet substances having an energy of less than 0.5 kcal/g, sweet substances having an energy of 1 kcal/g or more and less than 4 kcal/g, sweet substances having an energy of 2 kcal/g or more and less than 4 kcal/g, sweet substances having an energy of 3 kcal/g or more and less than 4 kcal/g, sweet substances having an energy of 2 kcal/g or more and less than 3 kcal/g, sweet substances having an energy of 1 kcal/g or more and less than 2 kcal/g, sweet substances having an energy of 0 kcal/g or more and less than 2 kcal/g, or sweet substances having an energy of 0 kcal/g or more and less than 1 kcal/g. Examples of the sweet substance having an energy of 4 kcal/g or more include sucrose, lactose, glucose, maltose, starch syrup, a high-fructose corn syrup, and fructose, examples of the sweet substance having an energy of 2 kcal/g or more and less than 4 kcal/g include sorbitol, xylitol, D-xylose, D-ribose, D-tagatose, and arabinose, and examples of the sweet substance having an energy of 0 kcal/g or more and less than 2 kcal/g include D-allulose, erythritol, allose, erythrose, threose, and allitol.

The low-intensity sweetener means a compound having about the same degree of sweetness as that of sucrose (for example, less than 5 times, about 0.1 to 2 times, about 0.5 to 1.5 times that of sucrose). Nonrestrictive examples of the low-intensity sweetener include low-intensity sugar sweeteners such as sucrose, a high-fructose corn syrup, glucose, fructose, lactose, maltose, xylose, lactulose, fructooligosaccharide, maltooligosaccharide, isomaltooligosaccharide, galactooligosaccharide, Coupling Sugar^{(R)}, and palatinose, and sugar alcohol low-intensity sweeteners such as maltitol, sorbitol, erythritol, xylitol, lactitol, palatinit, and reduced starch saccharified products. Further, the low-intensity sweetener includes rare sugars, caloric sweeteners, non-caloric sweeteners, carbohydrate sweeteners, non-carbohydrate sweeteners, natural sweeteners, and artificial sweeteners as long as the degree of sweetness is in the above range.

The flavored water in an embodiment of the present invention contains a low-intensity sweetener. In other embodiments of the present invention, the following flavored water (hereinafter also referred to as the flavored water of Embodiment A) is provided.

Flavored water comprising:
(a) a high-intensity sweetener in an amount corresponding to a sweetness intensity Xa,
(b) an amino acid or a derivative or a salt thereof in an amount less than a taste recognition threshold, and
(c) a low-intensity sweetener in an amount corresponding to a sweetness intensity Xc,
   wherein the flavored water has a sweetness of a sweetness intensity Xd exhibited by the components (a) to (c) and 0.1 < Xa + Xc < Xd is satisfied. Xc and Xd are respectively referred to as X4 and X6 in the first embodiment. The flavored water in an embodiment of the present invention does not contain a component as a sweetener other than (a) a high-intensity sweetener in an amount corresponding to a sweetness intensity Xa and (c) a low-intensity sweetener in an amount corresponding to a sweetness intensity Xc. Note that, when a fruit juice and/or an extract are/is contained in the flavored water, any sweetener contained in the fruit juice and/or extract is also encompassed in (c).

In an embodiment of the present invention, the low-intensity sweetener contains a sweetener selected from hexose, pentose, tetrose, a polysaccharide having a terminal sugar of aldose or ketose, sugar alcohols, and a combination thereof. In other embodiments of the present invention, the low-intensity sweetener contains a sweetener selected from glucose, sucrose, fructose, maltose, an oligosaccharide, a high-fructose corn syrup, lactose, psicose, allose, tagatose, xylose, ribose, and a combination thereof. In still another embodiment of the present invention, the low-intensity sweetener contains a sweetener selected from glucose, sucrose, fructose, and a combination thereof.

The Xc of "sweetness intensity Xc" may be 0 to 0.5, 0 to 1.0, 0 to 1.5, 0 to 2.0, 0 to 2.5, 0 to 3.0, 0 to 3.5, 0 to 4.0, 0 to 4.5, 0 to 5.0, 0 to 5.5, 0 to 6.0, 0 to 6.5, 0 to 7.0, 0 to 7.5, 0 to 8.0, 0 to 8.25, 0 to 8.5, 0 to 8.75, 0 to 9.0, 0 to 9.25, 0 to 9.5, 0 to 9.75, 0 to 10.0, 0.05 to 0.5, 0.05 to 1.0, 0.05 to 1.5, 0.05 to 2.0, 0.05 to 2.5, 0.05 to 3.0, 0.05 to 3.5, 0.05 to 4.0, 0.05 to 4.5, 0.05 to 5.0, 0.05 to 5.5, 0.05 to 6.0, 0.05 to 6.5, 0.05 to 7.0, 0.05 to 7.5, 0.05 to 8.0, 0.05 to 8.25, 0.05 to 8.5, 0.05 to 8.75, 0.05 to 9.0, 0.05 to 9.25, 0.05 to 9.5, 0.05 to 9.75, 0.05 to 10.0, 0.1 to 0.5, 0.1 to 1.0, 0.1 to 1.5, 0.1 to 2.0, 0.1 to 2.5, 0.1 to 3.0, 0.1 to 3.5, 0.1 to 4.0, 0.1 to 4.5, 0.1 to 5.0, 0.1 to 5.5, 0.1 to 6.0, 0.1 to 6.5, 0.1 to 7.0, 0.1 to 7.5, 0.1 to 8.0, 0.1 to 8.25, 0.1 to 8.5, 0.1 to 8.75, 0.1 to 9.0, 0.1 to 9.25, 0.1 to 9.5, 0.1 to 9.75, 0.1 to 10.0, 0.5 to 0.5, 0.5 to 1.0, 0.5 to 1.5, 0.5 to 2.0, 0.5 to 2.5, 0.5 to 3.0, 0.5 to 3. 5, 0.5 to 4.0, 0.5 to 4.5, 0.5 to 5.0, 0.5 to 5.5, 0.5 to 6.0, 0.5 to 6.5, 0.5 to 7.0, 0.5 to 7. 5, 0.5 to 8.0, 0.5 to 8.25, 0.5 to 8.5, 0.5 to 8.75, 0.5 to 9.0, 0.5 to 9.25, 0.5 to 9.5, 0.5 to 9.75, 0.5 to 10.0, 1.0 to 0.5, 1.0 to 1.0, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.0 to 6.0, 1.0 to 6.5, 1.0 to 7.0, 1.0 to 7.5, 1.0 to 8.0, 1.0 to 8.25, 1.0 to 8.5, 1.0 to 8.75, 1.0 to 9.0, 1.0 to 9.25, 1.0 to 9.5, 1.0 to 9.75, 1.0 to 10.0, 1.5 to 0.5, 1.5 to 1.0, 1.5 to 1.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 1.5 to 6.0, 1.5 to 6.5, 1.5 to 7.0, 1.5 to 7.5, 1.5 to 8.0, 1.5 to 8.25, 1.5 to 8.5, 1.5 to 8.75, 1.5 to 9.0, 1.5 to 9.25, 1.5 to 9.5, 1.5 to 9.75, 1.5 to 10.0, 2.0 to 0.5, 2.0 to 1.0, 2.0 to 1.5, 2.0 to 2.0, 2.0 to 2.5, 2.0 to 3.0, 2.0 to 3.5, 2.0 to 4.0, 2.0 to 4.5, 2.0 to 5.0, 2.0 to 5.5, 2.0 to 6.0, 2.0 to 6.5, 2.0 to 7.0, 2.0 to 7.5, 2.0 to 8.0, 2.0 to 8.25, 2.0 to 8.5, 2.0 to 8.75, 2.0 to 9.0, 2.0 to 9.25, 2.0 to 9.5, 2.0 to 9.75, 2.0 to 10.0, 2.5 to 0.5, 2.5 to 1.0, 2.5 to 1.5, 2.5 to 2.0, 2.5 to 2.5, 2.5 to 3.0, 2.5 to 3.5, 2.5 to 4.0, 2.5 to 4.5, 2.5 to 5.0, 2.5 to 5.5, 2.5 to 6.0, 2.5 to 6.5, 2.5 to 7.0, 2.5 to 7.5, 2.5 to 8.0, 2.5 to 8.25, 2.5 to 8.5, 2.5 to 8.75, 2.5 to 9.0, 2.5 to 9.25, 2.5 to 9.5, 2.5 to 9.75, 2.5 to 10.0, 0.1 to 5.9, 3.0 to 3.5, 3.0 to 4.0, 3.0 to 4.5, 3.0 to 5.0 or 3.0 to 5.5.

The Xc may also be 0 to 10.5, 0 to 11.0, 0 to 11.5, 0 to 12.0, 0 to 12.5, 0 to 13.0, 0 to 13.5, 0 to 14.0, 0 to 14.5, 0 to 15.0, 0.05 to 10.5, 0.05 to 11.0, 0.05 to 11.5, 0.05 to 12.0, 0.05 to 12.5, 0.05 to 13.0, 0.05 to 13.5, 0.05 to 14.0, 0.05 to 14.5, 0.05 to 15.0, 0.1 to 10.5, 0.1 to 11.0, 0.1 to 11.5, 0.1 to 12.0, 0.1 to 12.5, 0.1 to 13.0, 0.1 to 13.5, 0.1 to 14.0, 0.1 to 14.5, 0.1 to 15.0, 0.5 to 10.5, 0.5 to 11.0, 0.5 to 11.5, 0.5 to 12.0, 0.5 to 12.5, 0.5 to 13.0, 0.5 to 13.5, 0.5 to 14.0, 0.5 to 14.5, 0.5 to 15.0, 1.0 to 10.5, 1.0 to 11.0, 1.0 to 11.5, 1.0 to 12.0, 1.0 to 12.5, 1.0 to 13.0, 1.0 to 13.5, 1.0 to 14.0, 1.0 to 14.5, 1.0 to 15.0, 1.5 to 10.5, 1.5 to 11.0, 1.5 to 11.5, 1.5 to 12.0, 1.5 to 12.5, 1.5 to 13.0, 1.5 to 13.5, 1.5 to 14.0, 1.5 to 14.5, 1.5 to 15.0, 2.0 to 10.5, 2.0 to 11.0, 2.0 to 11.5, 2.0 to 12.0, 2.0 to 12.5, 2.0 to 13.0, 2.0 to 13.5, 2.0 to 14.0, 2.0 to 14.5, 2.0 to 15.0, 2.5 to 10.5, 2.5 to 11.0, 2.5 to 11.5, 2.5 to 12.0, 2.5 to 12.5, 2.5 to 13.0, 2.5 to 13.5, 2.5 to 14.0, 2.5 to 14.5 or 2.5 to 15.0.

In an embodiment of the present invention, the X4 is preferably 0.05 to 6.0, more preferably 0.05 to 5.0, and still more preferably 0.1 to 4.0.

The amount corresponding to a sweetness intensity Xc of a low-intensity sweetener refers to an amount (concentration) which provides a sweetness of a sweetness intensity Xc under the conditions when the low-intensity sweetener is dissolved in water having the same volume as the flavored water of the present invention at 20°C.

The Xd is not particularly limited as long as it is greater than Xa + Xc and may be 4.0 to 20, 4.0 to 15, 4.0 to 12.5, 4.0 to 10, 4.5 to 20, 4.5 to 15, 4.5 to 12.5, 4.5 to 10, 5.0 to 20, 5.0 to 15, 5.0 to 12.5, 5.0 to 10, 5.5 to 20, 5.5 to 15, 5.5 to 12.5, 5.5 to 10, 6.0 to 20, 6.0 to 15, 6.0 to 12.5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8.0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15 or 10.5 to 12.5. The Xd may also be 4.0 to 18, 4.0 to 16, 4.0 to 15.5, 4.0 to 14, 4.5 to 18, 4.5 to 16, 4.5 to 15.5, 4.5 to 14, 5.0 to 18, 5.0 to 16, 5.0 to 15.5, 5.0 to 14, 5.5 to 18, 5.5 to 16, 5.5 to 15.5, 5.5 to 14, 6.0 to 18, 6.0 to 16, 6.0 to 15.5, 6.0 to 14, 6.5 to 18, 6.5 to 16, 6.5 to 15.5, 6.5 to 14, 7.0 to 18, 7.0 to 16, 7.0 to 15.5, 7.0 to 14, 7.5 to 18, 7.5 to 16, 7.5 to 15.5, 7.5 to 14, 7.5 to 9, 7.5 to 8, 8.0 to 18, 8.0 to 18, 8.0 to 16, 8.0 to 15.5, 8.0 to 14, 8.5 to 18, 8.5 to 16, 8.5 to 15.5, 8.5 to 14, 9.0 to 18, 9.0 to 16, 9.0 to 15.5, 9.0 to 14, 9.5 to 18, 9.5 to 16, 9.5 to 15.5, 9.5 to 14, 10.0 to 18, 10.0 to 16, 10.0 to 15.5, 10.5 to 18, 10.5 to 16 or 10.5 to 15.5.

### [Sodium]

The flavored water of the A1-th embodiment of the present invention may contain a small amount of sodium. A content of sodium may also be, depending on an embodiment, a content of 0 mg/100 ml or more and less than 5 mg/100 ml, 0 to 4.5 mg/100 ml, 0 to 4.0 mg/100 ml, 0 to 3.5 mg/100 ml, 0 to 3.0 mg/100 ml, 0 to 2.5 mg/100 ml, 0 to 2.0 mg/100 ml, 0 to 1.9 mg/100 ml, 0 to 1.8 mg/100 ml, 0 to 1.7 mg/100 ml, 0 to 1.6 mg/100 ml, 0 to 1.5 mg/100 ml, 0 to 1.4 mg/100 ml, 0 to 1.3 mg/100 ml, 0 to 1.2 mg/100 ml, 0 to 1.1 mg/100 ml, 0 to 1.0 mg/100 ml, 0.1 mg/100 ml or more and less than 5 mg/100 ml, 0.1 to 4.5 mg/100 ml, 0.1 to 4.0 mg/100 ml, 0.1 to 3.5 mg/100 ml, 0.1 to 3.0 mg/100 ml, 0.1 to 2.5 mg/100 ml, 0.1 to 2.0 mg/100 ml, 0.1 to 1.9 mg/100 ml, 0.1 to 1.8 mg/100 ml, 0.1 to 1.7 mg/100 ml, 0.1 to 1.6 mg/100 ml, 0.1 to 1.5 mg/100 ml, 0.1 to 1.4 mg/100 ml, 0.1 to 1.3 mg/100 ml, 0.1 to 1.2 mg/100 ml, 0.1 to 1.1 mg/100 ml, 0.1 to 1.0 mg/100 ml, 0.5 mg/100 ml or more and less than 5 mg/100 ml, 0.5 to 4.5 mg/100 ml, 0.5 to 4.0 mg/100 ml, 0.5 to 3.5 mg/100 ml, 0.5 to 3.0 mg/100 ml, 0.5 to 2.5 mg/100 ml, 0.5 to 2.0 mg/100 ml, 0.5 to 1.9 mg/100 ml, 0.5 to 1.8 mg/100 ml, 0.5 to 1.7 mg/100 ml, 0.5 to 1.6 mg/100 ml, 0.5 to 1.5 mg/100 ml, 0.5 to 1.4 mg/100 ml, 0.5 to 1.3 mg/100 ml, 0.5 to 1.2 mg/100 ml, 0.5 to 1.1 mg/100 ml, 0.5 to 1.0 mg/100 ml, 1.0 mg/100 ml or more and less than 5 mg/100 ml, 1.0 to 4.5 mg/100 ml, 1.0 to 4.0 mg/100 ml, 1.0 to 3.5 mg/100 ml, 1.0 to 3.0 mg/100 ml, 1.0 to 2.5 mg/100 ml, 1.0 to 2.0 mg/100 ml, 1.0 to 1.9 mg/100 ml, 1.0 to 1.8 mg/100 ml, 1.0 to 1.7 mg/100 ml, 1.0 to 1.6 mg/100 ml, 1.0 to 1.5 mg/100 ml, 1.0 to 1.4 mg/100 ml, 1.0 to 1.3 mg/100 ml, 1.0 to 1.2 mg/100 ml or 1.0 to 1.1 mg/100 ml.

In an embodiment of the present invention, sodium is derived from a fruit juice or an extract, or inevitably incorporated, and is not added. The content of sodium in the beverage can be herein measured by an atomic absorption spectrometry.

### (Other components)

The flavored water of the present invention can suitably contain an antioxidant (sodium erythorbate or the like), an emulsifier (sucrose esters of fatty acids, sorbitan esters of fatty acids, polyglycerin esters of fatty acids or the like), an acidulant (phosphoric acid, citric acid, malic acid or the like), and a flavor, as long as the effects of the present invention are not affected.

### [Exemplary embodiments of the flavored water of A1-th embodiment of the present invention]

In an embodiment of the present invention, flavored water is provided comprising:
(a) a high-intensity sweetener in an amount corresponding to a sweetness intensity Xa, and
(b) an amino acid or a derivative or a salt thereof in an amount less than a taste recognition threshold,

wherein the flavored water has a sweetness of a sweetness intensity Xb exhibited by the components (a) and (b) and 0.1 < Xa < Xb is satisfied,
wherein the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof,
Xa is 0.5 to 5.5, preferably 1.0 to 5.5, and more preferably 2.0 to 5.0, and
the amino acid or a derivative or a salt thereof comprises an amino acid selected from DL-alanine, L-serine, glycine, L-arginine, L-glutamic acid, L-valine, and L-glutamine. In the present embodiment, an amount of the high-intensity sweetener may be about 20 to about 600 ppm, about 30 to about 550 ppm, about 55 to about 490 ppm, about 20 to about 200 ppm, about 100 to about 500 ppm or about 150 to about 350 ppm.

In an embodiment of the present invention, flavored water is provided comprising:
(a) a high-intensity sweetener in an amount corresponding to a sweetness intensity Xa, and
(b) an amino acid or a derivative or a salt thereof in an amount less than a taste recognition threshold,

wherein the flavored water has a sweetness of a sweetness intensity Xb exhibited by the components (a) and (b) and 0.1 < Xa < Xb is satisfied,
wherein the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof,
Xa is 0.5 to 10.0, preferably 1.5 to 9.0, and more preferably 2.0 to 8.0, and
the amino acid or a derivative or a salt thereof comprises an amino acid selected from DL-alanine, L-serine, glycine, L-arginine, L-glutamic acid, L-valine, and L-glutamine. In the present embodiment, an amount of the high-intensity sweetener may be about 20 to about 600 ppm, about 30 to about 550 ppm, about 55 to about 490 ppm, about 20 to about 200 ppm, about 100 to about 500 ppm or about 150 to about 350 ppm.

In an embodiment of the present invention, flavored water is provided comprising:
(a) a high-intensity sweetener in an amount corresponding to a sweetness intensity Xa,
(b) an amino acid or a derivative or a salt thereof in an amount less than a taste recognition threshold, and
(c) a low-intensity sweetener in an amount corresponding to a sweetness intensity Xc,

wherein the flavored water has a sweetness of a sweetness intensity Xd exhibited by the components (a) to (c) and 0.1 < Xa + Xc < Xd is satisfied,
wherein the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof,
Xa is 0.5 to 5.5, preferably 1.0 to 5.5, and more preferably 2.0 to 5.0,
the amino acid or a derivative or a salt thereof comprises an amino acid selected from DL-alanine, L-serine, glycine, L-arginine, L-glutamic acid, L-valine, and L-glutamine,
the low-intensity sweetener comprises a sweetener selected from glucose, sucrose, fructose, maltose, an oligosaccharide, a high-fructose corn syrup, lactose, psicose, allose, tagatose, xylose, ribose, and a combination thereof, and
Xc is 0.05 to 6.0, preferably 0.05 to 5.0, and more preferably 0.1 to 4.0. In the present embodiment, an amount of the high-intensity sweetener may be about 20 to about 600 ppm, about 30 to about 550 ppm, about 55 to about 490 ppm, about 20 to about 200 ppm, about 100 to about 500 ppm or about 150 to about 350 ppm.

In an embodiment of the present invention, flavored water is provided comprising:
(a) a high-intensity sweetener in an amount corresponding to a sweetness intensity Xa,
(b) an amino acid or a derivative or a salt thereof in an amount less than a taste recognition threshold, and
(c) a low-intensity sweetener in an amount corresponding to a sweetness intensity Xc,

wherein the flavored water has a sweetness of a sweetness intensity Xd exhibited by the components (a) to (c) and 0.1 < Xa + Xc < Xd is satisfied,
wherein, the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof,
Xa is 0.5 to 5.5, preferably 1.0 to 5.5, and more preferably 2.0 to 5.0,
the amino acid or a derivative or a salt thereof comprises an amino acid selected from less than 20 mM of DL-alanine, less than 40 mM of L-serine, less than 50 mM of glycine, less than 1 mM of L-arginine, less than 0.25 mM of L-glutamic acid, less than 40 mM of L-valine, less than 5 mM of L-glutamine, less than 20 mM of L-leucine, less than 40 mM of L-threonine, less than 40 mM of L-proline, less than 10 mM of L-asparagine, and less than 0.4 mM of L-lysine monohydrochloride,
the low-intensity sweetener comprises a sweetener selected from glucose, sucrose, fructose, maltose, an oligosaccharide, a high-fructose corn syrup, lactose, psicose, allose, tagatose, xylose, ribose, and a combination thereof, and
Xc is 0.05 to 6.0, preferably 0.05 to 5.0, and more preferably 0.1 to 4.0. In the present embodiment, an amount of the high-intensity sweetener may be about 20 to about 600 ppm, about 30 to about 550 ppm, about 55 to about 490 ppm, about 20 to about 200 ppm, about 100 to about 500 ppm or about 150 to about 350 ppm.

In an embodiment of the present invention, flavored water is provided comprising:
(a) a high-intensity sweetener in an amount corresponding to a sweetness intensity Xa,
(b) an amino acid or a derivative or a salt thereof in an amount less than a taste recognition threshold, and
(c) a low-intensity sweetener in an amount corresponding to a sweetness intensity Xc,

wherein the flavored water has a sweetness of a sweetness intensity Xd exhibited by the components (a) to (c) and 0.1 < Xa + Xc < Xd is satisfied,
wherein the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof,
Xa is 0.5 to 5.5, preferably 1.0 to 5.5, and more preferably 2.0 to 5.0,
the amino acid or a derivative or a salt thereof comprises an amino acid selected from arginine, lysine, histidine, phenylalanine, tyrosine, leucine, isoleucine, methionine, valine, alanine, glycine, proline, glutamic acid, serine, threonine, aspartic acid, and tryptophan,
the low-intensity sweetener comprises a sweetener selected from glucose, sucrose, fructose, and a combination thereof,
the flavored water comprises a fruit juice selected from orange, tangerine, lemon, grapefruit, lime, pineapple, strawberry, raspberry, blueberry, blackcurrant, cranberry, blueberry, guava, banana, acerola, papaya, passion fruit, mango, apple, grape, peach, ume, pear, apricot, plum, melon, kiwifruit, quince, and a combination thereof, and/or an extract thereof, and
Xc is 0.05 to 6.0, preferably 0.05 to 5.0, and more preferably 0.1 to 4.0. In the present embodiment, an amount of the high-intensity sweetener may be about 20 to about 600 ppm, about 30 to about 550 ppm, or about 55 to about 490 ppm.

In an embodiment of the present invention, flavored water is provided comprising:
(a) a high-intensity sweetener in an amount corresponding to a sweetness intensity Xa,
(b) one or more amino acids selected from alanine, serine, and glycine, and
(c) a low-intensity sweetener in an amount corresponding to a sweetness intensity Xc,

wherein the flavored water has a sweetness of a sweetness intensity Xd exhibited by the components (a) to (c) and 0.1 < Xa + Xc < Xd is satisfied, and
an energy is 50 Kcal/100 ml or less, and Xa + Xc is 6 or more. In the present embodiment, an amount of the high-intensity sweetener may be about 20 to about 600 ppm, about 30 to about 550 ppm, about 55 to about 490 ppm, about 20 to about 200 ppm, about 100 to about 500 ppm or about 150 to about 350 ppm.

### <<B1-th embodiment>>

The present invention provides the following flavored water (hereinafter also referred to as "the flavored water B of the present invention") as the B1-th embodiment.

Flavored water comprising:
(a) a high-intensity sweetener in an amount corresponding to a sweetness intensity X1,
(b) an amino acid or a derivative or a salt thereof in an amount less than a taste recognition threshold, and
(c) less than 50 mg/100 ml of sodium,
   wherein the flavored water has a sweetness of a sweetness intensity X2 exhibited by the components (a) to (c) and 0.1 < X1 < X2 is satisfied.

In other words, in the flavored water of the B1-th embodiment of the present invention, the component having a sweetness is (a) a high-intensity sweetener in an amount corresponding to a sweetness intensity X1, and the sweetness of the flavored water of the present invention is supposed to be a sweetness intensity X1 when calculated. However, the presence of (b) an amino acid or a derivative or a salt thereof in an amount less than a taste recognition threshold and (c) less than 50 mg/100 ml of sodium, in the flavored water even in low concentrations enhances the sweetness of (a) a high-intensity sweetener in an amount corresponding to a sweetness intensity X1, to a sweetness intensity X2 (0.1 < X1 < X2 is satisfied herein). The present invention means to possibly further include additional components such as a sweetener other than (a), an acidulant a flavor, vitamin, a coloring, an antioxidant, an emulsifier, a preservative, a seasoning agent, an extract, a pH adjuster, and a quality stabilizer, in addition to these components (a) to (c). The flavored water in an embodiment of the present invention does not contain a substance having a sweetness, as a sweetener, other than the component (a).

Furthermore, the flavored water in a preferable embodiment of the present invention exerts the effect of improving a taste, other than enhancing a sweetness. For example, in the flavored water in an embodiment of the present invention, at least one of "total sweetness", "reduced aftertaste of sweetness", "body, thickness", "flavor intensity", "reduced unpleasant tastes (bitterness, astringency, and the like)" and "saltiness" is preferably improved. In a preferable embodiment of the present invention, "total sweetness" and "body, thickness" are improved by a combination of alanine, glycine or serine and sodium. In another preferable embodiment of the present invention, "total sweetness", "body, thickness" and "flavor intensity" are improved by a combination of alanine and sodium.

### (Flavored water)

In the present invention, the "flavored water" is a beverage obtained by adding a flavor, a fruit juice, an extract, or the like to water such as mineral water (including natural mineral water), and is a beverage which is also called near water and which has an appearance like that of water. In general, the flavored water not only is colorless and clear like water, but also has a flavor, a sweetness, and a sourness of a fruit or the like. The flavored water has a clean taste so as to be capable of being drunk instead of water, and has the property of being drunk easily at the same level as water, or more easily than water.

The flavor which can be included in the flavored water of the present invention is not particularly limited, and examples thereof include fruit-based flavors, citrus-based flavors, mint-based flavors, coffee flavors, cocoa flavors, and tea flavors (including English tea flavors).

In particular, examples of the fruit-based flavor include one or more selected from valencene as a flavor contained in essential oil of orange or the like, linalool as a flavor contained in essential oil of rosewood, lavender, bergamot, coriander or the like, and nootkatone having grapefruit-like aroma, such as d-nootkatone, and the like.

The fruit juice which can be included in the flavored water of the present invention is not particularly limited, and examples thereof include fruit juices of one or more selected from orange, tangerine, lemon, grapefruit, lime, pineapple, strawberry, raspberry, blueberry, blackcurrant, cranberry, blueberry, guava, banana, acerola, papaya, passion fruit, mango, apple, grape, peach, ume, pear, apricot, plum, melon, kiwifruit, and quince.

A straight fruit juice, a concentrated fruit juice, or the like can be herein used for the fruit juice, regardless of a production method. The concentrated fruit juice can be prepared by any of a heating concentration method and a freezing concentration method.

In a case where the fruit juice is here used, a clear fruit juice subjected to a clearing treatment in consideration of the influence on a liquid color of the beverage is preferably used. The fruit juice may be subjected to a decoloration treatment. The content of a clear fruit juice is preferably 5.0 mass% or less, more preferably 2.0 mass% or less, further preferably 1.5 mass% or less, and still further preferably 1.0 mass% or less with reference to the total amount (100 mass%) of the flavored water from the viewpoint that the liquid color is kept colorless and clear and from the viewpoint that the liquid color is kept colorless and clear during long storage.

The extract which can be included in the flavored water of the present invention is not particularly limited, and examples thereof include one or more selected from an algae extract, a dried fish extract, a mushroom extract, a grain extract, a tea extract, a vegetable extract, a fruit extract, a herb extract, a mesophyll extract, a bean extract, nut and seed extracts, a yeast extract, and the like.

The absorbance at a wavelength of 660 nm of the flavored water of the present invention is preferably 0.06 or less, more preferably 0.02 or less, and further preferably 0.01 or less. The absorbance at a wavelength of 660 nm serves as an index of clearness, and flavored water having an absorbance of 0.06 or less can be said to be a clear beverage. The lower limit of the absorbance at a wavelength of 660 nm of the flavored water of the present invention is 0.

The absorbance at a wavelength of 660 nm can be herein measured with an ultraviolet-visible spectrophotometer UV-1600, UV-1800, or UV-1850 (each manufactured by Shimadzu Corporation), or the like.

The ΔE value of transmitted light of the flavored water of the present invention may be 3.5 or less. Flavored water exhibiting a ΔE value of transmitted light of 3.5 or less can be said to be a colorless beverage. The lower limit of the ΔE value of transmitted light of the flavored water of the present invention is 0.

As used herein, the ΔE value of transmitted light is a value measured according to JIS Z 8722, and can be measured with an ultraviolet-visible spectrophotometer such as ZE2000 (manufactured by Nippon Denshoku Industries Co., Ltd.).

The flavored water of the present invention may be a carbonated beverage, or may be an uncarbonated beverage or a jelly beverage.

The carbon dioxide pressure at 20°C of the flavored water as a carbonated beverage may be 1.0 to 5.0 kgf/cm², 1.0 to 4.5 kgf/cm², 1.0 to 4.0 kgf/cm², 1.0 to 3.5 kgf/cm², 1.0 to 3.0 kgf/cm², 1.0 to 2.5 kgf/cm², 1.0 to 2.0 kgf/cm², 1.2 to 5.0 kgf/cm², 1.2 to 4.5 kgf/cm², 1.2 to 4.0 kgf/cm², 1.2 to 3.5 kgf/cm², 1.2 to 3.0 kgf/cm², 1.2 to 2.5 kgf/cm², 1.2 to 2.0 kgf/cm², 1.5 to 5.0 kgf/cm², 1.5 to 4.5 kgf/cm², 1.5 to 4.0 kgf/cm², 1.5 to 3.5 kgf/cm² 1.5 to 3.0 kgf/cm², 1.5 to 2.5 kgf/cm².

The carbon dioxide pressure at 20°C of the flavored water as an uncarbonated beverage may be less than 1.0 kgf/cm², 0 to 0.9 kgf/cm², 0 to 0.8 kgf/cm², 0 to 0.7 kgf/cm², 0 to 0.6 kgf/cm², 0 to 0.5 kgf/cm², 0 to 0.4 kgf/cm², 0 to 0.3 kgf/cm², 0.1 to 0.9 kgf/cm², 0.1 to 0.8 kgf/cm², 0.1 to 0.7 kgf/cm², 0.1 to 0.6 kgf/cm², 0.1 to 0.5 kgf/cm², 0.1 to 0.4 kgf/cm², 0.1 to 0.3 kgf/cm², 0.2 to 0.9 kgf/cm², 0.2 to 0.8 kgf/cm², 0.2 to 0.7 kgf/cm², 0.2 to 0.6 kgf/cm², 0.2 to 0.5 kgf/cm², 0.2 to 0.4 kgf/cm², or 0.2 to 0.3 kgf/cm².

The carbon dioxide pressure can be herein measured with a gas volume measurement apparatus such as GVA-500A from Kyoto Electronics Manufacturing Co., Ltd. For example, the carbon dioxide pressure may be measured after setting of a sample temperature to 20°C, degassing (snifting) in air in a container in the gas volume measurement apparatus, and shaking.

The flavored water of the present invention may be an alcoholic beverage. The alcoholic beverage refers to a beverage containing an alcohol raw material. Examples of the alcohol raw material include brewed liquors, distilled liquors, and mixed liquors. Examples of the brewed liquor include wines and beers. Examples of the distilled liquor include spirits (for example, gins, vodkas, rums, tequilas and new spirits, and material alcohols), liquors, whiskies (for example, whiskies and brandies), and *shochus.* The alcoholic beverages herein can be any beverages containing detectable alcohol and, for examples, contain alcohol of 1 vol% or more, 2 vol% or more, 3 vol% or more, 4 vol% or more, and 5 vol% or more.

The form of the flavored water of the present invention is not limited, and may be, for example, a beverage form where a concentrate is dissolved, or a flavored water form packed in a container, which is contained and packed in a container such as a may or a PET bottle.

### [Sweetness intensity]

As used herein, the "sweetness intensity" means an intensity of sweetness of a substance. For example, when the sweetness intensity of sucrose per unit concentration Brix 1 is defined as a degree of sweetness of 1, a degree of sweetness of glucose is 0.6 to 0.7 (median value 0.65). A numerical value obtained by multiplying this degree of sweetness by a concentration Brix value of glucose is the sweetness intensity of glucose. Thus, when a concentration of glucose is Brix 1.5, the sweetness intensity of glucose is 0.65 x 1.5 = 0.975. The degrees of sweetness of common sweeteners are as shown in Table 1 described with respect to the A1-th embodiment.

The flavored water of the present invention contains, as described above, a high-intensity sweetener in an amount corresponding to a sweetness intensity X1 and has a sweetness of a sweetness intensity X2 exhibited by the components (a) to (c) and 0.1 < X1 < X2 is satisfied.

The X1 in the "sweetness intensity X1" may be more than 0.1 and 0.5 or less, more than 0.1 and 1.0 or less, more than 0.1 and 1.5 or less, more than 0.1 and 2.0 or less, more than 0.1 and 2.5 or less, more than 0.1 and 3.0 or less, more than 0.1 and 3.5 or less, more than 0.1 and 4.0 or less, more than 0.1 and 4.5 or less, more than 0.1 and 5.0 or less, more than 0.1 and 5.5 or less, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 2.0 to 2.5, 2.0 to 3.0, 2.0 to 3.5, 2.0 to 4.0, 2.0 to 4.5, 2.0 to 5.0, 2.0 to 5.5, 2.5 to 3.0, 2.5 to 3.5, 2.5 to 4.0, 2.5 to 4.5, 2.5 to 5.0, 2.5 to 5.5, 3.0 to 3.5, 3.0 to 4.0, 3.0 to 4.5, 3.0 to 5.0, 3.0 to 5.5, 2.0 to 6.5, 2.0 to 7.0, 2.0 to 7.5, 2.0 to 6.0, 2.5 to 7.0, 2.5 to 7.5, 2.5 to 6.0, 2.5 to 6.5, 3.0 to 6.0, 3.0 to 6.5, 3.0 to 7.0, 3.0 to 7.5, 3.0 to 8.0, 3.0 to 8.5, 3.0 to 9.0, 3.0 to 9.5, 3.5 to 7.0, 3.5 to 7.5, 3.5 to 8.0, 4.5 to 8.5, 3.5 to 9.0, 3.5 to 9.5, 4.0 to 7.5, 4.0 to 8.0, 4.0 to 8.5, 4.0 to 9.0, 4.0 to 9.5, 3.5 to 8.5, 3.5 to 10.0, 3.5 to 10.5, 3.5 to 11.0, 3.5 to 11.5, or 4.0 to 11.5.

The X1 may also be more than 0.1 and 6.0 or less, more than 0.1 and 6.5 or less, more than 0.1 and 7.0 or less, more than 0.1 and 7.5 or less, more than 0.1 and 8.0 or less, more than 0.1 and 8.5 or less, more than 0.1 and 9.0 or less, more than 0.1 and 9.5 or less, more than 0.1 and 10.0 or less, more than 0.1 and 10.5 or less, more than 0.1 and 11.0 or less, more than 0.1 and 11.5 or less, more than 0.1 and 12.0 or less, more than 0.1 and 13.0 or less, more than 0.1 and 14.0 or less, more than 0.1 and 15.0 or less, more than 0.1 and 16.0 or less, more than 0.1 and 17.0 or less, more than 0.1 and 18.0 or less, 0.5 to 6.0, 0.5 to 6.5, 0.5 to 7.0, 0.5 to 7.5, 0.5 to 8.0, 0.5 to 8.5, 0.5 to 9.0, 0.5 to 9.5, 0.5 to 10.0, 0.5 to 10.5, 0.5 to 11.0, 0.5 to 11.5, 0.5 to 12.0, 0.5 to 13.0, 0.5 to 14.0, 0.5 to 15.0, 0.5 to 16.0, 0.5 to 17.0, 0.5 to 18.0, 1.0 to 6.0, 1.0 to 6.5, 1.0 to 7.0, 1.0 to 7.5, 1.0 to 8.0, 1.0 to 8.5, 1.0 to 9.0, 1.0 to 9.5, 1.0 to 10.0, 1.0 to 10.5, 1.0 to 11.0, 1.0 to 11.5, 1.0 to 12.0, 1.0 to 13.0, 1.0 to 14.0, 1.0 to 15.0, 1.0 to 16.0, 1.0 to 17.0, 1.0 to 18.0, 1.5 to 6.0, 1.5 to 6.5, 1.5 to 7.0, 1.5 to 7.5, 1.5 to 8.0, 1.5 to 8.5, 1.5 to 9.0, 1.5 to 9.5, 1.5 to 10.0, 1.5 to 10.5, 1.5 to 11.0, 1.5 to 11.5, 1.5 to 12.0, 1.5 to 13.0, 1.5 to 14.0, 1.5 to 15.0, 1.5 to 16.0, 1.5 to 17.0, 1.5 to 18.0, 2.0 to 8.0, 2.0 to 8.5, 2.0 to 9.0, 2.0 to 9.5, 2.0 to 10.0, 2.0 to 10.5, 2.0 to 11.0, 2.0 to 11.5, 2.0 to 12.0, 2.0 to 13.0, 2.0 to 14.0, 2.0 to 15.0, 2.0 to 16.0, 2.0 to 17.0, 2.0 to 18.0, 2.5 to 8.0, 2.5 to 8.5, 2.5 to 9.0, 2.5 to 9.5, 2.5 to 10.0, 2.5 to 10.5, 2.5 to 11.0, 2.5 to 11.5, 2.5 to 12.0, 2.5 to 13.0, 2.5 to 14.0, 2.5 to 15.0, 2.5 to 16.0, 2.5 to 17.0, 2.5 to 18.0, 3.0 to 10.0, 3.0 to 10.5, 3.0 to 11.0, 3.0 to 11.5, 3.0 to 12.0, 3.0 to 13.0, 3.0 to 14.0, 3.0 to 15.0, 3.0 to 16.0, 3.0 to 17.0, 3.0 to 18.0, 3.5 to 4.0, 3.5 to 4.5, 3.5 to 5.0, 3.5 to 5.5, 3.5 to 6.0, 3.5 to 6.5, 3.5 to 12.0, 3.5 to 13.0, 3.5 to 14.0, 3.5 to 15.0, 3.5 to 16.0, 3.5 to 17.0, 3.5 to 18.0, 4.0 to 4.5, 4.0 to 5.0, 4.0 to 5.5, 4.0 to 6.0, 4.0 to 6.5, 4.0 to 7.0, 4.0 to 10.0, 4.0 to 10.5, 4.0 to 11.0, 4.0 to 12.0, 4.0 to 13.0, 4.0 to 14.0, 4.0 to 15.0, 4.0 to 16.0, 4.0 to 17.0 or 4.0 to 18.0.

In an embodiment of the present invention, the X1 is preferably 0.5 to 10.0, more preferably 1.5 to 9.0, and still more preferably 2.0 to 8.0. Further, in another embodiment of the present invention, the X1 is preferably 0.5 to 5.5, more preferably 1.0 to 5.5, and still more preferably 2.0 to 5.0.

The amount corresponding to a sweetness intensity X1 of a high-intensity sweetener refers to an amount which provides a sweetness of a sweetness intensity X1 under the conditions when the high-intensity sweetener is dissolved in water having the same volume as the flavored water of the present invention at 20°C.

Further, the amount of a high-intensity sweetener may be Pa ppm and Pa ppm herein refers to an amount corresponding to a sweetness intensity X1. The Pa herein may be a value of about 20 to about 800, about 25 to about 800, about 30 to about 800, about 35 to about 800, about 40 to about 800, about 45 to about 800, about 50 to about 800, about 55 to about 800, about 20 to about 750, about 25 to about 750, about 30 to about 750, about 35 to about 750, about 40 to about 750, about 45 to about 750, about 50 to about 750, about 55 to about 750, about 20 to about 700, about 25 to about 700, about 30 to about 700, about 35 to about 700, about 40 to about 700, about 45 to about 700, about 50 to about 700, about 55 to about 700, about 20 to about 650, about 25 to about 650, about 30 to about 650, about 35 to about 650, about 40 to about 650, about 45 to about 650, about 50 to about 650, about 55 to about 650, about 20 to about 600, about 25 to about 600, about 30 to about 600, about 35 to about 600, about 40 to about 600, about 45 to about 600, about 50 to about 600, about 55 to about 600, about 20 to about 550, about 25 to about 550, about 30 to about 550, about 35 to about 550, about 40 to about 550, about 45 to about 550, about 50 to about 550, about 55 to about 550, about 20 to about 540, about 25 to about 540, about 30 to about 540, about 35 to about 540, about 40 to about 540, about 45 to about 540, about 50 to about 540, about 55 to about 540, about 20 to about 530, about 25 to about 530, about 30 to about 530, about 35 to about 530, about 40 to about 530, about 45 to about 530, about 50 to about 530, about 55 to about 530, about 20 to about 520, about 25 to about 520, about 30 to about 520, about 35 to about 520, about 40 to about 520, about 45 to about 520, about 50 to about 520, about 55 to about 520, about 20 to about 510, about 25 to about 510, about 30 to about 510, about 35 to about 510, about 40 to about 510, about 45 to about 510, about 50 to about 510, about 55 to about 510, about 20 to about 505, about 25 to about 505, about 30 to about 505, about 35 to about 505, about 40 to about 505, about 45 to about 505, about 50 to about 505, about 55 to about 505, about 20 to about 500, about 25 to about 500, about 30 to about 500, about 35 to about 500, about 40 to about 500, about 45 to about 500, about 50 to about 500, about 55 to about 500, about 20 to about 495, about 25 to about 495, about 30 to about 495, about 35 to about 495, about 40 to about 495, about 45 to about 495, about 50 to about 495, about 55 to about 495, about 20 to about 490, about 25 to about 490, about 30 to about 490, about 35 to about 490, about 40 to about 490, about 45 to about 490, about 50 to about 490 or about 55 to about 490.

The Pa may also be a value of 1 to 1500, 1 to 1200, 5 to 1200, 1 to 1000, 5 to 1000, 10 to 1000, 1 to 900, 5 to 900, 10 to 900, 15 to 900, 20 to 900, 25 to 900, 30 to 900, 35 to 900, 40 to 900, 45 to 900, 50 to 900, 55 to 900, 1 to 800, 5 to 800, 10 to 800, 15 to 800, 20 to 800, 25 to 800, 30 to 800, 35 to 800, 40 to 800, 45 to 800, 50 to 800, 55 to 800, 1 to 700, 5 to 700, 10 to 700, 15 to 700, 20 to 700, 25 to 700, 30 to 700, 35 to 700, 40 to 700, 45 to 700, 50 to 700, 55 to 700, 1 to 600, 5 to 600, 10 to 600, 15 to 600, 20 to 600, 25 to 600, 30 to 600, 35 to 600, 40 to 600, 45 to 600, 50 to 600, 55 to 600, 1 to 550, 1 to 540, 1 to 530, 1 to 520, 1 to 510, 1 to 505, 1 to 500, 1 to 495, 1 to 490, 5 to 550, 5 to 540, 5 to 530, 5 to 520, 5 to 510, 5 to 505, 5 to 500, 5 to 495, 5 to 490, 10 to 550, 10 to 540, 10 to 530, 10 to 520, 10 to 510, 10 to 505, 10 to 500, 10 to 495, 10 to 490, 15 to 550, 15 to 550, 15 to 530, 15 to 520, 15 to 510, 15 to 505, 15 to 500, 15 to 495 or 15 to 490.

The Pa may also be a value of about 20 to about 200, about 100 to about 500, about 100 to about 450, about 100 to about 400, about 100 to about 350, about 100 to about 300, about 100 to about 250, about 100 to about 200, about 150 to about 500, about 150 to about 450, about 150 to about 400, about 150 to about 350, about 150 to about 300, about 150 to about 250, about 150 to about 200, about 200 to about 500, about 200 to about 450, about 200 to about 400, about 200 to about 350, about 200 to about 300 or about 200 to about 250.

The X2 is not particularly limited as long as it is greater than X1 and may be 0.5 to 6.0, 0.5 to 6.5, 0.5 to 7.0, 0.5 to 7.5, 0.5 to 8.0, 0.5 to 8.5, 0.5 to 9.0, 0.5 to 9.5, 0.5 to 10.0, 0.5 to 10.5, 0.5 to 11.0, 0.5 to 11.5, 0.5 to 12.0, 0.5 to 13.0, 0.5 to 14.0, 0.5 to 15.0, 0.5 to 16.0, 0.5 to 17.0, 0.5 to 18.0, 1.0 to 6.0, 1.0 to 6.5, 1.0 to 7.0, 1.0 to 7.5, 1.0 to 8.0, 1.0 to 8.5, 1.0 to 9.0, 1.0 to 9.5, 1.0 to 10.0, 1.0 to 10.5, 1.0 to 11.0, 1.0 to 11.5, 1.0 to 12.0, 1.0 to 13.0, 1.0 to 14.0, 1.0 to 15.0, 1.0 to 16.0, 1.0 to 17.0, 1.0 to 18.0, 1.5 to 6.0, 1.5 to 6.5, 1.5 to 7.0, 1.5 to 7.5, 1.5 to 8.0, 1.5 to 8.5, 1.5 to 9.0, 1.5 to 9.5, 1.5 to 10.0, 1.5 to 10.5, 1.5 to 11.0, 1.5 to 11.5, 1.5 to 12.0, 1.5 to 13.0, 1.5 to 14.0, 1.5 to 15.0, 1.5 to 16.0, 1.5 to 17.0, 1.5 to 18.0, 2.0 to 8.0, 2.0 to 8.5, 2.0 to 9.0, 2.0 to 9.5, 2.0 to 10.0, 2.0 to 10.5, 2.0 to 11.0, 2.0 to 11.5, 2.0 to 12.0, 2.0 to 13.0, 2.0 to 14.0, 2.0 to 15.0, 2.0 to 16.0, 2.0 to 17.0, 2.0 to 18.0, 2.5 to 8.0, 2.5 to 8.5, 2.5 to 9.0, 2.5 to 9.5, 2.5 to 10.0, 2.5 to 10.5, 2.5 to 11.0, 2.5 to 11.5, 2.5 to 12.0, 2.5 to 13.0, 2.5 to 14.0, 2.5 to 15.0, 2.5 to 16.0, 2.5 to 17.0, 2.5 to 18.0, 3.0 to 10.0, 3.0 to 10.5, 3.0 to 11.0, 3.0 to 11.5, 3.0 to 12.0, 3.0 to 13.0, 3.0 to 14.0, 3.0 to 15.0, 3.0 to 16.0, 3.0 to 17.0, 3.0 to 18.0, 3.5 to 4.0, 3.5 to 4.5, 3.5 to 5.0, 3.5 to 5.5, 3.5 to 6.0, 3.5 to 6.5, 3.5 to 12.0, 3.5 to 13.0, 3.5 to 14.0, 3.5 to 15.0, 3.5 to 16.0, 3.5 to 17.0, 3.5 to 18.0, 4.0 to 20, 4.0 to 15, 4.0 to 12.5, 4.0 to 10, 4.5 to 20, 4.5 to 15, 4.5 to 12.5, 4.5 to 10, 5.0 to 20, 5.0 to 15, 5.0 to 12.5, 5.0 to 10, 5.5 to 20, 5.5 to 15, 5.5 to 12.5, 5.5 to 10, 6.0 to 20, 6.0 to 15, 6.0 to 12.5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8.0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15, 10.5 to 12.5. The X2 may also be 4.0 to 18, 4.0 to 16, 4.0 to 15.5, 4.0 to 14, 4.5 to 18, 4.5 to 16, 4.5 to 15.5, 4.5 to 14, 5.0 to 18, 5.0 to 16, 5.0 to 15.5, 5.0 to 14, 5.5 to 18, 5.5 to 16, 5.5 to 15.5, 5.5 to 14, 6.0 to 18, 6.0 to 16, 6.0 to 15.5, 6.0 to 14, 6.5 to 18, 6.5 to 16, 6.5 to 15.5, 6.5 to 14, 7.0 to 18, 7.0 to 16, 7.0 to 15.5, 7.0 to 14, 7.5 to 18, 7.5 to 16, 7.5 to 15.5, 7.5 to 14, 7.5 to 9, 7.5 to 8, 8.0 to 18, 8.0 to 18, 8.0 to 16, 8.0 to 15.5, 8.0 to 14, 8.5 to 18, 8.5 to 16, 8.5 to 15.5, 8.5 to 14, 9.0 to 18, 9.0 to 16, 9.0 to 15.5, 9.0 to 14, 9.5 to 18, 9.5 to 16, 9.5 to 15.5, 9.5 to 14, 10.0 to 18, 10.0 to 16, 10.0 to 15.5, 10.5 to 18, 10.5 to 16 or 10.5 to 15.5.

Further, the flavored water in an embodiment of the present invention has a sweetness of a sweetness intensity X3 exhibited by the components (a) and (b) and 0.1 < X1 < X3 < X2 is satisfied. That is, a sweetness is more enhanced by the addition of the component (c) sodium to the component (a) a high-intensity sweetener and the component (b) an amino acid or a derivative or a salt thereof, than the combination of the component (a) and the component (b).

The X3 is not particularly limited as long as it is greater than the X1 and smaller than the X2 and may be 0.5 to 6.0, 0.5 to 6.5, 0.5 to 7.0, 0.5 to 7.5, 0.5 to 8.0, 0.5 to 8.5, 0.5 to 9.0, 0.5 to 9.5, 0.5 to 10.0, 0.5 to 10.5, 0.5 to 11.0, 0.5 to 11.5, 0.5 to 12.0, 0.5 to 13.0, 0.5 to 14.0, 0.5 to 15.0, 0.5 to 16.0, 0.5 to 17.0, 0.5 to 18.0, 1.0 to 6.0, 1.0 to 6.5, 1.0 to 7.0, 1.0 to 7.5, 1.0 to 8.0, 1.0 to 8.5, 1.0 to 9.0, 1.0 to 9.5, 1.0 to 10.0, 1.0 to 10.5, 1.0 to 11.0, 1.0 to 11.5, 1.0 to 12.0, 1.0 to 13.0, 1.0 to 14.0, 1.0 to 15.0, 1.0 to 16.0, 1.0 to 17.0, 1.0 to 18.0, 1.5 to 6.0, 1.5 to 6.5, 1.5 to 7.0, 1.5 to 7.5, 1.5 to 8.0, 1.5 to 8.5, 1.5 to 9.0, 1.5 to 9.5, 1.5 to 10.0, 1.5 to 10.5, 1.5 to 11.0, 1.5 to 11.5, 1.5 to 12.0, 1.5 to 13.0, 1.5 to 14.0, 1.5 to 15.0, 1.5 to 16.0, 1.5 to 17.0, 1.5 to 18.0, 2.0 to 8.0, 2.0 to 8.5, 2.0 to 9.0, 2.0 to 9.5, 2.0 to 10.0, 2.0 to 10.5, 2.0 to 11.0, 2.0 to 11.5, 2.0 to 12.0, 2.0 to 13.0, 2.0 to 14.0, 2.0 to 15.0, 2.0 to 16.0, 2.0 to 17.0, 2.0 to 18.0, 2.5 to 8.0, 2.5 to 8.5, 2.5 to 9.0, 2.5 to 9.5, 2.5 to 10.0, 2.5 to 10.5, 2.5 to 11.0, 2.5 to 11.5, 2.5 to 12.0, 2.5 to 13.0, 2.5 to 14.0, 2.5 to 15.0, 2.5 to 16.0, 2.5 to 17.0, 2.5 to 18.0, 3.0 to 19, 3.0 to 14, 3.0 to 11.5, 3.0 to 9, 3.5 to 19, 3.5 to 14, 3.5 to 11.5, 3.5 to 9, 4.0 to 19, 4.0 to 14, 4.0 to 11.5, 4.0 to 9, 4.5 to 19, 4.5 to 14, 4.5 to 11.5, 4.5 to 9, 5.0 to 19, 5.0 to 14, 5.0 to 11.5, 5.0 to 9, 6.5 to 20, 5.5 to 14, 5.5 to 11.5, 5.5 to 9, 6.019, 6.0 to 14, 6.0 to 11.5, 6.0 to 9, 6.5 to 19, 6.5 to 14, 6.5 to 11.5, 6.5 to 9, 6.5 to 8, 6.5 to 7, 7.0 to 19, 7.0 to 19, 7.0 to 14, 7.0 to 11.5, 7.0 to 9, 7.5 to 19, 7.5 to 14, 7.5 to 11.5, 7.5 to 9, 8.0 to 19, 8.0 to 14, 8.0 to 11.5, 8.0 to 9, 8.5 to 19, 98.5 to 14, 8.5 to 11.5, 8.5 to 9, 9.0 to 19, 9.0 to 14, 9.0 to 11.5, 9.5 to 19, 9.5 to 14 or 9.5 to 11.5. The X3 may also be 3.0 to 17, 3.0 to 15, 3.0 to 14.5, 3.0 to 13, 3.5 to 17, 3.5 to 15, 3.5 to 14.5, 3.5 to 13, 4.0 to 17, 4.0 to 15, 4.0 to 14.5, 4.0 to 13, 4.5 to 17, 4.5 to 15, 4.5 to 14.5, 4.5 to 13, 5.0 to 17, 5.0 to 15, 5.0 to 14.5, 5.0 to 13, 5.5 to 17, 5.5 to 15, 5.5 to 14.5, 5.5 to 13, 6.0 to 17, 6.0 to 15, 6.0 to 14.5, 6.0 to 13, 6.5 to 17, 6.5 to 15, 6.5 to 14.5, 6.5 to 13, 6.5 to 8, 6.5 to 7, 7.0 to 17, 7.0 to 16, 7.0 to 15, 7.0 to 14.5, 7.0 to 13, 7.5 to 17, 7.5 to 15, 7.5 to 14.5, 7.5 to 13, 8.0 to 17, 8.0 to 15, 8.0 to 14.5, 8.0 to 13, 8.5 to 17, 8.5 to 15, 8.5 to 14.5, 8.5 to 13, 9.0 to 17, 9.0 to 15, 90 to 14.5, 9.5 to 17, 9.5 to 15 or 9.5 to 14.5.

The flavored water of the present invention has an enhanced sweetness as having been already mentioned. Whether or not the sweetness of the flavored water of the present invention is enhanced can be evaluated by panelists who received sensory trainings. Further, for the sweetness intensity of the flavored water of the present invention, each standard flavored water to be the sweetness standard is prepared with each of sucrose concentrations assigned as sweetness intensities 1, 2, 3, 4, 5, 6, 7, 8, 9, 10, 11, 12, 13, 14, and 15 and panelists compare the sweetness of the flavored water of the present invention with the sweetness of such each standard flavored water thereby to measure the sweetness of the flavored water of the present invention. Note that such each standard flavored water having a sweetness intensity of 1, 2, ... 15 is prepared by adding sucrose in such a way that a sucrose content is 1 g/100 g, 2 g/100 g, ... 15 g/100 g to the flavored water to which sucrose is not added.

Furthermore, of such standard flavored water having a lower sweetness than the flavored water of the present invention in the above measurement, the standard flavored water having the closest sweetness to that of the flavored water of the present invention is selected and adjusted in such a way as to have the same sweetness as that of the flavored water of the present invention by adding sucrose to the selected standard flavored water, during which a sweetness intensity of the flavored water of the present invention can also be measured from a sucrose content in the adjusted standard flavored water.

Other examples of the method for measuring a sweetness of the flavored water of the present invention include a sweetness intensity rating using Visual Analogue Scale (VAS method). For the VAS method, literatures in The journal of Japanese Society of Stomatognathic Function (2014) 20 pp. 115-129 ("Construction of a Screening Test for Gustatory Function in Four Basic Tastes" by Toyota et al.) and the like can be referred. Specifically, in the measurement of sweetness intensity by the VAS method, for example, evaluators define sweetness intensities as "not sweet at all" at the lower end and "nothing is sweeter than this" at the upper end and, using a piece of paper on which a vertical line indicating the intensities of sweetness on the straight line, assess a sweetness intensity sensed at that time by showing a position on the straight line.

The sweetness intensity of the flavored water of the present invention is not particularly limited as long as it is acceptable as flavored water and may be, in terms of the degree of sweetness, for example, 4.0 to 20, 4.0 to 15, 4.0 to 12.5, 4.0 to 10, 4.5 to 20, 4.5 to 15, 4.5 to 12.5, 4.5 to 10, 5.0 to 20, 5.0 to 15, 5.0 to 12.5, 5.0 to 10, 5.5 to 20, 5.5 to 15, 5.5 to 12.5, 5.5 to 10, 6.0 to 20, 6.0 to 15, 6.0 to 12.5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8.0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15 or 10.5 to 12.5. The sweetness intensity of the flavored water is provided by the above components (a) to (c) and optional components.

An energy (total energy) of the flavored water of the present invention may be, depending on an embodiment, 0 to 50 Kcal/100 ml, 0 to 45 Kcal/100 ml, 0 to 40 Kcal/100 ml, 0 to 35 Kcal/100 ml, 0 to 30 Kcal/100 ml, 0 to 24 Kcal/100 ml, 0 to 22 Kcal/100 ml, 0 to 20 Kcal/100 ml, 0 to 15 Kcal/100 ml, 0 to 10 Kcal/100 ml, 0 to 5 Kcal/100 ml, 0.1 to 50 Kcal/100 ml, 0.1 to 45 Kcal/100 ml, 0.1 to 40 Kcal/100 ml, 0.1 to 35 Kcal/100 ml, 0.1 to 30 Kcal/100 ml, 0.1 to 24 Kcal/100 ml, 0.1 to 22 Kcal/100 ml, 0.1 to 20 Kcal/100 ml, 0.1 to 15 Kcal/100 ml, 0.1 to 10 Kcal/100 ml, 0.1 to 5 Kcal/100 ml, 1 to 50 Kcal/100 ml, 1 to 45 Kcal/100 ml, 1 to 40 Kcal/100 ml, 1 to 35 Kcal/100 ml, 1 to 30 Kcal/100 ml, 1 to 24 Kcal/100 ml, 1 to 22 Kcal/100 ml, 1 to 20 Kcal/100 ml, 1 to 15 Kcal/100 ml, 1 to 10 Kcal/100 ml, 1 to 5 Kcal/100 ml, 5 to 50 Kcal/100 ml, 5 to 45 Kcal/100 ml, 5 to 40 Kcal/100 ml, 5 to 35 Kcal/100 ml, 5 to 30 Kcal/100 ml, 5 to 24 Kcal/100 ml, 5 to 20 Kcal/100 ml, 5 to 15 Kcal/100 ml, 5 to 10 Kcal/100 ml, 10 to 50 Kcal/100 ml, 10 to 45 Kcal/100 ml, 10 to 40 Kcal/100 ml, 10 to 35 Kcal/100 ml, 10 to 30 Kcal/100 ml, 10 to 24 Kcal/100 ml, 10 to 20 Kcal/100 ml, 10 to 15 Kcal/100 ml, 15 to 50 Kcal/100 ml, 15 to 45 Kcal/100 ml, 15 to 40 Kcal/100 ml, 15 to 35 Kcal/100 ml, 15 to 30 Kcal/100 ml, 15 to 24 Kcal/100 ml, 15 to 20 Kcal/100 ml, 20 to 50 Kcal/100 ml, 20 to 45 Kcal/100 ml, 20 to 40 Kcal/100 ml, 20 to 35 Kcal/100 ml, 20 to 30 Kcal/100 ml, 20 to 24 Kcal/100 ml, 24 to 50 Kcal/100 ml, 24 to 45 Kcal/100 ml, 24 to 40 Kcal/100 ml, 24 to 35 Kcal/100 ml or 24 to 30 Kcal/100 ml.

Further, an energy (total energy, TE) of the flavored water of the present invention may be, depending on an embodiment (for example, an embodiment containing a caloric sweetener), 0 < TE ≤ 50 Kcal/100 ml, 0 < TE ≤ 45 Kcal/100 ml, 0 < TE ≤ 40 Kcal/100 ml, 0 < TE ≤ 35 Kcal/100 ml, 0 < TE ≤ 30 Kcal/100 ml, 0 < TE ≤ 24 Kcal/100 ml, 0 < TE ≤ 22 Kcal/100 ml, 0 < TE ≤ 20 Kcal/100 ml, 0 < TE ≤ 15 Kcal/100 ml, 0 < TE ≤ 10 Kcal/100 ml or 0 < TE ≤ 5 Kcal/100 ml (that is, it never is completely 0).

The components (a) to (c) can be in any combinations. As shown in examples to be described later, the addition of the component (b) and the component (c) to the component (a) enables to provide a sweetness intensity X2, which is higher than the sweetness intensity X1 of the component (a) alone. That is, the sweetness of the component (a) can be enhanced by the components (b) and (c). For this reason, flavored water can be produced without using or with a reduced amount of highly caloric sucrose while maintaining the sweetness equal to flavored water containing sucrose. Thus, the design of new low-caloric flavored water is enabled. In the case of designing zero-calorie flavored water, a high-intensity sweetener having particularly good-taste quality such as rebaudioside D (hereinafter, rebaudioside is sometimes abbreviated as "Reb") and rebaudioside M is used for the component (a) and D-allulose or erythritol is used as an additional sweet substance thereby to improve a sweetness with a low-concentration amino acid and low-concentration sodium. In the case of adjusting flavored water to be not zero calories but a low calorie, a caloric sweetener such as sucrose, glucose, fructose, or sorbitol can be contained as an additional sweet substance.

### [High-intensity sweetener]

The high-intensity sweetener (hereinafter, sometimes abbreviated as the "sweetener (a)" or "component (a)") means a compound having a more intense sweetness than sucrose and encompasses naturally occurring compounds, synthetic compounds, and combinations of naturally occurring compounds and synthetic compounds. The high-intensity sweetener has, in the same amount as sucrose, a sweetness 5 times or more, 10 times or more, 50 times or more, 100 times or more, 500 times or more, 1, 000 times or more, 5,000 times or more, 10,000 times or more, 50,000 times or more, or 100,000 times or more, of that of sucrose.

Specific examples of the high-intensity sweetener include peptide-based sweeteners such as aspartame, neotame, and advantame; sucrose derivatives such as sucralose; synthetic sweeteners (including those naturally occurring but also those whose synthetic products are mostly distributed such as neohesperidin dihydrochalcone) such as acesulfame K, saccharine, saccharin sodium, sodium cyclamate, dulcin, disodium glycyrrhizin, trisodium glycyrrhizin, and neohesperidin dihydrochalcone; sweeteners extracted from plants such as thaumatin, monellin, curculin, mabinlin, brazzein, pentagin, hernandulcin, 4β-hydroxyhernandulcin, miraculin, glycyrrhizin, rubusoside, and phyllodulcin; and plant extracts containing a high-intensity sweetener component, for example, Stevia rebaudiana extract, Siraitia grosvenorii (Luo han guo) extract, Glycyrrhiza (licorice) glabra extract, Rubus suavissimus S. Lee extract, Hydrangea macrophylla var. thunbergii extract, Sclerochiton ilicifolius extract, Thaumataococcus daniellii Benth extract, Dioscoreophyllum volkensii (serendipity berry) extract, Curculigo latifolia extract, Richadella dulcifica (miracle fruit) extract, Pentadiplandra brazzeana (West African fruit) extract, Capparis masaikai (Mabinlang) extract, and Lippia dulcis (Aztec sweet herb) extract; sweet components in these extracts, for example, steviol glycosides such as stevia derivatives like enzymatically-treated stevia in which a stevia extract and stevia are treated with an enzyme and glucose is added thereto, mogrosides obtained by treating Luo han guo and a Luo han guo extract, glycosides obtained from plant extracts such as phyllodulcin glycosides, Glycyrrhiza glabra plant-containing sweetness components (for example, triterpene glycosides such as glycyrrhizin), Rubus suavissimus S. Lee plant-containing sweet components (for example, diterpene glycosides such as rubusoside), Hydrangea macrophylla var. thunbergii plant-containing sweet components (for example, dihydroisocoumarin such as phyllodulcin), Sclerochiton ilicifolius plant-containing sweet components (for example, amino acids such as monatin), Thaumataococcus daniellii Benth plant-containing sweet components (for example, proteins such as thaumatin), Dioscoreophyllum volkensii plant-containing sweet components (for example, proteins such as monellin), Curculigo latifolia plant-containing sweet components (for example, proteins such as curculin), Richadella dulcifica plant-containing sweet components (for example, proteins such as miraculin), Pentadiplandra brazzeana plant-containing sweet components (for example, proteins such as brazzein and pentagin), Capparis masaikai plant-containing sweet components (for example, proteins such as mabinlin), and Lippia dulcis plant-containing sweet components (for example, sesquiterpenes such as hernandulcin and 4β-hydroxyhernandulcin).

Examples of the steviol glycoside include rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, Dulcoside A, Dulcoside C, rubusoside, steviol, steviol monoside, steviol bioside and stevioside. Examples of the mogroside include mogroside IV and mogroside V.

The Glycyrrhiza (licorice) extract refers to those obtained from roots or rhizomes of Glycyrrhiza uralensis Fisher, Glycyrrhiza inflata Batalin, and Glycyrrhiza glabra Linne and having glycyrrhizic acid as the main component. Examples of the Glycyrrhiza extract include Glycyrrhiza extracts, Glycyrrhizin, and licorice extracts.

The sucrose derivative includes, for example, those obtained by substituting the OH group or the H group of sucrose with other substituents and examples thereof include halogen derivatives of sucrose (sucralose) and oxathiazinonedioxide derivatives.

In a preferable embodiment of the present invention, the high-intensity sweetener is selected from a high-intensity sweetener having a good taste quality. As used herein, the "high-intensity sweetener having a good taste quality" means a high-intensity sweet substance having one or more taste qualities selected from, when compared with rebaudioside A (RebA), (1) less astringent taste, (2) less metallic taste, (3) less aftertaste of sweetness, and (4) less bitterness. Whether or not a certain sweet substance has the above taste quality is already known or can be determined based on a sensory evaluation. Nonrestrictive examples of the high-intensity sweetener having a good taste quality include RebD, RebM, a luo han guo extract, a mogroside (for example, mogroside V), thaumatin, brazzein or a combination thereof.

In an embodiment of the present invention, the high-intensity sweetener may be those naturally occurring in plants and the like or those artificially produced (for example, bioconversion or chemosynthesis) but is preferably a naturally occurring sweetener. As used herein, the "naturally occurring" does not mean that a high-intensity sweet substance contained in the flavored water of the present invention is a natural product but a high-intensity sweet substance contained in the flavored water of the present invention may be a product artificially (for example, by bioconversion) produced (non-naturally occurring product) as long as the same substance naturally occurs.

Nonrestrictive examples of the sweetener (a) include rebaudioside A (RebA), rebaudioside D (RebD), rebaudioside M (RebM), neohesperidin dihydrochalcone, glycyrrhizin, thaumatin, monellin, mogroside, rubusoside, curculin, mabinlin, brazzein, pentagin, phyllodulcin, hernandulcin, miraculin, Stevia rebaudiana plant-containing sweet components, Siraitia grosvenorii plant-containing sweet components, Glycyrrhiza glabra plant-containing sweet components, Rubus suavissimus S. Lee plant-containing sweet components, Hydrangea macrophylla var. thunbergii plant-containing sweet components, Sclerochiton ilicifolius plant-containing sweet components, Thaumataococcus daniellii Benth plant-containing sweet components, Dioscoreophyllum volkensii plant-containing sweet components, Curculigo latifolia plant-containing sweet components, Richardella dulcifica plant-containing sweet components, Pentadiplandra brazzeana plant-containing sweet components, Capparis masaikai plant-containing sweet components, Lippia dulcis plant-containing sweet components and derivatives thereof, and combinations thereof. In a specific embodiment, the sweetener (a) contains RebA, RebD, RebM, a mogroside (for example, mogroside V) or a combination thereof. In another specific embodiment, the sweetener (a) contains RebD, RebM, a mogroside (for example, mogroside V), thaumatin or a combination thereof. In a preferable embodiment of the present invention, a high-intensity sweetener having a good taste quality contains at least one selected from the group consisting of RebD, RebM, mogroside V, a luo han guo extract, and a combination thereof. In an embodiment of the present invention, the sweetener (a) consists essentially of a sweetener other than major components of Stevia sweeteners such as RebA and stevioside. As used herein, the "consists essentially of ... " means that the sweetener used in the present invention may contain major component(s) of Stevia sweeteners as long as the effects of the invention are not affected. For example, preferably 90% or more, more preferably 95% or more, or further preferably 98% or more of the sweetener (a) for use in the present invention consists of a sweetener other than RebA and stevioside.

RebA, RebD and RebM may be directly extracted from Stevia, or may be obtained by adding glucose to a compound having another structure, contained in a Stevia extract.

The Luo han guo extract as a sweetener is an extract of Luo han guo containing a sweet substance derived from Luo han guo, approved in various countries including Japan as a food additive and commercially available. Examples of the sweet substance derived from Luo han guo include mogroside V, mogroside IV, 11-oxo-mogroside V, and Siamenoside I.

Mogroside V is a kind of the major mogrol glycosides contained in Luo han guo and documented to have a good-quality sweetness property close to sucrose when compared with rebaudioside A. Mogroside V may be obtained from a luo han guo extract (for example, an alcohol extract of Luo han guo) by purification with chromatography or the like. Alternatively, mogroside V may be obtained by adding glucose to a compound having another structure, contained in a luo han guo extract.

The luo han guo extract preferably contains mogroside V and the ratio thereof is not limited and may be 10 wt% or more, 15 wt% or more, 20 wt% or more, 25 wt% or more, 30 wt% or more, 35 wt% or more, 40 wt% or more, 45 wt% or more, 50 wt% or more, 55 wt% or more, 60 wt% or more, 65 wt% or more, 70 wt% or more or 75 wt% or more, of the total dry weight of a luo han guo extract. The content of mogroside V can be determined by a known technique such as liquid chromatography. The luo han guo extract can be obtained by extracting a fruit of Luo han guo (Siraitia grosvenorii) with a suitable solvent (for example, an aqueous solvent such as water, an alcohol solvent such as ethanol or methanol, or a mixed solvent of an aqueous solvent and an alcohol solvent such as water-containing ethanol or water-containing methanol), and then optionally carrying out a treatment such as degreasing, purification, concentration, and drying.

Mogroside V may be one having a high purity, and may be, for example, one having a purity of 80% or more, 85% or more, 90% or more, 910 or more, 92% or more, 93% or more, 94% or more, 95% or more, 96% or more, 97% or more or 98% or more. Mogroside V obtained by purification of a luo han guo extract, of course, has a smaller amount of incorporation of a luo han guo extract component other than mogroside V, as it has a higher purity.

In other embodiments of the present invention, mogroside V may also be one having a lower purity, and may be, for example, one having a purity of 50% or more, 55% or more, 60% or more, 65% or more, 70% or more or 75% or more. For example, when the sweetness intensity of sucrose per unit concentration Brix 1 is defined as a degree of sweetness of 1, the calculated value of the degree of sweetness of Mog V having a purity of about 65% is about 175. In other embodiments of the present invention, a luo han guo extract containing about 30 wt% of Mog V may be used as the high-intensity sweetener, and, when the sweetness intensity of sucrose per unit concentration Brix 1 is defined as a degree of sweetness of 1, the calculated value of the degree of sweetness of the luo han guo extract is about 100.

The high-intensity sweetener is contained in an amount corresponding to a sweetness intensity X1, as described above. When the sweetness intensity of sucrose per unit concentration Brix 1 is defined as a degree of sweetness of 1, a degree of sweetness of rebaudioside D is about 225, a degree of sweetness of rebaudioside M is about 230, a degree of sweetness of rebaudioside B is about 325, a degree of sweetness of rebaudioside A is 200 to 300 (median value 250), a degree of sweetness of rebaudioside N is 200 to 250 (median value 225), a degree of sweetness of rebaudioside O is 200 to 250 (median value 225), a degree of sweetness of rebaudioside E is 70 to 80 (median value 75), a degree of sweetness of a luo han guo extract (containing 40% of Mog V) is about 130, a degree of sweetness of mogroside V is about 270, a degree of sweetness of thaumatin is 2,000, and a degree of sweetness of brazzein is 500 to 2000 (median value 1250). The numerical value obtained by multiplying these degrees of sweetness by a concentration (w/v% (considered to be the same as w/w% in the case of a beverage)) of the high-intensity sweetener in the flavored water is a sweetness intensity of the high-intensity sweetener. When X1 of such a sweetener is herein determined, the above degree of sweetness (median value when a numerical value range is shown) is used. A relative ratio of a degree of sweetness of each sweetener to a degree of sweetness of 1 of sucrose can be determined from, for example, a known sugar sweetness conversion table (for example, information "Beverage term dictionary", page 11, Beverage Japan, Inc.). When a numerical range of a degree of sweetness is herein shown, a median value is adopted. Herein, in the case of a sweetener whose degree of sweetness is different with respect to each literature, a relative ratio of a degree of sweetness to a degree of sweetness of 1 of sucrose can be determined by a sensory test. Examples of such a sensory test include a method involving preparing samples where sucrose is added to pure water so that Brix is 3.0 to 5.0 by 0.5, and selecting a sample where sucrose is added, having a sweetness intensity equal to that of an aqueous solution having a predetermined concentration of a sweetener, among such samples.

In an embodiment of the present invention, the high-intensity sweetener comprises at least one selected from the group consisting of steviol glycoside, a luo han guo extract, mogrol glycoside, a Thaumataococcus daniellii Benth plant-containing sweet component, a Pentadiplandra brazzeana plant-containing sweet component, an artificial sweetener, and a combination thereof. In a preferable embodiment of the present invention, the high-intensity sweetener comprises at least one selected from the group consisting of rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, Dulcoside A, Dulcoside C, rubusoside, steviol monoside, steviol bioside, stevioside, a luo han guo extract, mogroside V, thaumatin, brazzein, aspartame, acesulfame K, sucralose, a Glycyrrhiza extract, saccharine, and a combination thereof.

In some embodiments, the sweetener (a) contains the following combination: RebA and RebM, RebA and RebD, RebD and RebM, RebA and RebD and RebM, RebA and mogroside V, RebD and mogroside V, RebM and mogroside V, RebA and RebM and mogroside V, RebA and RebD and mogroside V, RebD and RebM and mogroside V, RebA and neohesperidin dihydrochalcone, RebD and neohesperidin dihydrochalcone, RebM and neohesperidin dihydrochalcone, RebA and RebM and neohesperidin dihydrochalcone, RebA and RebD and neohesperidin dihydrochalcone, RebD and RebM and neohesperidin dihydrochalcone, mogroside V and neohesperidin dihydrochalcone, RebD and RebM and mogroside V and neohesperidin dihydrochalcone, RebA and brazzein, RebD and brazzein, RebM and brazzein, mogroside V and brazzein, neohesperidin dihydrochalcone and brazzein, RebM and RebD and brazzein, RebM and RebD and brazzein and mogroside V, RebM and RebD and brazzein and neohesperidin dihydrochalcone, or RebM and RebD and brazzein and mogroside V and neohesperidin dihydrochalcone.

In another embodiment, the sweetener (a) contains the following combination: RebA and thaumatin, RebD and thaumatin, RebM and thaumatin, mogroside V and thaumatin, RebA and RebM and thaumatin, RebA and RebD and thaumatin, RebD and RebM and thaumatin, RebA and mogroside V and thaumatin, RebD and mogroside V and thaumatin, RebM and mogroside V and thaumatin, or RebD and RebM and mogroside V and thaumatin.

In an embodiment of the present invention, the high-intensity sweetener (a) may contain a high-intensity sweetener selected from rebaudioside A, rebaudioside D, rebaudioside M, mogroside V, a luo han guo extract, and a combination thereof, preferably one or more high-intensity sweeteners selected from rebaudioside D, rebaudioside M, and a combination thereof.

The amount of the sweetener (a) contained in the flavored water in an embodiment of the present invention is, in the case when the sweetener (a) contains a combination of a plurality of sweet substances, an amount of all of these sweet substances combined. When an amount of the sweetener (a) is Pa (ppm), Pa may be a value of, for example, about 20 to about 800, about 25 to about 800, about 30 to about 800, about 35 to about 800, about 40 to about 800, about 45 to about 800, about 50 to about 800, about 55 to about 800, about 20 to about 750, about 25 to about 750, about 30 to about 750, about 35 to about 750, about 40 to about 750, about 45 to about 750, about 50 to about 750, about 55 to about 750, about 20 to about 700, about 25 to about 700, about 30 to about 700, about 35 to about 700, about 40 to about 700, about 45 to about 700, about 50 to about 700, about 55 to about 700, about 20 to about 650, about 25 to about 650, about 30 to about 650, about 35 to about 650, about 40 to about 650, about 45 to about 650, about 50 to about 650, about 55 to about 650, about 20 to about 600, about 25 to about 600, about 30 to about 600, about 35 to about 600, about 40 to about 600, about 45 to about 600, about 50 to about 600, about 55 to about 600, about 20 to about 550, about 25 to about 550, about 30 to about 550, about 35 to about 550, about 40 to about 550, about 45 to about 550, about 50 to about 550, about 55 to about 550, about 20 to about 540, about 25 to about 540, about 30 to about 540, about 35 to about 540, about 40 to about 540, about 45 to about 540, about 50 to about 540, about 55 to about 540, about 20 to about 530, about 25 to about 530, about 30 to about 530, about 35 to about 530, about 40 to about 530, about 45 to about 530, about 50 to about 530, about 55 to about 530, about 20 to about 520, about 25 to about 520, about 30 to about 520, about 35 to about 520, about 40 to about 520, about 45 to about 520, about 50 to about 520, about 55 to about 520, about 20 to about 510, about 25 to about 510, about 30 to about 510, about 35 to about 510, about 40 to about 510, about 45 to about 510, about 50 to about 510, about 55 to about 510, about 20 to about 505, about 25 to about 505, about 30 to about 505, about 35 to about 505, about 40 to about 505, about 45 to about 505, about 50 to about 505, about 55 to about 505, about 20 to about 500, about 25 to about 500, about 30 to about 500, about 35 to about 500, about 40 to about 500, about 45 to about 500, about 50 to about 500, about 55 to about 500, about 20 to about 495, about 25 to about 495, about 30 to about 495, about 35 to about 495, about 40 to about 495, about 45 to about 495, about 50 to about 495, about 55 to about 495, about 20 to about 490, about 25 to about 490, about 30 to about 490, about 35 to about 490, about 40 to about 490, about 45 to about 490, about 50 to about 490, about 55 to about 490, about 100 to about 500, about 100 to about 450, about 100 to about 400, about 100 to about 350, about 100 to about 300, about 100 to about 250, about 100 to about 200, about 150 to about 500, about 150 to about 450, about 150 to about 400, about 150 to about 350, about 150 to about 300, about 150 to about 250, about 150 to about 200, about 20 to about 200, about 200 to about 500, about 200 to about 450, about 200 to about 400, about 200 to about 350, about 200 to about 300 or about 200 to about 250.

In an embodiment of the present invention, an amount Pa ppm of the high-intensity sweetener may be about 20 to about 600 ppm, about 30 to about 550 ppm, about 55 to about 490 ppm, about 20 to about 200 ppm, about 100 to about 500 ppm or about 150 to about 350 ppm.

### [Amino acids or derivatives or salts thereof]

The flavored water of the present invention contains (b) an amino acid or a derivative or a salt thereof in an amount less than a taste recognition threshold. The amino acids or amino acid salts used in the present invention are organic compounds having both functional groups of an amino group and a carboxyl group, or salts thereof, and not particularly limited as long as a sweetness enhancement effect can be obtained. Additionally, proline and hydroxyproline, which form a cyclic structure in which the hydrogen of the amino group is substituted with a side chain moiety in a molecule, are also encompassed in the amino acid in the present description. The amino acid derivatives which can be used in the present invention encompass derivatives having no carboxyl group such as taurine. In an embodiment of the present invention, the amino acid means a free amino acid.

The amino acids used in the present invention may be the D-configuration, the L-configuration, or the racemic configuration consisting of the D-configuration and the L-configuration (in the present description, also referred to as the DL-amino acid) . In an embodiment of the present invention, the amino acid may be selected from neutral amino acids, basic amino acids, and acidic amino acids. The neutral amino acid may be preferably selected from glycine, alanine, valine, isoleucine, leucine and the like which have an alkyl group, serine, threonine and the like which have an OH group (a hydroxy group), tyrosine, phenylalanine, tryptophan and the like which have an aromatic group (or an aromatic ring), methionine, cysteine and the like which have a sulfur-containing group, proline, hydroxyproline and the like which have an imino group, and glutamine, asparagine and the like which have an amide group. The basic amino acid can be preferably selected from arginine, lysine, histidine and the like. The acidic amino acid can be preferably selected from glutamic acid, aspartic acid and the like. In a preferable embodiment of the present invention, the amino acids are selected from the neutral amino acids or the basic amino acids. In other preferable embodiments of the present invention, the amino acids include amino acids selected from the basic amino acids, and amino acids having an alkyl group, an OH group or an amide group on a side chain among the neutral amino acids, and combinations thereof. Of the neutral amino acids, examples of those having an alkyl group on a side chain include glycine, alanine, valine, isoleucine and leucine, those having an OH group on a side chain include serine and threonine, and those having an amide group on a side chain include glutamine and asparagine.

The amino acid contained in the flavored water in an embodiment of the present invention is one or more of the 22 amino acids forming proteins. Specific examples include the L-configuration of alanine (Ala), arginine (Arg), asparagine (Asn), aspartic acid (Asp), cysteine (Cys), glutamine (Gln), glutamic acid (Glu), glycine (Gly), histidine (His), isoleucine (Ile), leucine (Leu), lysine (Lys), methionine (Met), phenylalanine (Phe), proline (Pro), serine (Ser), threonine (Thr), tryptophan(Trp), tyrosine (Tyr), valine (Val), selenosysteine (Sec), and pyrrolysine (Pyl).

The amino acid contained in the flavored water in an embodiment of the present invention is one or more selected from an amino acid having a molecular weight of 70 to 260. Examples of such an amino acid include alanine (molecular weight: 89), arginine (molecular weight: 174), asparagine (molecular weight: 132), aspartic acid (molecular weight: 133), cysteine (molecular weight: 121), glutamine (molecular weight: 146), glutamic acid (molecular weight: 147), glycine (molecular weight: 75), histidine (molecular weight: 155), isoleucine (molecular weight: 131), leucine (molecular weight: 131), lysine (molecular weight: 146), methionine (molecular weight: 149), phenylalanine (molecular weight: 165), proline (molecular weight: 115), serine (molecular weight: 105), threonine (molecular weight: 119), tryptophan (molecular weight: 204), tyrosine (molecular weight: 181), valine (molecular weight: 117), selenosysteine (molecular weight: 168) and pyrrolysine (molecular weight: 255). In a preferable embodiment of the present invention, the amino acid is one or more selected from amino acids having molecular weights of 75 to 204, more preferably one or more selected from amino acids having molecular weights of 75 to 174, and further preferably one or more selected from amino acids having molecular weights of 75 to 146.

Preferably, the amino acid or a salt thereof is one or more selected from L-asparagine, L-aspartic acid, monosodium L-aspartate, DL-alanine, L-alanine, L-alanine solution, L-arginine, L-arginine L-glutamate, L-glutamine, L-cystine, L-cysteine monohydrochloride, L-serine, L-tyrosine, L-glutamic acid, monoammonium L-glutamate, monopotassium L-glutamate, monocalcium Di-L-glutamate, monosodium L-glutamate (also known as sodium glutamate), monomagnesium Di-L-glutamate, glycine, L-histidine, L-histidine monohydrochloride, L-hydroxyproline, L-isoleucine, L-lysine, L-lysine solution, L-lysine L-aspartate, L-lysine hydrochloride (L-lysine monohydrochloride), L-lysine L-glutamate, L-leucine, DL-methionine, L-methionine, L-phenylalanine, L-proline, L-proline solution, DL-threonine, L-threonine, DL-tryptophan, L-tryptophan, L-valine, L-theanine, L-ornithine, and taurine. In an embodiment of the present invention, a plurality species of amino acids may be used in combination. In an embodiment of the present invention, the amino acid includes an amino acid selected from glycine, alanine, valine, isoleucine, leucine, serine, threonine, glutamine, asparagine, arginine, lysine, histidine, and a combination thereof.

In an embodiment of the present invention, the amino acid or a derivative or a salt thereof may include an amino acid selected from DL-alanine, L-serine, glycine, L-arginine, L-glutamic acid, L-valine, and L-glutamine. In another embodiment of the present invention, the amino acid or a derivative or a salt thereof may include one or more amino acids selected from arginine, lysine, histidine, phenylalanine, tyrosine, leucine, isoleucine, methionine, valine, alanine, glycine, proline, glutamic acid, serine, threonine, aspartic acid, and tryptophan. In still another embodiment of the present invention, the amino acid or a derivative or a salt thereof may include one or more amino acids selected from arginine, valine, alanine, glycine, proline, glutamic acid, serine, threonine, aspartic acid, and tryptophan.

As used herein, the threshold of amino acids means a detection threshold or a taste recognition threshold. The detection threshold means a minimum concentration at which the difference from water can be clearly identified but a type of the taste (for example, bitterness, sourness, and sweetness) does not have to be always recognized, and the taste recognition threshold means a minimum concentration at which a taste can be recognized (for example, Eur J Clin Nutr (2004) 58, 629-636). The threshold (detection threshold) of amino acids is organized by Susan S. Schiffman et al. in "Comparison of Taste Qualities and Thresholds of D- and L-Amino Acids", Physiology & Behavior, Vol. 27, pp. 51-59 (1981). For example, a detection threshold of each amino acid is as follows: glycine (30.9 mM), L-threonine (25.7 mM), L-serine (20.9 mM), L-alanine (16.2 mM), L-proline (15.1 mM), L-glutamine (9.77 mM), L-isoleucine (7.41 mM), L-phenylalanine (6.61 mM), L-leucine (6.45 mM), L-valine (4.16 mM), L-methionine (3.72 mM), L-tryptophan (2.29 mM), L-asparagine (1.62 mM), L-histidine (1.23 mM), L-arginine (1.20 mM), L-lysine (0.708 mM), L-aspartic acid (0.182 mM), L-glutamic acid (0.063 mM), L-cysteine (0.063 mM). Additionally, the taste recognition threshold is known to be about 1.5 to 2 times the detection threshold (Yuki Yamauchi et al., "WHOLE MOUTH GUSTATORY TEST (PART1) - BASIC CONSIDERATIONS AND PRINCIPAL COMPONENT ANALYSIS -", Journal of The Oto-Rhino-Laryngological Society of Japan, vol. 98 (1995) No. 1, p.119-129, and Reiko Ohmori, "Comparisons of the taste sensitivity between three generations", The bulletin of the Faculty of Education, Utsunomiya University, Section 1 (2013) Vol. 63 p.201-210)).

In the present invention, it is preferable that a measured value be used as the taste recognition threshold of an amino acid. A taste recognition threshold of an amino acid can be determined by preparing amino acid-containing aqueous solutions in several concentration levels and tasting in the order from low concentrations to high concentrations to carry out a sensory test by which the taste can be sensed or not. A concentration at which a difference from water is detected is defined as a detection threshold and a concentration at which a taste is recognized is defined as a recognition threshold. For example, for an amino acid for which a theoretical value (a literature value) is already established, aqueous solutions in several concentration levels close to such a concentration are prepared and several persons who received sensory trainings carry out the test thereby to determine these thresholds. In the case of L-alanine, a detection threshold described in literatures is 16.2 mM and a theoretical recognition threshold calculated from such a detection threshold is 32.4 mM, and a sensory test using aqueous solutions in several levels selected from 5 mM, 10 mM, 15 mM, 20 mM, 25 mM, 30 mM, and 35 mM is carried out thereby to measure a recognition threshold. In an embodiment of the present invention, the taste recognition threshold of an amino acid means a taste recognition threshold in pure water. The taste recognition threshold in pure water means a minimum concentration at which such a taste can be recognized when only an amino acid is added to water without addition of any sweetener or the like.

In an embodiment of the present invention, the flavored water contains glycine and a content of glycine may be more than 0 mM and 80 mM or less, 75 mM or less, less than 75 mM, 70 mM or less, 65 mM or less, 60 mM or less, 55 mM or less, 50 mM or less, less than 50 mM, 45 mM or less, 40 mM or less, 35 mM or less, 30 mM or less, 25 mM or less, 20 mM or less, 15 mM or less, or 10 mM or less. Alternatively, such a content may be 10 to 80 mM, 20 to 80 mM, 30 to 80 mM, 40 to 80 mM, 50 to 80 mM, 60 to 80 mM, 70 to 80 mM, 10 to 70 mM, 20 to 70 mM, 30 to 70 mM, 40 to 70 mM, 50 to 70 mM, 60 to 70 mM, 10 to 60 mM, 20 to 60 mM, 30 to 60 mM, 40 to 60 mM, 50 to 60 mM, 10 to 50 mM, 20 to 50 mM, 30 to 50 mM, 40 to 50 mM, 10 to 40 mM, 20 to 40 mM, 30 to 40 mM, 10 to 30 mM or 20 to 30 mM.

In an embodiment of the present invention, the flavored water contains alanine and a content of alanine may be more than 0 mM and 32.4 mM or less, 30 mM or less, less than 30 mM, 25 mM or less, 20 mM or less, less than 20 mM, 15 mM or less, or 10 mM or less. Alternatively, such a content may be 1 to 30 mM, 5 to 30 mM, 10 to 30 mM, 15 to 30 mM, 20 to 30 mM, 25 to 30 mM, 1 to 25 mM, 5 to 25 mM, 10 to 25 mM, 15 to 25 mM, 20 to 25 mM, 1 to 20 mM, 5 to 20 mM, 10 to 20 mM, 15 to 20 mM, 1 mM or more and less than 20 mM, 1 to 19 mM, 5 to 19 mM, 10 to 19 mM, 15 to 19 mM, 1 to 18 mM, 5 to 18 mM, 10 to 18 mM, 15 to 18 mM, 1 to 17 mM, 5 to 17 mM, 10 to 17 mM, 15 to 17 mM, 1 to 16 mM, 5 to 16 mM, 10 to 16 mM, or 15 to 16 mM. Alanine may be either the L-configuration, the D-configuration, or the racemic configuration (DL-configuration) but is preferably the L-configuration.

In an embodiment of the present invention, the flavored water contains valine and a content of valine may be more than 0 mM and 50 mM or less, less than 50 mM, 45 mM or less, 40 mM or less, less than 40 mM, 35 mM or less, 30 mM or less, 25 mM or less, 20 mM or less, 15 mM or less, or 10 mM or less. Alternatively, such a content may be 1 to 50 mM, 5 to 50 mM, 10 to 50 mM, 15 to 50 mM, 20 to 50 mM, 25 to 50 mM, 1 to 50 mM, 5 to 50 mM, 10 to 50 mM, 15 to 50 mM, 20 to 50 mM, 25 to 50 mM, 30 to 50 mM, 35 to 50 mM, 40 to 50 mM, 45 to 50 mM, 1 to 45 mM, 5 to 45 mM, 10 to 45 mM, 15 to 45 mM, 20 to 45 mM, 25 to 45 mM, 1 to 45 mM, 5 to 45 mM, 10 to 45 mM, 15 to 45 mM, 20 to 45 mM, 25 to 45 mM, 30 to 45 mM, 35 to 45 mM, 40 to 45 mM, 1 to 40 mM, 1 mM or more and less than 40 mM, 5 to 40 mM, 10 to 40 mM, 15 to 40 mM, 20 to 40 mM, 25 to 40 mM, 1 to 40 mM, 5 to 40 mM, 10 to 40 mM, 15 to 40 mM, 20 to 40 mM, 25 to 40 mM, 30 to 40 mM, 35 to 40 mM, 1 to 40 mM, 5 to 40 mM, 10 to 40 mM, 15 to 40 mM, 20 to 40 mM, 25 to 40 mM, 1 to 35 mM, 5 to 35 mM, 10 to 35 mM, 15 to 35 mM, 20 to 35 mM, 25 to 35 mM, 30 to 35 mM, 1 to 30 mM, 5 to 30 mM, 10 to 30 mM, 15 to 30 mM, 20 to 30 mM, 25 to 30 mM, 1 to 25 mM, 5 to 25 mM, 10 to 25 mM, 15 to 25 mM, 20 to 25 mM, 1 to 20 mM, 5 to 20 mM, 10 to 20 mM, 10 to 15 mM, or 15 to 20 mM. Valine may be either the L-configuration, the D-configuration, or the racemic configuration (DL-configuration) but is preferably the L-configuration.

In an embodiment of the present invention, the flavored water contains isoleucine and a content of isoleucine may be more than 0 mM and 25 mM or less, 20 mM or less, 15 mM or less, 10 mM or less, or 5 mM or less. Alternatively, such a content may be 1 to 25 mM, 5 to 25 mM, 10 to 25 mM, 15 to 25 mM, 20 to 25 mM, 1 to 20 mM, 5 to 20 mM, 10 to 20 mM, 15 to 20 mM, 1 to 15 mM, 5 to 15 mM, or 10 to 15 mM. Isoleucine may be either the L-configuration, the D-configuration, or the racemic configuration (DL-configuration) but is preferably the L-configuration.

In an embodiment of the present invention, the flavored water contains leucine and a content of leucine may be more than 0 mM and 50 mM or less, 45 mM or less, 40 mM or less, 35 mM or less, 30 mM or less, less than 30 mM, 25 mM or less, 20 mM or less, less than 20 mM, 15 mM or less, 13 mM or less, 12 mM or less, 11 mM or less, 10 mM or less, 9 mM or less, 8 mM or less, 7 mM or less, 6 mM or less, 5 mM or less, 4 mM or less, 3 mM or less, 2 mM or less, or 1 mM or less. Alternatively, such a content may be 1 to 50 mM, 2 to 50 mM, 3 to 50 mM, 4 to 50 mM, 5 to 50 mM, 6 to 50 mM, 7 to 50 mM, 8 to 50 mM, 9 to 50 mM, 10 to 50 mM, 1 to 40 mM, 2 to 40 mM, 3 to 40 mM, 4 to 40 mM, 5 to 40 mM, 6 to 40 mM, 7 to 40 mM, 8 to 40 mM, 9 to 40 mM, 10 to 40 mM, 1 to 30 mM, 2 to 30 mM, 3 to 30 mM, 4 to 30 mM, 5 to 30 mM, 6 to 30 mM, 7 to 30 mM, 8 to 30 mM, 9 to 30 mM, 1 to 20 mM, 1 mM or more and less than 20 mM, 2 to 20 mM, 3 to 20 mM, 4 to 20 mM, 5 to 20 mM, 6 to 20 mM, 7 to 20 mM, 8 to 20 mM, 9 to 20 mM, 15 to 50 mM, 15 to 45 mM, 15 to 40 mM, 15 to 35 mM, 15 to 30 mM, 15 to 25 mM, 15 to 20 mM, 1 to 15 mM, 2 to 15 mM, 3 to 15 mM, 4 to 15 mM, 5 to 15 mM, 6 to 15 mM, 7 to 15 mM, 8 to 15 mM, 9 to 15 mM, 10 to 15 mM, 1 to 12 mM, 2 to 12 mM, 3 to 12 mM, 4 to 12 mM, 5 to 12 mM, 6 to 12 mM, 7 to 12 mM, 8 to 12 mM, 9 to 12 mM, 10 to 12 mM, 1 to 10 mM, 2 to 10 mM, 3 to 10 mM, 4 to 10 mM, 5 to 10 mM, 6 to 10 mM, 7 to 10 mM, 8 to 10 mM, or 9 to 10 mM. Leucine may be either the L-configuration, the D-configuration, or the racemic configuration (DL-configuration) but is preferably the L-configuration.

In an embodiment of the present invention, the flavored water contains serine and a content of serine may be more than 0 mM and 130 mM or less, 100 mM or less, 80 mM or less, 50 mM or less, less than 50 mM, 45 mM or less, 40 mM or less, less than 40 mM, 35 mM or less, 30 mM or less, 25 mM or less, 20 mM or less, 15 mM or less, or 10 mM or less. Alternatively, such a content may be 10 to 130 mM, 10 to 100 mM, 10 to 80 mM, 20 to 80 mM, 30 to 80 mM, 40 to 80 mM, 50 to 80 mM, 60 to 80 mM, 70 to 80 mM, 10 to 70 mM, 20 to 70 mM, 30 to 70 mM, 40 to 70 mM, 50 to 70 mM, 60 to 70 mM, 10 to 60 mM, 20 to 60 mM, 30 to 60 mM, 40 to 60 mM, 50 to 60 mM, 10 to 50 mM, 20 to 50 mM, 30 to 50 mM, 40 to 50 mM, 10 to 40 mM, 20 to 40 mM, 30 to 40 mM, 10 to 30 mM, 20 to 30 mM, 5 to 45 mM, 5 to 40 mM, 5 to 35 mM, 5 to 30 mM, 5 to 25 mM, 5 to 20 mM, 5 to 15 mM, 5 to 10 mM, 1 to 45 mM, 1 to 40 mM, 1 mM or more and less than 40 mM, 1 to 35 mM, 1 to 30 mM, 1 to 25 mM, 1 to 20 mM, 1 to 15 mM, or 1 to 10 mM. Serine may be either the L-configuration, the D-configuration, or the racemic configuration (DL-configuration) but is preferably the L-configuration.

In an embodiment of the present invention, the flavored water contains threonine and a content of threonine may be more than 0 mM and 70 mM or less, 65 mM or less, 60 mM or less, 55 mM or less, 50 mM or less, less than 50 mM, 45 mM or less, 40 mM or less, less than 40 mM, 35 mM or less, 30 mM or less, 25 mM or less, 20 mM or less, 15 mM or less, or 10 mM or less. Alternatively, such a content may be 1 to 70 mM, 1 to 65 mM, 1 to 60 mM, 1 to 55 mM, 1 to 50 mM, 5 to 50 mM, 10 to 50 mM, 15 to 50 mM, 20 to 50 mM, 25 to 50 mM, 1 to 50 mM, 5 to 50 mM, 10 to 50 mM, 15 to 50 mM, 20 to 50 mM, 25 to 50 mM, 30 to 50 mM, 35 to 50 mM, 40 to 50 mM, 45 to 50 mM, 1 to 45 mM, 5 to 45 mM, 10 to 45 mM, 15 to 45 mM, 20 to 45 mM, 25 to 45 mM, 1 to 45 mM, 5 to 45 mM, 10 to 45 mM, 15 to 45 mM, 20 to 45 mM, 25 to 45 mM, 30 to 45 mM, 35 to 45 mM, 40 to 45 mM, 1 to 40 mM, 1 mM or more and less than 40 mM, 5 to 40 mM, 10 to 40 mM, 15 to 40 mM, 20 to 40 mM, 25 to 40 mM, 1 to 40 mM, 5 to 40 mM, 10 to 40 mM, 15 to 40 mM, 20 to 40 mM, 25 to 40 mM, 30 to 40 mM, 35 to 40 mM, 1 to 40 mM, 5 to 40 mM, 10 to 40 mM, 15 to 40 mM, 20 to 40 mM, 25 to 40 mM, 1 to 35 mM, 5 to 35 mM, 10 to 35 mM, 15 to 35 mM, 20 to 35 mM, 25 to 35 mM, 30 to 35 mM, 1 to 30 mM, 5 to 30 mM, 10 to 30 mM, 15 to 30 mM, 20 to 30 mM, 25 to 30 mM, 1 to 25 mM, 5 to 25 mM, 10 to 25 mM, 15 to 25 mM, 20 to 25 mM, 1 to 20 mM, 5 to 20 mM, 10 to 20 mM, or 15 to 20 mM. Threonine may be either the L-configuration, the D-configuration, or the racemic configuration (DL-configuration) but is preferably the L-configuration.

In an embodiment of the present invention, the flavored water contains phenylalanine and a content of phenylalanine may be more than 0 mM and 15 mM or less, 13 mM or less, 12 mM or less, 11 mM or less, 10 mM or less, 9 mM or less, 8 mM or less, 7 mM or less, 6 mM or less, 5 mM or less, 4 mM or less, 3 mM or less, 2 mM or less, or 1 mM or less. Alternatively, such a content may be 1 to 15 mM, 2 to 15 mM, 3 to 15 mM, 4 to 15 mM, 5 to 15 mM, 6 to 15 mM, 7 to 15 mM, 8 to 15 mM, 9 to 15 mM, 10 to 15 mM, 1 to 12 mM, 2 to 12 mM, 3 to 12 mM, 4 to 12 mM, 5 to 12 mM, 6 to 12 mM, 7 to 12 mM, 8 to 12 mM, 9 to 12 mM, 10 to 12 mM, 1 to 10 mM, 2 to 10 mM, 3 to 10 mM, 4 to 10 mM, 5 to 10 mM, 6 to 10 mM, 7 to 10 mM, 8 to 10 mM, or 9 to 10 mM. Phenylalanine may be either the L-configuration, the D-configuration, or the racemic configuration (DL-configuration) but is preferably the L-configuration.

In an embodiment of the present invention, the flavored water contains tryptophan and a content of tryptophan may be more than 0 mM and 5 mM or less, 4 mM or less, 3 mM or less, 2 mM or less, or 1 mM or less. Alternatively, such a content may be 1 to 5 mM, 2 to 5 mM, 3 to 5 mM, or 4 to 5 mM. Tryptophan may be either the L-configuration, the D-configuration, or the racemic configuration (DL-configuration) but is preferably the L-configuration.

In an embodiment of the present invention, the flavored water contains methionine and a content of methionine may be more than 0 mM and 10 mM or less, 9 mM or less, 8 mM or less, 7 mM or less, 6 mM or less, 5 mM or less, 4 mM or less, 3 mM or less, 2 mM or less, or 1 mM or less. Alternatively, such a content may be 1 to 10 mM, 2 to 10 mM, 3 to 10 mM, 4 to 10 mM, 5 to 10 mM, 6 to 10 mM, 7 to 10 mM, 8 to 10 mM, or 9 to 10 mM. Methionine may be either the L-configuration, the D-configuration, or the racemic configuration (DL-configuration) but is preferably the L-configuration.

In an embodiment of the present invention, the flavored water contains proline and a content of proline may be more than 0 mM and 120 mM or less, 100 mM or less, 80 mM or less, 50 mM or less, less than 50 mM, 45 mM or less, 40 mM or less, less than 40 mM, 35 mM or less, 30 mM or less, 25 mM or less, 20 mM or less, 15 mM or less, or 10 mM or less. Alternatively, such a content may be 10 to 120 mM, 10 to 100 mM, 10 to 80 mM, 20 to 80 mM, 30 to 80 mM, 40 to 80 mM, 50 to 80 mM, 60 to 80 mM, 70 to 80 mM, 10 to 70 mM, 20 to 70 mM, 30 to 70 mM, 40 to 70 mM, 50 to 70 mM, 60 to 70 mM, 10 to 60 mM, 20 to 60 mM, 30 to 60 mM, 40 to 60 mM, 50 to 60 mM, 10 to 50 mM, 20 to 50 mM, 30 to 50 mM, 40 to 50 mM, 1 mM or more and less than 40 mM, 10 to 40 mM, 20 to 40 mM, 30 to 40 mM, 1 to 30 mM, 5 to 30 mM, 10 to 30 mM, 15 to 30 mM, 20 to 30 mM, or 25 to 30 mM. Proline may be either the L-configuration, the D-configuration, or the racemic configuration (DL-configuration) but is preferably the L-configuration.

In an embodiment of the present invention, the flavored water contains glutamine and a content of glutamine may be more than 0 mM and 20 mM or less, 19 mM or less, 18 mM or less, 17 mM or less, 16 mM or less, 15 mM or less, 14 mM or less, 13 mM or less, 12 mM or less, 11 mM or less, 10 mM or less, less than 10 mM, 9 mM or less, 8 mM or less, 7 mM or less, 6 mM or less, 5 mM or less, less than 5 mM, 4 mM or less, 3 mM or less, 2 mM or less, or 1 mM or less. Alternatively, such a content may be 1 to 20 mM, 1 to 18 mM, 1 to 15 mM, 2 to 15 mM, 3 to 15 mM, 4 to 15 mM, 5 to 15 mM, 6 to 15 mM, 7 to 15 mM, 8 to 15 mM, 9 to 15 mM, 10 to 15 mM, 1 to 12 mM, 2 to 12 mM, 3 to 12 mM, 4 to 12 mM, 5 to 12 mM, 6 to 12 mM, 7 to 12 mM, 8 to 12 mM, 9 to 12 mM, 10 to 12 mM, 1 to 10 mM, 2 to 10 mM, 3 to 10 mM, 4 to 10 mM, 5 to 10 mM, 6 to 10 mM, 7 to 10 mM, 8 to 10 mM, 9 to 10 mM, 1 to 8 mM, 2 to 8 mM, 3 to 8 mM, 4 to 8 mM, 5 to 8 mM, 6 to 8 mM, 7 to 8 mM, 1 to 7 mM, 2 to 7 mM, 3 to 7 mM, 4 to 7 mM, 5 to 7 mM, 6 to 7 mM, 1 to 6 mM, 2 to 6 mM, 3 to 6 mM, 4 to 6 mM, 5 to 6 mM, 1 to 5 mM, 1 mM or more and less than 5 mM, 2 to 5 mM, 3 to 5 mM, 4 to 5 mM, 1 to 4 mM, 2 to 4 mM, 3 to 4 mM, 1 to 3 mM, or 2 to 3 mM. Glutamine may be either the L-configuration, the D-configuration, or the racemic configuration (DL-configuration) but is preferably the L-configuration.

In an embodiment of the present invention, the flavored water contains asparagine and a content of asparagine may be more than 0 mM and 20 mM or less, less than 20 mM, 19 mM or less, 18 mM or less, 17 mM or less, 16 mM or less, 15 mM or less, 14 mM or less, 13 mM or less, 12 mM or less, 11 mM or less, 10 mM or less, less than 10 mM, 9 mM or less, 8 mM or less, 7 mM or less, 6 mM or less, 5 mM or less, 4 mM or less, 5 mM or less, 2 mM or less, or 1 mM or less. Alternatively, such a content may be 1 to 20 mM, 1 to 18 mM, 1 to 15 mM, 2 to 15 mM, 3 to 15 mM, 4 to 15 mM, 5 to 15 mM, 6 to 15 mM, 7 to 15 mM, 8 to 15 mM, 9 to 15 mM, 10 to 15 mM, 1 to 12 mM, 2 to 12 mM, 3 to 12 mM, 4 to 12 mM, 5 to 12 mM, 6 to 12 mM, 7 to 12 mM, 8 to 12 mM, 9 to 12 mM, 10 to 12 mM, 1 to 10 mM, 1 mM or more and less than 10 mM, 2 to 10 mM, 3 to 10 mM, 4 to 10 mM, 5 to 10 mM, 6 to 10 mM, 7 to 10 mM, 8 to 10 mM, 9 to 10 mM, 0.1 to 3.0 mM, 0.1 to 2.5 mM, 0.1 to 2.0 mM, 0.1 to 1.5 mM, 0.1 to 1.0 mM, 0.1 to 0.5 mM, 0.5 to 3.0 mM, 0.5 to 2.5 mM, 0.5 to 2.0 mM, 0.5 to 1.5 mM, or 0.5 to 1.0 mM. Asparagine may be either the L-configuration, the D-configuration, or the racemic configuration (DL-configuration) but is preferably the L-configuration.

In an embodiment of the present invention, the flavored water contains arginine and a content of arginine may be more than 0 mM and 4.0 mM or less, 3.5 mM or less, 3.0 mM or less, 2.5 mM or less, less than 2.5 mM, 2.0 mM or less, 1.5 mM or less, 1.0 mM or less, less than 1.0 mM, or 0.5 mM or less. Alternatively, such a content may be 0.1 to 4.0 mM, 0.1 to 3.5 mM, 0.1 to 3.0 mM, 0.1 to 2.5 mM, 0.1 to 2.0 mM, 0.1 to 1.5 mM, 0.1 to 1.0 mM, 0.1 mM or more and 1.0 mM, 0.1 to 0.5 mM, 0.5 to 4.0 mM, 0.5 to 3.5 mM, 0.5 to 3.0 mM, 0.5 to 2.5 mM, 0.5 to 2.0 mM, 0.5 to 1.5 mM, or 0.5 to 1.0 mM. Arginine may be either the L-configuration, the D-configuration, or the racemic configuration (DL-configuration) but is preferably the L-configuration.

In an embodiment of the present invention, the flavored water contains lysine and a content of lysine may be more than 0 mM and 3.0 mM or less, 2.5 mM or less, 2.0 mM or less, 1.5 mM or less, 1.0 mM or less, or 0.5 mM or less. Alternatively, such a content may be 0.1 to 3.0 mM, 0.1 to 2.5 mM, 0.1 to 2.0 mM, 0.1 to 1.5 mM, 0.1 to 1.0 mM, 0.1 to 0.5 mM, 0.5 to 3.0 mM, 0.5 to 2.5 mM, 0.5 to 2.0 mM, 0.5 to 1.5 mM, or 0.5 to 1.0 mM. Lysine may be either the L-configuration, the D-configuration, or the racemic configuration (DL-configuration) but is preferably the L-configuration.

In an embodiment of the present invention, the flavored water contains lysine hydrochloride and a content of lysine hydrochloride may be more than 0 mM and 1.0 mM or less, 0.9 mM or less, 0.8 mM or less, 0.7 mM or less, 0.6 mM or less, 0.5 mM or less, less than 0.5 mM, 0.4 mM or less, less than 0.4 mM, 0.3 mM or less, or 0.2 mM or less. Alternatively, such a content may be 0.1 to 1.0 mM, 0.1 to 0.9 mM, 0.1 to 0.8 mM, 0.1 to 0.7 mM, 0.1 to 0.6 mM, 0.1 to 0.5 mM, 0.1 to 0.4 mM, 0.1 mM or more and less than 0.4 mM, 0.1 to 0.3 mM, 0.1 to 0.2 mM, 0.2 to 1.0 mM, 0.5 to 0.8 mM, 0.2 to 0.6 mM, 0.2 to 0.4 mM, or 0.3 to 0.5 mM. Lysine may be either the L-configuration, the D-configuration, or the racemic configuration (DL-configuration) but is preferably the L-configuration.

In an embodiment of the present invention, the flavored water contains histidine and a content of histidine may be more than 0 mM and 4.0 mM or less, 3.5 mM or less, 3.0 mM or less, 2.5 mM or less, 2.0 mM or less, 1.5 mM or less, 1.0 mM or less, or 0.5 mM or less. Alternatively, such a content may be 0.1 to 4.0 mM, 0.1 to 3.5 mM, 0.1 to 3.0 mM, 0.1 to 2.5 mM, 0.1 to 2.0 mM, 0.1 to 1.5 mM, 0.1 to 1.0 mM, 0.1 to 0.5 mM, 0.5 to 4.0 mM, 0.5 to 3.5 mM, 0.5 to 3.0 mM, 0.5 to 2.5 mM, 0.5 to 2.0 mM, 0.5 to 1.5 mM, or 0.5 to 1.0 mM. Histidine may be either the L-configuration, the D-configuration, or the racemic configuration (DL-configuration) but is preferably the L-configuration.

In an embodiment of the present invention, the flavored water contains glutamic acid and a content of glutamic acid may be more than 0 mM and 0.50 mM or less, less than 0.50 mM, 0.40 mM or less, less than 0.40 mM, 0.35 mM or less, 0.30 mM or less, 0.25 mM or less, less than 0.25 mM, 0.20 mM or less, 0.15 mM or less, 0.14 mM or less, 0.13 mM or less, 0.12 mM or less, 0.11 mM or less, 0.10 mM or less, 0.09 mM or less, 0.08 mM or less, 0.07 mM or less, 0.06 mM or less, 0.05 mM or less, 0.04 mM or less, 0.03 mM or less, 0.02 mM or less, or 0.01 mM or less. Alternatively, such a content may be 0.01 to 0.15 mM, 0.02 to 0.15 mM, 0.03 to 0.15 mM, 0.04 to 0.15 mM, 0.05 to 0.15 mM, 0.06 to 0.15 mM, 0.07 to 0.15 mM, 0.08 to 0.15 mM, 0.09 to 0.15 mM, 0.10 to 0.15 mM, 0.01 to 0.12 mM, 0.02 to 0.12 mM, 0.03 to 0.12 mM, 0.04 to 0.12 mM, 0.05 to 0.12 mM, 0.06 to 0.12 mM, 0.07 to 0.12 mM, 0.08 to 0.12 mM, 0.09 to 0.12 mM, 0.10 to 0.12 mM, 0.01 to 0.10 mM, 0.02 to 0.10 mM, 0.03 to 0.10 mM, 0.04 to 0.10 mM, 0.05 to 0.10 mM, 0.06 to 0.10 mM, 0.07 to 0.10 mM, 0.08 to 0.10 mM, 0.09 to 0.10 mM, 0.10 to 0.40 mM, 0.10 to 0.35 mM, 0.10 to 0.30 mM, 0.10 to 0.25 mM, 0.10 mM or more and less than 0.25 mM, 0.10 to 0.20 mM, 0.10 to 0.15 mM, 0.20 to 0.40 mM, 0.20 to 0.35 mM, 0.20 to 0.30 mM, 0.20 to 0.25 mM, or 0.30 to 0.40 mM. Glutamic acid may be either the L-configuration, the D-configuration, or the racemic configuration (DL-configuration) but is preferably the L-configuration.

In an embodiment of the present invention, the flavored water contains aspartic acid and a content of aspartic acid may be more than 0 mM and 1.5 mM or less, 1.4 mM or less, 1.3 mM or less, 1.2 mM or less, 1.1 mM or less, 1.0 mM or less, 0.9 mM or less, 0.8 mM or less, 0.7 mM or less, 0.6 mM or less, 0.5 mM or less, 0.4 mM or less, 0.3 mM or less, 0.2 mM or less, or 0.1 mM or less. Alternatively, such a content may be 0.1 to 1.5 mM, 0.2 to 1.5 mM, 0.3 to 1.5 mM, 0.4 to 1.5 mM, 0.5 to 1.5 mM, 0.6 to 1.5 mM, 0.7 to 1.5 mM, 0.8 to 1.5 mM, 0.9 to 1.5 mM, 1.0 to 1.5 mM, 0.1 to 1.2 mM, 0.2 to 1.2 mM, 0.3 to 1.2 mM, 0.4 to 1.2 mM, 0.5 to 1.2 mM, 0.6 to 1.2 mM, 0.7 to 1.2 mM, 0.8 to 1.2 mM, 0.9 to 1.2 mM, 1.0 to 1.2 mM, 0.1 to 1.0 mM, 0.2 to 1.0 mM, 0.3 to 1.0 mM, 0.4 to 1.0 mM, 0.5 to 1.0 mM, 0.6 to 1.0 mM, 0.7 to 1.0 mM, 0.8 to 1.0 mM, or 0.9 to 1.0 mM. Aspartic acid may be either the L-configuration, the D-configuration, or the racemic configuration (DL-configuration) but is preferably the L-configuration.

In an embodiment of the present invention, the flavored water does not contain monosodium aspartate as the amino acid salt.

An amino acid content can be measured by an amino acid automatic analysis method or high-performance liquid chromatography. When an amount of the amino acid contained in the beverage is known, a value calculated from the amount contained can be adopted.

In an embodiment of the present invention, when the flavored water contains a fruit juice and a fruit-derived amino acid is contained in the fruit juice, such an amino acid is also encompassed in the amino acid in the flavored water of the present invention. In this case, an amount of the amino acid contained in the flavored water of the present invention is a total value of amounts of fruit juice-derived one and one added externally. In an embodiment of the present invention, also when the flavored water contains an extract and the extract contains an amino acid, the above can apply. In an embodiment of the present invention, when a plurality of amino acids are contained in the flavored water, a content of at least one of such amino acids may be less than the taste recognition threshold, or contents of some of such amino acids may be more than the taste recognition threshold. In other embodiments of the present invention, when a plurality of amino acids are contained in the flavored water, a content of each of such amino acids may be less than the taste recognition threshold. The flavored water in still other embodiment of the present invention may contain one or more amino acids selected from less than 20 mM of DL-alanine, less than 40 mM of L-serine, less than 50 mM of glycine, less than 1.0 mM of L-arginine, less than 0.25 mM of L-glutamic acid, less than 40 mM of L-valine, less than 5 mM of L-glutamine, less than 20 mM of L-leucine, less than 40 mM of L-threonine, less than 40 mM of L-proline, less than 10 mM of L-asparagine, and less than 0.4 mM of L-lysine hydrochloride. The flavored water in still other embodiment of the present invention may contain one or more amino acids selected from 1 mM or more and less than 20 mM of DL-alanine, 1 mM or more and less than 40 mM of L-serine, 1 mM or more and less than 50 mM of glycine, 0.1 mM or more and less than 1.0 mM of L-arginine, 0.10 mM or more and less than 0.25 mM of L-glutamic acid, 1 mM or more and less than 40 mM of L-valine, 1 mM or more and less than 5 mM of L-glutamine, 1 mM or more and less than 20 mM of L-leucine, 1 mM or more and less than 40 mM of L-threonine, 1 mM or more and less than 40 mM of L-proline, 1 mM or more and less than 10 mM of L-asparagine, and 0.1 mM or more and less than 0.4 mM of L-lysine hydrochloride. In an embodiment of the present invention, when the flavored water does not contain a fruit juice and an extract, an amount of the amino acid contained in the flavored water of the present invention is an amount of an amino acid added externally.

### [Sodium]

The flavored water of the present invention comprises (c) less than 50 mg/100 ml of sodium, and it is meant that a content of sodium atom is less than 50 mg/100 ml. A content of sodium may be, depending on an embodiment, a content of 0.1 mg/100 ml or more and less than 50 mg/100 ml, 0.1 to 45 mg/100 ml, 0.1 to 40 mg/100 ml, 0.1 to 35 mg/100 ml, 0.1 to 30 mg/100 ml, 0.1 to 25 mg/100 ml, 0.1 to 20 mg/100 ml, 0.1 to 19 mg/100 ml, 0.1 to 18 mg/100 ml, 0.1 to 17 mg/100 ml, 0.1 to 16 mg/100 ml, 0.1 to 15 mg/100 ml, 0.1 to 14 mg/100 ml, 0.1 to 13 mg/100 ml, 0.1 to 12 mg/100 ml, 0.1 to 11 mg/100 ml, 0.1 to 10 mg/100 ml, 1 mg/100 ml or more and less than 50 mg/100 ml, 1 to 45 mg/100 ml, 1 to 40 mg/100 ml, 1 to 35 mg/100 ml, 1 to 30 mg/100 ml, 1 to 25 mg/100 ml, 1 to 20 mg/100 ml, 1 to 19 mg/100 ml, 1 to 18 mg/100 ml, 1 to 17 mg/100 ml, 1 to 16 mg/100 ml, 1 to 15 mg/100 ml, 1 to 14 mg/100 ml, 1 to 13 mg/100 ml, 1 to 12 mg/100 ml, 1 to 11 mg/100 ml, 1 to 10 mg/100 ml, 5 mg/100 ml or more and less than 50 mg/100 ml, 5 to 45 mg/100 ml, 5 to 40 mg/100 ml, 5 to 35 mg/100 ml, 5 to 30 mg/100 ml, 5 to 25 mg/100 ml, 5 to 20 mg/100 ml, 5 to 19 mg/100 ml, 5 to 18 mg/100 ml, 5 to 17 mg/100 ml, 5 to 16 mg/100 ml, 5 to 15 mg/100 ml, 5 to 14 mg/100 ml, 5 to 13 mg/100 ml, 5 to 12 mg/100 ml, 5 to 11 mg/100 ml, 5 to 10 mg/100 ml, 7 mg/100 ml or more and less than 50 mg/100 ml, 7 to 45 mg/100 ml, 7 to 40 mg/100 ml, 7 to 35 mg/100 ml, 7 to 30 mg/100 ml, 7 to 25 mg/100 ml, 7 to 20 mg/100 ml, 7 to 19 mg/100 ml, 7 to 18 mg/100 ml, 7 to 17 mg/100 ml, 7 to 16 mg/100 ml, 7 to 15 mg/100 ml, 10 mg/100 ml or more and less than 50 mg/100 ml, 10 to 45 mg/100 ml, 10 to 40 mg/100 ml, 10 to 35 mg/100 ml, 10 to 30 mg/100 ml, 10 to 25 mg/100 ml, 10 to 20 mg/100 ml, 10 to 19 mg/100 ml, 10 to 18 mg/100 ml, 10 to 17 mg/100 ml, 10 to 16 mg/100 ml, 10 to 15 mg/100 ml, 15 mg/100 ml or more and less than 50 mg/100 ml, 15 to 45 mg/100 ml, 15 to 40 mg/100 ml, 15 to 35 mg/100 ml, 15 to 30 mg/100 ml, 15 to 25 mg/100 ml, 15 to 20 mg/100 ml, 20 mg/100 ml or more and less than 50 mg/100 ml, 20 to 45 mg/100 ml, 20 to 40 mg/100 ml, 20 to 35 mg/100 ml, 20 to 30 mg/100 ml, 20 to 25 mg/100 ml, 25 mg/100 ml or more and less than 50 mg/100 ml, 25 to 45 mg/100 ml, 25 to 40 mg/100 ml, 25 to 35 mg/100 ml, or 25 to 30 mg/100 ml.

Further, a content of sodium may be, depending on an embodiment, a content of 0.1 to 22 mg/100 ml, 0.1 to 21 mg/100 ml, 1 to 22 mg/100 ml, 1 to 21 mg/100 ml, 4 to 40 mg/100 ml, 4 to 35 mg/100 ml, 4 to 34 mg/100 ml, 4 to 33 mg/100 ml, 4 to 32 mg/100 ml, 4 to 31 mg/100 ml, 4 to 30 mg/100 ml, 4 to 29 mg/100 ml, 4 to 26 mg/100 ml, 4 to 25 mg/100 ml, 4 to 22 mg/100 ml, 4 to 21 mg/100 ml, 4 to 20 mg/100 ml, 4 to 19 mg/100 ml, 4 to 18 mg/100 ml, 4 to 17 mg/100 ml, 4 to 16 mg/100 ml, 4 to 15 mg/100 ml, 4 to 14 mg/100 ml, 4 to 13 mg/100 ml, 4 to 12 mg/100 ml, 4 to 11 mg/100 ml, 4 to 10 mg/100 ml, 5 to 34 mg/100 ml, 5 to 33 mg/100 ml, 5 to 32 mg/100 ml, 5 to 31 mg/100 ml, 5 to 29 mg/100 ml, 5 to 22 mg/100 ml, 5 to 21 mg/100 ml, 10 to 34 mg/100 ml, 10 to 33 mg/100 ml, 10 to 32 mg/100 ml, 10 to 31 mg/100 ml, 10 to 29 mg/100 ml, 10 to 22 mg/100 ml, 10 to 21 mg/100 ml, 11.5 to 34 mg/100 ml, 11.5 to 33 mg/100 ml, 11.5 to 32 mg/100 ml, 11.5 to 31 mg/100 ml, 11.5 to 30 mg/100 ml, 11.5 to 29 mg/100 ml, 11.5 to 22 mg/100 ml, 11.5 to 21 mg/100 ml, 11.5 to 20 mg/100 ml, 11.5 to 19 mg/100 ml, 11.5 to 18 mg/100 ml, 11.5 to 17 mg/100 ml, 11.5 to 16 mg/100 ml, 11.5 to 15 mg/100 ml, 11.5 to 14 mg/100 ml, 11.5 to 13 mg/100 ml, 11.5 to 12 mg/100 ml, 5.75 to 34.5 mg/100 ml, 5.75 to 28.75 mg/100 ml, 5.75 to 23 mg/100 ml, 5.75 to 17.25 mg/100 ml, 5.75 to 11.5 mg/100 ml, 11.5 to 34.5 mg/100 ml, 11.5 to 28.75 mg/100 ml, 11.5 to 23 mg/100 ml, 11.5 to 17.25 mg/100 ml, 17.25 to 34.5 mg/100 ml, 17.25 to 28.75 mg/100 ml, 17.25 to 23 mg/100 ml, 23 to 34.5 mg/100 ml, 23 to 28.75 mg/100 ml, or 28.75 to 34.5 mg/100 ml.

When sodium is added to the flavored water, an amount thereof added may be an amount added of 0.1 to 50 mg/100 ml, 0.1 to 45 mg/100 ml, 0.1 to 40 mg/100 ml, 0.1 to 35 mg/100 ml, 0.1 to 30 mg/100 ml, 0.1 to 25 mg/100 ml, 0.1 to 20 mg/100 ml, 0.1 to 19 mg/100 ml, 0.1 to 18 mg/100 ml, 0.1 to 17 mg/100 ml, 0.1 to 16 mg/100 ml, 0.1 to 15 mg/100 ml, 0.1 to 14 mg/100 ml, 0.1 to 13 mg/100 ml, 0.1 to 12 mg/100 ml, 0.1 to 11 mg/100 ml, 0.1 to 10 mg/100 ml, 1 to 50 mg/100 ml, 1 to 45 mg/100 ml, 1 to 40 mg/100 ml, 1 to 35 mg/100 ml, 1 to 30 mg/100 ml, 1 to 25 mg/100 ml, 1 to 20 mg/100 ml, 1 to 19 mg/100 ml, 1 to 18 mg/100 ml, 1 to 17 mg/100 ml, 1 to 16 mg/100 ml, 1 to 15 mg/100 ml, 1 to 14 mg/100 ml, 1 to 13 mg/100 ml, 1 to 12 mg/100 ml, 1 to 11 mg/100 ml, 1 to 10 mg/100 ml, 5 to 50 mg/100 ml, 5 to 45 mg/100 ml, 5 to 40 mg/100 ml, 5 to 35 mg/100 ml, 5 to 30 mg/100 ml, 5 to 25 mg/100 ml, 5 to 20 mg/100 ml, 5 to 19 mg/100 ml, 5 to 18 mg/100 ml, 5 to 17 mg/100 ml, 5 to 16 mg/100 ml, 5 to 15 mg/100 ml, 5 to 14 mg/100 ml, 5 to 13 mg/100 ml, 5 to 12 mg/100 ml, 5 to 11 mg/100 ml, 5 to 10 mg/100 ml, 7 to 50 mg/100 ml, 7 to 45 mg/100 ml, 7 to 40 mg/100 ml, 7 to 35 mg/100 ml, 7 to 30 mg/100 ml, 7 to 25 mg/100 ml, 7 to 20 mg/100 ml, 7 to 19 mg/100 ml, 7 to 18 mg/100 ml, 7 to 17 mg/100 ml, 7 to 16 mg/100 ml, 7 to 15 mg/100 ml, 10 to 50 mg/100 ml, 10 to 45 mg/100 ml, 10 to 40 mg/100 ml, 10 to 35 mg/100 ml, 10 to 30 mg/100 ml, 10 to 25 mg/100 ml, 10 to 20 mg/100 ml, 10 to 19 mg/100 ml, 10 to 18 mg/100 ml, 10 to 17 mg/100 ml, 10 to 16 mg/100 ml, 10 to 15 mg/100 ml, 15 to 50 mg/100 ml, 15 to 45 mg/100 ml, 15 to 40 mg/100 ml, 15 to 35 mg/100 ml, 15 to 30 mg/100 ml, 15 to 25 mg/100 ml, 15 to 20 mg/100 ml, 20 to 50 mg/100 ml, 20 to 45 mg/100 ml, 20 to 40 mg/100 ml, 20 to 35 mg/100 ml, 20 to 30 mg/100 ml, 20 to 25 mg/100 ml, 25 to 50 mg/100 ml, 25 to 45 mg/100 ml, 25 to 40 mg/100 ml, 25 to 35 mg/100 ml, or 25 to 30 mg/100 ml.

The sodium is not particularly limited in terms of the form thereof as long as it is contained in an ingestible form in the flavored water of the present invention, and may be, for example, in the form of at least one selected from the group consisting of sodium chloride, sodium hydroxide, sodium malate, sodium sulfate, sodium citrate, sodium phosphate, sodium carbonate, sodium disulfide, sodium bicarbonate, sodium alginate, sodium arginate, sodium glucoheptanoate, sodium gluconate, monosodium glutamate, sodium tartrate, monosodium aspartate, sodium lactate, sodium caseinate, sodium ascorbate, and a mixture thereof.

In an embodiment of the present invention, when the flavored water comprises a fruit juice and the fruit juice contains sodium, such sodium derived from the fruit juice is also encompassed in the sodium contained in the flavored water of the present invention. In an embodiment of the present invention, also when the flavored water contains an extract and the extract contains sodium, the above can apply.

In an embodiment of the present invention, sodium derived from a sodium component (for example, sodium benzoate, sodium sulfite, sodium hyposulfite, sodium dehydroacetate, sodium pyrosulfite, and sodium propionate) used as a preservative is not substantially included in the component (c).

The content of sodium in the beverage can be herein measured by an atomic absorption spectrometry. Note that, when an amount of a sodium-containing compound contained in the beverage is known, a value calculated from the contained amount may also be adopted.

In an embodiment of the present invention, an amount of sodium contained in the flavored water may be defined by an amount of sodium source. The "sodium source" means a compound which generates sodium ions when the flavored water is put in the mouth. The amount of the sodium source may be less than 20 mM. In other embodiments of the present invention, an amount of the sodium source is about 19 mM or less, about 18 mM or less, about 17 mM or less, about 16 mM or less, about 15 mM or less, about 14 mM or less, about 13 mM or less, about 12 mM or less, about 11 mM or less, about 10 mM or less, about 9.0 mM or less, about 8.5 mM or less, about 8.0 mM or less, about 8.5 mM or less, about 7.0 mM or less, about 7.5 mM or less, about 6.0 mM or less, about 5.5 mM or less, about 5.0 mM or less, about 4.5 mM or less, about 4.0 mM or less, about 3.5 mM or less, about 2.0 mM or less, about 1.5 mM or less, about 1.0 mM or less, or about 0.5 mM or less. In other embodiments, an amount of the sodium source may be in ranges from about 0.1 to about 19 mM, about 0.5 to about 19 mM, about 1.0 to about 19 mM, about 1.5 to about 19 mM, about 2.0 to about 19 mM, about 2.5 to about 19 mM, about 3.0 to about 19 mM, about 3.5 to about 19 mM, about 4.0 to about 19 mM, about 4.5 to about 19 mM, about 5.0 to about 19 mM, about 5.5 to about 19 mM, about 6.0 to about 19 mM, about 6.5 to about 19 mM, about 7.0 to about 19 mM, about 7.5 to about 19 mM, about 8.0 to about 19 mM, about 8.5 to about 19 mM, about 9.0 to about 19 mM, about 9.5 to about 19 mM, about 0.1 to about 15 mM, about 0.5 to about 15 mM, about 1.0 to about 15 mM, about 1.5 to about 15 mM, about 2.0 to about 15 mM, about 2.5 to about 15 mM, about 3.0 to about 15 mM, about 3.5 to about 15 mM, about 4.0 to about 15 mM, about 4.5 to about 15 mM, about 5.0 to about 15 mM, about 5.5 to about 15 mM, about 6.0 to about 15 mM, about 6.5 to about 15 mM, about 7.0 to about 15 mM, about 7.5 to about 15 mM, about 8.0 to about 15 mM, about 8.5 to about 15 mM, about 9.0 to about 15 mM, about 9.5 to about 15 mM, about 0.1 to about 9.9 mM, about 0.5 to about 9.9 mM, about 1.0 to about 9.9 mM, about 1.5 to about 9.9 mM, about 2.0 to about 9.9 mM, about 2.5 to about 9.9 mM, about 3.0 to about 9.9 mM, about 3.5 to about 9.9 mM, about 4.0 to about 9.9 mM, about 4.5 to about 9.9 mM, about 5.0 to about 9.9 mM, about 5.5 to about 9.9 mM, about 6.0 to about 9.9 mM, about 6.5 to about 9.9 mM, about 7.0 to about 9.9 mM, about 7.5 to about 9.9 mM, about 8.0 to about 9.9 mM, about 8.5 to about 9.9 mM, about 9.0 to about 9.9 mM, about 9.5 to about 9.9 mM, about 0.1 to about 9.5 mM, about 0.1 to about 9.0 mM, about 0.1 to about 8.5 mM, about 0.1 to about 8.0 mM, about 0.1 to about 7.5 mM, about 0.1 to about 7.0 mM, about 0.1 to about 6.5 mM, about 0.1 to about 6.0 mM, about 0.1 to about 5.5 mM, about 0.1 to about 5.0 mM, about 0.1 to about 4.5 mM, about 0.1 to about 4.0 mM, about 0.1 to about 3.5 mM, about 0.1 to about 3.0 mM, about 0.1 to about 2.5 mM, about 0.1 to about 2.0 mM, about 0.1 to about 1.5 mM, about 0.1 to about 1.0 mM, about 0.1 to about 0.5 mM, about 0.5 to about 9.5 mM, about 0.5 to about 9.5 mM, about 0.5 to about 9.0 mM, about 0.5 to about 8.5 mM, about 0.5 to about 8.0 mM, about 0.5 to about 7.5 mM, about 0.5 to about 7.0 mM, about 0.5 to about 6.5 mM, about 0.5 to about 6.0 mM, about 0.5 to about 5.5 mM, about 0.5 to about 5.0 mM, about 0.5 to about 4.5 mM, about 0.5 to about 4.0 mM, about 0.5 to about 3.5 mM, about 0.5 to about 3.0 mM, about 0.5 to about 2.5 mM, about 0.5 to about 2.0 mM, about 0.5 to about 1.5 mM, about 0.5 to about 1.0 mM, about 1.0 to about 9.5 mM, about 1.0 to about 9.0 mM, about 1.0 to about 8.5 mM, about 1.0 to about 8.0 mM, about 1.0 to about 7.5 mM, about 1.0 to about 7.0 mM, about 1.0 to about 6.5 mM, about 1.0 to about 6.0 mM, about 1.0 to about 5.5 mM, about 1.0 to about 5.0 mM, about 1.0 to about 4.5 mM, about 1.0 to about 4.0 mM, about 1.0 to about 3.5 mM, about 1.0 to about 3.0 mM, about 1.0 to about 2.5 mM, about 1.0 to about 2.0 mM, about 1.0 to about 1.5 mM, about 1.5 to about 9.5 mM, about 1.5 to about 9.0 mM, about 1.5 to about 8.5 mM, about 1.5 to about 8.0 mM, about 1.5 to about 7.5 mM, about 1.5 to about 7.0 mM, about 1.5 to about 6.5 mM, about 1.5 to about 6.0 mM, about 1.5 to about 5.5 mM, about 1.5 to about 5.0 mM, about 1.5 to about 4.5 mM, about 1.5 to about 4.0 mM, about 1.5 to about 3.5 mM, about 1.5 to about 3.0 mM, about 1.5 to about 2.5 mM, about 1.5 to about 2.0 mM, about 2.0 to about 9.5 mM, about 2.0 to about 9.0 mM, about 2.0 to about 8.5 mM, about 2.0 to about 8.0 mM, about 2.0 to about 7.5 mM, about 2.0 to about 7.0 mM, about 2.0 to about 6.5 mM, about 2.0 to about 6.0 mM, about 2.0 to about 5.5 mM, about 2.0 to about 5.0 mM, about 2.0 to about 4.5 mM, about 2.0 to about 4.0 mM, about 2.0 to about 3.5 mM, about 2.0 to about 3.0 mM, about 2.0 to about 2.5 mM, about 2.5 to about 9.5 mM, about 2.5 to about 9.0 mM, about 2.5 to about 8.5 mM, about 2.5 to about 8.0 mM, about 2.5 to about 7.5 mM, about 2.5 to about 7.0 mM, about 2.5 to about 6.5 mM, about 2.5 to about 6.0 mM, about 2.5 to about 5.5 mM, about 2.5 to about 5.0 mM, about 2.5 to about 4.5 mM, about 2.5 to about 4.0 mM, about 2.5 to about 3.5 mM, about 2.5 to about 3.0 mM, about 3.0 to about 9.5 mM, about 3.0 to about 9.0 mM, about 3.0 to about 8.5 mM, about 3.0 to about 8.0 mM, about 3.0 to about 7.5 mM, about 3.0 to about 7.0 mM, about 3.0 to about 6.5 mM, about 3.0 to about 6.0 mM, about 3.0 to about 5.5 mM, about 3.0 to about 5.0 mM, about 3.0 to about 4.5 mM, about 3.0 to about 4.0 mM, about 3.0 to about 3.5 mM, about 3.5 to about 9.5 mM, about 3.5 to about 9.0 mM, about 3.5 to about 8.5 mM, about 3.5 to about 8.0 mM, about 3.5 to about 7.5 mM, about 3.5 to about 7.0 mM, about 3.5 to about 6.5 mM, about 3.5 to about 6.0 mM, about 3.5 to about 5.5 mM, about 3.5 to about 5.0 mM, about 3.5 to about 4.5 mM, about 3.5 to about 4.0 mM, about 4.0 to about 9.5 mM, about 4.0 to about 9.0 mM, about 4.0 to about 8.5 mM, about 4.0 to about 8.0 mM, about 4.0 to about 7.5 mM, about 4.0 to about 7.0 mM, about 4.0 to about 6.5 mM, about 4.0 to about 6.0 mM, about 4.0 to about 5.5 mM, about 4.0 to about 5.0 mM, about 4.0 to about 4.5 mM, about 4.5 to about 9.5 mM, about 4.5 to about 9.0 mM, about 4.5 to about 8.5 mM, about 4.5 to about 8.0 mM, about 4.5 to about 7.5 mM, about 4.5 to about 7.0 mM, about 4.5 to about 6.5 mM, about 4.5 to about 6.0 mM, about 4.5 to about 5.5 mM, about 4.5 to about 5.0 mM, about 5.0 to about 9.5 mM, about 5.0 to about 9.0 mM, about 5.0 to about 8.5 mM, about 5.0 to about 8.0 mM, about 5.0 to about 7.5 mM, about 5.0 to about 7.0 mM, about 5.0 to about 6.5 mM, about 5.0 to about 6.0 mM, about 5.0 to about 5.5 mM, about 5.5 to about 9.5 mM, about 5.5 to about 9.0 mM, about 5.5 to about 8.5 mM, about 5.5 to about 8.0 mM, about 5.5 to about 7.5 mM, about 5.5 to about 7.0 mM, about 5.5 to about 6.5 mM, about 5.5 to about 6.0 mM, about 6.0 to about 9.5 mM, about 6.0 to about 9.0 mM, about 6.0 to about 8.5 mM, about 6.0 to about 8.0 mM, about 6.0 to about 7.5 mM, about 6.0 to about 7.0 mM, about 6.0 to about 6.5 mM, about 6.5 to about 9.5 mM, about 6.5 to about 9.0 mM, about 6.5 to about 8.5 mM, about 6.5 to about 8.0 mM, about 6.5 to about 7.5 mM, about 6.5 to about 7.0 mM, about 7.0 to about 9.5 mM, about 7.0 to about 9.0 mM, about 7.0 to about 8.5 mM, about 7.0 to about 8.0 mM or about 7.0 to about 7.5 mM.

### [Optional component]

### (Sweetener)

The flavored water of the present invention may contain a sweetener other than the high-intensity sweetener of the component (a). In the present description, the "sweetener" means any substance or a substance group which causes a sweetness response. Sweeteners can be classified into carbohydrate sweeteners and non-carbohydrate sweeteners based on structural characteristics and also into low-intensity sweeteners and high-intensity sweeteners based on the degree of sweetness. Further, sweet substances can also be classified based on the energy (calorie) into caloric sweeteners and non-caloric sweeteners. Further, sweet substances can also be classified based on the availability into natural sweeteners and artificial sweeteners. Note that, when the flavored water comprises a fruit juice and the fruit juice contains a fruit-derived sweetener (fructose or the like), such a sweetener is also encompassed in the sweetener here described. Also when the flavored water contains an extract and the extract contains a sweetener, the above can apply.

The carbohydrate sweetener is not limited and examples include starch sugars such as sucrose, lactose, glucose, maltose, starch syrup, a high-fructose corn syrup, and fructose, sugar alcohols such as erythritol, sorbitol, mannitol, maltitol, xylitol, and palatinit, sucrose, palatinose, fructooligosaccharide, Coupling Sugar^{(R)}, galactooligosaccharide, lactosucrose, raffinose, soyoligosaccharide, and honey. Further, the carbohydrate sweetener includes rare sugars.

The rare sugar refers to a monosaccharide that occurs in very small quantities in nature and derivatives thereof. For example, the rare sugar includes naturally occurring aldoses other than D-glucose, D-galactose, D-mannose, D-ribose, D-xylose, and L-arabinose, naturally occurring ketoses other than D-fructose, naturally occurring sugar alcohols other than D-sorbitol. Nonrestrictive examples of the rare sugar include ketoses such as D-tagatose, D-sorbose, D-allulose (D-psicose), L-fructose, L-allulose (L-psicose), L-tagatose, L-sorbose, aldoses such as altrose and D-allose, sugar alcohols such as xylitol, erythritol, and D-talitol.

The caloric sweetener typically means sweet substances having an energy of 4 kcal/g. An energy of a sweet substance is already known or can be determined by measuring a content by HPLC or the like and calculating by multiplying the content by an energy conversion factor, or measuring a heat of physical combustion using a calorie meter (for example, bomb calorimeter) and correcting the heat with a digestion-absorption rate, an excreted heat or the like. Nonrestrictive examples of the caloric sweetener include sucrose, lactose, glucose, maltose, starch syrup, a high-fructose corn syrup, fructose.

The non-caloric sweeteners typically refer to those having the nature of being difficult to be digested in the body and consequently having a reduced energy to be taken into and mean sweet substances having an energy of less than 2 kcal/g, preferably less than 1 kcal/g, and further preferably less than 0.5 kcal/g. Nonrestrictive examples of the non-caloric sweetener include non-caloric hexoses such as allulose (psicose) and allose, non-caloric pentoses such as xylose and arabinose, non-caloric tetroses such as erythrose and threose, and non-caloric sugar alcohols such as erythritol and allitol.

Further, the sweet substances can also be classified based on the energy (calorie) level. For example, the sweet substances can be classified into sweet substances having an energy of 4 kcal/g or more and sweet substances having an energy of less than 4 kcal/g. The sweet substance having an energy of less than 4 kcal/g can further be classified into sweet substances having an energy of less than 3 kcal/g, sweet substances having an energy of less than 2.5 kcal/g, sweet substances having an energy of less than 2 kcal/g, sweet substances having an energy of less than 1.5 kcal/g, sweet substances having an energy of less than 1 kcal/g, sweet substances having an energy of less than 0.5 kcal/g, sweet substances having an energy of 1 kcal/g or more and less than 4 kcal/g, sweet substances having an energy of 2 kcal/g or more and less than 4 kcal/g, sweet substances having an energy of 3 kcal/g or more and less than 4 kcal/g, sweet substances having an energy of 2 kcal/g or more and less than 3 kcal/g, sweet substances having an energy of 1 kcal/g or more and less than 2 kcal/g, sweet substances having an energy of 0 kcal/g or more and less than 2 kcal/g, and sweet substances having an energy of 0 kcal/g or more and less than 1 kcal/g. Examples of the sweet substance having an energy of 4 kcal/g or more include sucrose, lactose, glucose, maltose, starch syrup, a high-fructose corn syrup, and fructose, examples of the sweet substance having an energy of 2 kcal/g or more and less than 4 kcal/g include sorbitol, xylitol, D-xylose, D-ribose, D-tagatose, and arabinose, and examples of the sweet substance having an energy of 0 kcal/g or more and less than 2 kcal/g include D-allulose, erythritol, allose, erythrose, threose, and allitol.

The low-intensity sweetener means a compound having about the same degree of sweetness as that of sucrose (for example, less than 5 times, about 0.1 to 2 times, about 0.5 to 1.5 times that of sucrose). Nonrestrictive examples of the low-intensity sweetener include low-intensity sugar sweeteners such as sucrose, a high-fructose corn syrup, glucose, fructose, lactose, maltose, xylose, lactulose, fructooligosaccharides, maltooligosaccharides, isomaltooligosaccharides, galactooligosaccharides, Coupling Sugar^{(R)}, and palatinose, sugar alcohol low-intensity sweeteners such as maltitol, sorbitol, erythritol, xylitol, lactitol, palatinit, reduced starch saccharified products. Further, the low-intensity sweetener includes rare sugars, caloric sweeteners, non-caloric sweeteners, carbohydrate sweeteners, non-carbohydrate sweeteners, natural sweeteners, and artificial sweeteners as long as the degree of sweetness is in the above range.

The flavored water in an embodiment of the present invention contains a low-intensity sweetener. In other embodiments of the present invention, the following flavored water (hereinafter, also referred to as the flavored water of Embodiment A) is provided.

Flavored water comprising:
(a) a high-intensity sweetener in an amount corresponding to a sweetness intensity X1,
(b) an amino acid or a derivative or a salt thereof in an amount less than a taste recognition threshold,
(c) less than 50 mg/100 ml of sodium, and
(d) a low-intensity sweetener in an amount corresponding to a sweetness intensity X4,
   wherein the flavored water has a sweetness of a sweetness intensity X5 exhibited by the components (a) to (d) and 0.1 < X1 + X4 < X5 is satisfied. The flavored water in an embodiment of the present invention does not contain a component as a sweetener other than (a) a high-intensity sweetener in an amount corresponding to a sweetness intensity X1 and (d) a low-intensity sweetener in an amount corresponding to a sweetness intensity X4. Note that, when a fruit juice and/or an extract are/is contained in the flavored water, any sweetener contained in the fruit juice and/or extract is also encompassed in (d) .

In an embodiment of the present invention, the low-intensity sweetener contains a sweetener selected from hexose, pentose, tetrose, a polysaccharide having a terminal sugar of aldose or ketose, sugar alcohol, and a combination thereof. In other embodiments of the present invention, the low-intensity sweetener contains a sweetener selected from glucose, sucrose, fructose, maltose, an oligosaccharide, a high-fructose corn syrup, lactose, psicose, allose, tagatose, xylose, ribose, and a combination thereof. In still other embodiment of the present invention, the low-intensity sweetener contains a sweetener selected from glucose, sucrose, fructose, and a combination thereof.

The X4 in the "sweetness intensity X4" may be 0 to 0.5, 0 to 1.0, 0 to 1.5, 0 to 2.0, 0 to 2.5, 0 to 3.0, 0 to 3.5, 0 to 4.0, 0 to 4.5, 0 to 5.0, 0 to 5.5, 0 to 6.0, 0 to 6.5, 0 to 7.0, 0 to 7.5, 0 to 8.0, 0 to 8.25, 0 to 8.5, 0 to 8.75, 0 to 9.0, 0 to 9.25, 0 to 9.5, 0 to 9.75, 0 to 10.0, 0.05 to 0.5, 0.05 to 1.0, 0.05 to 1.5, 0.05 to 2.0, 0.05 to 2.5, 0.05 to 3.0, 0.05 to 3.5, 0.05 to 4.0, 0.05 to 4.5, 0.05 to 5.0, 0.05 to 5.5, 0.05 to 6.0, 0.05 to 6.5, 0.05 to 7.0, 0.05 to 7.5, 0.05 to 8.0, 0.05 to 8.25, 0.05 to 8.5, 0.05 to 8.75, 0.05 to 9.0, 0.05 to 9.25, 0.05 to 9.5, 0.05 to 9.75, 0.05 to 10.0, 0.1 to 0.5, 0.1 to 1.0, 0.1 to 1.5, 0.1 to 2.0, 0.1 to 2.5, 0.1 to 3.0, 0.1 to 3.5, 0.1 to 4.0, 0.1 to 4.5, 0.1 to 5.0, 0.1 to 5.5, 0.1 to 6.0, 0.1 to 6.5, 0.1 to 7.0, 0.1 to 7.5, 0.1 to 8.0, 0.1 to 8.25, 0.1 to 8.5, 0.1 to 8.75, 0.1 to 9.0, 0.1 to 9.25, 0.1 to 9.5, 0.1 to 9.75, 0.1 to 10.0, 0.5 to 0.5, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 0.5 to 6.0, 0.5 to 6.5, 0.5 to 7.0, 0.5 to 7.5, 0.5 to 8.0, 0.5 to 8.25, 0.5 to 8.5, 0.5 to 8.75, 0.5 to 9.0, 0.5 to 9.25, 0.5 to 9.5, 0.5 to 9.75, 0.5 to 10.0, 1.0 to 0.5, 1.0 to 1.0, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.0 to 6.0, 1.0 to 6.5, 1.0 to 7.0, 1.0 to 7.5, 1.0 to 8.0, 1.0 to 8.25, 1.0 to 8.5, 1.0 to 8.75, 1.0 to 9.0, 1.0 to 9.25, 1.0 to 9.5, 1.0 to 9.75, 1.0 to 10.0, 1.5 to 0.5, 1.5 to 1.0, 1.5 to 1.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 1.5 to 6.0, 1.5 to 6.5, 1.5 to 7.0, 1.5 to 7.5, 1.5 to 8.0, 1.5 to 8.25, 1.5 to 8.5, 1.5 to 8.75, 1.5 to 9.0, 1.5 to 9.25, 1.5 to 9.5, 1.5 to 9.75, 1.5 to 10.0, 2.0 to 0.5, 2.0 to 1.0, 2.0 to 1.5, 2.0 to 2.0, 2.0 to 2.5, 2.0 to 3.0, 2.0 to 3.5, 2.0 to 4.0, 2.0 to 4.5, 2.0 to 5.0, 2.0 to 5.5, 2.0 to 6.0, 2.0 to 6.5, 2.0 to 7.0, 2.0 to 7.5, 2.0 to 8.0, 2.0 to 8.25, 2.0 to 8.5, 2.0 to 8.75, 2.0 to 9.0, 2.0 to 9.25, 2.0 to 9.5, 2.0 to 9.75, 2.0 to 10.0, 2.5 to 0.5, 2.5 to 1.0, 2.5 to 1.5, 2.5 to 2.0, 2.5 to 2.5, 2.5 to 3.0, 2.5 to 3.5, 2.5 to 4.0, 2.5 to 4.5, 2.5 to 5.0, 2.5 to 5.5, 2.5 to 6.0, 2.5 to 6.5, 2.5 to 7.0, 2.5 to 7.5, 2.5 to 8.0, 2.5 to 8.25, 2.5 to 8.5, 2.5 to 8.75, 2.5 to 9.0, 2.5 to 9.25, 2.5 to 9.5, 2.5 to 9.752.5 to 10.0, 0.1 to 5.9, 3.0 to 3.5, 3.0 to 4.0, 3.0 to 4.5, 3.0 to 5.0, or 3.0 to 5.5.

The X4 may also be 0 to 10.5, 0 to 11.0, 0 to 11.5, 0 to 12.0, 0 to 12.5, 0 to 13.0, 0 to 13.5, 0 to 14.0, 0 to 14.5, 0 to 15.0, 0.05 to 10.5, 0.05 to 11.0, 0.05 to 11.5, 0.05 to 12.0, 0.05 to 12.5, 0.05 to 13.0, 0.05 to 13.5, 0.05 to 14.0, 0.05 to 14.5, 0.05 to 15.0, 0.1 to 10.5, 0.1 to 11.0, 0.1 to 11.5, 0.1 to 12.0, 0.1 to 12.5, 0.1 to 13.0, 0.1 to 13.5, 0.1 to 14.0, 0.1 to 14.5, 0.1 to 15.0, 0.5 to 10.5, 0.5 to 11.0, 0.5 to 11.5, 0.5 to 12.0, 0.5 to 12.5, 0.5 to 13.0, 0.5 to 13.5, 0.5 to 14.0, 0.5 to 14.5, 0.5 to 15.0, 1.0 to 10.5, 1.0 to 11.0, 1.0 to 11.5, 1.0 to 12.0, 1.0 to 12.5, 1.0 to 13.0, 1.0 to 13.5, 1.0 to 14.0, 1.0 to 14.5, 1.0 to 15.0, 1.5 to 10.5, 1.5 to 11.0, 1.5 to 11.5, 1.5 to 12.0, 1.5 to 12.5, 1.5 to 13.0, 1.5 to 13.5, 1.5 to 14.0, 1.5 to 14.5, 1.5 to 15.0, 2.0 to 10.5, 2.0 to 11.0, 2.0 to 11.5, 2.0 to 12.0, 2.0 to 12.5, 2.0 to 13.0, 2.0 to 13.5, 2.0 to 14.0, 2.0 to 14.5, 2.0 to 15.0, 2.5 to 10.5, 2.5 to 11.0, 2.5 to 11.5, 2.5 to 12.0, 2.5 to 12.5, 2.5 to 13.0, 2.5 to 13.5, 2.5 to 14.0, 2.5 to 14.5 or 2.5 to 15.0.

In an embodiment of the present invention, the X4 is preferably 0.05 to 6.0, more preferably 0.05 to 5.0, and still more preferably 0.1 to 4.0.

The amount corresponding to a sweet intensity X4 of a low-intensity sweetener refers to an amount (concentration) which provides a sweetness of a sweetness intensity X4 under the conditions when the low-intensity sweetener is dissolved in water having the same volume as the flavored water of the present invention at 20°C.

The X5 is not particularly limited as long as it is greater than X1 + X4 and may be 4.0 to 20, 4.0 to 15, 4.0 to 12.5, 4.0 to 10, 4.5 to 20, 4.5 to 15, 4.5 to 12.5, 4.5 to 10, 5.0 to 20, 5.0 to 15, 5.0 to 12.5, 5.0 to 10, 5.5 to 20, 5.5 to 15, 5.5 to 12.5, 5.5 to 10, 6.0 to 20, 6.0 to 15, 6.0 to 12.5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8. 0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15 or 10.5 to 12.5. The X5 may also be 4.0 to 18, 4.0 to 16, 4. 0 to 15.5, 4.0 to 14, 4.5 to 18, 4.5 to 16, 4.5 to 15.5, 4.5 to 14, 5.0 to 18, 5.0 to 16, 5.0 to 15.5, 5.0 to 14, 5.5 to 18, 5.5 to 16, 5.5 to 15.5, 5.5 to 14, 6.0 to 18, 6.0 to 16, 6.0 to 15.5, 6.0 to 14, 6.5 to 18, 6.5 to 16, 6.5 to 15.5, 6.5 to 14, 7.0 to 18, 7.0 to 16, 7.0 to 15.5, 7. 0 to 14, 7.5 to 18, 7.5 to 16, 7.5 to 15.5, 7.5 to 14, 7.5 to 9, 7.5 to 8, 8.0 to 18, 8.0 to 18, 8.0 to 16, 8.0 to 15.5, 8.0 to 14, 8.5 to 18, 8.5 to 16, 8.5 to 15.5, 8.5 to 14, 9.0 to 18, 9.0 to 16, 9.0 to 15.5, 9.0 to 14, 9.5 to 18, 9.5 to 16, 9.5 to 15.5, 9.5 to 14, 10.0 to 18, 10.0 to 16, 10.0 to 15.5, 10.5 to 18, 10.5 to 16 or 10.5 to 15.5.

### (Other components)

The flavored water of the present invention can suitably contain an antioxidant (sodium erythorbate or the like), an emulsifier (sucrose esters of fatty acids, sorbitan esters of fatty acids, polyglycerin esters of fatty acids or the like), an acidulant (phosphoric acid, citric acid, malic acid or the like), and a flavor, as long as the effects of the present invention are not affected.

### [Exemplary embodiments of the flavored water of B1-th embodiment of the present invention]

In an embodiment of the present invention, flavored water is provided comprising:
(a) a high-intensity sweetener in an amount corresponding to a sweetness intensity X1,
(b) an amino acid or a derivative or a salt thereof in an amount less than a taste recognition threshold, and
(c) less than 50 mg/100 ml, 0.1 to 40 mg/100 ml, 1 to 30 mg/100 ml or 5 to 25 mg/100 ml of sodium,

wherein the flavored water has a sweetness of a sweetness intensity X2 exhibited by the components (a) to (c) and 0.1 < X1 < X2 is satisfied,
wherein the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof,
X1 is 0.5 to 5.5, preferably 1.0 to 5.5, and more preferably 2.0 to 5.0, and
the amino acid or a derivative or a salt thereof comprises an amino acid selected from DL-alanine, L-serine, glycine, L-arginine, L-glutamic acid, L-valine, and L-glutamine. In the present embodiment, an amount of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm.

In an embodiment of the present invention, flavored water is provided comprising:
(a) a high-intensity sweetener in an amount corresponding to a sweetness intensity X1,
(b) an amino acid or a derivative or a salt thereof in an amount less than a taste recognition threshold, and
(c) less than 50 mg/100 ml, 0.1 to 40 mg/100 ml, 1 to 30 mg/100 ml or 5 to 25 mg/100 ml of sodium,

wherein the flavored water has a sweetness of a sweetness intensity X2 exhibited by the components (a) to (c) and 0.1 < X1 < X2 is satisfied,
wherein the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof,
X1 is 0.5 to 10.0, preferably 1.5 to 9.0, and more preferably 2.0 to 8.0, and
the amino acid or a derivative or a salt thereof comprises an amino acid selected from DL-alanine, L-serine, glycine, L-arginine, L-glutamic acid, L-valine, and L-glutamine. In the present embodiment, an amount of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm.

In an embodiment of the present invention, flavored water is provided comprising:
(a) a high-intensity sweetener in an amount corresponding to a sweetness intensity X1,
(b) an amino acid or a derivative or a salt thereof in an amount less than a taste recognition threshold,
(c) less than 50 mg/100 ml, 0.1 to 40 mg/100 ml, 1 to 30 mg/100 ml or 5 to 25 mg/100 ml of sodium, and
(d) a low-intensity sweetener in an amount corresponding to a sweetness intensity X4,

wherein the flavored water has a sweetness of a sweetness intensity X5 exhibited by the components (a) to (d) and 0.1 < X1 + X4 < X5 is satisfied,
wherein the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof,
X1 is 0.5 to 5.5, preferably 1.0 to 5.5, and more preferably 2.0 to 5.0,
the amino acid or a derivative or a salt thereof comprises an amino acid selected from DL-alanine, L-serine, glycine, L-arginine, L-glutamic acid, L-valine, and L-glutamine,
the low-intensity sweetener comprises a sweetener selected from glucose, sucrose, fructose, maltose, an oligosaccharide, a high-fructose corn syrup, lactose, psicose, allose, tagatose, xylose, ribose, and a combination thereof, and
X4 is 0.05 to 6.0, preferably 0.05 to 5.0, and more preferably 0.1 to 4.0. In the present embodiment, an amount of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm.

In an embodiment of the present invention, flavored water is provided comprising:
(a) a high-intensity sweetener in an amount corresponding to a sweetness intensity X1,
(b) an amino acid or a derivative or a salt thereof in an amount less than a taste recognition threshold,
(c) less than 50 mg/100 ml, 0.1 to 40 mg/100 ml, 1 to 30 mg/100 ml or 5 to 25 mg/100 ml of sodium, and
(d) a low-intensity sweetener in an amount corresponding to a sweetness intensity X4,

wherein the flavored water has a sweetness of a sweetness intensity X5 exhibited by the components (a) to (d) and 0.1 < X1 + X4 < X5 is satisfied,
wherein the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof,
X1 is 0.5 to 5.5, preferably 1.0 to 5.5, and more preferably 2.0 to 5.0,
the amino acid or a derivative or a salt thereof comprises an amino acid selected from less than 20 mM of DL-alanine, less than 40 mM of L-serine, less than 50 mM of glycine, less than 1 mM of L-arginine, less than 0.25 mM of L-glutamic acid, less than 40 mM of L-valine, less than 5 mM of L-glutamine, less than 20 mM of L-leucine, less than 40 mM of L-threonine, less than 40 mM of L-proline, less than 10 mM of L-asparagine, and less than 0.4 mM of L-lysine hydrochloride,
the low-intensity sweetener comprises a sweetener selected from glucose, sucrose, fructose, maltose, an oligosaccharide, a high-fructose corn syrup, lactose, psicose, allose, tagatose, xylose, ribose, and a combination thereof, and
X4 is 0.05 to 6.0, preferably 0.05 to 5.0, and more preferably 0.1 to 4.0. In the present embodiment, an amount of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm.

In an embodiment of the present invention, flavored water is provided comprising:
(a) a high-intensity sweetener in an amount corresponding to a sweetness intensity X1,
(b) an amino acid or a derivative or a salt thereof in an amount less than a taste recognition threshold,
(c) less than 50 mg/100 ml, 0.1 to 40 mg/100 ml, 1 to 30 mg/100 ml or 5 to 25 mg/100 ml of sodium, and
(d) a low-intensity sweetener in an amount corresponding to a sweetness intensity X4,

wherein the flavored water has a sweetness of a sweetness intensity X5 exhibited by the components (a) to (d) and 0.1 < X1 + X4 < X5 is satisfied,
wherein the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof,
X1 is 0.5 to 5.5, preferably 1.0 to 5.5, and more preferably 2.0 to 5.0,
the amino acid or a derivative or a salt thereof comprises an amino acid selected from arginine, lysine, histidine, phenylalanine, tyrosine, leucine, isoleucine, methionine, valine, alanine, glycine, proline, glutamic acid, serine, threonine, aspartic acid, and tryptophan,
the low-intensity sweetener comprises a sweetener selected from glucose, sucrose, fructose, and a combination thereof,
the flavored water comprises a fruit juice selected from orange, tangerine, lemon, grapefruit, lime, pineapple, strawberry, raspberry, blueberry, blackcurrant, cranberry, blueberry, guava, banana, acerola, papaya, passion fruit, mango, apple, grape, peach, ume, pear, apricot, plum, melon, kiwifruit, quince, and a combination thereof, and/or an extract thereof, and
X4 is 0.05 to 6.0, preferably 0.05 to 5.0, and more preferably 0.1 to 4.0. In the present embodiment, an amount of the high-intensity sweetener may be about 20 to about 600 ppm, about 30 to about 550 ppm, or about 55 to about 490 ppm.

In an embodiment of the present invention, flavored water is provided comprising:
(a) a high-intensity sweetener in an amount corresponding to a sweetness intensity X1,
(b) one or more amino acids selected from alanine, serine, and glycine,
(c) 1 to 25 mg/100 ml of sodium, and
(d) a low-intensity sweetener in an amount corresponding to a sweetness intensity X4,

wherein the flavored water has a sweetness of a sweetness intensity X5 exhibited by the components (a) to (d) and 0.1 < X1 + X4 < X5 is satisfied,
an energy is 50 Kcal/100 ml or less, and X1 + X4 is 6 or more. In the present embodiment, an amount of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm.

### 1-2. Sparkling beverage with an enhanced sweetness

### <<C1-th embodiments

The present invention provides, as the C1-th embodiment, the following sparkling beverage (hereinafter also referred to as "the sparkling beverage C of the present invention").

A sparkling beverage comprising:
(a) a high-intensity sweetener in an amount corresponding to a sweetness intensity Xa, and
(b) an amino acid or a derivative or a salt thereof in an amount less than a taste recognition threshold,
   wherein the sparkling beverage has a sweetness of a sweetness intensity Xb exhibited by the components (a) and (b) and 0.1 < Xa < Xb is satisfied.

In other words, in the sparkling beverage of the C1-th embodiment of the present invention, the component having a sweetness is (a) a high-intensity sweetener in an amount corresponding to a sweetness intensity Xa, and the sweetness of the sparkling beverage of the present invention is supposed to be a sweetness intensity Xa when calculated. However, the presence of (b) an amino acid or a derivative or a salt thereof in an amount less than a taste recognition threshold, in the sparkling beverage even in a low concentration enhances the sweetness of (a) a high-intensity sweetener in an amount corresponding to a sweetness intensity Xa, to a sweetness intensity Xb (0.1 < Xa < Xb is satisfied herein). The present invention means to possibly include, in addition to these components (a) and (b), further a sweetener other than (a); and optional components, for example, other components such as an acidulant, a flavor, a vitamin, a coloring, an antioxidant, an emulsifier, a preservative, a seasoning agent, an extract, a pH adjuster, a quality stabilizer, a fruit juice, a plant extract, a milk content, and caffeine. The sparkling beverage in an embodiment of the present invention does not contain a substance having a sweetness, as a sweetener, other than the component (a).

Furthermore, the sparkling beverage in a preferable embodiment of the present invention exerts the effect of improving a taste, other than enhancing a sweetness. For example, in the sparkling beverage in an embodiment of the present invention, at least one of "total sweetness", "reduced aftertaste of sweetness", "body, thickness", "flavor intensity", "reduced unpleasant tastes (bitterness, astringency, and the like)", "saltiness" and "carbonic acid feeling" is preferably improved.

### (Sparkling beverage)

In the present invention, the "sparkling beverage" is a beverage from which bubbles are generated, and encompasses, for example, a beverage which, when poured into a container, allows a bubble layer to be formed on a liquid surface of the beverage. Examples of the sparkling beverage of the present invention include a carbonated beverage. The carbonated beverage is a beverage containing a carbon dioxide gas, and such a carbon dioxide gas encompasses a carbon dioxide gas separately injected into the beverage, and a carbon dioxide gas generated by fermentation of some of raw materials. The carbonated beverage is not particularly limited, and examples thereof include soft beverages, non-alcoholic beverages, and alcoholic beverages. Specific examples include sparkly beverages, colas, diet colas, ginger ales, ciders, fruit juice flavor carbonated beverages, and carbonated water to which fruit juice flavors are imparted, but not limited thereto.

The gas pressure of the sparkling beverage of the present invention is not particularly limited, and can be 2.2 to 4.0 kgf/cm², 2.2 to 3.5 kgf/cm², 2.2 to 3.3 kgf/cm², 2.2 to 3.2 kgf/cm², 2.3 to 4.0 kgf/cm², 2.3 to 3.5 kgf/cm², 2.3 to 3.2 kgf/cm², 3.0 to 4.0 kgf/cm², or 3.0 to 3.5 kgf/cm². The content of gas in the sparkling beverage can be determined by the gas pressure. As used herein, the "gas pressure" refers to, unless particularly noted, the gas pressure of a carbon dioxide gas in the sparkling beverage in a container. The gas pressure can be measured by fixing the beverage at a liquid temperature of 20°C, to a gas internal pressure meter, once draining a carbon dioxide gas in a headspace by atmospheric relief with opening of a stopper cock of the gas internal pressure meter and then closing again the stopper cock, and reading a value at which an indicator reaches a certain position during shaking and moving of the gas internal pressure meter. The gas pressure of the sparkling beverage is herein measured with the above method, unless particularly described.

The sparkling beverage of the present invention may contain an alcohol. The alcoholic beverage refers to an alcohol-containing beverage, and the alcohol as mentioned herein means ethyl alcohol (ethanol), unless particularly noted. The alcoholic beverage according to the present invention is not limited in terms of type thereof as long as it contains any alcohol. The alcoholic beverage may be a beverage having an alcohol content of 0.05 to 40 v/v%, such as a beer, a sparkling liquor, *chuhai,* highball, or a cocktail, or may be a beverage having an alcohol content of less than 0.05 v/v%, such as a non-alcoholic beer, a *chuhai* taste beverage, or a soft beverage. The sparkling beverage of the present invention preferably has an alcohol content of less than 0.05 v/v%, further preferably 0.00 v/v%. As used herein, the alcohol content is expressed by a percentage based on volume/volume (v/v%). The alcohol content in the beverage can be measured by any known method, and can be measured with, for example, an oscillating densitometer.

The flavor of the sparkling beverage of the present invention is not particularly limited, and may be adjusted to various flavors. For example, the sparkling beverage of the present invention may be an orange-flavored, lemon-flavored, lime-flavored, grape-flavored, ginger ale-flavored, energy drink-flavored, blackcurrant-flavored or cola-flavored beverage. The flavor of the sparkling beverage of the present invention can be adjusted by adding a component which is approved as a food additive such as a fruit juice, an acidulant, a flavor, a plant extract, a milk content, and other flavor, or which, even if not approved, has been eaten since early times and is commonly recognized to be safe. In an embodiment of the present invention, the sparkling beverage of the present invention is not a beer taste beverage.

The sparkling beverage of the present invention may be a jelly beverage.

The form of the sparkling beverage of the present invention is not limited, and may be, for example, a sparkling beverage form packed in a container, which is contained and packed in a container such as a may, a bottle or a PET bottle.

### [Sweetness intensity]

As used herein, the "sweetness intensity" means an intensity of sweetness of a substance. For example, when the sweetness intensity of sucrose per unit concentration Brix 1 is defined as a degree of sweetness of 1, a degree of sweetness of glucose is 0.6 to 0.7 (median value 0.65). A numerical value obtained by multiplying this degree of sweetness by a concentration Brix value of glucose is the sweetness intensity of glucose. Thus, when a concentration of glucose is Brix 1.5, the sweetness intensity of glucose is 0.65 x 1.5 = 0.975. The degrees of sweetness of common sweeteners are as shown in Table 1 described with respect to the A1-th embodiment.

The sparkling beverage of the present invention contains, as described above, a high-intensity sweetener in an amount corresponding to a sweetness intensity Xa and has a sweetness of a sweetness intensity Xb exhibited by the components (a) and (b) and 0.1 < Xa < Xb is satisfied.

The Xa in the "sweetness intensity Xa" may be more than 0.1 and 0.5 or less, more than 0.1 and 1.0 or less, more than 0.1 and 1.5 or less, more than 0.1 and 2.0 or less, more than 0.1 and 2.5 or less, more than 0.1 and 3.0 or less, more than 0.1 and 3.5 or less, more than 0.1 and 4.0 or less, more than 0.1 and 4.5 or less, more than 0.1 and 5.0 or less, more than 0.1 and 5.5 or less, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 2.0 to 2.5, 2.0 to 3.0, 2.0 to 3.5, 2.0 to 4.0, 2.0 to 4.5, 2.0 to 5.0, 2.0 to 5.5, 2.5 to 3.0, 2.5 to 3.5, 2.5 to 4.0, 2.5 to 4.5, 2.5 to 5.0, 2.5 to 5.5, 3.0 to 3.5, 3.0 to 4.0, 3.0 to 4.5, 3.0 to 5.0, 3.0 to 5.5, 2.0 to 6.5, 2.0 to 7.0, 2.0 to 7.5, 2.0 to 6.0, 2.5 to 7.0, 2.5 to 7.5, 2.5 to 6.0, 2.5 to 6.5, 3.0 to 6.0, 3.0 to 6.5, 3.0 to 7.0, 3.0 to 7.5, 3.0 to 8.0, 3.0 to 8.5, 3.0 to 9.0, 3.0 to 9.5, 3.5 to 7.0, 3.5 to 7.5, 3.5 to 8.0, 4.5 to 8.5, 3.5 to 9.0, 3.5 to 9.5, 4.0 to 7.5, 4.0 to 8.0, 4.0 to 8.5, 4.0 to 9.0, 4.0 to 9.5, 3.5 to 8.5, 3.5 to 10.0, 3.5 to 10.5, 3.5 to 11.0, 3.5 to 11.5, or 4.0 to 11.5.

The Xa may also be more than 0.1 and 6.0 or less, more than 0.1 and 6.5 or less, more than 0.1 and 7.0 or less, more than 0.1 and 7.5 or less, more than 0.1 and 8.0 or less, more than 0.1 and 8.5 or less, more than 0.1 and 9.0 or less, more than 0.1 and 9.5 or less, more than 0.1 and 10.0 or less, more than 0.1 and 10.5 or less, more than 0.1 and 11.0 or less, more than 0.1 and 11.5 or less, more than 0.1 and 12.0 or less, more than 0.1 and 13.0 or less, more than 0.1 and 14.0 or less, more than 0.1 and 15.0 or less, more than 0.1 and 16.0 or less, more than 0.1 and 17.0 or less, more than 0.1 and 18.0 or less, 0.5 to 6.0, 0.5 to 6.5, 0.5 to 7.0, 0.5 to 7.5, 0.5 to 8.0, 0.5 to 8.5, 0.5 to 9.0, 0.5 to 9.5, 0.5 to 10.0, 0.5 to 10.5, 0.5 to 11.0, 0.5 to 11.5, 0.5 to 12.0, 0.5 to 13.0, 0.5 to 14.0, 0.5 to 15.0, 0.5 to 16.0, 0.5 to 17.0, 0.5 to 18.0, 1.0 to 6.0, 1.0 to 6.5, 1.0 to 7.0, 1.0 to 7.5, 1.0 to 8.0, 1.0 to 8.5, 1.0 to 9.0, 1.0 to 9.5, 1.0 to 10.0, 1.0 to 10.5, 1.0 to 11.0, 1.0 to 11.5, 1.0 to 12.0, 1.0 to 13.0, 1.0 to 14.0, 1.0 to 15.0, 1.0 to 16.0, 1.0 to 17.0, 1.0 to 18.0, 1.5 to 6.0, 1.5 to 6.5, 1.5 to 7.0, 1.5 to 7.5, 1.5 to 8.0, 1.5 to 8.5, 1.5 to 9.0, 1.5 to 9.5, 1.5 to 10.0, 1.5 to 10.5, 1.5 to 11.0, 1.5 to 11.5, 1.5 to 12.0, 1.5 to 13.0, 1.5 to 14.0, 1.5 to 15.0, 1.5 to 16.0, 1.5 to 17.0, 1.5 to 18.0, 2.0 to 8.0, 2.0 to 8.5, 2.0 to 9.0, 2.0 to 9.5, 2.0 to 10.0, 2.0 to 10.5, 2.0 to 11.0, 2.0 to 11.5, 2.0 to 12.0, 2.0 to 13.0, 2.0 to 14.0, 2.0 to 15.0, 2.0 to 16.0, 2.0 to 17.0, 2.0 to 18.0, 2.5 to 8.0, 2.5 to 8.5, 2.5 to 9.0, 2.5 to 9.5, 2.5 to 10.0, 2.5 to 10.5, 2.5 to 11.0, 2.5 to 11.5, 2.5 to 12.0, 2.5 to 13.0, 2.5 to 14.0, 2.5 to 15.0, 2.5 to 16.0, 2.5 to 17.0, 2.5 to 18.0, 3.0 to 10.0, 3.0 to 10.5, 3.0 to 11.0, 3.0 to 11.5, 3.0 to 12.0, 3.0 to 13.0, 3.0 to 14.0, 3.0 to 15.0, 3.0 to 16.0, 3.0 to 17.0, 3.0 to 18.0, 3.5 to 4.0, 3.5 to 4.5, 3.5 to 5.0, 3.5 to 5.5, 3.5 to 6.0, 3.5 to 6.5, 3.5 to 12.0, 3.5 to 13.0, 3.5 to 14.0, 3.5 to 15.0, 3.5 to 16.0, 3.5 to 17.0, 3.5 to 18.0, 4.0 to 4.5, 4.0 to 5.0, 4.0 to 5.5, 4.0 to 6.0, 4.0 to 6.5, 4.0 to 7.0, 4.0 to 10.0, 4.0 to 10.5, 4.0 to 11.0, 4.0 to 12.0, 4.0 to 13.0, 4.0 to 14.0, 4.0 to 15.0, 4.0 to 16.0, 4.0 to 17.0, or 4.0 to 18.0.

In an embodiment of the present invention, the Xa is preferably 0.5 to 10.0, more preferably 1.5 to 9.0, and still more preferably 2.0 to 8.0. In another embodiment of the present invention, the Xa is preferably 0.5 to 5.5, more preferably 1.0 to 5.5, and still more preferably 2.0 to 5.0.

The amount corresponding to a sweetness intensity Xa of a high-intensity sweetener refers to an amount which provides a sweetness of a sweetness intensity Xa under the conditions when the high-intensity sweetener is dissolved in water having the same volume as the sparkling beverage of the present invention at 20°C.

Further, the amount of a high-intensity sweetener may be Pa ppm and Pa ppm herein refers to an amount corresponding to a sweetness intensity Xa. The Pa herein may be a value of about 20 to about 800, about 25 to about 800, about 30 to about 800, about 35 to about 800, about 40 to about 800, about 45 to about 800, about 50 to about 800, about 55 to about 800, about 20 to about 750, about 25 to about 750, about 30 to about 750, about 35 to about 750, about 40 to about 750, about 45 to about 750, about 50 to about 750, about 55 to about 750, about 20 to about 700, about 25 to about 700, about 30 to about 700, about 35 to about 700, about 40 to about 700, about 45 to about 700, about 50 to about 700, about 55 to about 700, about 20 to about 650, about 25 to about 650, about 30 to about 650, about 35 to about 650, about 40 to about 650, about 45 to about 650, about 50 to about 650, about 55 to about 650, about 20 to about 600, about 25 to about 600, about 30 to about 600, about 35 to about 600, about 40 to about 600, about 45 to about 600, about 50 to about 600, about 55 to about 600, about 20 to about 550, about 25 to about 550, about 30 to about 550, about 35 to about 550, about 40 to about 550, about 45 to about 550, about 50 to about 550, about 55 to about 550, about 20 to about 540, about 25 to about 540, about 30 to about 540, about 35 to about 540, about 40 to about 540, about 45 to about 540, about 50 to about 540, about 55 to about 540, about 20 to about 530, about 25 to about 530, about 30 to about 530, about 35 to about 530, about 40 to about 530, about 45 to about 530, about 50 to about 530, about 55 to about 530, about 20 to about 520, about 25 to about 520, about 30 to about 520, about 35 to about 520, about 40 to about 520, about 45 to about 520, about 50 to about 520, about 55 to about 520, about 20 to about 510, about 25 to about 510, about 30 to about 510, about 35 to about 510, about 40 to about 510, about 45 to about 510, about 50 to about 510, about 55 to about 510, about 20 to about 505, about 25 to about 505, about 30 to about 505, about 35 to about 505, about 40 to about 505, about 45 to about 505, about 50 to about 505, about 55 to about 505, about 20 to about 500, about 25 to about 500, about 30 to about 500, about 35 to about 500, about 40 to about 500, about 45 to about 500, about 50 to about 500, about 55 to about 500, about 20 to about 495, about 25 to about 495, about 30 to about 495, about 35 to about 495, about 40 to about 495, about 45 to about 495, about 50 to about 495, about 55 to about 495, about 20 to about 490, about 25 to about 490, about 30 to about 490, about 35 to about 490, about 40 to about 490, about 45 to about 490, about 50 to about 490, or about 55 to about 490.

The Pa may also be a value of 1 to 1500, 1 to 1200, 5 to 1200, 1 to 1000, 5 to 1000, 10 to 1000, 1 to 900, 5 to 900, 10 to 900, 15 to 900, 20 to 900, 25 to 900, 30 to 900, 35 to 900, 40 to 900, 45 to 900, 50 to 900, 55 to 900, 1 to 800, 5 to 800, 10 to 800, 15 to 800, 20 to 800, 25 to 800, 30 to 800, 35 to 800, 40 to 800, 45 to 800, 50 to 800, 55 to 800, 1 to 700, 5 to 700, 10 to 700, 15 to 700, 20 to 700, 25 to 700, 30 to 700, 35 to 700, 40 to 700, 45 to 700, 50 to 700, 55 to 700, 1 to 600, 5 to 600, 10 to 600, 15 to 600, 20 to 600, 25 to 600, 30 to 600, 35 to 600, 40 to 600, 45 to 600, 50 to 600, 55 to 600, 1 to 550, 1 to 540, 1 to 530, 1 to 520, 1 to 510, 1 to 505, 1 to 500, 1 to 495, 1 to 490, 5 to 550, 5 to 540, 5 to 530, 5 to 520, 5 to 510, 5 to 505, 5 to 500, 5 to 495, 5 to 490, 10 to 550, 10 to 540, 10 to 530, 10 to 520, 10 to 510, 10 to 505, 10 to 500, 10 to 495, 10 to 490, 15 to 550, 15 to 550, 15 to 530, 15 to 520, 15 to 510, 15 to 505, 15 to 500, 15 to 495, or 15 to 490.

The Pa may also be a value of about 20 to about 200, about 100 to about 500, about 100 to about 450, about 100 to about 400, about 100 to about 350, about 100 to about 300, about 100 to about 250, about 100 to about 200, about 150 to about 500, about 150 to about 450, about 150 to about 400, about 150 to about 350, about 150 to about 300, about 150 to about 250, about 150 to about 200, about 200 to about 500, about 200 to about 450, about 200 to about 400, about 200 to about 350, about 200 to about 300, or about 200 to about 250.

The Xb is not particularly limited as long as it is greater than Xa and may be 0.5 to 6.0, 0.5 to 6.5, 0.5 to 7.0, 0.5 to 7.5, 0.5 to 8.0, 0.5 to 8.5, 0.5 to 9.0, 0.5 to 9.5, 0.5 to 10.0, 0.5 to 10.5, 0.5 to 11.0, 0.5 to 11.5, 0.5 to 12.0, 0.5 to 13.0, 0.5 to 14.0, 0.5 to 15.0, 0.5 to 16.0, 0.5 to 17.0, 0.5 to 18.0, 1.0 to 6.0, 1.0 to 6.5, 1.0 to 7.0, 1.0 to 7.5, 1.0 to 8.0, 1.0 to 8.5, 1.0 to 9.0, 1.0 to 9.5, 1.0 to 10.0, 1.0 to 10.5, 1.0 to 11.0, 1.0 to 11.5, 1.0 to 12.0, 1.0 to 13.0, 1.0 to 14.0, 1.0 to 15.0, 1.0 to 16.0, 1.0 to 17.0, 1.0 to 18.0, 1.5 to 6.0, 1.5 to 6.5, 1.5 to 7.0, 1.5 to 7.5, 1.5 to 8.0, 1.5 to 8.5, 1.5 to 9.0, 1.5 to 9.5, 1.5 to 10.0, 1.5 to 10.5, 1.5 to 11.0, 1.5 to 11.5, 1.5 to 12.0, 1.5 to 13.0, 1.5 to 14.0, 1.5 to 15.0, 1.5 to 16.0, 1.5 to 17.0, 1.5 to 18.0, 2.0 to 8.0, 2.0 to 8.5, 2.0 to 9.0, 2.0 to 9.5, 2.0 to 10.0, 2.0 to 10.5, 2.0 to 11.0, 2.0 to 11.5, 2.0 to 12.0, 2.0 to 13.0, 2.0 to 14.0, 2.0 to 15.0, 2.0 to 16.0, 2.0 to 17.0, 2.0 to 18.0, 2.5 to 8.0, 2.5 to 8.5, 2.5 to 9.0, 2.5 to 9.5, 2.5 to 10.0, 2.5 to 10.5, 2.5 to 11.0, 2.5 to 11.5, 2.5 to 12.0, 2.5 to 13.0, 2.5 to 14.0, 2.5 to 15.0, 2.5 to 16.0, 2.5 to 17.0, 2.5 to 18.0, 3.0 to 10.0, 3.0 to 10.5, 3.0 to 11.0, 3.0 to 11.5, 3.0 to 12.0, 3.0 to 13.0, 3.0 to 14.0, 3.0 to 15.0, 3.0 to 16.0, 3.0 to 17.0, 3.0 to 18.0, 3.5 to 4.0, 3.5 to 4.5, 3.5 to 5.0, 3.5 to 5.5, 3.5 to 6.0, 3.5 to 6.5, 3.5 to 12.0, 3.5 to 13.0, 3.5 to 14.0, 3.5 to 15.0, 3.5 to 16.0, 3.5 to 17.0, 3.5 to 18.0, 4.0 to 20, 4.0 to 15, 4.0 to 12.5, 4.0 to 10, 4.5 to 20, 4.5 to 15, 4.5 to 12.5, 4.5 to 10, 5.0 to 20, 5.0 to 15, 5.0 to 12.5, 5.0 to 10, 5.5 to 20, 5.5 to 15, 5.5 to 12.5, 5.5 to 10, 6.0 to 20, 6.0 to 15, 6.0 to 12.5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8.0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15, or 10.5 to 12.5. The Xb may also be 4.0 to 18, 4.0 to 16, 4.0 to 15.5, 4.0 to 14, 4.5 to 18, 4.5 to 16, 4.5 to 15.5, 4.5 to 14, 5.0 to 18, 5.0 to 16, 5.0 to 15.5, 5.0 to 14, 5.5 to 18, 5.5 to 16, 5.5 to 15.5, 5.5 to 14, 6.0 to 18, 6.0 to 16, 6.0 to 15.5, 6.0 to 14, 6.5 to 18, 6.5 to 16, 6.5 to 15.5, 6.5 to 14, 7.0 to 18, 7.0 to 16, 7.0 to 15.5, 7.0 to 14, 7.5 to 18, 7.5 to 16, 7.5 to 15.5, 7.5 to 14, 7.5 to 9, 7.5 to 8, 8.0 to 18, 8.0 to 18, 8.0 to 16, 8.0 to 15.5, 8.0 to 14, 8.5 to 18, 8.5 to 16, 8.5 to 15.5, 8.5 to 14, 9.0 to 18, 9.0 to 16, 9.0 to 15.5, 9.0 to 14, 9.5 to 18, 9.5 to 16, 9.5 to 15.5, 9.5 to 14, 10.0 to 18, 10.0 to 16, 10.0 to 15.5, 10.5 to 18, 10.5 to 16, or 10.5 to 15.5.

The sparkling beverage of the present invention has an enhanced sweetness as having been already mentioned. Whether or not the sweetness of the sparkling beverage of the present invention is enhanced can be evaluated by panelists who received sensory trainings. Further, for the sweetness intensity of the sparkling beverage of the present invention, standard sparkling beverages to be the sweetness standards are prepared with sucrose concentrations assigned as sweetness intensities 1, 2, 3, 4, 5, 6, 7, 8, 9, 10, 11, 12, 13, 14, and 15 and panelists compare the sweetness of the sparkling beverage of the present invention with the sweetnesses of these standard sparkling beverages thereby to measure the sweetness of the sparkling beverage of the present invention. Note that the standard sparkling beverages having a sweetness intensity of 1, 2, ... 15 are prepared by adding sucrose in such a way that a sucrose content is 1 g/100 g, 2 g/100 g, ... 15 g/100 g to the sparkling beverage to which sucrose is not added.

Furthermore, of the standard sparkling beverages having a lower sweetness than the sparkling beverage of the present invention in the above measurement, the standard sparkling beverage having the closest sweetness to that of the sparkling beverage of the present invention is selected and adjusted in such a way as to have the same sweetness as that of the sparkling beverage of the present invention by adding sucrose to the selected standard sparkling beverage, during which a sweetness intensity of the sparkling beverage of the present invention can also be measured from a sucrose content in the adjusted standard sparkling beverage.

Other examples of the method for measuring a sweetness of the sparkling beverage of the present invention include a sweetness intensity rating using Visual Analogue Scale (VAS method). For the VAS method, literatures in The journal of Japanese Society of Stomatognathic Function (2014) 20 pp. 115-129 ("Construction of a Screening Test for Gustatory Function in Four Basic Tastes" by Toyota et al.) and the like can be referred. Specifically, in the measurement of sweetness intensity by the VAS method, for example, evaluators define sweetness intensities as "not sweet at all" at the lower end and "nothing is sweeter than this" at the upper end and, using a piece of paper on which a vertical line indicating the intensities of sweetness on the straight line, assess a sweetness intensity sensed at that time by showing a position on the straight line.

The sweetness intensity of the sparkling beverage of the present invention is not particularly limited as long as it is acceptable as a sparkling beverage and may be, in terms of the degree of sweetness, for example, 4.0 to 20, 4.0 to 15, 4.0 to 12.5, 4.0 to 10, 4.5 to 20, 4.5 to 15, 4.5 to 12.5, 4.5 to 10, 5.0 to 20, 5.0 to 15, 5.0 to 12.5, 5.0 to 10, 5.5 to 20, 5.5 to 15, 5.5 to 12.5, 5.5 to 10, 6.0 to 20, 6.0 to 15, 6.0 to 12.5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8.0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15, or 10.5 to 12.5. The sweetness intensity may also be 4.0 to 18, 4.0 to 16, 4.0 to 15.5, 4.0 to 14, 4.5 to 18, 4.5 to 16, 4.5 to 15.5, 4.5 to 14, 5.0 to 18, 5.0 to 16, 5.0 to 15.5, 5.0 to 14, 5.5 to 18, 5.5 to 16, 5.5 to 15.5, 5.5 to 14, 6.0 to 18, 6.0 to 16, 6.0 to 15.5, 6.0 to 14, 6.5 to 18, 6.5 to 16, 6.5 to 15.5, 6.5 to 14, 7.0 to 18, 7.0 to 16, 7.0 to 15.5, 7.0 to 14, 7.5 to 18, 7.5 to 16, 7.5 to 15.5, 7.5 to 14, 7.5 to 9, 7.5 to 8, 8.0 to 18, 8.0 to 18, 8.0 to 16, 8.0 to 15.5, 8.0 to 14, 8.5 to 18, 8.5 to 16, 8.5 to 15.5, 8.5 to 14, 9.0 to 18, 9.0 to 16, 9.0 to 15.5, 9.0 to 14, 9.5 to 18, 9.5 to 16, 9.5 to 15.5, 9.5 to 14, 10.0 to 18, 10.0 to 16, 10.0 to 15.5, 10.5 to 18, 10.5 to 16, or 10.5 to 15.5. The sweetness intensity of the sparkling beverage is provided by the above components (a) and (b) and optional components.

An energy (total energy) of the sparkling beverage of the present invention may be, depending on an embodiment, 0 to 50 Kcal/100 ml, 0 to 45 Kcal/100 ml, 0 to 40 Kcal/100 ml, 0 to 35 Kcal/100 ml, 0 to 30 Kcal/100 ml, 0 to 24 Kcal/100 ml, 0 to 22 Kcal/100 ml, 0 to 20 Kcal/100 ml, 0 to 15 Kcal/100 ml, 0 to 10 Kcal/100 ml, 0 to 5 Kcal/100 ml, 0.1 to 50 Kcal/100 ml, 0.1 to 45 Kcal/100 ml, 0.1 to 40 Kcal/100 ml, 0.1 to 35 Kcal/100 ml, 0.1 to 30 Kcal/100 ml, 0.1 to 24 Kcal/100 ml, 0.1 to 22 Kcal/100 ml, 0.1 to 20 Kcal/100 ml, 0.1 to 15 Kcal/100 ml, 0.1 to 10 Kcal/100 ml, 0.1 to 5 Kcal/100 ml, 1 to 50 Kcal/100 ml, 1 to 45 Kcal/100 ml, 1 to 40 Kcal/100 ml, 1 to 35 Kcal/100 ml, 1 to 30 Kcal/100 ml, 1 to 24 Kcal/100 ml, 1 to 22 Kcal/100 ml, 1 to 20 Kcal/100 ml, 1 to 15 Kcal/100 ml, 1 to 10 Kcal/100 ml, 1 to 5 Kcal/100 ml, 5 to 50 Kcal/100 ml, 5 to 45 Kcal/100 ml, 5 to 40 Kcal/100 ml, 5 to 35 Kcal/100 ml, 5 to 30 Kcal/100 ml, 5 to 24 Kcal/100 ml, 5 to 20 Kcal/100 ml, 5 to 15 Kcal/100 ml, 5 to 10 Kcal/100 ml, 10 to 50 Kcal/100 ml, 10 to 45 Kcal/100 ml, 10 to 40 Kcal/100 ml, 10 to 35 Kcal/100 ml, 10 to 30 Kcal/100 ml, 10 to 24 Kcal/100 ml, 10 to 20 Kcal/100 ml, 10 to 15 Kcal/100 ml, 15 to 50 Kcal/100 ml, 15 to 45 Kcal/100 ml, 15 to 40 Kcal/100 ml, 15 to 35 Kcal/100 ml, 15 to 30 Kcal/100 ml, 15 to 24 Kcal/100 ml, 15 to 20 Kcal/100 ml, 20 to 50 Kcal/100 ml, 20 to 45 Kcal/100 ml, 20 to 40 Kcal/100 ml, 20 to 35 Kcal/100 ml, 20 to 30 Kcal/100 ml, 20 to 24 Kcal/100 ml, 24 to 50 Kcal/100 ml, 24 to 45 Kcal/100 ml, 24 to 40 Kcal/100 ml, 24 to 35 Kcal/100 ml, 24 to 30 Kcal/100 ml, 25 to 50 Kcal/100 ml, 25 to 45 Kcal/100 ml, 25 to 40 Kcal/100 ml, 25 to 35 Kcal/100 ml, or 25 to 30 Kcal/100 ml.

Further, an energy (total energy, TE) of the sparkling beverage of the present invention may be, depending on an embodiment (for example, an embodiment containing a caloric sweetener), 0 < TE ≤ 50 Kcal/100 ml, 0 < TE ≤ 45 Kcal/100 ml, 0 < TE ≤ 40 Kcal/100 ml, 0 < TE ≤ 35 Kcal/100 ml, 0 < TE ≤ 30 Kcal/100 ml, 0 < TE ≤ 24 Kcal/100 ml, 0 < TE ≤ 22 Kcal/100 ml, 0 < TE ≤ 20 Kcal/100 ml, 0 < TE ≤ 15 Kcal/100 ml, 0 < TE ≤ 10 Kcal/100 ml or 0 < TE ≤ 5 Kcal/100 ml (that is, it never is completely 0).

The components (a) and (b) can be in any combinations. As shown in examples to be described later, the addition of the component (b) to the component (a) enables to provide a sweetness intensity Xb, which is higher than the sweetness intensity Xa of the component (a) alone. That is, the sweetness of the component (a) can be enhanced by the component (b). For this reason, sparkling beverages can be produced without using or with a reduced amount of highly caloric sucrose while maintaining the sweetness equal to a sparkling beverage containing sucrose. Thus, the design of new low-caloric sparkling beverages is enabled. In the case of designing a zero-calorie sparkling beverage, a high-intensity sweetener having particularly good-taste quality such as rebaudioside D (hereinafter, rebaudioside is sometimes abbreviated as "Reb") and rebaudioside M is used for the component (a) and D-allulose or erythritol is used as an additional sweet substance thereby to improve a sweetness with a low-concentration amino acid. In the case of adjusting a food to be not zero calories but a low calorie, a caloric sweetener such as sucrose, glucose, fructose, or sorbitol can be contained as an additional sweet substance.

### [High-intensity sweetener]

The high-intensity sweetener (hereinafter, sometimes abbreviated as the "sweetener (a)" or "component (a)") means a compound having a more intense sweetness than sucrose and encompasses naturally occurring compounds, synthetic compounds, and combinations of naturally occurring compounds and synthetic compounds. The high-intensity sweetener has, in the same amount as sucrose, a sweetness 5 times or more, 10 times or more, 50 times or more, 100 times or more, 500 times or more, 1,000 times or more, 5,000 times or more, 10,000 times or more, 50,000 times or more, or 100,000 times or more, of that of sucrose.

Specific examples of the high-intensity sweetener include peptide-based sweeteners such as aspartame, neotame, and advantame; sucrose derivatives such as sucralose; synthetic sweeteners (including those naturally occurring but also those whose synthetic products are mostly distributed such as neohesperidin dihydrochalcone) such as acesulfame K, saccharine, saccharin sodium, sodium cyclamate, dulcin, disodium glycyrrhizin, trisodium glycyrrhizin, and neohesperidin dihydrochalcone; sweeteners extracted from plants such as thaumatin, monellin, curculin, mabinlin, brazzein, pentagin, hernandulcin, 4β-hydroxyhernandulcin, miraculin, glycyrrhizin, rubusoside, and phyllodulcin; and plant extracts containing a high-intensity sweetener component, for example, Stevia rebaudiana extract, Siraitia grosvenorii (Luo han guo) extract, Glycyrrhiza (licorice) glabra extract, Rubus suavissimus S. Lee extract, Hydrangea macrophylla var. thunbergii extract, Sclerochiton ilicifolius extract, Thaumataococcus daniellii Benth extract, Dioscoreophyllum volkensii (serendipity berry) extract, Curculigo latifolia extract, Richadella dulcifica (miracle fruit) extract, Pentadiplandra brazzeana (West African fruit) extract, Capparis masaikai (Mabinlang) extract, and Lippia dulcis (Aztec sweet herb) extract; sweet components in these extracts, for example, steviol glycosides such as stevia derivatives like enzymatically-treated stevia in which a stevia extract and stevia are treated with an enzyme and glucose is added thereto, mogrosides obtained by treating Luo han guo and a Luo han guo extract, glycosides obtained from plant extracts such as phyllodulcin glycosides, Glycyrrhiza glabra plant-containing sweetness components (for example, triterpene glycosides such as glycyrrhizin), Rubus suavissimus S. Lee plant-containing sweet components (for example, diterpene glycosides such as rubusoside), Hydrangea macrophylla var. thunbergii plant-containing sweet components (for example, dihydroisocoumarin such as phyllodulcin), Sclerochiton ilicifolius plant-containing sweet components (for example, amino acids such as monatin), Thaumataococcus daniellii Benth plant-containing sweet components (for example, proteins such as thaumatin), Dioscoreophyllum volkensii plant-containing sweet components (for example, proteins such as monellin), Curculigo latifolia plant-containing sweet components (for example, proteins such as curculin), Richadella dulcifica plant-containing sweet components (for example, proteins such as miraculin), Pentadiplandra brazzeana plant-containing sweet components (for example, proteins such as brazzein and pentagin), Capparis masaikai plant-containing sweet components (for example, proteins such as mabinlin), and Lippia dulcis plant-containing sweet components (for example, sesquiterpenes such as hernandulcin and 4β-hydroxyhernandulcin).

Examples of the steviol glycoside include rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, Dulcoside A, Dulcoside C, rubusoside, steviol, steviol monoside, steviol bioside and stevioside. Examples of the mogroside include mogroside IV and mogroside V.

The Glycyrrhiza (licorice) extract refers to those obtained from roots or rhizomes of Glycyrrhiza uralensis Fisher, Glycyrrhiza inflata Batalin, and Glycyrrhiza glabra Linne and having glycyrrhizic acid as the main component. Examples of the Glycyrrhiza extract include Glycyrrhiza extracts, Glycyrrhizin, and licorice extracts.

The sucrose derivative includes, for example, those obtained by substituting the OH group or the H group of sucrose with other substituents and examples thereof include halogen derivatives of sucrose (sucralose) and oxathiazinonedioxide derivatives.

In a preferable embodiment of the present invention, the high-intensity sweetener is selected from a high-intensity sweetener having a good taste quality. As used herein, the "high-intensity sweetener having a good taste quality" means a high-intensity sweet substance having one or more taste qualities selected from, when compared with rebaudioside A (RebA), (1) less astringent taste, (2) less metallic taste, (3) less aftertaste of sweetness, and (4) less bitterness. Whether or not a certain sweet substance has the above taste quality is already known or can be determined based on a sensory evaluation. Nonrestrictive examples of the high-intensity sweetener having a good taste quality include RebD, RebM, a luo han guo extract, mogroside (for example, mogroside V), thaumatin, brazzein or a combination thereof.

In an embodiment of the present invention, the high-intensity sweetener may be those naturally occurring in plants and the like or those artificially produced (for example, bioconversion or chemosynthesis) but is preferably a naturally occurring sweetener. As used herein, the "naturally occurring" does not mean that a high-intensity sweet substance contained in the sparkling beverage of the present invention is a natural product but a high-intensity sweet substance contained in the sparkling beverage of the present invention may be a product artificially (for example, by bioconversion) produced (non-naturally occurring product) as long as the same substance naturally occurs.

Nonrestrictive examples of the sweetener (a) include rebaudioside A (RebA), rebaudioside D (RebD), rebaudioside M (RebM), neohesperidin dihydrochalcone, glycyrrhizin, thaumatin, monellin, mogroside, rubusoside, curculin, mabinlin, brazzein, pentagin, phyllodulcin, hernandulcin, miraculin, Stevia rebaudiana plant-containing sweet components, Siraitia grosvenorii plant-containing sweet components, Glycyrrhiza glabra plant-containing sweet components, Rubus suavissimus S. Lee plant-containing sweet components, Hydrangea macrophylla var. thunbergii plant-containing sweet components, Sclerochiton ilicifolius plant-containing sweet components, Thaumataococcus daniellii Benth plant-containing sweet components, Dioscoreophyllum volkensii plant-containing sweet components, Curculigo latifolia plant-containing sweet components, Richardella dulcifica plant-containing sweet components, Pentadiplandra brazzeana plant-containing sweet components, Capparis masaikai plant-containing sweet components, Lippia dulcis plant-containing sweet components and derivatives thereof, and combinations thereof. In a specific embodiment, the sweetener (a) contains RebA, RebD, RebM, a mogroside (for example, mogroside V) or a combination thereof. In another specific embodiment, the sweetener (a) contains RebA, RebD, RebM, a mogroside (for example, mogroside V), thaumatin or a combination thereof. In a preferable embodiment of the present invention, a high-intensity sweetener contains at least one selected from the group consisting of RebA, RebD, RebM, mogroside V, a luo han guo extract, and a combination thereof. In an embodiment of the present invention, the sweetener (a) consists essentially of a sweetener other than major components of Stevia sweeteners such as RebA, stevioside. As used herein, the "consists essentially of ... " means that the sweetener used in the present invention may contain major component(s) of Stevia sweeteners as long as the effects of the invention are not affected. For example, preferably 90% or more, more preferably 95% or more, or further preferably 98% or more of the sweetener (a) for use in the present invention consists of a sweetener other than RebA and stevioside.

RebA, RebD and RebM may be directly extracted from Stevia, or may be obtained by adding glucose to a compound having another structure, contained in a Stevia extract.

The Luo han guo extract as a sweetener is an extract of Luo han guo containing a sweet substance derived from Luo han guo, approved in various countries including Japan as a food additive and commercially available. Examples of the sweet substance derived from Luo han guo include mogroside V, mogroside IV, 11-oxo-mogroside V, and Siamenoside I.

Mogroside V is a kind of the major mogrol glycosides contained in Luo han guo and documented to have a good-quality sweetness property close to sucrose when compared with rebaudioside A. Mogroside V may be obtained from a luo han guo extract (for example, an alcohol extract of Luo han guo) by purification with chromatography or the like. Alternatively, mogroside V may be obtained by adding glucose to a compound having another structure, contained in a luo han guo extract.

The luo han guo extract preferably contains mogroside V and the ratio thereof is not limited and may be 10 wt% or more, 15 wt% or more, 20 wt% or more, 25 wt% or more, 30 wt% or more, 35 wt% or more, 40 wt% or more, 45 wt% or more, 50 wt% or more, 55 wt% or more, 60 wt% or more, 65 wt% or more, 70 wt% or more or 75 wt% or more, of the total dry weight of a luo han guo extract. The content of mogroside V can be determined by a known technique such as liquid chromatography. The luo han guo extract can be obtained by extracting a fruit of Luo han guo (Siraitia grosvenorii) with a suitable solvent (for example, an aqueous solvent such as water, an alcohol solvent such as ethanol or methanol, or a mixed solvent of an aqueous solvent and an alcohol solvent such as water-containing ethanol or water-containing methanol), and then optionally carrying out a treatment such as degreasing, purification, concentration, and drying.

Mogroside V may be one having a high purity, and may be, for example, one having a purity of 80% or more, 85% or more, 90% or more, 91% or more, 92% or more, 93% or more, 94% or more, 95% or more, 96% or more, 97% or more or 98% or more. Mogroside V obtained by purification of a luo han guo extract, of course, has a smaller amount of incorporation of a luo han guo extract component other than mogroside V, as it has a higher purity.

In other embodiments of the present invention, mogroside V may also be one having a lower purity, and may be, for example, one having a purity of 50% or more, 55% or more, 60% or more, 65% or more, 70% or more or 75% or more. For example, when the sweetness intensity of sucrose per unit concentration Brix 1 is defined as a degree of sweetness of 1, the calculated value of the degree of sweetness of Mog V having a purity of about 65% is about 175. In other embodiments of the present invention, a luo han guo extract containing about 30 wt% of Mog V may be used as the high-intensity sweetener, and, when the sweetness intensity of sucrose per unit concentration Brix 1 is defined as a degree of sweetness of 1, the calculated value of the degree of sweetness of the luo han guo extract is about 100.

The high-intensity sweetener is contained in an amount corresponding to a sweetness intensity Xa, as described above. When the sweetness intensity of sucrose per unit concentration Brix 1 is defined as a degree of sweetness of 1, a degree of sweetness of rebaudioside D is about 225, a degree of sweetness of rebaudioside M is about 230, a degree of sweetness of rebaudioside B is about 325, a degree of sweetness of rebaudioside A is 200 to 300 (median value 250), a degree of sweetness of rebaudioside N is 200 to 250 (median value 225), a degree of sweetness of rebaudioside O is 200 to 250 (median value 225), a degree of sweetness of rebaudioside E is 70 to 80 (median value 75), a degree of sweetness of a luo han guo extract (containing 40% of Mog V) is about 130, a degree of sweetness of mogroside V is about 270, a degree of sweetness of thaumatin is 2,000, and a degree of sweetness of brazzein is 500 to 2000 (median value 1250). The numerical value obtained by multiplying these degrees of sweetness by a concentration (w/v% (considered to be the same as w/w% in the case of a beverage)) of the high-intensity sweetener in the sparkling beverage is a sweetness intensity of the high-intensity sweetener. When Xa of such a sweetener is herein determined, the above degree of sweetness (median value when a numerical value range is shown) is used. A relative ratio of a degree of sweetness of each sweetener to a degree of sweetness of 1 of sucrose can be determined from, for example, a known sugar sweetness conversion table (for example, information "Beverage term dictionary", page 11, Beverage Japan, Inc.). When a numerical range of a degree of sweetness is herein shown, a median value is adopted. Herein, in the case of a sweetener whose degree of sweetness is different with respect to each literature, a relative ratio of a degree of sweetness to a degree of sweetness of 1 of sucrose can be determined by a sensory test. Examples of such a sensory test include a method involving preparing samples where sucrose is added to pure water so that Brix is 3.0 to 5.0 by 0.5, and selecting a sample where sucrose is added, having a sweetness intensity equal to that of an aqueous solution having a predetermined concentration of a sweetener, among such samples.

In an embodiment of the present invention, the high-intensity sweetener comprises at least one selected from the group consisting of steviol glycoside, a luo han guo extract, mogrol glycoside, a Thaumataococcus daniellii Benth plant-containing sweet component, a Pentadiplandra brazzeana plant-containing sweet component, an artificial sweetener, and a combination thereof. In a preferable embodiment of the present invention, the high-intensity sweetener comprises at least one selected from the group consisting of rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, Dulcoside A, Dulcoside C, rubusoside, steviol monoside, steviol bioside, stevioside, a luo han guo extract, mogroside V, thaumatin, brazzein, a Glycyrrhiza extract, saccharine, aspartame, acesulfame K, sucralose, and a combination thereof.

In some embodiments, the sweetener (a) contains the following combination: RebA and RebM, RebA and RebD, RebD and RebM, RebA and RebD and RebM, RebA and mogroside V, RebD and mogroside V, RebM and mogroside V, RebA and RebM and mogroside V, RebA and RebD and mogroside V, RebD and RebM and mogroside V, RebA and neohesperidin dihydrochalcone, RebD and neohesperidin dihydrochalcone, RebM and neohesperidin dihydrochalcone, RebA and RebM and neohesperidin dihydrochalcone, RebA and RebD and neohesperidin dihydrochalcone, RebD and RebM and neohesperidin dihydrochalcone, mogroside V and neohesperidin dihydrochalcone, RebD and RebM and mogroside V and neohesperidin dihydrochalcone, RebA and brazzein, RebD and brazzein, RebM and brazzein, mogroside V and brazzein, neohesperidin dihydrochalcone and brazzein, RebM and RebD and brazzein, RebM and RebD and brazzein and mogroside V, RebM and RebD and brazzein and neohesperidin dihydrochalcone, or RebM and RebD and brazzein and mogroside V and neohesperidin dihydrochalcone.

In another embodiment, the sweetener (a) contains the following combination: RebA and thaumatin, RebD and thaumatin, RebM and thaumatin, mogroside V and thaumatin, RebA and RebM and thaumatin, RebA and RebD and thaumatin, RebD and RebM and thaumatin, RebA and mogroside V and thaumatin, RebD and mogroside V and thaumatin, RebM and mogroside V and thaumatin, or RebD and RebM and mogroside V and thaumatin.

In an embodiment of the present invention, the sweetener (a) may contain a high-intensity sweetener selected from rebaudioside A, rebaudioside D, rebaudioside M, mogroside V, a luo han guo extract, and a combination thereof, preferably one or more high-intensity sweeteners selected from rebaudioside D, rebaudioside M, and a combination thereof.

The amount of the sweetener (a) contained in the sparkling beverage in an embodiment of the present invention is, in the case when the sweetener (a) contains a combination of a plurality of sweet substances, an amount of all of these sweet substances combined. When an amount of the sweetener (a) is Pa (ppm), Pa may be a value of, for example, about 20 to about 800, about 25 to about 800, about 30 to about 800, about 35 to about 800, about 40 to about 800, about 45 to about 800, about 50 to about 800, about 55 to about 800, about 20 to about 750, about 25 to about 750, about 30 to about 750, about 35 to about 750, about 40 to about 750, about 45 to about 750, about 50 to about 750, about 55 to about 750, about 20 to about 700, about 25 to about 700, about 30 to about 700, about 35 to about 700, about 40 to about 700, about 45 to about 700, about 50 to about 700, about 55 to about 700, about 20 to about 650, about 25 to about 650, about 30 to about 650, about 35 to about 650, about 40 to about 650, about 45 to about 650, about 50 to about 650, about 55 to about 650, about 20 to about 600, about 25 to about 600, about 30 to about 600, about 35 to about 600, about 40 to about 600, about 45 to about 600, about 50 to about 600, about 55 to about 600, about 20 to about 550, about 25 to about 550, about 30 to about 550, about 35 to about 550, about 40 to about 550, about 45 to about 550, about 50 to about 550, about 55 to about 550, about 20 to about 540, about 25 to about 540, about 30 to about 540, about 35 to about 540, about 40 to about 540, about 45 to about 540, about 50 to about 540, about 55 to about 540, about 20 to about 530, about 25 to about 530, about 30 to about 530, about 35 to about 530, about 40 to about 530, about 45 to about 530, about 50 to about 530, about 55 to about 530, about 20 to about 520, about 25 to about 520, about 30 to about 520, about 35 to about 520, about 40 to about 520, about 45 to about 520, about 50 to about 520, about 55 to about 520, about 20 to about 510, about 25 to about 510, about 30 to about 510, about 35 to about 510, about 40 to about 510, about 45 to about 510, about 50 to about 510, about 55 to about 510, about 20 to about 505, about 25 to about 505, about 30 to about 505, about 35 to about 505, about 40 to about 505, about 45 to about 505, about 50 to about 505, about 55 to about 505, about 20 to about 500, about 25 to about 500, about 30 to about 500, about 35 to about 500, about 40 to about 500, about 45 to about 500, about 50 to about 500, about 55 to about 500, about 20 to about 495, about 25 to about 495, about 30 to about 495, about 35 to about 495, about 40 to about 495, about 45 to about 495, about 50 to about 495, about 55 to about 495, about 20 to about 490, about 25 to about 490, about 30 to about 490, about 35 to about 490, about 40 to about 490, about 45 to about 490, about 50 to about 490, about 55 to about 490, about 100 to about 500, about 100 to about 450, about 100 to about 400, about 100 to about 350, about 100 to about 300, about 100 to about 250, about 100 to about 200, about 150 to about 500, about 150 to about 450, about 150 to about 400, about 150 to about 350, about 150 to about 300, about 150 to about 250, about 150 to about 200, about 20 to about 200, about 200 to about 500, about 200 to about 450, about 200 to about 400, about 200 to about 350, about 200 to about 300 or about 200 to about 250.

In an embodiment of the present invention, an amount Pa ppm of the high-intensity sweetener may be about 20 to about 600 ppm, about 30 to about 550 ppm, about 55 to about 490 ppm, about 20 to about 200 ppm, about 100 to about 500 ppm or about 150 to about 350 ppm.

### [Amino acids or derivatives or salts thereof]

The sparkling beverage of the present invention contains (b) an amino acid or a derivative or a salt thereof in an amount less than a taste recognition threshold. The amino acids or amino acid salts used in the present invention are organic compounds having both functional groups of an amino group and a carboxyl group, or salts thereof, and not particularly limited as long as a sweetness enhancement effect can be obtained. Additionally, proline and hydroxyproline, which form a cyclic structure in which the hydrogen of the amino group is substituted with a side chain moiety in a molecule, are also encompassed in the amino acid in the present description. The amino acid derivatives which may be used in the present invention encompass derivatives having no carboxyl group such as taurine. In an embodiment of the present invention, the amino acid means a free amino acid.

The amino acids used in the present invention may be the D-configuration, the L-configuration, or the racemic configuration consisting of the D-configuration and the L-configuration (in the present description, also referred to as the DL-amino acid) . In an embodiment of the present invention, the amino acid may be selected from neutral amino acids, basic amino acids, and acidic amino acids. The neutral amino acid may be preferably selected from glycine, alanine, valine, isoleucine, leucine and the like which have an alkyl group, serine, threonine and the like which have an OH group (a hydroxy group), tyrosine, phenylalanine, tryptophan and the like which have an aromatic group (or an aromatic ring), methionine, cysteine and the like which have a sulfur-containing group, proline, hydroxyproline and the like which have an imino group, and glutamine, asparagine and the like which have an amide group. The basic amino acid may be preferably selected from arginine, lysine, histidine and the like. The acidic amino acid may be preferably selected from glutamic acid, aspartic acid and the like. In a preferable embodiment of the present invention, the amino acids are selected from the neutral amino acids or the basic amino acids. In other preferable embodiments of the present invention, the amino acids include amino acids selected from, of the basic amino acids or the neutral amino acids, amino acids having an alkyl group, an OH group, or an amide group on a side chain and combinations thereof. Of the neutral amino acids, examples of those having an alkyl group on a side chain include glycine, alanine, valine, isoleucine and leucine, those having an OH group on a side chain include serine and threonine, and those having an amide group on a side chain include glutamine and asparagine.

The amino acid contained in the sparkling beverage in an embodiment of the present invention is one or more of the 22 amino acids forming proteins. Specific examples include the L-configuration of alanine (Ala), arginine (Arg), asparagine (Asn), aspartic acid (Asp), cysteine (Cys), glutamine (Gln), glutamic acid (Glu), glycine (Gly), histidine (His), isoleucine (Ile), leucine (Leu), lysine (Lys), methionine (Met), phenylalanine (Phe), proline (Pro), serine (Ser), threonine (Thr), tryptophan(Trp), tyrosine (Tyr), valine (Val), selenosysteine (Sec), and pyrrolysine (Pyl).

The amino acid contained in the sparkling beverage in an embodiment of the present invention is one or more selected from an amino acid having a molecular weight of 70 to 260. Examples of such an amino acid include alanine (molecular weight: 89), arginine (molecular weight: 174), asparagine (molecular weight: 132), aspartic acid (molecular weight: 133), cysteine (molecular weight: 121), glutamine (molecular weight: 146), glutamic acid (molecular weight: 147), glycine (molecular weight: 75), histidine (molecular weight: 155), isoleucine (molecular weight: 131), leucine (molecular weight: 131), lysine (molecular weight: 146), methionine (molecular weight: 149), phenylalanine (molecular weight: 165), proline (molecular weight: 115), serine (molecular weight: 105), threonine (molecular weight: 119), tryptophan (molecular weight: 204), tyrosine (molecular weight: 181), valine (molecular weight: 117), selenosysteine (molecular weight: 168) and pyrrolysine (molecular weight: 255). In a preferable embodiment of the present invention, the amino acid is one or more selected from amino acids having molecular weights of 75 to 204, more preferably one or more selected from amino acids having molecular weights of 75 to 174, and further preferably one or more selected from amino acids having molecular weights of 75 to 146.

Preferably, the amino acid or a salt thereof is one or more selected from L-asparagine, L-aspartic acid, monosodium L-aspartate, DL-alanine, L-alanine, L-alanine solution, L-arginine, L-arginine L-glutamate, L-glutamine, L-cystine, L-cysteine monohydrochloride, L-serine, L-tyrosine, L-glutamic acid, monoammonium L-glutamate, monopotassium L-glutamate, monocalcium Di-L-glutamate, monosodium L-glutamate (also known as sodium glutamate), monomagnesium Di-L-glutamate, glycine, L-histidine, L-histidine monohydrochloride, L-hydroxyproline, L-isoleucine, L-lysine, L-lysine solution, L-lysine L-aspartate, L-lysine hydrochloride (L-lysine monohydrochloride), L-lysine L-glutamate, L-leucine, DL-methionine, L-methionine, L-phenylalanine, L-proline, L-proline solution, DL-threonine, L-threonine, DL-tryptophan, L-tryptophan, L-valine, L-theanine, L-ornithine, and taurine. In an embodiment of the present invention, a plurality species of amino acids may be used in combination. In an embodiment of the present invention, the amino acid includes an amino acid selected from glycine, alanine, valine, isoleucine, leucine, serine, threonine, glutamine, asparagine, arginine, lysine, histidine, and a combination thereof.

In an embodiment of the present invention, the amino acid or a derivative or a salt thereof may include an amino acid selected from DL-alanine, L-serine, glycine, L-arginine, L-glutamic acid, L-valine, and L-glutamine. In another embodiment of the present invention, the amino acid or a derivative or a salt thereof may include one or more amino acids selected from arginine, lysine, histidine, phenylalanine, tyrosine, leucine, isoleucine, methionine, valine, alanine, glycine, proline, glutamic acid, serine, threonine, aspartic acid, and tryptophan. In still another embodiment of the present invention, the amino acid or a derivative or a salt thereof may include one or more amino acids selected from arginine, valine, alanine, glycine, proline, glutamic acid, serine, threonine, aspartic acid, and tryptophan. In another embodiment of the present invention, the amino acid or a derivative or a salt thereof may include one or more amino acids selected from alanine, glycine and serine. In another embodiment of the present invention, the amino acid or a derivative or a salt thereof may include one or more amino acids selected from alanine and glycine.

As used herein, the threshold of amino acids means a detection threshold or a taste recognition threshold. The detection threshold means a minimum concentration at which the difference from water can be clearly identified but a type of the taste (for example, bitterness, sourness, and sweetness) does not have to be always recognized, and the taste recognition threshold means a minimum concentration at which a taste can be recognized (for example, Eur J Clin Nutr (2004) 58, 629-636). The threshold (detection threshold) of amino acids is organized by Susan S. Schiffman et al. in "Comparison of Taste Qualities and Thresholds of D- and L-Amino Acids", Physiology & Behavior, Vol. 27, pp. 51-59 (1981). For example, a detection threshold of each amino acid is as follows: glycine (30.9 mM), L-threonine (25.7 mM), L-serine (20.9 mM), L-alanine (16.2 mM), L-proline (15.1 mM), L-glutamine (9.77 mM), L-isoleucine (7.41 mM), L-phenylalanine (6.61 mM), L-leucine (6.45 mM), L-valine (4.16 mM), L-methionine (3.72 mM), L-tryptophan (2.29 mM), L-asparagine (1.62 mM), L-histidine (1.23 mM), L-arginine (1.20 mM), L-lysine (0.708 mM), L-aspartic acid (0.182 mM), L-glutamic acid (0.063 mM), L-cysteine (0.063 mM). Additionally, the taste recognition threshold is known to be about 1.5 to 2 times the detection threshold (Yuki Yamauchi et al., "WHOLE MOUTH GUSTATORY TEST (PART1) - BASIC CONSIDERATIONS AND PRINCIPAL COMPONENT ANALYSIS -", Journal of The Oto-Rhino-Laryngological Society of Japan, vol. 98 (1995) No. 1, p.119-129, and Reiko Ohmori, "Comparisons of the taste sensitivity between three generations", The bulletin of the Faculty of Education, Utsunomiya University, Section 1 (2013) Vol. 63 p.201-210)).

In the present invention, it is preferable that a measured value be used as the taste recognition threshold of an amino acid. A taste recognition threshold of an amino acid can be determined by preparing amino acid-containing aqueous solutions in several concentration levels and tasting in the order from low concentrations to high concentrations to carry out a sensory test by which the taste can be sensed or not. A concentration at which a difference from water is detected is defined as a detection threshold and a concentration at which a taste is recognized is defined as a recognition threshold. For example, for an amino acid for which a theoretical value (a literature value) is already established, aqueous solutions in several concentration levels close to such a concentration are prepared and several persons who received sensory trainings carry out the test thereby to determine these thresholds. In the case of L-alanine, a detection threshold described in literatures is 16.2 mM and a theoretical recognition threshold calculated from such a detection threshold is 32.4 mM, and a sensory test using aqueous solutions in several levels selected from 5 mM, 10 mM, 15 mM, 20 mM, 25 mM, 30 mM, and 35 mM is carried out thereby to measure a recognition threshold. In an embodiment of the present invention, the taste recognition threshold of an amino acid means a taste recognition threshold in pure water. The taste recognition threshold in pure water means a minimum concentration at which such a taste can be recognized when only an amino acid is added to water without addition of any sweetener or the like.

In an embodiment of the present invention, the sparkling beverage contains glycine and a content of glycine may be more than 0 mM and 80 mM or less, 75 mM or less, less than 75 mM, 70 mM or less, 65 mM or less, 60 mM or less, 55 mM or less, 50 mM or less, less than 50 mM, 45 mM or less, 40 mM or less, 35 mM or less, 30 mM or less, 25 mM or less, 20 mM or less, 15 mM or less, or 10 mM or less. Alternatively, such a content may be 10 to 80 mM, 20 to 80 mM, 30 to 80 mM, 40 to 80 mM, 50 to 80 mM, 60 to 80 mM, 70 to 80 mM, 10 to 70 mM, 20 to 70 mM, 30 to 70 mM, 40 to 70 mM, 50 to 70 mM, 60 to 70 mM, 10 to 60 mM, 20 to 60 mM, 30 to 60 mM, 40 to 60 mM, 50 to 60 mM, 10 to 50 mM, 20 to 50 mM, 30 to 50 mM, 40 to 50 mM, 10 to 40 mM, 20 to 40 mM, 30 to 40 mM, 10 to 30 mM, or 20 to 30 mM.

In an embodiment of the present invention, the sparkling beverage contains alanine and a content of alanine may be more than 0 mM and 32.4 mM or less, 30 mM or less, less than 30 mM, 25 mM or less, 20 mM or less, less than 20 mM, 15 mM or less, or 10 mM or less. Alternatively, such a content may be 1 to 30 mM, 5 to 30 mM, 10 to 30 mM, 15 to 30 mM, 20 to 30 mM, 25 to 30 mM, 1 to 25 mM, 5 to 25 mM, 10 to 25 mM, 15 to 25 mM, 20 to 25 mM, 1 to 20 mM, 5 to 20 mM, 10 to 20 mM, 15 to 20 mM, 1 mM or more and less than 20 mM, 1 to 19 mM, 5 to 19 mM, 10 to 19 mM, 15 to 19 mM, 1 to 18 mM, 5 to 18 mM, 10 to 18 mM, 15 to 18 mM, 1 to 17 mM, 5 to 17 mM, 10 to 17 mM, 15 to 17 mM, 1 to 16 mM, 5 to 16 mM, 10 to 16 mM, or 15 to 16 mM. Alanine may be either the L-configuration, the D-configuration, or the racemic configuration (DL-configuration) but is preferably the L-configuration.

In an embodiment of the present invention, the sparkling beverage contains valine and a content of valine may be more than 0 mM and 50 mM or less, less than 50 mM, 45 mM or less, 40 mM or less, less than 40 mM, 35 mM or less, 30 mM or less, less than 30 mM, 25 mM or less, 20 mM or less, 15 mM or less, or 10 mM or less. Alternatively, such a content may be 1 to 50 mM, 5 to 50 mM, 10 to 50 mM, 15 to 50 mM, 20 to 50 mM, 25 to 50 mM, 1 to 50 mM, 5 to 50 mM, 10 to 50 mM, 15 to 50 mM, 20 to 50 mM, 25 to 50 mM, 30 to 50 mM, 35 to 50 mM, 40 to 50 mM, 45 to 50 mM, 1 to 45 mM, 5 to 45 mM, 10 to 45 mM, 15 to 45 mM, 20 to 45 mM, 25 to 45 mM, 1 to 45 mM, 5 to 45 mM, 10 to 45 mM, 15 to 45 mM, 20 to 45 mM, 25 to 45 mM, 30 to 45 mM, 35 to 45 mM, 40 to 45 mM, 1 to 40 mM, 1 mM or more and less than 40 mM, 5 to 40 mM, 10 to 40 mM, 15 to 40 mM, 20 to 40 mM, 25 to 40 mM, 1 to 40 mM, 5 to 40 mM, 10 to 40 mM, 15 to 40 mM, 20 to 40 mM, 25 to 40 mM, 30 to 40 mM, 35 to 40 mM, 1 to 40 mM, 5 to 40 mM, 10 to 40 mM, 15 to 40 mM, 20 to 40 mM, 25 to 40 mM, 1 to 35 mM, 5 to 35 mM, 10 to 35 mM, 15 to 35 mM, 20 to 35 mM, 25 to 35 mM, 30 to 35 mM, 1 to 30 mM, 1 mM or more and less than 30 mM, 5 to 30 mM, 10 to 30 mM, 15 to 30 mM, 20 to 30 mM, 25 to 30 mM, 1 to 25 mM, 5 to 25 mM, 10 to 25 mM, 15 to 25 mM, 20 to 25 mM, 1 to 20 mM, 5 to 20 mM, 10 to 20 mM, 10 to 15 mM, or 15 to 20 mM. Valine may be either the L-configuration, the D-configuration, or the racemic configuration (DL-configuration) but is preferably the L-configuration.

In an embodiment of the present invention, the sparkling beverage contains isoleucine and a content of isoleucine may be more than 0 mM and 25 mM or less, 20 mM or less, 15 mM or less, 10 mM or less, or 5 mM or less. Alternatively, such a content may be 1 to 25 mM, 5 to 25 mM, 10 to 25 mM, 15 to 25 mM, 20 to 25 mM, 1 to 20 mM, 5 to 20 mM, 10 to 20 mM, 15 to 20 mM, 1 to 15 mM, 5 to 15 mM, or 10 to 15 mM. Isoleucine may be either the L-configuration, the D-configuration, or the racemic configuration (DL-configuration) but is preferably the L-configuration.

In an embodiment of the present invention, the sparkling beverage contains leucine and a content of leucine may be more than 0 mM and 50 mM or less, 45 mM or less, 40 mM or less, 35 mM or less, 30 mM or less, less than 30 mM, 25 mM or less, 20 mM or less, less than 20 mM, 15 mM or less, 13 mM or less, 12 mM or less, 11 mM or less, 10 mM or less, less than 10 mM, 9 mM or less, 8 mM or less, 7 mM or less, 6 mM or less, 5 mM or less, 4 mM or less, 3 mM or less, 2 mM or less, or 1 mM or less. Alternatively, such a content may be 1 to 50 mM, 2 to 50 mM, 3 to 50 mM, 4 to 50 mM, 5 to 50 mM, 6 to 50 mM, 7 to 50 mM, 8 to 50 mM, 9 to 50 mM, 10 to 50 mM, 1 to 40 mM, 2 to 40 mM, 3 to 40 mM, 4 to 40 mM, 5 to 40 mM, 6 to 40 mM, 7 to 40 mM, 8 to 40 mM, 9 to 40 mM, 10 to 40 mM, 1 to 30 mM, 2 to 30 mM, 3 to 30 mM, 4 to 30 mM, 5 to 30 mM, 6 to 30 mM, 7 to 30 mM, 8 to 30 mM, 9 to 30 mM, 1 to 20 mM, 1 mM or more and less than 20 mM, 2 to 20 mM, 3 to 20 mM, 4 to 20 mM, 5 to 20 mM, 6 to 20 mM, 7 to 20 mM, 8 to 20 mM, 9 to 20 mM, 15 to 50 mM, 15 to 45 mM, 15 to 40 mM, 15 to 35 mM, 15 to 30 mM, 15 to 25 mM, 15 to 20 mM, 1 to 15 mM, 2 to 15 mM, 3 to 15 mM, 4 to 15 mM, 5 to 15 mM, 6 to 15 mM, 7 to 15 mM, 8 to 15 mM, 9 to 15 mM, 10 to 15 mM, 1 to 12 mM, 2 to 12 mM, 3 to 12 mM, 4 to 12 mM, 5 to 12 mM, 6 to 12 mM, 7 to 12 mM, 8 to 12 mM, 9 to 12 mM, 10 to 12 mM, 1 to 10 mM, 1 mM or more and less than 10 mM, 2 to 10 mM, 3 to 10 mM, 4 to 10 mM, 5 to 10 mM, 6 to 10 mM, 7 to 10 mM, 8 to 10 mM, or 9 to 10 mM. Leucine may be either the L-configuration, the D-configuration, or the racemic configuration (DL-configuration) but is preferably the L-configuration.

In an embodiment of the present invention, the sparkling beverage contains serine and a content of serine may be more than 0 mM and 130 mM or less, 100 mM or less, 80 mM or less, 50 mM or less, less than 50 mM, 45 mM or less, 40 mM or less, less than 40 mM, 35 mM or less, 30 mM or less, 25 mM or less, 20 mM or less, 15 mM or less, or 10 mM or less. Alternatively, such a content may be 10 to 130 mM, 10 to 100 mM, 10 to 80 mM, 20 to 80 mM, 30 to 80 mM, 40 to 80 mM, 50 to 80 mM, 60 to 80 mM, 70 to 80 mM, 10 to 70 mM, 20 to 70 mM, 30 to 70 mM, 40 to 70 mM, 50 to 70 mM, 60 to 70 mM, 10 to 60 mM, 20 to 60 mM, 30 to 60 mM, 40 to 60 mM, 50 to 60 mM, 10 to 50 mM, 20 to 50 mM, 30 to 50 mM, 40 to 50 mM, 10 to 40 mM, 20 to 40 mM, 30 to 40 mM, 10 to 30 mM, 20 to 30 mM, 5 to 45 mM, 5 to 40 mM, 5 to 35 mM, 5 to 30 mM, 5 to 25 mM, 5 to 20 mM, 5 to 15 mM, 5 to 10 mM, 1 to 45 mM, 1 to 40 mM, 1 mM or more and less than 40 mM, 1 to 35 mM, 1 to 30 mM, 1 to 25 mM, 1 to 20 mM, 1 to 15 mM, or 1 to 10 mM. In another embodiment of the present invention, a content of serine may be 19 mM or less, 10 to 19 mM, 5 to 19 mM, or 1 to 19 mM. Serine may be either the L-configuration, the D-configuration, or the racemic configuration (DL-configuration) but is preferably the L-configuration.

In an embodiment of the present invention, the sparkling beverage contains threonine and a content of threonine may be more than 0 mM and 70 mM or less, 65 mM or less, 60 mM or less, 55 mM or less, 50 mM or less, less than 50 mM, 45 mM or less, 40 mM or less, less than 40 mM, 35 mM or less, 30 mM or less, 25 mM or less, 20 mM or less, 15 mM or less, or 10 mM or less. Alternatively, such a content may be 1 to 70 mM, 1 to 65 mM, 1 to 60 mM, 1 to 55 mM, 1 to 50 mM, 5 to 50 mM, 10 to 50 mM, 15 to 50 mM, 20 to 50 mM, 25 to 50 mM, 1 to 50 mM, 5 to 50 mM, 10 to 50 mM, 15 to 50 mM, 20 to 50 mM, 25 to 50 mM, 30 to 50 mM, 35 to 50 mM, 40 to 50 mM, 45 to 50 mM, 1 to 45 mM, 5 to 45 mM, 10 to 45 mM, 15 to 45 mM, 20 to 45 mM, 25 to 45 mM, 1 to 45 mM, 5 to 45 mM, 10 to 45 mM, 15 to 45 mM, 20 to 45 mM, 25 to 45 mM, 30 to 45 mM, 35 to 45 mM, 40 to 45 mM, 1 to 40 mM, 1 mM or more and less than 40 mM, 5 to 40 mM, 10 to 40 mM, 15 to 40 mM, 20 to 40 mM, 25 to 40 mM, 1 to 40 mM, 5 to 40 mM, 10 to 40 mM, 15 to 40 mM, 20 to 40 mM, 25 to 40 mM, 30 to 40 mM, 35 to 40 mM, 1 to 40 mM, 5 to 40 mM, 10 to 40 mM, 15 to 40 mM, 20 to 40 mM, 25 to 40 mM, 1 to 35 mM, 5 to 35 mM, 10 to 35 mM, 15 to 35 mM, 20 to 35 mM, 25 to 35 mM, 30 to 35 mM, 1 to 30 mM, 5 to 30 mM, 10 to 30 mM, 15 to 30 mM, 20 to 30 mM, 25 to 30 mM, 1 to 25 mM, 5 to 25 mM, 10 to 25 mM, 15 to 25 mM, 20 to 25 mM, 1 to 20 mM, 5 to 20 mM, 10 to 20 mM, or 15 to 20 mM. Threonine may be either the L-configuration, the D-configuration, or the racemic configuration (DL-configuration) but is preferably the L-configuration.

In an embodiment of the present invention, the sparkling beverage contains phenylalanine and a content of phenylalanine may be more than 0 mM and 15 mM or less, 13 mM or less, 12 mM or less, 11 mM or less, 10 mM or less, 9 mM or less, 8 mM or less, 7 mM or less, 6 mM or less, 5 mM or less, 4 mM or less, 3 mM or less, 2 mM or less, or 1 mM or less. Alternatively, such a content may be 1 to 15 mM, 2 to 15 mM, 3 to 15 mM, 4 to 15 mM, 5 to 15 mM, 6 to 15 mM, 7 to 15 mM, 8 to 15 mM, 9 to 15 mM, 10 to 15 mM, 1 to 12 mM, 2 to 12 mM, 3 to 12 mM, 4 to 12 mM, 5 to 12 mM, 6 to 12 mM, 7 to 12 mM, 8 to 12 mM, 9 to 12 mM, 10 to 12 mM, 1 to 10 mM, 2 to 10 mM, 3 to 10 mM, 4 to 10 mM, 5 to 10 mM, 6 to 10 mM, 7 to 10 mM, 8 to 10 mM, or 9 to 10 mM. Phenylalanine may be either the L-configuration, the D-configuration, or the racemic configuration (DL-configuration) but is preferably the L-configuration.

In an embodiment of the present invention, the sparkling beverage contains tryptophan and a content of tryptophan may be more than 0 mM and 5 mM or less, 4 mM or less, 3 mM or less, 2 mM or less, or 1 mM or less. Alternatively, such a content may be 1 to 5 mM, 2 to 5 mM, 3 to 5 mM, or 4 to 5 mM. Tryptophan may be either the L-configuration, the D-configuration, or the racemic configuration (DL-configuration) but is preferably the L-configuration.

In an embodiment of the present invention, the sparkling beverage contains methionine and a content of methionine may be more than 0 mM and 10 mM or less, 9 mM or less, 8 mM or less, 7 mM or less, 6 mM or less, 5 mM or less, 4 mM or less, 3 mM or less, 2 mM or less, or 1 mM or less. Alternatively, such a content may be 1 to 10 mM, 2 to 10 mM, 3 to 10 mM, 4 to 10 mM, 5 to 10 mM, 6 to 10 mM, 7 to 10 mM, 8 to 10 mM, or 9 to 10 mM. Methionine may be either the L-configuration, the D-configuration, or the racemic configuration (DL-configuration) but is preferably the L-configuration.

In an embodiment of the present invention, the sparkling beverage contains proline and a content of proline may be more than 0 mM and 120 mM or less, 100 mM or less, 80 mM or less, 50 mM or less, less than 50 mM, 45 mM or less, 40 mM or less, less than 40 mM, 35 mM or less, 30 mM or less, 25 mM or less, 20 mM or less, 15 mM or less, or 10 mM or less. Alternatively, such a content may be 10 to 120 mM, 10 to 100 mM, 10 to 80 mM, 20 to 80 mM, 30 to 80 mM, 40 to 80 mM, 50 to 80 mM, 60 to 80 mM, 70 to 80 mM, 10 to 70 mM, 20 to 70 mM, 30 to 70 mM, 40 to 70 mM, 50 to 70 mM, 60 to 70 mM, 10 to 60 mM, 20 to 60 mM, 30 to 60 mM, 40 to 60 mM, 50 to 60 mM, 10 to 50 mM, 20 to 50 mM, 30 to 50 mM, 40 to 50 mM, 1 mM or more and less than 40 mM, 10 to 40 mM, 20 to 40 mM, 30 to 40 mM, 1 to 30 mM, 5 to 30 mM, 10 to 30 mM, 15 to 30 mM, 20 to 30 mM, or 25 to 30 mM. Proline may be either the L-configuration, the D-configuration, or the racemic configuration (DL-configuration) but is preferably the L-configuration.

In an embodiment of the present invention, the sparkling beverage contains glutamine and a content of glutamine may be more than 0 mM and 20 mM or less, 19 mM or less, 18 mM or less, 17 mM or less, 16 mM or less, 15 mM or less, 14 mM or less, 13 mM or less, 12 mM or less, 11 mM or less, 10 mM or less, less than 10 mM, 9 mM or less, 8 mM or less, 7 mM or less, 6 mM or less, 5 mM or less, less than 5 mM, 4 mM or less, 3 mM or less, 2 mM or less, or 1 mM or less. Alternatively, such a content may be 1 to 20 mM, 1 to 18 mM, 1 to 15 mM, 2 to 15 mM, 3 to 15 mM, 4 to 15 mM, 5 to 15 mM, 6 to 15 mM, 7 to 15 mM, 8 to 15 mM, 9 to 15 mM, 10 to 15 mM, 1 to 12 mM, 2 to 12 mM, 3 to 12 mM, 4 to 12 mM, 5 to 12 mM, 6 to 12 mM, 7 to 12 mM, 8 to 12 mM, 9 to 12 mM, 10 to 12 mM, 1 to 10 mM, 2 to 10 mM, 3 to 10 mM, 4 to 10 mM, 5 to 10 mM, 6 to 10 mM, 7 to 10 mM, 8 to 10 mM, 9 to 10 mM, 1 to 8 mM, 2 to 8 mM, 3 to 8 mM, 4 to 8 mM, 5 to 8 mM, 6 to 8 mM, 7 to 8 mM, 1 to 7 mM, 2 to 7 mM, 3 to 7 mM, 4 to 7 mM, 5 to 7 mM, 6 to 7 mM, 1 to 6 mM, 2 to 6 mM, 3 to 6 mM, 4 to 6 mM, 5 to 6 mM, 1 to 5 mM, 1 mM or more and less than 5 mM, 2 to 5 mM, 3 to 5 mM, 4 to 5 mM, 1 to 4 mM, 2 to 4 mM, 3 to 4 mM, 1 to 3 mM, or 2 to 3 mM. Glutamine may be either the L-configuration, the D-configuration, or the racemic configuration (DL-configuration) but is preferably the L-configuration.

In an embodiment of the present invention, the sparkling beverage contains asparagine and a content of asparagine may be more than 0 mM and 20 mM or less, less than 20 mM, 19 mM or less, 18 mM or less, 17 mM or less, 16 mM or less, 15 mM or less, 14 mM or less, 13 mM or less, 12 mM or less, 11 mM or less, 10 mM or less, less than 10 mM, 9 mM or less, 8 mM or less, 7 mM or less, 6 mM or less, 5 mM or less, 4 mM or less, 5 mM or less, 2 mM or less, or 1 mM or less. Alternatively, such a content may be 1 to 20 mM, 1 to 18 mM, 1 to 15 mM, 2 to 15 mM, 3 to 15 mM, 4 to 15 mM, 5 to 15 mM, 6 to 15 mM, 7 to 15 mM, 8 to 15 mM, 9 to 15 mM, 10 to 15 mM, 1 to 12 mM, 2 to 12 mM, 3 to 12 mM, 4 to 12 mM, 5 to 12 mM, 6 to 12 mM, 7 to 12 mM, 8 to 12 mM, 9 to 12 mM, 10 to 12 mM, 1 to 10 mM, 1 mM or more and less than 10 mM, 2 to 10 mM, 3 to 10 mM, 4 to 10 mM, 5 to 10 mM, 6 to 10 mM, 7 to 10 mM, 8 to 10 mM, 9 to 10 mM, 0.1 to 3.0 mM, 0.1 to 2.5 mM, 0.1 to 2.0 mM, 0.1 to 1.5 mM, 0.1 to 1.0 mM, 0.1 to 0.5 mM, 0.5 to 3.0 mM, 0.5 to 2.5 mM, 0.5 to 2.0 mM, 0.5 to 1.5 mM, or 0.5 to 1.0 mM. Asparagine may be either the L-configuration, the D-configuration, or the racemic configuration (DL-configuration) but is preferably the L-configuration.

In an embodiment of the present invention, the sparkling beverage contains arginine and a content of arginine may be more than 0 mM and 4.0 mM or less, 3.5 mM or less, 3.0 mM or less, 2.5 mM or less, less than 2.5 mM, 2.0 mM or less, 1.5 mM or less, 1.0 mM or less, less than 1.0 mM, or 0.5 mM or less. Alternatively, such a content may be 0.1 to 4.0 mM, 0.1 to 3.5 mM, 0.1 to 3.0 mM, 0.1 to 2.5 mM, 0.1 to 2.0 mM, 0.1 to 1.5 mM, 0.1 to 1.0 mM, 0.1 mM or more and less than 1.0 mM, 0.1 to 0.5 mM, 0.5 to 4.0 mM, 0.5 to 3.5 mM, 0.5 to 3.0 mM, 0.5 to 2.5 mM, 0.5 to 2.0 mM, 0.5 to 1.5 mM, or 0.5 to 1.0 mM. Arginine may be either the L-configuration, the D-configuration, or the racemic configuration (DL-configuration) but is preferably the L-configuration.

In an embodiment of the present invention, the sparkling beverage contains lysine and a content of lysine may be more than 0 mM and 3.0 mM or less, 2.5 mM or less, 2.0 mM or less, 1.5 mM or less, 1.0 mM or less, or 0.5 mM or less. Alternatively, such a content may be 0.1 to 3.0 mM, 0.1 to 2.5 mM, 0.1 to 2.0 mM, 0.1 to 1.5 mM, 0.1 to 1.0 mM, 0.1 to 0.5 mM, 0.5 to 3.0 mM, 0.5 to 2.5 mM, 0.5 to 2.0 mM, 0.5 to 1.5 mM, or 0.5 to 1.0 mM. Lysine may be either the L-configuration, the D-configuration, or the racemic configuration (DL-configuration) but is preferably the L-configuration.

In an embodiment of the present invention, the sparkling beverage contains lysine hydrochloride and a content of lysine hydrochloride may be more than 0 mM and 1.0 mM or less, 0.9 mM or less, 0.8 mM or less, 0.7 mM or less, 0.6 mM or less, 0.5 mM or less, less than 0.5 mM, 0.4 mM or less, less than 0.4 mM, 0.3 mM or less, or 0.2 mM or less. Alternatively, such a content may be 0.1 to 1.0 mM, 0.1 to 0.9 mM, 0.1 to 0.8 mM, 0.1 to 0.7 mM, 0.1 to 0.6 mM, 0.1 to 0.5 mM, 0.1 to 0.4 mM, 0.1 mM or more and less than 0.4 mM, 0.1 to 0.3 mM, 0.1 to 0.2 mM, 0.2 to 1.0 mM, 0.5 to 0.8 mM, 0.2 to 0.6 mM, 0.2 to 0.4 mM, or 0.3 to 0.5 mM. Lysine may be either the L-configuration, the D-configuration, or the racemic configuration (DL-configuration) but is preferably the L-configuration.

In an embodiment of the present invention, the sparkling beverage contains histidine and a content of histidine may be more than 0 mM and 4.0 mM or less, 3.5 mM or less, 3.0 mM or less, 2.5 mM or less, 2.0 mM or less, 1.5 mM or less, 1.0 mM or less, or 0.5 mM or less. Alternatively, such a content may be 0.1 to 4.0 mM, 0.1 to 3.5 mM, 0.1 to 3.0 mM, 0.1 to 2.5 mM, 0.1 to 2.0 mM, 0.1 to 1.5 mM, 0.1 to 1.0 mM, 0.1 to 0.5 mM, 0.5 to 4.0 mM, 0.5 to 3.5 mM, 0.5 to 3.0 mM, 0.5 to 2.5 mM, 0.5 to 2.0 mM, 0.5 to 1.5 mM, or 0.5 to 1.0 mM. Histidine may be either the L-configuration, the D-configuration, or the racemic configuration (DL-configuration) but is preferably the L-configuration.

In an embodiment of the present invention, the sparkling beverage contains glutamic acid and a content of glutamic acid may be more than 0 mM and 0.50 mM or less, less than 0.50 mM, 0.40 mM or less, less than 0.40 mM, 0.35 mM or less, 0.30 mM or less, 0.25 mM or less, less than 0.25 mM, 0.20 mM or less, 0.15 mM or less, 0.14 mM or less, 0.13 mM or less, 0.12 mM or less, 0.11 mM or less, 0.10 mM or less, 0.09 mM or less, 0.08 mM or less, 0.07 mM or less, 0.06 mM or less, 0.05 mM or less, 0.04 mM or less, 0.03 mM or less, 0.02 mM or less, or 0.01 mM or less. Alternatively, such a content may be 0.01 to 0.15 mM, 0.02 to 0.15 mM, 0.03 to 0.15 mM, 0.04 to 0.15 mM, 0.05 to 0.15 mM, 0.06 to 0.15 mM, 0.07 to 0.15 mM, 0.08 to 0.15 mM, 0.09 to 0.15 mM, 0.10 to 0.15 mM, 0.01 to 0.12 mM, 0.02 to 0.12 mM, 0.03 to 0.12 mM, 0.04 to 0.12 mM, 0.05 to 0.12 mM, 0.06 to 0.12 mM, 0.07 to 0.12 mM, 0.08 to 0.12 mM, 0.09 to 0.12 mM, 0.10 to 0.12 mM, 0.01 to 0.10 mM, 0.02 to 0.10 mM, 0.03 to 0.10 mM, 0.04 to 0.10 mM, 0.05 to 0.10 mM, 0.06 to 0.10 mM, 0.07 to 0.10 mM, 0.08 to 0.10 mM, 0.09 to 0.10 mM, 0.10 to 0.40 mM, 0.10 to 0.35 mM, 0.10 to 0.30 mM, 0.10 to 0.25 mM, 0.10 mM or more and less than 0.25 mM, 0.10 to 0.20 mM, 0.10 to 0.15 mM, 0.20 to 0.40 mM, 0.20 to 0.35 mM, 0.20 to 0.30 mM, 0.20 to 0.25 mM, or 0.30 to 0.40 mM. Glutamic acid may be either the L-configuration, the D-configuration, or the racemic configuration (DL-configuration) but is preferably the L-configuration.

In an embodiment of the present invention, the sparkling beverage contains aspartic acid and a content of aspartic acid may be more than 0 mM and 1.5 mM or less, 1.4 mM or less, 1.3 mM or less, 1.2 mM or less, 1.1 mM or less, 1.0 mM or less, 0.9 mM or less, 0.8 mM or less, 0.7 mM or less, 0.6 mM or less, 0.5 mM or less, 0.4 mM or less, 0.3 mM or less, 0.2 mM or less, or 0.1 mM or less. Alternatively, such a content may be 0.1 to 1.5 mM, 0.2 to 1.5 mM, 0.3 to 1.5 mM, 0.4 to 1.5 mM, 0.5 to 1.5 mM, 0.6 to 1.5 mM, 0.7 to 1.5 mM, 0.8 to 1.5 mM, 0.9 to 1.5 mM, 1.0 to 1.5 mM, 0.1 to 1.2 mM, 0.2 to 1.2 mM, 0.3 to 1.2 mM, 0.4 to 1.2 mM, 0.5 to 1.2 mM, 0.6 to 1.2 mM, 0.7 to 1.2 mM, 0.8 to 1.2 mM, 0.9 to 1.2 mM, 1.0 to 1.2 mM, 0.1 to 1.0 mM, 0.2 to 1.0 mM, 0.3 to 1.0 mM, 0.4 to 1.0 mM, 0.5 to 1.0 mM, 0.6 to 1.0 mM, 0.7 to 1.0 mM, 0.8 to 1.0 mM, or 0.9 to 1.0 mM. Aspartic acid may be either the L-configuration, the D-configuration, or the racemic configuration (DL-configuration) but is preferably the L-configuration.

The sparkling beverage in an embodiment of the present invention does not contain monosodium aspartate as the amino acid salt.

An amino acid content can be measured by an amino acid automatic analysis method or high-performance liquid chromatography. When an amount of the amino acid contained in the beverage is known, a value calculated from the amount contained may be adopted.

In an embodiment of the present invention, when other raw material such as a fruit juice is used and an amino acid is contained in such other raw material, such an amino acid is also encompassed in the amino acid in the sparkling beverage of the present invention. Thus, an amount of the amino acid contained in the sparkling beverage of the present invention is a total value of amounts of such other raw material-derived one and one added externally. In an embodiment of the present invention, when a plurality of amino acids are contained in the sparkling beverage, a content of at least one of such amino acids may be less than the taste recognition threshold, or contents of some of such amino acids may be more than the taste recognition threshold. In other embodiments of the present invention, when a plurality of amino acids are contained in the sparkling beverage, a content of each of such amino acids may be less than the taste recognition threshold. The carbonated beverage in still another embodiment of the present invention may contain one or more amino acids selected from less than 20 mM of DL-alanine, less than 40 mM of L-serine, less than 50 mM of glycine, less than 1 mM of L-arginine, less than 0.25 mM of L-glutamic acid, less than 40 mM of L-valine, less than 5 mM of L-glutamine, less than 20 mM of L-leucine, less than 40 mM of L-threonine, less than 40 mM of L-proline, less than 10 mM of L-asparagine, and less than 0.4 mM of L-lysine hydrochloride. The sparkling beverage in still other embodiment of the present invention may contain one or more amino acids selected from 1 mM or more and less than 20 mM of DL-alanine, 1 mM or more and less than 40 mM of L-serine, 1 mM or more and less than 50 mM of glycine, 0.1 mM or more and less than 1.0 mM of L-arginine, 0.10 mM or more and less than 0.25 mM of L-glutamic acid, 1 mM or more and less than 40 mM of L-valine, 1 mM or more and less than 5 mM of L-glutamine, 1 mM or more and less than 20 mM of L-leucine, 1 mM or more and less than 40 mM of L-threonine, 1 mM or more and less than 40 mM of L-proline, 1 mM or more and less than 10 mM of L-asparagine, and 0.1 mM or more and less than 0.4 mM of L-lysine hydrochloride.

### [Optional component]

### (Sweetener)

The sparkling beverage of the present invention may contain a sweetener other than the high-intensity sweetener of the component (a). In the present description, the "sweetener" means any substance or a substance group which causes a sweetness response. Sweeteners can be classified into carbohydrate sweeteners and non-carbohydrate sweeteners based on structural characteristics and also into low-intensity sweeteners and high-intensity sweeteners based on the degree of sweetness. Further, sweet substances can also be classified based on the energy (calorie) into caloric sweeteners and non-caloric sweeteners. Further, sweet substances can also be classified based on the availability into natural sweeteners and artificial sweeteners. Note that, when other components including sweeteners such as fruit juices and milk contents are contained, such sweeteners are also encompassed in the sweeteners here described.

The carbohydrate sweetener is not limited and examples include starch sugars such as sucrose, lactose, glucose, maltose, starch syrup, a high-fructose corn syrup, and fructose, sugar alcohols such as erythritol, sorbitol, mannitol, maltitol, xylitol, and palatinit, sucrose, palatinose, fructooligosaccharide, Coupling Sugar^{(R)}, galactooligosaccharide, lactosucrose, raffinose, soyoligosaccharide, and honey. Further, the carbohydrate sweetener includes rare sugars.

The rare sugar refers to a monosaccharide that occurs in very small quantities in nature and derivatives thereof. For example, the rare sugar includes naturally occurring aldoses other than D-glucose, D-galactose, D-mannose, D-ribose, D-xylose, and L-arabinose, naturally occurring ketoses other than D-fructose, and naturally occurring sugar alcohols other than D-sorbitol. Nonrestrictive examples of the rare sugar include ketoses such as D-tagatose, D-sorbose, D-allulose (D-psicose), L-fructose, L-allulose (L-psicose), L-tagatose, and L-sorbose, aldoses such as altrose and D-allose, and sugar alcohols such as xylitol, erythritol, and D-talitol.

The caloric sweetener typically means sweet substances having an energy of 4 kcal/g. An energy of a sweet substance is already known or can be determined by measuring a content by HPLC or the like and calculating by multiplying the content by an energy conversion factor, or measuring a heat of physical combustion using a calorie meter (for example, bomb calorimeter) and correcting the heat with a digestion-absorption rate, an excreted heat or the like. Nonrestrictive examples of the caloric sweetener include sucrose, lactose, glucose, maltose, starch syrup, a high-fructose corn syrup, fructose.

The non-caloric sweeteners typically refer to those having the nature of being difficult to be digested in the body and consequently having a reduced energy to be taken into and mean sweet substances having an energy of less than 2 kcal/g, preferably less than 1 kcal/g, and further preferably less than 0.5 kcal/g. Nonrestrictive examples of the non-caloric sweetener include non-caloric hexoses such as allulose (psicose) and allose, non-caloric pentoses such as xylose and arabinose, non-caloric tetroses such as erythrose and threose, and non-caloric sugar alcohols such as erythritol and allitol.

Further, the sweet substances can also be classified based on the energy (calorie) level. For example, the sweet substances can be classified into sweet substances having an energy of 4 kcal/g or more and sweet substances having an energy of less than 4 kcal/g. The sweet substance having an energy of less than 4 kcal/g may further be classified into sweet substances having an energy of less than 3 kcal/g, sweet substances having an energy of less than 2.5 kcal/g, sweet substances having an energy of less than 2 kcal/g, sweet substances having an energy of less than 1.5 kcal/g, sweet substances having an energy of less than 1 kcal/g, sweet substances having an energy of less than 0.5 kcal/g, sweet substances having an energy of 1 kcal/g or more and less than 4 kcal/g, sweet substances having an energy of 2 kcal/g or more and less than 4 kcal/g, sweet substances having an energy of 3 kcal/g or more and less than 4 kcal/g, sweet substances having an energy of 2 kcal/g or more and less than 3 kcal/g, sweet substances having an energy of 1 kcal/g or more and less than 2 kcal/g, sweet substances having an energy of 0 kcal/g or more and less than 2 kcal/g, and sweet substances having an energy of 0 kcal/g or more and less than 1 kcal/g. Examples of the sweet substance having an energy of 4 kcal/g or more include sucrose, lactose, glucose, maltose, starch syrup, a high-fructose corn syrup, and fructose, examples of the sweet substance having an energy of 2 kcal/g or more and less than 4 kcal/g include sorbitol, xylitol, D-xylose, D-ribose, D-tagatose, and arabinose, and examples of the sweet substance having an energy of 0 kcal/g or more and less than 2 kcal/g include D-allulose, erythritol, allose, erythrose, threose, and allitol.

The low-intensity sweetener means a compound having about the same degree of sweetness as that of sucrose (for example, less than 5 times, about 0.1 to 2 times, about 0.5 to 1.5 times that of sucrose). Nonrestrictive examples of the low-intensity sweetener include low-intensity sugar sweeteners such as sucrose, a high-fructose corn syrup, glucose, fructose, lactose, maltose, xylose, lactulose, fructooligosaccharide, maltooligosaccharide, isomaltooligosaccharide, galactooligosaccharide, Coupling Sugar(R), and palatinose, and sugar alcohol low-intensity sweeteners such as maltitol, sorbitol, erythritol, xylitol, lactitol, palatinit, and reduced starch saccharified products. Further, the low-intensity sweetener includes rare sugars, caloric sweeteners, non-caloric sweeteners, carbohydrate sweeteners, non-carbohydrate sweeteners, natural sweeteners, and artificial sweeteners as long as the degree of sweetness is in the above range.

The sparkling beverage in an embodiment of the present invention contains a low-intensity sweetener. In other embodiments of the present invention, the following sparkling beverage (hereinafter, also referred to as the sparkling beverage of Embodiment A) is provided.

A sparkling beverage comprising:
(a) a high-intensity sweetener in an amount corresponding to a sweetness intensity Xa,
(b) an amino acid or a derivative or a salt thereof in an amount less than a taste recognition threshold, and
(c) a low-intensity sweetener in an amount corresponding to a sweetness intensity Xc (hereinafter, sometimes abbreviated as the "component (c)".),
   wherein the sparkling beverage has a sweetness of a sweetness intensity Xd exhibited by the components (a) to (c) and 0.1 < Xa + Xc < Xd is satisfied. Xc and Xd are respectively referred to as X4 and X6 in the first embodiment. The sparkling beverage in an embodiment of the present invention does not contain a component as a sweetener other than (a) a high-intensity sweetener in an amount corresponding to a sweetness intensity Xa and (c) a low-intensity sweetener in an amount corresponding to a sweetness intensity Xc. Note that, when other components including low-intensity sweeteners (for example, fructose and lactose) such as fruit juices and milk contents are contained in the sparkling beverage, such low-intensity sweeteners are encompassed in the sweetener (c).

In an embodiment of the present invention, the low-intensity sweetener contains a sweetener selected from hexose, pentose, tetrose, a polysaccharide having a terminal sugar of aldose or ketose, sugar alcohol, and a combination thereof. In other embodiments of the present invention, the low-intensity sweetener contains a sweetener selected from glucose, sucrose, fructose, maltose, an oligosaccharide, a high-fructose corn syrup, lactose, psicose, allose, tagatose, xylose, ribose, and a combination thereof. In still other embodiment of the present invention, the low-intensity sweetener contains a sweetener selected from glucose, sucrose, fructose, and a combination thereof.

The Xc in the "sweetness intensity Xc" may be 0 to 0.5, 0 to 1.0, 0 to 1.5, 0 to 2.0, 0 to 2.5, 0 to 3.0, 0 to 3.5, 0 to 4.0, 0 to 4.5, 0 to 5.0, 0 to 5.5, 0 to 6.0, 0 to 6.5, 0 to 7.0, 0 to 7.5, 0 to 8.0, 0 to 8.25, 0 to 8.5, 0 to 8.75, 0 to 9.0, 0 to 9.25, 0 to 9.5, 0 to 9.75, 0 to 10.0, 0.05 to 0.5, 0.05 to 1.0, 0.05 to 1.5, 0.05 to 2.0, 0.05 to 2.5, 0.05 to 3.0, 0.05 to 3.5, 0.05 to 4.0, 0.05 to 4.5, 0.05 to 5.0, 0.05 to 5.5, 0.05 to 6.0, 0.05 to 6.5, 0.05 to 7.0, 0.05 to 7.5, 0.05 to 8.0, 0.05 to 8.25, 0.05 to 8.5, 0.05 to 8.75, 0.05 to 9.0, 0.05 to 9.25, 0.05 to 9.5, 0.05 to 9.75, 0.05 to 10.0, 0.1 to 0.5, 0.1 to 1.0, 0.1 to 1.5, 0.1 to 2.0, 0.1 to 2.5, 0.1 to 3.0, 0.1 to 3.5, 0.1 to 4.0, 0.1 to 4.5, 0.1 to 5.0, 0.1 to 5.5, 0.1 to 6.0, 0.1 to 6.5, 0.1 to 7.0, 0.1 to 7.5, 0.1 to 8.0, 0.1 to 8.25, 0.1 to 8.5, 0.1 to 8.75, 0.1 to 9.0, 0.1 to 9.25, 0.1 to 9.5, 0.1 to 9.75, 0.1 to 10.0, 0.5 to 0.5, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 0.5 to 6.0, 0.5 to 6.5, 0.5 to 7.0, 0.5 to 7.5, 0.5 to 8.0, 0.5 to 8.25, 0.5 to 8.5, 0.5 to 8.75, 0.5 to 9.0, 0.5 to 9.25, 0.5 to 9.5, 0.5 to 9.75, 0.5 to 10.0, 1.0 to 0.5, 1.0 to 1.0, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.0 to 6.0, 1.0 to 6.5, 1.0 to 7.0, 1.0 to 7.5, 1.0 to 8.0, 1.0 to 8.25, 1.0 to 8.5, 1.0 to 8.75, 1.0 to 9.0, 1.0 to 9.25, 1.0 to 9.5, 1.0 to 9.75, 1.0 to 10.0, 1.5 to 0.5, 1.5 to 1.0, 1.5 to 1.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 1.5 to 6.0, 1.5 to 6.5, 1.5 to 7.0, 1.5 to 7.5, 1.5 to 8.0, 1.5 to 8.25, 1.5 to 8.5, 1.5 to 8.75, 1.5 to 9.0, 1.5 to 9.25, 1.5 to 9.5, 1.5 to 9.75, 1.5 to 10.0, 2.0 to 0.5, 2.0 to 1.0, 2.0 to 1.5, 2.0 to 2.0, 2.0 to 2.5, 2.0 to 3.0, 2.0 to 3.5, 2.0 to 4.0, 2.0 to 4.5, 2.0 to 5.0, 2.0 to 5.5, 2.0 to 6.0, 2.0 to 6.5, 2.0 to 7.0, 2.0 to 7.5, 2.0 to 8.0, 2.0 to 8.25, 2.0 to 8.5, 2.0 to 8.75, 2.0 to 9.0, 2.0 to 9.25, 2.0 to 9.5, 2.0 to 9.75, 2.0 to 10.0, 2.5 to 0.5, 2.5 to 1.0, 2.5 to 1.5, 2.5 to 2.0, 2.5 to 2.5, 2.5 to 3.0, 2.5 to 3.5, 2.5 to 4.0, 2.5 to 4.5, 2.5 to 5.0, 2.5 to 5.5, 2.5 to 6.0, 2.5 to 6.5, 2.5 to 7.0, 2.5 to 7.5, 2.5 to 8.0, 2.5 to 8.25, 2.5 to 8.5, 2.5 to 8.75, 2.5 to 9.0, 2.5 to 9.25, 2.5 to 9.5, 2.5 to 9.75, 2.5 to 10.0, 0.1 to 5.9, 3.0 to 3.5, 3.0 to 4.0, 3.0 to 4.5, 3.0 to 5.0, or 3.0 to 5.5.

The Xc may also be 0 to 10.5, 0 to 11.0, 0 to 11.5, 0 to 12.0, 0 to 12.5, 0 to 13.0, 0 to 13.5, 0 to 14.0, 0 to 14.5, 0 to 15.0, 0.05 to 10.5, 0.05 to 11.0, 0.05 to 11.5, 0.05 to 12.0, 0.05 to 12.5, 0.05 to 13.0, 0.05 to 13.5, 0.05 to 14.0, 0.05 to 14.5, 0.05 to 15.0, 0.1 to 10.5, 0.1 to 11.0, 0.1 to 11.5, 0.1 to 12.0, 0.1 to 12.5, 0.1 to 13.0, 0.1 to 13.5, 0.1 to 14.0, 0.1 to 14.5, 0.1 to 15.0, 0.5 to 10.5, 0.5 to 11.0, 0.5 to 11.5, 0.5 to 12.0, 0.5 to 12.5, 0.5 to 13.0, 0.5 to 13.5, 0.5 to 14.0, 0.5 to 14.5, 0.5 to 15.0, 1.0 to 10.5, 1.0 to 11.0, 1.0 to 11.5, 1.0 to 12.0, 1.0 to 12.5, 1.0 to 13.0, 1.0 to 13.5, 1.0 to 14.0, 1.0 to 14.5, 1.0 to 15.0, 1.5 to 10.5, 1.5 to 11.0, 1.5 to 11.5, 1.5 to 12.0, 1.5 to 12.5, 1.5 to 13.0, 1.5 to 13.5, 1.5 to 14.0, 1.5 to 14.5, 1.5 to 15.0, 2.0 to 10.5, 2.0 to 11.0, 2.0 to 11.5, 2.0 to 12.0, 2.0 to 12.5, 2.0 to 13.0, 2.0 to 13.5, 2.0 to 14.0, 2.0 to 14.5, 2.0 to 15.0, 2.5 to 10.5, 2.5 to 11.0, 2.5 to 11.5, 2.5 to 12.0, 2.5 to 12.5, 2.5 to 13.0, 2.5 to 13.5, 2.5 to 14.0, 2.5 to 14.5, or 2.5 to 15.0.

In an embodiment of the present invention, Xc is preferably 0.05 to 6.0, more preferably 0.05 to 5.0, and still more preferably 0.1 to 4.0.

The amount corresponding to a sweetness intensity Xc of a low-intensity sweetener refers to an amount (concentration) which provides a sweetness of a sweetness intensity Xc under the conditions when the low-intensity sweetener is dissolved in water having the same volume as the sparkling beverage of the present invention at 20°C.

The Xd is not particularly limited as long as it is greater than Xa + Xc and may be 4.0 to 20, 4.0 to 15, 4.0 to 12.5, 4.0 to 10, 4.5 to 20, 4.5 to 15, 4.5 to 12.5, 4.5 to 10, 5.0 to 20, 5.0 to 15, 5.0 to 12.5, 5.0 to 10, 5.5 to 20, 5.5 to 15, 5.5 to 12.5, 5.5 to 10, 6.0 to 20, 6.0 to 15, 6.0 to 12.5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8.0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15, or 10.5 to 12.5. The Xd may also be 4.0 to 18, 4.0 to 16, 4.0 to 15.5, 4.0 to 14, 4.5 to 18, 4.5 to 16, 4.5 to 15.5, 4.5 to 14, 5.0 to 18, 5.0 to 16, 5.0 to 15.5, 5.0 to 14, 5.5 to 18, 5.5 to 16, 5.5 to 15.5, 5.5 to 14, 6.0 to 18, 6.0 to 16, 6.0 to 15.5, 6.0 to 14, 6.5 to 18, 6.5 to 16, 6.5 to 15.5, 6.5 to 14, 7.0 to 18, 7.0 to 16, 7.0 to 15.5, 7.0 to 14, 7.5 to 18, 7.5 to 16, 7.5 to 15.5, 7.5 to 14, 7.5 to 9, 7.5 to 8, 8.0 to 18, 8.0 to 18, 8.0 to 16, 8.0 to 15.5, 8.0 to 14, 8.5 to 18, 8.5 to 16, 8.5 to 15.5, 8.5 to 14, 9.0 to 18, 9.0 to 16, 9.0 to 15.5, 9.0 to 14, 9.5 to 18, 9.5 to 16, 9.5 to 15.5, 9.5 to 14, 10.0 to 18, 10.0 to 16, 10.0 to 15.5, 10.5 to 18, 10.5 to 16, or 10.5 to 15.5.

### [Sodium]

The sparkling beverage of the C1-th embodiment of the present invention may contain a small amount of sodium. A content of sodium may also be, depending on an embodiment, a content of 0 mg/100 ml or more and less than 5 mg/100 ml, 0 to 4.5 mg/100 ml, 0 to 4.0 mg/100 ml, 0 to 3.5 mg/100 ml, 0 to 3.0 mg/100 ml, 0 to 2.5 mg/100 ml, 0 to 2.0 mg/100 ml, 0 to 1.9 mg/100 ml, 0 to 1.8 mg/100 ml, 0 to 1.7 mg/100 ml, 0 to 1.6 mg/100 ml, 0 to 1.5 mg/100 ml, 0 to 1.4 mg/100 ml, 0 to 1.3 mg/100 ml, 0 to 1.2 mg/100 ml, 0 to 1.1 mg/100 ml, 0 to 1.0 mg/100 ml, 0.1 mg/100 ml or more and less than 5 mg/100 ml, 0.1 to 4.5 mg/100 ml, 0.1 to 4.0 mg/100 ml, 0.1 to 3.5 mg/100 ml, 0.1 to 3.0 mg/100 ml, 0.1 to 2.5 mg/100 ml, 0.1 to 2.0 mg/100 ml, 0.1 to 1.9 mg/100 ml, 0.1 to 1.8 mg/100 ml, 0.1 to 1.7 mg/100 ml, 0.1 to 1.6 mg/100 ml, 0.1 to 1.5 mg/100 ml, 0.1 to 1.4 mg/100 ml, 0.1 to 1.3 mg/100 ml, 0.1 to 1.2 mg/100 ml, 0.1 to 1.1 mg/100 ml, 0.1 to 1.0 mg/100 ml, 0.5 mg/100 ml or more and less than 5 mg/100 ml, 0.5 to 4.5 mg/100 ml, 0.5 to 4.0 mg/100 ml, 0.5 to 3.5 mg/100 ml, 0.5 to 3.0 mg/100 ml, 0.5 to 2.5 mg/100 ml, 0.5 to 2.0 mg/100 ml, 0.5 to 1.9 mg/100 ml, 0.5 to 1.8 mg/100 ml, 0.5 to 1.7 mg/100 ml, 0.5 to 1.6 mg/100 ml, 0.5 to 1.5 mg/100 ml, 0.5 to 1.4 mg/100 ml, 0.5 to 1.3 mg/100 ml, 0.5 to 1.2 mg/100 ml, 0.5 to 1.1 mg/100 ml, 0.5 to 1.0 mg/100 ml, 1.0 mg/100 ml or more and less than 5 mg/100 ml, 1.0 to 4.5 mg/100 ml, 1.0 to 4.0 mg/100 ml, 1.0 to 3.5 mg/100 ml, 1.0 to 3.0 mg/100 ml, 1.0 to 2.5 mg/100 ml, 1.0 to 2.0 mg/100 ml, 1.0 to 1.9 mg/100 ml, 1.0 to 1.8 mg/100 ml, 1.0 to 1.7 mg/100 ml, 1.0 to 1.6 mg/100 ml, 1.0 to 1.5 mg/100 ml, 1.0 to 1.4 mg/100 ml, 1.0 to 1.3 mg/100 ml, 1.0 to 1.2 mg/100 ml, or 1.0 to 1.1 mg/100 ml.

In an embodiment of the present invention, sodium is derived from a fruit juice or inevitably incorporated, and is not added. The content of sodium in the beverage can be herein measured by an atomic absorption spectrometry.

### (Other components)

The sparkling beverage of the present invention can suitably contain an antioxidant (sodium erythorbate or the like), an emulsifier (sucrose esters of fatty acids, sorbitan esters of fatty acids, polyglycerin esters of fatty acids or the like), an acidulant (phosphoric acid, citric acid, malic acid or the like), and a flavor, as long as the effects of the present invention are not affected.

The sparkling beverage of the present invention may contain one or more selected from the group consisting of caramel, cinnamaldehyde, phosphoric acid, vanilla and caffeine. The caffeine here can be in the form of not only a purified product (a purified product having a content of caffeine of 98.5% or more) usable as a food additive or a roughly purified product (having a content of caffeine of 50 to 98.5%) usable as a food product, but also an extract of any plant (tea leaf, cola seed, coffee bean, guarana, or the like) containing caffeine, or a concentrate thereof. In an embodiment of the present invention, a content of caffeine in the sparkling beverage can be 1 to 200 ppm. The amount of caffeine may be determined by use of any method, and can be determined by, for example, filtering the sparkling beverage with a membrane filter (cellulose acetate membrane 0.45 µm, manufactured by Advantec Co., Ltd.) and subjecting a sample to high-performance liquid chromatography (HPLC).

In another embodiment, the sparkling beverage of the present invention can contain cinnamaldehyde. Such cinnamaldehyde (C₆H₃CH=CH-CHO, molecular weight 132.16) is one aromatic aldehyde known as a cinnamon aroma component, and can be available as a flavor formulation. In an embodiment of the present invention, the sparkling beverage can contain cinnamaldehyde in an amount falling within a specific range. For example, the content of cinnamaldehyde in the sparkling beverage of the present invention is 0.5 to 50 ppm and preferably 0.5 to 32 ppm, and can be 1.0 to 20 ppm. The amount of cinnamaldehyde can be determined by, for example, a method using gas chromatography, a mass spectrometer, or the like.

In still another embodiment, the sparkling beverage of the present invention can contain caramel (or a caramel coloring). Such caramel used herein can be a known caramel coloring suitable for edible use. For example, one obtained by heat treatment of an edible carbohydrate typified by sugar or glucose, or one obtained by heat treatment of an edible carbohydrate with addition of acid or alkali can be used. A caramel formed from a sugar content contained in a fruit juice or a vegetable juice can also be used, and in this case, a caramel can be formed from a sugar content by heating treatment, treatment with acid or alkali, or the like. The sparkling beverage of the present invention can contain a caramel coloring in a content falling within a specific range.

### [Exemplary embodiments of the sparkling beverage of C1-th embodiment of the present invention]

In an embodiment of the present invention, a sparkling beverage is provided comprising:
(a) a high-intensity sweetener in an amount corresponding to a sweetness intensity Xa, and
(b) an amino acid or a derivative or a salt thereof in an amount less than a taste recognition threshold,

wherein the sparkling beverage has a sweetness of a sweetness intensity Xb exhibited by the components (a) and (b) and 0.1 < Xa < Xb is satisfied,
wherein the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof,
Xa is 0.5 to 5.5, preferably 1.0 to 5.5, and more preferably 2.0 to 5.0, and
the amino acid or a derivative or a salt thereof comprises an amino acid selected from DL-alanine, L-serine, glycine, L-arginine, L-glutamic acid, L-valine, and L-glutamine. In the present embodiment, an amount of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm.

In an embodiment of the present invention, a sparkling beverage is provided comprising:
(a) a high-intensity sweetener in an amount corresponding to a sweetness intensity Xa, and
(b) an amino acid or a derivative or a salt thereof in an amount less than a taste recognition threshold,

wherein the sparkling beverage has a sweetness of a sweetness intensity Xb exhibited by the components (a) and (b) and 0.1 < Xa < Xb is satisfied,
wherein the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof,
Xa is 0.5 to 10.0, preferably 1.5 to 9.0, and more preferably 2.0 to 8.0, and
the amino acid or a derivative or a salt thereof comprises an amino acid selected from DL-alanine, L-serine, glycine, L-arginine, L-glutamic acid, L-valine, and L-glutamine. In the present embodiment, an amount of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm.

In an embodiment of the present invention, a sparkling beverage is provided comprising:
(a) a high-intensity sweetener in an amount corresponding to a sweetness intensity Xa,
(b) an amino acid or a derivative or a salt thereof in an amount less than a taste recognition threshold, and
(c) a low-intensity sweetener in an amount corresponding to a sweetness intensity Xc,

wherein the sparkling beverage has a sweetness of a sweetness intensity Xd exhibited by the components (a) to (c) and 0.1 < Xa + Xc < Xd is satisfied,
the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof,
Xa is 0.5 to 5.5, preferably 1.0 to 5.5, and more preferably 2.0 to 5.0,
the amino acid or a derivative or a salt thereof comprises an amino acid selected from DL-alanine, L-serine, glycine, L-arginine, L-glutamic acid, L-valine, and L-glutamine,
the low-intensity sweetener comprises a sweetener selected from glucose, sucrose, fructose, maltose, an oligosaccharide, a high-fructose corn syrup, lactose, psicose, allose, tagatose, xylose, ribose, and a combination thereof, and
Xc is 0.05 to 6.0, preferably 0.05 to 5.0, more preferably 0.1 to 4.0. In the present embodiment, an amount of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm.

In an embodiment of the present invention, a sparkling beverage is provided comprising:
(a) a high-intensity sweetener in an amount corresponding to a sweetness intensity Xa,
(b) an amino acid or a derivative or a salt thereof in an amount less than a taste recognition threshold, and
(c) a low-intensity sweetener in an amount corresponding to a sweetness intensity Xc,

wherein the sparkling beverage has a sweetness of a sweetness intensity Xd exhibited by the components (a) to (c) and 0.1 < Xa + Xc < Xd is satisfied,
wherein the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof,
Xa is 0.5 to 5.5, preferably 1.0 to 5.5, and more preferably 2.0 to 5.0,
the amino acid or a derivative or a salt thereof comprises an amino acid selected from less than 20 mM of DL-alanine, less than 40 mM of L-serine, less than 50 mM of glycine, less than 1 mM of L-arginine, less than 0.25 mM of L-glutamic acid, less than 40 mM of L-valine, less than 5 mM of L-glutamine, less than 20 mM of L-leucine, less than 40 mM of L-threonine, less than 40 mM of L-proline, less than 10 mM of L-asparagine, and less than 0.4 mM of L-lysine hydrochloride,
the low-intensity sweetener comprises a sweetener selected from glucose, sucrose, fructose, maltose, an oligosaccharide, a high-fructose corn syrup, lactose, psicose, allose, tagatose, xylose, ribose, and a combination thereof, and
Xc is 0.05 to 6.0, preferably 0.05 to 5.0, and more preferably 0.1 to 4.0. In the present embodiment, an amount of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm.

In an embodiment of the present invention, a sparkling beverage is provided comprising:
(a) a high-intensity sweetener in an amount corresponding to a sweetness intensity Xa,
(b) an amino acid or a derivative or a salt thereof in an amount less than a taste recognition threshold, and
(c) a low-intensity sweetener in an amount corresponding to a sweetness intensity Xc,

wherein the sparkling beverage has a sweetness of a sweetness intensity Xd exhibited by the components (a) to (c) and 0.1 < Xa + Xc < Xd is satisfied,
wherein the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof,
Xa is 0.5 to 5.5, preferably 1.0 to 5.5, and more preferably 2.0 to 5.0,
the amino acid or a derivative or a salt thereof comprises an amino acid selected from arginine, lysine, histidine, phenylalanine, tyrosine, leucine, isoleucine, methionine, valine, alanine, glycine, proline, glutamic acid, serine, threonine, aspartic acid, and tryptophan,
the low-intensity sweetener comprises a sweetener selected from glucose, sucrose, fructose, and a combination thereof, and
Xc is 0.05 to 6.0, preferably 0.05 to 5.0, and more preferably 0.1 to 4.0. In the present embodiment, an amount of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm.

In an embodiment of the present invention, a sparkling beverage is provided comprising:
(a) a high-intensity sweetener in an amount corresponding to a sweetness intensity Xa,
(b) an amino acid or a derivative or a salt thereof in an amount less than a taste recognition threshold, and
(c) a low-intensity sweetener in an amount corresponding to a sweetness intensity Xc,

wherein the sparkling beverage has a sweetness of a sweetness intensity Xd exhibited by the components (a) to (c) and 0.1 < Xa + Xc < Xd is satisfied,
wherein the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof,
Xa is 0.5 to 5.5, preferably 1.0 to 5.5, and more preferably 2.0 to 5.0,
the amino acid or a derivative or a salt thereof comprises an amino acid selected from arginine, valine, alanine, glycine, proline, glutamic acid, serine, threonine, aspartic acid, and tryptophan,
the low-intensity sweetener comprises a sweetener selected from glucose, sucrose, fructose, and a combination thereof, and
Xc is 0.05 to 6.0, preferably 0.05 to 5.0, and more preferably 0.1 to 4.0. In the present embodiment, an amount of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm.

In an embodiment of the present invention, a sparkling beverage is provided comprising:
(a) a high-intensity sweetener in an amount corresponding to a sweetness intensity Xa,
(b) an amino acid or a derivative or a salt thereof in an amount less than a taste recognition threshold, and
(c) a low-intensity sweetener in an amount corresponding to a sweetness intensity Xc,

wherein the sparkling beverage has a sweetness of a sweetness intensity Xd exhibited by the components (a) to (c) and 0.1 < Xa + Xc < Xd is satisfied, and
the sparkling beverage comprises one or more amino acids selected from alanine, serine, and glycine, an energy is 50 Kcal/100 ml or less, and Xa + Xc is 6 or more.

In an embodiment of the present invention, a sparkling beverage is provided comprising:
(a) a high-intensity sweetener in an amount corresponding to a sweetness intensity Xa,
(b) one or more amino acids selected from alanine, serine, and glycine, and
(c) a low-intensity sweetener in an amount corresponding to a sweetness intensity Xc,

wherein the sparkling beverage has a sweetness of a sweetness intensity Xd exhibited by the components (a) to (c) and 0.1 < Xa + Xc < Xd is satisfied, and
an energy is 50 Kcal/100 ml or less, and Xa + Xc is 6 or more. In the present embodiment, an amount of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm.

### <<D1-th embodiments

The present invention provides, as the D1-th embodiment, the following sparkling beverage (hereinafter also referred to as "the sparkling beverage D of the present invention").

A sparkling beverage comprising:
(a) a high-intensity sweetener in an amount corresponding to a sweetness intensity X1,
(b) an amino acid or a derivative or a salt thereof in an amount less than a taste recognition threshold, and
(c) 6 to 60 mg/100 ml of sodium,
   wherein the sparkling beverage has a sweetness of a sweetness intensity X2 exhibited by the components (a) to (c) and 0.1 < X1 < X2 is satisfied.

In other words, in the sparkling beverage of the D1-th embodiment of the present invention, the component having a sweetness is (a) a high-intensity sweetener in an amount corresponding to a sweetness intensity X1, and the sweetness of the sparkling beverage of the present invention is supposed to be a sweetness intensity X1 when calculated. However, the presence of (b) an amino acid or a derivative or a salt thereof in an amount less than a taste recognition threshold and (c) 6 to 60 mg/100 ml of sodium, in the sparkling beverage even in low concentrations enhances the sweetness of (a) a high-intensity sweetener in an amount corresponding to a sweetness intensity X1, to a sweetness intensity X2 (0.1 < X1 < X2 is satisfied herein). The present invention means to possibly include, in addition to these components (a) to (c), further a sweetener other than (a); and optional components, for example, other components such as an acidulant, a flavor, a vitamin, a coloring, an antioxidant, an emulsifier, a preservative, a seasoning agent, an extract, a pH adjuster, a quality stabilizer, a fruit juice, a plant extract, a milk content, and caffeine. The sparkling beverage in an embodiment of the present invention does not contain a substance having a sweetness, as a sweetener, other than the component (a).

Furthermore, the sparkling beverage in a preferable embodiment of the present invention exerts the effect of improving a taste, other than enhancing a sweetness. For example, in the sparkling beverage in an embodiment of the present invention, at least one of "total sweetness", "reduced aftertaste of sweetness", "body, thickness", "flavor intensity", "reduced unpleasant tastes (bitterness, astringency, and the like)", "saltiness" and "carbonic acid feeling" is preferably improved. In a preferable embodiment of the present invention, "carbonic acid feeling" is made mild by a combination of alanine and sodium. "Body, thickness" is improved by a combination of serine or glycine and sodium.

### (Sparkling beverage)

In the present invention, the "sparkling beverage" is a beverage from which bubbles are generated, and encompasses, for example, a beverage which, when poured into a container, allows a bubble layer to be formed on a liquid surface of the beverage. Examples of the sparkling beverage of the present invention include a carbonated beverage. The carbonated beverage is a beverage containing a carbon dioxide gas, and such a carbon dioxide gas encompasses a carbon dioxide gas separately injected into the beverage, and a carbon dioxide gas generated by fermentation of some of raw materials. The carbonated beverage is not particularly limited, and examples thereof include soft beverages, non-alcoholic beverages, and alcoholic beverages. Specific examples include sparkly beverages, colas, diet colas, ginger ales, ciders, fruit juice flavor carbonated beverages, and carbonated water to which fruit juice flavors are imparted, but not limited thereto.

The gas pressure of the sparkling beverage of the present invention is not particularly limited, and can be 2.2 to 4.0 kgf/cm², 2.2 to 3.5 kgf/cm², 2.2 to 3.3 kgf/cm², 2.2 to 3.2 kgf/cm², 2.3 to 4.0 kgf/cm², 2.3 to 3.5 kgf/cm², 2.3 to 3.2 kgf/cm², 3.0 to 4.0 kgf/cm², or 3.0 to 3.5 kgf/cm². The content of gas in the sparkling beverage can be determined by the gas pressure. As used herein, the "gas pressure" refers to, unless particularly noted, the gas pressure of a carbon dioxide gas in the sparkling beverage in a container. The gas pressure can be measured by fixing the beverage at a liquid temperature of 20°C, to a gas internal pressure meter, once draining a carbon dioxide gas in a headspace by atmospheric relief with opening of a stopper cock of the gas internal pressure meter and then closing again the stopper cock, and reading a value at which an indicator reaches a certain position during shaking and moving of the gas internal pressure meter. The gas pressure of the sparkling beverage is herein measured with the above method, unless particularly described.

The sparkling beverage of the present invention may contain an alcohol. The alcoholic beverage refers to an alcohol-containing beverage, and the alcohol as mentioned herein means ethyl alcohol (ethanol), unless particularly noted. The alcoholic beverage according to the present invention is not limited in terms of type thereof as long as it contains any alcohol. The alcoholic beverage may be a beverage having an alcohol content of 0.05 to 40 v/v%, such as a beer, a sparkling liquor, *chuhai,* highball, or a cocktail, or may be a beverage having an alcohol content of less than 0.05 v/v%, such as a non-alcoholic beer, a *chuhai* taste beverage, or a soft beverage. The sparkling beverage of the present invention preferably has an alcohol content of less than 0.05 v/v%, further preferably 0.00 v/v%. As used herein, the alcohol content is expressed by a percentage based on volume/volume (v/v%). The alcohol content in the beverage can be measured by any known method, and can be measured with, for example, an oscillating densitometer.

The flavor of the sparkling beverage of the present invention is not particularly limited, and can be adjusted to various flavors. For example, the sparkling beverage of the present invention may be an orange-flavored, lemon-flavored, lime-flavored, grape-flavored, ginger ale-flavored, energy drink-flavored, blackcurrant-flavored or cola-flavored beverage. The flavor of the sparkling beverage of the present invention can be adjusted by adding a component which is approved as a food additive such as a fruit juice, an acidulant, a flavor, a plant extract, a milk content, and other flavor, or which, even if not approved, has been eaten since early times and is commonly recognized to be safe. In an embodiment of the present invention, the sparkling beverage of the present invention is not a beer taste beverage.

The sparkling beverage of the present invention may be a jelly beverage.

The form of the sparkling beverage of the present invention is not limited, and may be, for example, a sparkling beverage form packed in a container, which is contained and packed in a container such as a may, a bottle or a PET bottle.

### [Sweetness intensity]

As used herein, the "sweetness intensity" means an intensity of sweetness of a substance. For example, when the sweetness intensity of sucrose per unit concentration Brix 1 is defined as a degree of sweetness of 1, a degree of sweetness of glucose is 0.6 to 0.7 (median value 0.65). A numerical value obtained by multiplying this degree of sweetness by a concentration Brix value of glucose is the sweetness intensity of glucose. Thus, when a concentration of glucose is Brix 1.5, the sweetness intensity of glucose is 0.65 x 1.5 = 0.975. The degrees of sweetness of common sweeteners are as shown in Table 1 described with respect to the A1-th embodiment.

The sparkling beverage of the present invention contains, as described above, a high-intensity sweetener in an amount corresponding to a sweetness intensity X1 and has a sweetness of a sweetness intensity X2 exhibited by the components (a) to (c) and 0.1 < X1 < X2 is satisfied.

The X1 in the "sweetness intensity X1" may be more than 0.1 and 0.5 or less, more than 0.1 and 1.0 or less, more than 0.1 and 1.5 or less, more than 0.1 and 2.0 or less, more than 0.1 and 2.5 or less, more than 0.1 and 3.0 or less, more than 0.1 and 3.5 or less, more than 0.1 and 4.0 or less, more than 0.1 and 4.5 or less, more than 0.1 and 5.0 or less, more than 0.1 and 5.5 or less, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 2.0 to 2.5, 2.0 to 3.0, 2.0 to 3.5, 2.0 to 4.0, 2.0 to 4.5, 2.0 to 5.0, 2.0 to 5.5, 2.5 to 3.0, 2.5 to 3.5, 2.5 to 4.0, 2.5 to 4.5, 2.5 to 5.0, 2.5 to 5.5, 3.0 to 3.5, 3.0 to 4.0, 3.0 to 4.5, 3.0 to 5.0, 3.0 to 5.5, 2.0 to 6.5, 2.0 to 7.0, 2.0 to 7.5, 2.0 to 6.0, 2.5 to 7.0, 2.5 to 7.5, 2.5 to 6.0, 2.5 to 6.5, 3.0 to 6.0, 3.0 to 6.5, 3.0 to 7.0, 3.0 to 7.5, 3.0 to 8.0, 3.0 to 8.5, 3.0 to 9.0, 3.0 to 9.5, 3.5 to 7.0, 3.5 to 7.5, 3.5 to 8.0, 4.5 to 8.5, 3.5 to 9.0, 3.5 to 9.5, 4.0 to 7.5, 4.0 to 8.0, 4.0 to 8.5, 4.0 to 9.0, 4.0 to 9.5, 3.5 to 8.5, 3.5 to 10.0, 3.5 to 10.5, 3.5 to 11.0, 3.5 to 11.5, or 4.0 to 11.5.

The X1 may also be more than 0.1 and 6.0 or less, more than 0.1 and 6.5 or less, more than 0.1 and 7.0 or less, more than 0.1 and 7.5 or less, more than 0.1 and 8.0 or less, more than 0.1 and 8.5 or less, more than 0.1 and 9.0 or less, more than 0.1 and 9.5 or less, more than 0.1 and 10.0 or less, more than 0.1 and 10.5 or less, more than 0.1 and 11.0 or less, more than 0.1 and 11.5 or less, more than 0.1 and 12.0 or less, more than 0.1 and 13.0 or less, more than 0.1 and 14.0 or less, more than 0.1 and 15.0 or less, more than 0.1 and 16.0 or less, more than 0.1 and 17.0 or less, more than 0.1 and 18.0 or less, 0.5 to 6.0, 0.5 to 6.5, 0.5 to 7.0, 0.5 to 7.5, 0.5 to 8.0, 0.5 to 8.5, 0.5 to 9.0, 0.5 to 9.5, 0.5 to 10.0, 0.5 to 10.5, 0.5 to 11.0, 0.5 to 11.5, 0.5 to 12.0, 0.5 to 13.0, 0.5 to 14.0, 0.5 to 15.0, 0.5 to 16.0, 0.5 to 17.0, 0.5 to 18.0, 1.0 to 6.0, 1.0 to 6.5, 1.0 to 7.0, 1.0 to 7.5, 1.0 to 8.0, 1.0 to 8.5, 1.0 to 9.0, 1.0 to 9.5, 1.0 to 10.0, 1.0 to 10.5, 1.0 to 11.0, 1.0 to 11.5, 1.0 to 12.0, 1.0 to 13.0, 1.0 to 14.0, 1.0 to 15.0, 1.0 to 16.0, 1.0 to 17.0, 1.0 to 18.0, 1.5 to 6.0, 1.5 to 6.5, 1.5 to 7.0, 1.5 to 7.5, 1.5 to 8.0, 1.5 to 8.5, 1.5 to 9.0, 1.5 to 9.5, 1.5 to 10.0, 1.5 to 10.5, 1.5 to 11.0, 1.5 to 11.5, 1.5 to 12.0, 1.5 to 13.0, 1.5 to 14.0, 1.5 to 15.0, 1.5 to 16.0, 1.5 to 17.0, 1.5 to 18.0, 2.0 to 8.0, 2.0 to 8.5, 2.0 to 9.0, 2.0 to 9.5, 2.0 to 10.0, 2.0 to 10.5, 2.0 to 11.0, 2.0 to 11.5, 2.0 to 12.0, 2.0 to 13.0, 2.0 to 14.0, 2.0 to 15.0, 2.0 to 16.0, 2.0 to 17.0, 2.0 to 18.0, 2.5 to 8.0, 2.5 to 8.5, 2.5 to 9.0, 2.5 to 9.5, 2.5 to 10.0, 2.5 to 10.5, 2.5 to 11.0, 2.5 to 11.5, 2.5 to 12.0, 2.5 to 13.0, 2.5 to 14.0, 2.5 to 15.0, 2.5 to 16.0, 2.5 to 17.0, 2.5 to 18.0, 3.0 to 10.0, 3.0 to 10.5, 3.0 to 11.0, 3.0 to 11.5, 3.0 to 12.0, 3.0 to 13.0, 3.0 to 14.0, 3.0 to 15.0, 3.0 to 16.0, 3.0 to 17.0, 3.0 to 18.0, 3.5 to 4.0, 3.5 to 4.5, 3.5 to 5.0, 3.5 to 5.5, 3.5 to 6.0, 3.5 to 6.5, 3.5 to 12.0, 3.5 to 13.0, 3.5 to 14.0, 3.5 to 15.0, 3.5 to 16.0, 3.5 to 17.0, 3.5 to 18.0, 4.0 to 4.5, 4.0 to 5.0, 4.0 to 5.5, 4.0 to 6.0, 4.0 to 6.5, 4.0 to 7.0, 4.0 to 10.0, 4.0 to 10.5, 4.0 to 11.0, 4.0 to 12.0, 4.0 to 13.0, 4.0 to 14.0, 4.0 to 15.0, 4.0 to 16.0, 4.0 to 17.0, or 4.0 to 18.0.

In an embodiment of the present invention, the X1 is preferably 0.5 to 10.0, more preferably 1.5 to 9.0, and still more preferably 2.0 to 8.0. In another embodiment of the present invention, the X1 is preferably 0.5 to 5.5, more preferably 1.0 to 5.5, and still more preferably 2.0 to 5.0.

The amount corresponding to a sweetness intensity X1 of a high-intensity sweetener refers to an amount which provides a sweetness of a sweetness intensity X1 under the conditions when the high-intensity sweetener is dissolved in water having the same volume as the sparkling beverage of the present invention at 20°C.

Further, the amount of a high-intensity sweetener may be Pa ppm and Pa ppm herein refers to an amount corresponding to a sweetness intensity X1. The Pa herein may be a value of about 20 to about 800, about 25 to about 800, about 30 to about 800, about 35 to about 800, about 40 to about 800, about 45 to about 800, about 50 to about 800, about 55 to about 800, about 20 to about 750, about 25 to about 750, about 30 to about 750, about 35 to about 750, about 40 to about 750, about 45 to about 750, about 50 to about 750, about 55 to about 750, about 20 to about 700, about 25 to about 700, about 30 to about 700, about 35 to about 700, about 40 to about 700, about 45 to about 700, about 50 to about 700, about 55 to about 700, about 20 to about 650, about 25 to about 650, about 30 to about 650, about 35 to about 650, about 40 to about 650, about 45 to about 650, about 50 to about 650, about 55 to about 650, about 20 to about 600, about 25 to about 600, about 30 to about 600, about 35 to about 600, about 40 to about 600, about 45 to about 600, about 50 to about 600, about 55 to about 600, about 20 to about 550, about 25 to about 550, about 30 to about 550, about 35 to about 550, about 40 to about 550, about 45 to about 550, about 50 to about 550, about 55 to about 550, about 20 to about 540, about 25 to about 540, about 30 to about 540, about 35 to about 540, about 40 to about 540, about 45 to about 540, about 50 to about 540, about 55 to about 540, about 20 to about 530, about 25 to about 530, about 30 to about 530, about 35 to about 530, about 40 to about 530, about 45 to about 530, about 50 to about 530, about 55 to about 530, about 20 to about 520, about 25 to about 520, about 30 to about 520, about 35 to about 520, about 40 to about 520, about 45 to about 520, about 50 to about 520, about 55 to about 520, about 20 to about 510, about 25 to about 510, about 30 to about 510, about 35 to about 510, about 40 to about 510, about 45 to about 510, about 50 to about 510, about 55 to about 510, about 20 to about 505, about 25 to about 505, about 30 to about 505, about 35 to about 505, about 40 to about 505, about 45 to about 505, about 50 to about 505, about 55 to about 505, about 20 to about 500, about 25 to about 500, about 30 to about 500, about 35 to about 500, about 40 to about 500, about 45 to about 500, about 50 to about 500, about 55 to about 500, about 20 to about 495, about 25 to about 495, about 30 to about 495, about 35 to about 495, about 40 to about 495, about 45 to about 495, about 50 to about 495, about 55 to about 495, about 20 to about 490, about 25 to about 490, about 30 to about 490, about 35 to about 490, about 40 to about 490, about 45 to about 490, about 50 to about 490, or about 55 to about 490.

The Pa may also be a value of 1 to 1500, 1 to 1200, 5 to 1200, 1 to 1000, 5 to 1000, 10 to 1000, 1 to 900, 5 to 900, 10 to 900, 15 to 900, 20 to 900, 25 to 900, 30 to 900, 35 to 900, 40 to 900, 45 to 900, 50 to 900, 55 to 900, 1 to 800, 5 to 800, 10 to 800, 15 to 800, 20 to 800, 25 to 800, 30 to 800, 35 to 800, 40 to 800, 45 to 800, 50 to 800, 55 to 800, 1 to 700, 5 to 700, 10 to 700, 15 to 700, 20 to 700, 25 to 700, 30 to 700, 35 to 700, 40 to 700, 45 to 700, 50 to 700, 55 to 700, 1 to 600, 5 to 600, 10 to 600, 15 to 600, 20 to 600, 25 to 600, 30 to 600, 35 to 600, 40 to 600, 45 to 600, 50 to 600, 55 to 600, 1 to 550, 1 to 540, 1 to 530, 1 to 520, 1 to 510, 1 to 505, 1 to 500, 1 to 495, 1 to 490, 5 to 550, 5 to 540, 5 to 530, 5 to 520, 5 to 510, 5 to 505, 5 to 500, 5 to 495, 5 to 490, 10 to 550, 10 to 540, 10 to 530, 10 to 520, 10 to 510, 10 to 505, 10 to 500, 10 to 495, 10 to 490, 15 to 550, 15 to 550, 15 to 530, 15 to 520, 15 to 510, 15 to 505, 15 to 500, 15 to 495, or 15 to 490.

The Pa may also be a value of about 20 to about 200, about 100 to about 500, about 100 to about 450, about 100 to about 400, about 100 to about 350, about 100 to about 300, about 100 to about 250, about 100 to about 200, about 150 to about 500, about 150 to about 450, about 150 to about 400, about 150 to about 350, about 150 to about 300, about 150 to about 250, about 150 to about 200, about 200 to about 500, about 200 to about 450, about 200 to about 400, about 200 to about 350, about 200 to about 300, or about 200 to about 250.

The X2 is not particularly limited as long as it is greater than X1 and may be 0.5 to 6.0, 0.5 to 6.5, 0.5 to 7.0, 0.5 to 7.5, 0.5 to 8.0, 0.5 to 8.5, 0.5 to 9.0, 0.5 to 9.5, 0.5 to 10.0, 0.5 to 10.5, 0.5 to 11.0, 0.5 to 11.5, 0.5 to 12.0, 0.5 to 13.0, 0.5 to 14.0, 0.5 to 15.0, 0.5 to 16.0, 0.5 to 17.0, 0.5 to 18.0, 1.0 to 6.0, 1.0 to 6.5, 1.0 to 7.0, 1.0 to 7.5, 1.0 to 8.0, 1.0 to 8.5, 1.0 to 9.0, 1.0 to 9.5, 1.0 to 10.0, 1.0 to 10.5, 1.0 to 11.0, 1.0 to 11.5, 1.0 to 12.0, 1.0 to 13.0, 1.0 to 14.0, 1.0 to 15.0, 1.0 to 16.0, 1.0 to 17.0, 1.0 to 18.0, 1.5 to 6.0, 1.5 to 6.5, 1.5 to 7.0, 1.5 to 7.5, 1.5 to 8.0, 1.5 to 8.5, 1.5 to 9.0, 1.5 to 9.5, 1.5 to 10.0, 1.5 to 10.5, 1.5 to 11.0, 1.5 to 11.5, 1.5 to 12.0, 1.5 to 13.0, 1.5 to 14.0, 1.5 to 15.0, 1.5 to 16.0, 1.5 to 17.0, 1.5 to 18.0, 2.0 to 8.0, 2.0 to 8.5, 2.0 to 9.0, 2.0 to 9.5, 2.0 to 10.0, 2.0 to 10.5, 2.0 to 11.0, 2.0 to 11.5, 2.0 to 12.0, 2.0 to 13.0, 2.0 to 14.0, 2.0 to 15.0, 2.0 to 16.0, 2.0 to 17.0, 2.0 to 18.0, 2.5 to 8.0, 2.5 to 8.5, 2.5 to 9.0, 2.5 to 9.5, 2.5 to 10.0, 2.5 to 10.5, 2.5 to 11.0, 2.5 to 11.5, 2.5 to 12.0, 2.5 to 13.0, 2.5 to 14.0, 2.5 to 15.0, 2.5 to 16.0, 2.5 to 17.0, 2.5 to 18.0, 3.0 to 10.0, 3.0 to 10.5, 3.0 to 11.0, 3.0 to 11.5, 3.0 to 12.0, 3.0 to 13.0, 3.0 to 14.0, 3.0 to 15.0, 3.0 to 16.0, 3.0 to 17.0, 3.0 to 18.0, 3.5 to 4.0, 3.5 to 4.5, 3.5 to 5.0, 3.5 to 5.5, 3.5 to 6.0, 3.5 to 6.5, 3.5 to 12.0, 3.5 to 13.0, 3.5 to 14.0, 3.5 to 15.0, 3.5 to 16.0, 3.5 to 17.0, 3.5 to 18.0, 4.0 to 20, 4.0 to 15, 4.0 to 12.5, 4.0 to 10, 4.5 to 20, 4.5 to 15, 4.5 to 12.5, 4.5 to 10, 5.0 to 20, 5.0 to 15, 5.0 to 12.5, 5.0 to 10, 5.5 to 20, 5.5 to 15, 5.5 to 12.5, 5.5 to 10, 6.0 to 20, 6.0 to 15, 6.0 to 12.5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8.0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15, or 10.5 to 12.5. The X2 may also be 4.0 to 18, 4.0 to 16, 4.0 to 15.5, 4.0 to 14, 4.5 to 18, 4.5 to 16, 4.5 to 15.5, 4.5 to 14, 5.0 to 18, 5.0 to 16, 5.0 to 15.5, 5.0 to 14, 5.5 to 18, 5.5 to 16, 5.5 to 15.5, 5.5 to 14, 6.0 to 18, 6.0 to 16, 6.0 to 15.5, 6.0 to 14, 6.5 to 18, 6.5 to 16, 6.5 to 15.5, 6.5 to 14, 7.0 to 18, 7.0 to 16, 7.0 to 15.5, 7.0 to 14, 7.5 to 18, 7.5 to 16, 7.5 to 15.5, 7.5 to 14, 7.5 to 9, 7.5 to 8, 8.0 to 18, 8.0 to 18, 8.0 to 16, 8.0 to 15.5, 8.0 to 14, 8.5 to 18, 8.5 to 16, 8.5 to 15.5, 8.5 to 14, 9.0 to 18, 9.0 to 16, 9.0 to 15.5, 9.0 to 14, 9.5 to 18, 9.5 to 16, 9.5 to 15.5, 9.5 to 14, 10.0 to 18, 10.0 to 16, 10.0 to 15.5, 10.5 to 18, 10.5 to 16, or 10.5 to 15.5.

Further, the sparkling beverage in an embodiment of the present invention has a sweetness of a sweetness intensity X3 exhibited by the components (a) and (b) and 0.1 < X1 < X3 < X2 is satisfied. That is, a sweetness is more enhanced by the addition of the component (c) sodium to the component (a) a high-intensity sweetener and the component (b) an amino acid or a derivative or a salt thereof, than the combination of the component (a) and the component (b).

The X3 is not particularly limited as long as it is greater than the X1 and smaller than the X2 and may be 0.5 to 6.0, 0.5 to 6.5, 0.5 to 7.0, 0.5 to 7.5, 0.5 to 8.0, 0.5 to 8.5, 0.5 to 9.0, 0.5 to 9.5, 0.5 to 10.0, 0.5 to 10.5, 0.5 to 11.0, 0.5 to 11.5, 0.5 to 12.0, 0.5 to 13.0, 0.5 to 14.0, 0.5 to 15.0, 0.5 to 16.0, 0.5 to 17.0, 0.5 to 18.0, 1.0 to 6.0, 1.0 to 6.5, 1.0 to 7.0, 1.0 to 7.5, 1.0 to 8.0, 1.0 to 8.5, 1.0 to 9.0, 1.0 to 9.5, 1.0 to 10.0, 1.0 to 10.5, 1.0 to 11.0, 1.0 to 11.5, 1.0 to 12.0, 1.0 to 13.0, 1.0 to 14.0, 1.0 to 15.0, 1.0 to 16.0, 1.0 to 17.0, 1.0 to 18.0, 1.5 to 6.0, 1.5 to 6.5, 1.5 to 7.0, 1.5 to 7.5, 1.5 to 8.0, 1.5 to 8.5, 1.5 to 9.0, 1.5 to 9.5, 1.5 to 10.0, 1.5 to 10.5, 1.5 to 11.0, 1.5 to 11.5, 1.5 to 12.0, 1.5 to 13.0, 1.5 to 14.0, 1.5 to 15.0, 1.5 to 16.0, 1.5 to 17.0, 1.5 to 18.0, 2.0 to 8.0, 2.0 to 8.5, 2.0 to 9.0, 2.0 to 9.5, 2.0 to 10.0, 2.0 to 10.5, 2.0 to 11.0, 2.0 to 11.5, 2.0 to 12.0, 2.0 to 13.0, 2.0 to 14.0, 2.0 to 15.0, 2.0 to 16.0, 2.0 to 17.0, 2.0 to 18.0, 2.5 to 8.0, 2.5 to 8.5, 2.5 to 9.0, 2.5 to 9.5, 2.5 to 10.0, 2.5 to 10.5, 2.5 to 11.0, 2.5 to 11.5, 2.5 to 12.0, 2.5 to 13.0, 2.5 to 14.0, 2.5 to 15.0, 2.5 to 16.0, 2.5 to 17.0, 2.5 to 18.0, 3.0 to 19, 3.0 to 14, 3.0 to 11.5, 3.0 to 9, 3.5 to 19, 3.5 to 14, 3.5 to 11.5, 3.5 to 9, 4.0 to 19, 4.0 to 14, 4.0 to 11.5, 4.0 to 9, 4.5 to 19, 4.5 to 14, 4.5 to 11.5, 4.5 to 9, 5.0 to 19, 5.0 to 14, 5.0 to 11.5, 5.0 to 9, 6.5 to 20, 5.5 to 14, 5.5 to 11.5, 5.5 to 9, 6.019, 6.0 to 14, 6.0 to 11.5, 6.0 to 9, 6.5 to 19, 6.5 to 14, 6.5 to 11.5, 6.5 to 9, 6.5 to 8, 6.5 to 7, 7.0 to 19, 7.0 to 19, 7.0 to 14, 7.0 to 11.5, 7.0 to 9, 7.5 to 19, 7.5 to 14, 7.5 to 11.5, 7.5 to 9, 8.0 to 19, 8.0 to 14, 8.0 to 11.5, 8.0 to 9, 8.5 to 19, 98.5 to 14, 8.5 to 11.5, 8.5 to 9, 9.0 to 19, 9.0 to 14, 9.0 to 11.5, 9.5 to 19, 9.5 to 14, or 9.5 to 11.5. The X3 may also be 3.0 to 17, 3.0 to 15, 3.0 to 14.5, 3.0 to 13, 3.5 to 17, 3.5 to 15, 3.5 to 14.5, 3.5 to 13, 4.0 to 17, 4.0 to 15, 4.0 to 14.5, 4.0 to 13, 4.5 to 17, 4.5 to 15, 4.5 to 14.5, 4.5 to 13, 5.0 to 17, 5.0 to 15, 5.0 to 14.5, 5.0 to 13, 5.5 to 17, 5.5 to 15, 5.5 to 14.5, 5.5 to 13, 6.0 to 17, 6.0 to 15, 6.0 to 14.5, 6.0 to 13, 6.5 to 17, 6.5 to 15, 6.5 to 14.5, 6.5 to 13, 6.5 to 8, 6.5 to 7, 7.0 to 17, 7.0 to 16, 7.0 to 15, 7.0 to 14.5, 7.0 to 13, 7.5 to 17, 7.5 to 15, 7.5 to 14.5, 7.5 to 13, 8.0 to 17, 8.0 to 15, 8.0 to 14.5, 8.0 to 13, 8.5 to 17, 8.5 to 15, 8.5 to 14.5, 8.5 to 13, 9.0 to 17, 9.0 to 15, 90 to 14.5, 9.5 to 17, 9.5 to 15, or 9.5 to 14.5.

The sparkling beverage of the present invention has an enhanced sweetness as having been already mentioned. Whether or not the sweetness of the sparkling beverage of the present invention is enhanced can be evaluated by panelists who received sensory trainings. Further, for the sweetness intensity of the sparkling beverage of the present invention, standard sparkling beverages to be the sweetness standards are prepared with sucrose concentrations assigned as sweetness intensities 1, 2, 3, 4, 5, 6, 7, 8, 9, 10, 11, 12, 13, 14, and 15 and panelists compare the sweetness of the sparkling beverage of the present invention with the sweetnesses of these standard sparkling beverages thereby to measure the sweetness of the sparkling beverage of the present invention. Note that the standard sparkling beverages having a sweetness intensity of 1, 2, ... 15 are prepared by adding sucrose in such a way that a sucrose content is 1 g/100 g, 2 g/100 g, ... 15 g/100 g to the sparkling beverage to which sucrose is not added.

Furthermore, of the standard sparkling beverages having a lower sweetness than the sparkling beverage of the present invention in the above measurement, the standard sparkling beverage having the closest sweetness to that of the sparkling beverage of the present invention is selected and adjusted in such a way as to have the same sweetness as that of the sparkling beverage of the present invention by adding sucrose to the selected standard sparkling beverage, during which a sweetness intensity of the sparkling beverage of the present invention can also be measured from a sucrose content in the adjusted standard sparkling beverage.

Other examples of the method for measuring a sweetness of the sparkling beverage of the present invention include a sweetness intensity rating using Visual Analogue Scale (VAS method). For the VAS method, literatures in The journal of Japanese Society of Stomatognathic Function (2014) 20 pp. 115-129 ("Construction of a Screening Test for Gustatory Function in Four Basic Tastes" by Toyota et al.) and the like can be referred. Specifically, in the measurement of sweetness intensity by the VAS method, for example, evaluators define sweetness intensities as "not sweet at all" at the lower end and "nothing is sweeter than this" at the upper end and, using a piece of paper on which a vertical line indicating the intensities of sweetness on the straight line, assess a sweetness intensity sensed at that time by showing a position on the straight line.

The sweetness intensity of the sparkling beverage of the present invention is not particularly limited as long as it is acceptable as a sparkling beverage and may be, in terms of the degree of sweetness, for example, 4.0 to 20, 4.0 to 15, 4.0 to 12.5, 4.0 to 10, 4.5 to 20, 4.5 to 15, 4.5 to 12.5, 4.5 to 10, 5.0 to 20, 5.0 to 15, 5.0 to 12.5, 5.0 to 10, 5.5 to 20, 5.5 to 15, 5.5 to 12.5, 5.5 to 10, 6.0 to 20, 6.0 to 15, 6.0 to 12.5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8.0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15, or 10.5 to 12.5. The sweetness intensity may also be 4.0 to 18, 4.0 to 16, 4.0 to 15.5, 4.0 to 14, 4.5 to 18, 4.5 to 16, 4.5 to 15.5, 4.5 to 14, 5.0 to 18, 5.0 to 16, 5.0 to 15.5, 5.0 to 14, 5.5 to 18, 5.5 to 16, 5.5 to 15.5, 5.5 to 14, 6.0 to 18, 6.0 to 16, 6.0 to 15.5, 6.0 to 14, 6.5 to 18, 6.5 to 16, 6.5 to 15.5, 6.5 to 14, 7.0 to 18, 7.0 to 16, 7.0 to 15.5, 7.0 to 14, 7.5 to 18, 7.5 to 16, 7.5 to 15.5, 7.5 to 14, 7.5 to 9, 7.5 to 8, 8.0 to 18, 8.0 to 18, 8.0 to 16, 8.0 to 15.5, 8.0 to 14, 8.5 to 18, 8.5 to 16, 8.5 to 15.5, 8.5 to 14, 9.0 to 18, 9.0 to 16, 9.0 to 15.5, 9.0 to 14, 9.5 to 18, 9.5 to 16, 9.5 to 15.5, 9.5 to 14, 10.0 to 18, 10.0 to 16, 10.0 to 15.5, 10.5 to 18, 10.5 to 16, or 10.5 to 15.5. The sweetness intensity of the sparkling beverage is provided by the above components (a) to (c) and optional components.

An energy (total energy) of the sparkling beverage of the present invention may be, depending on an embodiment, 0 to 50 Kcal/100 ml, 0 to 45 Kcal/100 ml, 0 to 40 Kcal/100 ml, 0 to 35 Kcal/100 ml, 0 to 30 Kcal/100 ml, 0 to 24 Kcal/100 ml, 0 to 22 Kcal/100 ml, 0 to 20 Kcal/100 ml, 0 to 15 Kcal/100 ml, 0 to 10 Kcal/100 ml, 0 to 5 Kcal/100 ml, 0.1 to 50 Kcal/100 ml, 0.1 to 45 Kcal/100 ml, 0.1 to 40 Kcal/100 ml, 0.1 to 35 Kcal/100 ml, 0.1 to 30 Kcal/100 ml, 0.1 to 24 Kcal/100 ml, 0.1 to 22 Kcal/100 ml, 0.1 to 20 Kcal/100 ml, 0.1 to 15 Kcal/100 ml, 0.1 to 10 Kcal/100 ml, 0.1 to 5 Kcal/100 ml, 1 to 50 Kcal/100 ml, 1 to 45 Kcal/100 ml, 1 to 40 Kcal/100 ml, 1 to 35 Kcal/100 ml, 1 to 30 Kcal/100 ml, 1 to 24 Kcal/100 ml, 1 to 22 Kcal/100 ml, 1 to 20 Kcal/100 ml, 1 to 15 Kcal/100 ml, 1 to 10 Kcal/100 ml, 1 to 5 Kcal/100 ml, 5 to 50 Kcal/100 ml, 5 to 45 Kcal/100 ml, 5 to 40 Kcal/100 ml, 5 to 35 Kcal/100 ml, 5 to 30 Kcal/100 ml, 5 to 24 Kcal/100 ml, 5 to 20 Kcal/100 ml, 5 to 15 Kcal/100 ml, 5 to 10 Kcal/100 ml, 10 to 50 Kcal/100 ml, 10 to 45 Kcal/100 ml, 10 to 40 Kcal/100 ml, 10 to 35 Kcal/100 ml, 10 to 30 Kcal/100 ml, 10 to 24 Kcal/100 ml, 10 to 20 Kcal/100 ml, 10 to 15 Kcal/100 ml, 15 to 50 Kcal/100 ml, 15 to 45 Kcal/100 ml, 15 to 40 Kcal/100 ml, 15 to 35 Kcal/100 ml, 15 to 30 Kcal/100 ml, 15 to 24 Kcal/100 ml, 15 to 20 Kcal/100 ml, 20 to 50 Kcal/100 ml, 20 to 45 Kcal/100 ml, 20 to 40 Kcal/100 ml, 20 to 35 Kcal/100 ml, 20 to 30 Kcal/100 ml, 20 to 24 Kcal/100 ml, 24 to 50 Kcal/100 ml, 24 to 45 Kcal/100 ml, 24 to 40 Kcal/100 ml, 24 to 35 Kcal/100 ml, 24 to 30 Kcal/100 ml, 25 to 50 Kcal/100 ml, 25 to 45 Kcal/100 ml, 25 to 40 Kcal/100 ml, 25 to 35 Kcal/100 ml, or 25 to 30 Kcal/100 ml.

Further, an energy (total energy, TE) of the sparkling beverage of the present invention may be, depending on an embodiment (for example, an embodiment containing a caloric sweetener), 0 < TE ≤ 50 Kcal/100 ml, 0 < TE ≤ 45 Kcal/100 ml, 0 < TE ≤ 40 Kcal/100 ml, 0 < TE ≤ 35 Kcal/100 ml, 0 < TE ≤ 30 Kcal/100 ml, 0 < TE ≤ 24 Kcal/100 ml, 0 < TE ≤ 22 Kcal/100 ml, 0 < TE ≤ 20 Kcal/100 ml, 0 < TE ≤ 15 Kcal/100 ml, 0 < TE ≤ 10 Kcal/100 ml or 0 < TE ≤ 5 Kcal/100 ml (that is, it never is completely 0).

The components (a) to (c) can be in any combinations. As shown in examples to be described later, the addition of the component (b) and the component (c) to the component (a) enables to provide a sweetness intensity X2, which is higher than the sweetness intensity X1 of the component (a) alone. That is, the sweetness of the component (a) can be enhanced by the components (b) and (c). For this reason, sparkling beverages can be produced without using or with a reduced amount of highly caloric sucrose while maintaining the sweetness equal to a sparkling beverage containing sucrose. Thus, the design of new low-caloric sparkling beverages is enabled. In the case of designing a zero-calorie sparkling beverage, a high-intensity sweetener having particularly good-taste quality such as rebaudioside D (hereinafter, rebaudioside is sometimes abbreviated as "Reb") and rebaudioside M is used for the component (a) and D-allulose or erythritol is used as an additional sweet substance thereby to improve a sweetness with a low-concentration amino acid and low-concentration sodium. In the case of adjusting a food to be not zero calories but a low calorie, a caloric sweetener such as sucrose, glucose, fructose, or sorbitol can be contained as an additional sweet substance.

### [High-intensity sweetener]

The high-intensity sweetener (hereinafter, sometimes abbreviated as the "sweetener (a)" or "component (a)") means a compound having a more intense sweetness than sucrose and encompasses naturally occurring compounds, synthetic compounds, and combinations of naturally occurring compounds and synthetic compounds. The high-intensity sweetener has, in the same amount as sucrose, a sweetness 5 times or more, 10 times or more, 50 times or more, 100 times or more, 500 times or more, 1, 000 times or more, 5,000 times or more, 10,000 times or more, 50,000 times or more, or 100,000 times or more, of that of sucrose.

Specific examples of the high-intensity sweetener include peptide-based sweeteners such as aspartame, neotame, and advantame; sucrose derivatives such as sucralose; synthetic sweeteners (including those naturally occurring but also those whose synthetic products are mostly distributed such as neohesperidin dihydrochalcone) such as acesulfame K, saccharine, saccharin sodium, sodium cyclamate, dulcin, disodium glycyrrhizin, trisodium glycyrrhizin, and neohesperidin dihydrochalcone; sweeteners extracted from plants such as thaumatin, monellin, curculin, mabinlin, brazzein, pentagin, hernandulcin, 4β-hydroxyhernandulcin, miraculin, glycyrrhizin, rubusoside, and phyllodulcin; and plant extracts containing a high-intensity sweetener component, for example, Stevia rebaudiana extract, Siraitia grosvenorii (Luo han guo) extract, Glycyrrhiza (licorice) glabra extract, Rubus suavissimus S. Lee extract, Hydrangea macrophylla var. thunbergii extract, Sclerochiton ilicifolius extract, Thaumataococcus daniellii Benth extract, Dioscoreophyllum volkensii (serendipity berry) extract, Curculigo latifolia extract, Richadella dulcifica (miracle fruit) extract, Pentadiplandra brazzeana (West African fruit) extract, Capparis masaikai (Mabinlang) extract, and Lippia dulcis (Aztec sweet herb) extract; sweet components in these extracts, for example, steviol glycosides such as stevia derivatives like enzymatically-treated stevia in which a stevia extract and stevia are treated with an enzyme and glucose is added thereto, mogrosides obtained by treating Luo han guo and a Luo han guo extract, glycosides obtained from plant extracts such as phyllodulcin glycosides, Glycyrrhiza glabra plant-containing sweet components (for example, triterpene glycosides such as glycyrrhizin), Rubus suavissimus S. Lee plant-containing sweet components (for example, diterpene glycosides such as rubusoside), Hydrangea macrophylla var. thunbergii plant-containing sweet components (for example, dihydroisocoumarin such as phyllodulcin), Sclerochiton ilicifolius plant-containing sweet components (for example, amino acids such as monatin), Thaumataococcus daniellii Benth plant-containing sweet components (for example, proteins such as thaumatin), Dioscoreophyllum volkensii plant-containing sweet components (for example, proteins such as monellin), Curculigo latifolia plant-containing sweet components (for example, proteins such as curculin), Richadella dulcifica plant-containing sweet components (for example, proteins such as miraculin), Pentadiplandra brazzeana plant-containing sweet components (for example, proteins such as brazzein and pentagin), Capparis masaikai plant-containing sweet components (for example, proteins such as mabinlin), and Lippia dulcis plant-containing sweet components (for example, sesquiterpenes such as hernandulcin and 4β-hydroxyhernandulcin).

Examples of the steviol glycoside include rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, Dulcoside A, Dulcoside C, rubusoside, steviol, steviol monoside, steviol bioside and stevioside. Examples of the mogroside include mogroside IV and mogroside V.

The Glycyrrhiza (licorice) extract refers to those obtained from roots or rhizomes of Glycyrrhiza uralensis Fisher, Glycyrrhiza inflata Batalin, and Glycyrrhiza glabra Linne and having glycyrrhizic acid as the main component. Examples of the Glycyrrhiza extract include Glycyrrhiza extracts, Glycyrrhizin, and licorice extracts.

The sucrose derivative includes, for example, those obtained by substituting the OH group or the H group of sucrose with other substituents and examples thereof include halogen derivatives of sucrose (sucralose) and oxathiazinonedioxide derivatives.

In a preferable embodiment of the present invention, the high-intensity sweetener is selected from a high-intensity sweetener having a good taste quality. As used herein, the "high-intensity sweetener having a good taste quality" means a high-intensity sweet substance having one or more taste qualities selected from, when compared with rebaudioside A (RebA), (1) less astringent taste, (2) less metallic taste, (3) less aftertaste of sweetness, and (4) less bitterness. Whether or not a certain sweet substance has the above taste quality is already known or may be determined based on a sensory evaluation. Nonrestrictive examples of the high-intensity sweetener having a good taste quality include RebD, RebM, a luo han guo extract, mogroside (for example, mogroside V), thaumatin, brazzein or a combination thereof.

In an embodiment of the present invention, the high-intensity sweetener may be those naturally occurring in plants and the like or those artificially produced (for example, bioconversion or chemosynthesis) but is preferably a naturally occurring sweetener. As used herein, the "naturally occurring" does not mean that a high-intensity sweet substance contained in the sparkling beverage of the present invention is a natural product but a high-intensity sweet substance contained in the sparkling beverage of the present invention may be a product artificially (for example, by bioconversion) produced (non-naturally occurring product) as long as the same substance naturally occurs.

Nonrestrictive examples of the sweetener (a) include rebaudioside A (RebA), rebaudioside D (RebD), rebaudioside M (RebM), neohesperidin dihydrochalcone, glycyrrhizin, thaumatin, monellin, mogroside, rubusoside, curculin, mabinlin, brazzein, pentagin, phyllodulcin, hernandulcin, miraculin, Stevia rebaudiana plant-containing sweet components, Siraitia grosvenorii plant-containing sweet components, Glycyrrhiza glabra plant-containing sweet components, Rubus suavissimus S. Lee plant-containing sweet components, Hydrangea macrophylla var. thunbergii plant-containing sweet components, Sclerochiton ilicifolius plant-containing sweet components, Thaumataococcus daniellii Benth plant-containing sweet components, Dioscoreophyllum volkensii plant-containing sweet components, Curculigo latifolia plant-containing sweet components, Richardella dulcifica plant-containing sweet components, Pentadiplandra brazzeana plant-containing sweet components, Capparis masaikai plant-containing sweet components, Lippia dulcis plant-containing sweet components and derivatives thereof, and combinations thereof. In a specific embodiment, the sweetener (a) contains RebA, RebD, RebM, a mogroside (for example, mogroside V) or a combination thereof. In another specific embodiment, the sweetener (a) contains RebA, RebD, RebM, mogroside (for example, mogroside V), thaumatin or a combination thereof. In a preferable embodiment of the present invention, a high-intensity sweetener contains at least one selected from the group consisting of RebA, RebD, RebM, mogroside V, a luo han guo extract, and a combination thereof. In an embodiment of the present invention, the sweetener (a) consists essentially of a sweetener other than major components of Stevia sweeteners such as RebA, stevioside. As used herein, the "consists essentially of ... " means that the sweetener used in the present invention may contain major component(s) of Stevia sweeteners as long as the effects of the invention are not affected. For example, preferably 90% or more, more preferably 95% or more, or further preferably 98% or more of the sweetener (a) for use in the present invention consists of a sweetener other than RebA and stevioside.

RebA, RebD and RebM may be directly extracted from Stevia, or may be obtained by adding glucose to a compound having another structure, contained in a Stevia extract.

The Luo han guo extract as a sweetener is an extract of Luo han guo containing a sweet substance derived from Luo han guo, approved in various countries including Japan as a food additive and commercially available. Examples of the sweet substance derived from Luo han guo include mogroside V, mogroside IV, 11-oxo-mogroside V, and Siamenoside I.

Mogroside V is a kind of the major mogrol glycosides contained in Luo han guo and documented to have a good-quality sweetness property close to sucrose when compared with rebaudioside A. Mogroside V can be obtained from a luo han guo extract (for example, an alcohol extract of Luo han guo) by purification with chromatography or the like. Alternatively, mogroside V may be obtained by adding glucose to a compound having another structure, contained in a luo han guo extract.

The luo han guo extract preferably contains mogroside V and the ratio thereof is not limited and may be 10 wt% or more, 15 wt% or more, 20 wt% or more, 25 wt% or more, 30 wt% or more, 35 wt% or more, 40 wt% or more, 45 wt% or more, 50 wt% or more, 55 wt% or more, 60 wt% or more, 65 wt% or more, 70 wt% or more or 75 wt% or more, of the total dry weight of a luo han guo extract. The content of mogroside V can be determined by a known technique such as liquid chromatography. The luo han guo extract can be obtained by extracting a fruit of Luo han guo (Siraitia grosvenorii) with a suitable solvent (for example, an aqueous solvent such as water, an alcohol solvent such as ethanol or methanol, or a mixed solvent of an aqueous solvent and an alcohol solvent such as water-containing ethanol or water-containing methanol), and then optionally carrying out a treatment such as degreasing, purification, concentration, and drying.

Mogroside V may be one having a high purity, and may be, for example, one having a purity of 80% or more, 85% or more, 90% or more, 910 or more, 92% or more, 93% or more, 94% or more, 95% or more, 96% or more, 97% or more or 98% or more. Mogroside V obtained by purification of a luo han guo extract, of course, has a smaller amount of incorporation of a luo han guo extract component other than mogroside V, as it has a higher purity.

In other embodiments of the present invention, mogroside V may also be one having a lower purity, and may be, for example, one having a purity of 50% or more, 55% or more, 60% or more, 65% or more, 70% or more or 75% or more. For example, when the sweetness intensity of sucrose per unit concentration Brix 1 is defined as a degree of sweetness of 1, the calculated value of the degree of sweetness of Mog V having a purity of about 65% is about 175. In other embodiments of the present invention, a luo han guo extract containing about 30 wt% of Mog V may be used as the high-intensity sweetener, and, when the sweetness intensity of sucrose per unit concentration Brix 1 is defined as a degree of sweetness of 1, the calculated value of the degree of sweetness of the luo han guo extract is about 100.

The high-intensity sweetener is contained in an amount corresponding to a sweetness intensity X1, as described above. When the sweetness intensity of sucrose per unit concentration Brix 1 is defined as a degree of sweetness of 1, a degree of sweetness of rebaudioside D is about 225, a degree of sweetness of rebaudioside M is about 230, a degree of sweetness of rebaudioside B is about 325, a degree of sweetness of rebaudioside A is 200 to 300 (median value 250), a degree of sweetness of rebaudioside N is 200 to 250 (median value 225), a degree of sweetness of rebaudioside O is 200 to 250 (median value 225), a degree of sweetness of rebaudioside E is 70 to 80 (median value 75), a degree of sweetness of a luo han guo extract (containing 40% of Mog V) is about 130, a degree of sweetness of mogroside V is about 270, a degree of sweetness of thaumatin is 2,000, and a degree of sweetness of brazzein is 500 to 2000 (median value 1250). The numerical value obtained by multiplying these degrees of sweetness by a concentration (w/v% (considered to be the same as w/w% in the case of a beverage)) of the high-intensity sweetener in the sparkling beverage is a sweetness intensity of the high-intensity sweetener. When X1 of such a sweetener is herein determined, the above degree of sweetness (median value when a numerical value range is shown) is used. A relative ratio of a degree of sweetness of each sweetener to a degree of sweetness of 1 of sucrose can be determined from, for example, a known sugar sweetness conversion table (for example, information "Beverage term dictionary", page 11, Beverage Japan, Inc.). When a numerical range of a degree of sweetness is herein shown, a median value is adopted. Herein, in the case of a sweetener whose degree of sweetness is different with respect to each literature, a relative ratio of a degree of sweetness to a degree of sweetness of 1 of sucrose can be determined by a sensory test. Examples of such a sensory test include a method involving preparing samples where sucrose is added to pure water so that Brix is 3.0 to 5.0 by 0.5, and selecting a sample where sucrose is added, having a sweetness intensity equal to that of an aqueous solution having a predetermined concentration of a sweetener, among such samples.

In an embodiment of the present invention, the high-intensity sweetener comprises at least one selected from the group consisting of steviol glycoside, a luo han guo extract, mogrol glycoside, a Thaumataococcus daniellii Benth plant-containing sweet component, a Pentadiplandra brazzeana plant-containing sweet component, an artificial sweetener, and a combination thereof. In a preferable embodiment of the present invention, the high-intensity sweetener comprises at least one selected from the group consisting of rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, Dulcoside A, Dulcoside C, rubusoside, steviol monoside, steviol bioside, stevioside, a luo han guo extract, mogroside V, thaumatin, brazzein, a Glycyrrhiza extract, saccharine, aspartame, acesulfame K, sucralose, and a combination thereof.

In some embodiments, the sweetener (a) contains the following combination: RebA and RebM, RebA and RebD, RebD and RebM, RebA and RebD and RebM, RebA and mogroside V, RebD and mogroside V, RebM and mogroside V, RebA and RebM and mogroside V, RebA and RebD and mogroside V, RebD and RebM and mogroside V, RebA and neohesperidin dihydrochalcone, RebD and neohesperidin dihydrochalcone, RebM and neohesperidin dihydrochalcone, RebA and RebM and neohesperidin dihydrochalcone, RebA and RebD and neohesperidin dihydrochalcone, RebD and RebM and neohesperidin dihydrochalcone, mogroside V and neohesperidin dihydrochalcone, RebD and RebM and mogroside V and neohesperidin dihydrochalcone, RebA and brazzein, RebD and brazzein, RebM and brazzein, mogroside V and brazzein, neohesperidin dihydrochalcone and brazzein, RebM and RebD and brazzein, RebM and RebD and brazzein and mogroside V, RebM and RebD and brazzein and neohesperidin dihydrochalcone, or RebM and RebD and brazzein and mogroside V and neohesperidin dihydrochalcone.

In another embodiment, the sweetener (a) contains the following combination: RebA and thaumatin, RebD and thaumatin, RebM and thaumatin, mogroside V and thaumatin, RebA and RebM and thaumatin, RebA and RebD and thaumatin, RebD and RebM and thaumatin, RebA and mogroside V and thaumatin, RebD and mogroside V and thaumatin, RebM and mogroside V and thaumatin, or RebD and RebM and mogroside V and thaumatin.

In an embodiment of the present invention, the high-intensity sweetener (a) may contain a high-intensity sweetener selected from rebaudioside A, rebaudioside D, rebaudioside M, mogroside V, a luo han guo extract, and a combination thereof, preferably one or more high-intensity sweeteners selected from rebaudioside D, rebaudioside M, and a combination thereof.

The amount of the sweetener (a) contained in the sparkling beverage in an embodiment of the present invention is, in the case when the sweetener (a) contains a combination of a plurality of sweet substances, an amount of all of these sweet substances combined. When an amount of the sweetener (a) is Pa (ppm), Pa may be a value of, for example, about 20 to about 800, about 25 to about 800, about 30 to about 800, about 35 to about 800, about 40 to about 800, about 45 to about 800, about 50 to about 800, about 55 to about 800, about 20 to about 750, about 25 to about 750, about 30 to about 750, about 35 to about 750, about 40 to about 750, about 45 to about 750, about 50 to about 750, about 55 to about 750, about 20 to about 700, about 25 to about 700, about 30 to about 700, about 35 to about 700, about 40 to about 700, about 45 to about 700, about 50 to about 700, about 55 to about 700, about 20 to about 650, about 25 to about 650, about 30 to about 650, about 35 to about 650, about 40 to about 650, about 45 to about 650, about 50 to about 650, about 55 to about 650, about 20 to about 600, about 25 to about 600, about 30 to about 600, about 35 to about 600, about 40 to about 600, about 45 to about 600, about 50 to about 600, about 55 to about 600, about 20 to about 550, about 25 to about 550, about 30 to about 550, about 35 to about 550, about 40 to about 550, about 45 to about 550, about 50 to about 550, about 55 to about 550, about 20 to about 540, about 25 to about 540, about 30 to about 540, about 35 to about 540, about 40 to about 540, about 45 to about 540, about 50 to about 540, about 55 to about 540, about 20 to about 530, about 25 to about 530, about 30 to about 530, about 35 to about 530, about 40 to about 530, about 45 to about 530, about 50 to about 530, about 55 to about 530, about 20 to about 520, about 25 to about 520, about 30 to about 520, about 35 to about 520, about 40 to about 520, about 45 to about 520, about 50 to about 520, about 55 to about 520, about 20 to about 510, about 25 to about 510, about 30 to about 510, about 35 to about 510, about 40 to about 510, about 45 to about 510, about 50 to about 510, about 55 to about 510, about 20 to about 505, about 25 to about 505, about 30 to about 505, about 35 to about 505, about 40 to about 505, about 45 to about 505, about 50 to about 505, about 55 to about 505, about 20 to about 500, about 25 to about 500, about 30 to about 500, about 35 to about 500, about 40 to about 500, about 45 to about 500, about 50 to about 500, about 55 to about 500, about 20 to about 495, about 25 to about 495, about 30 to about 495, about 35 to about 495, about 40 to about 495, about 45 to about 495, about 50 to about 495, about 55 to about 495, about 20 to about 490, about 25 to about 490, about 30 to about 490, about 35 to about 490, about 40 to about 490, about 45 to about 490, about 50 to about 490, about 55 to about 490, about 100 to about 500, about 100 to about 450, about 100 to about 400, about 100 to about 350, about 100 to about 300, about 100 to about 250, about 100 to about 200, about 150 to about 500, about 150 to about 450, about 150 to about 400, about 150 to about 350, about 150 to about 300, about 150 to about 250, about 150 to about 200, about 20 to about 200, about 200 to about 500, about 200 to about 450, about 200 to about 400, about 200 to about 350, about 200 to about 300 or about 200 to about 250.

In an embodiment of the present invention, an amount Pa ppm of the high-intensity sweetener may be about 20 to about 600 ppm, about 30 to about 550 ppm, about 55 to about 490 ppm, about 20 to about 200 ppm, about 100 to about 500 ppm or about 150 to about 350 ppm.

### [Amino acids or derivatives or salts thereof]

The sparkling beverage of the present invention contains (b) an amino acid or a derivative or a salt thereof in an amount less than a taste recognition threshold. The amino acids or amino acid salts used in the present invention are organic compounds having both functional groups of an amino group and a carboxyl group, or salts thereof, and not particularly limited as long as a sweetness enhancement effect can be obtained. Additionally, proline and hydroxyproline, which form a cyclic structure in which the hydrogen of the amino group is substituted with a side chain moiety in a molecule, are also encompassed in the amino acid in the present description. The amino acid derivatives which may be used in the present invention encompass derivatives having no carboxyl group such as taurine. In an embodiment of the present invention, the amino acid means a free amino acid.

The amino acids used in the present invention may be the D-configuration, the L-configuration, or the racemic configuration consisting of the D-configuration and the L-configuration (in the present description, also referred to as the DL-amino acid) . In an embodiment of the present invention, the amino acid can be selected from neutral amino acids, basic amino acids, and acidic amino acids. The neutral amino acid can be preferably selected from glycine, alanine, valine, isoleucine, leucine and the like which have an alkyl group, serine, threonine and the like which have an OH group (a hydroxy group), tyrosine, phenylalanine, tryptophan and the like which have an aromatic group (or an aromatic ring), methionine, cysteine and the like which have a sulfur-containing group, proline, hydroxyproline and the like which have an imino group, and glutamine, asparagine and the like which have an amide group. The basic amino acid can be preferably selected from arginine, lysine, histidine and the like. The acidic amino acid can be preferably selected from glutamic acid, aspartic acid and the like. In a preferable embodiment of the present invention, the amino acids are selected from the neutral amino acids or the basic amino acids. In other preferable embodiments of the present invention, the amino acids include amino acids selected from, of the basic amino acids or the neutral amino acids, amino acids having an alkyl group, an OH group, or an amide group on a side chain and combinations thereof. Of the neutral amino acids, examples of those having an alkyl group on a side chain include glycine, alanine, valine, isoleucine and leucine, those having an OH group on a side chain include serine and threonine, and those having an amide group on a side chain include glutamine and asparagine.

The amino acid contained in the sparkling beverage in an embodiment of the present invention is one or more of the 22 amino acids forming proteins. Specific examples include the L-configuration of alanine (Ala), arginine (Arg), asparagine (Asn), aspartic acid (Asp), cysteine (Cys), glutamine (Gln), glutamic acid (Glu), glycine (Gly), histidine (His), isoleucine (Ile), leucine (Leu), lysine (Lys), methionine (Met), phenylalanine (Phe), proline (Pro), serine (Ser), threonine (Thr), tryptophan(Trp), tyrosine (Tyr), valine (Val), selenosysteine (Sec), and pyrrolysine (Pyl).

The amino acid contained in the sparkling beverage in an embodiment of the present invention is one or more selected from an amino acid having a molecular weight of 70 to 260. Examples of such an amino acid include alanine (molecular weight: 89), arginine (molecular weight: 174), asparagine (molecular weight: 132), aspartic acid (molecular weight: 133), cysteine (molecular weight: 121), glutamine (molecular weight: 146), glutamic acid (molecular weight: 147), glycine (molecular weight: 75), histidine (molecular weight: 155), isoleucine (molecular weight: 131), leucine (molecular weight: 131), lysine (molecular weight: 146), methionine (molecular weight: 149), phenylalanine (molecular weight: 165), proline (molecular weight: 115), serine (molecular weight: 105), threonine (molecular weight: 119), tryptophan (molecular weight: 204), tyrosine (molecular weight: 181), valine (molecular weight: 117), selenosysteine (molecular weight: 168) and pyrrolysine (molecular weight: 255). In a preferable embodiment of the present invention, the amino acid is one or more selected from amino acids having molecular weights of 75 to 204, more preferably one or more selected from amino acids having molecular weights of 75 to 174, and further preferably one or more selected from amino acids having molecular weights of 75 to 146.

Preferably, the amino acid or a salt thereof is one or more selected from L-asparagine, L-aspartic acid, monosodium L-aspartate, DL-alanine, L-alanine, L-alanine solution, L-arginine, L-arginine L-glutamate, L-glutamine, L-cystine, L-cysteine monohydrochloride, L-serine, L-tyrosine, L-glutamic acid, monoammonium L-glutamate, monopotassium L-glutamate, monocalcium Di-L-glutamate, monosodium L-glutamate (also known as sodium glutamate), monomagnesium Di-L-glutamate, glycine, L-histidine, L-histidine monohydrochloride, L-hydroxyproline, L-isoleucine, L-lysine, L-lysine solution, L-lysine L-aspartate, L-lysine hydrochloride (L-lysine monohydrochloride), L-lysine L-glutamate, L-leucine, DL-methionine, L-methionine, L-phenylalanine, L-proline, L-proline solution, DL-threonine, L-threonine, DL-tryptophan, L-tryptophan, L-valine, L-theanine, L-ornithine, and taurine. In an embodiment of the present invention, a plurality species of amino acids may be used in combination. In an embodiment of the present invention, the amino acid includes an amino acid selected from glycine, alanine, valine, isoleucine, leucine, serine, threonine, glutamine, asparagine, arginine, lysine, histidine, and a combination thereof.

In an embodiment of the present invention, the amino acid or a derivative or a salt thereof may include an amino acid selected from DL-alanine, L-serine, glycine, L-arginine, L-glutamic acid, L-valine, and L-glutamine. In another embodiment of the present invention, the amino acid or a derivative or a salt thereof may include one or more amino acids selected from arginine, lysine, histidine, phenylalanine, tyrosine, leucine, isoleucine, methionine, valine, alanine, glycine, proline, glutamic acid, serine, threonine, aspartic acid, and tryptophan. In still another embodiment of the present invention, the amino acid or a derivative or a salt thereof may include one or more amino acids selected from arginine, valine, alanine, glycine, proline, glutamic acid, serine, threonine, aspartic acid, and tryptophan.

As used herein, the threshold of amino acids means a detection threshold or a taste recognition threshold. The detection threshold means a minimum concentration at which the difference from water may be clearly identified but a type of the taste (for example, bitterness, sourness, and sweetness) does not have to be always recognized, and the taste recognition threshold means a minimum concentration at which a taste can be recognized (for example, Eur J Clin Nutr (2004) 58, 629-636). The threshold (detection threshold) of amino acids is organized by Susan S. Schiffman et al. in "Comparison of Taste Qualities and Thresholds of D- and L-Amino Acids", Physiology & Behavior, Vol. 27, pp. 51-59 (1981). For example, a detection threshold of each amino acid is as follows: glycine (30.9 mM), L-threonine (25.7 mM), L-serine (20.9 mM), L-alanine (16.2 mM), L-proline (15.1 mM), L-glutamine (9.77 mM), L-isoleucine (7.41 mM), L-phenylalanine (6.61 mM), L-leucine (6.45 mM), L-valine (4.16 mM), L-methionine (3.72 mM), L-tryptophan (2.29 mM), L-asparagine (1.62 mM), L-histidine (1.23 mM), L-arginine (1.20 mM), L-lysine (0.708 mM), L-aspartic acid (0.182 mM), L-glutamic acid (0.063 mM), L-cysteine (0.063 mM). Additionally, the taste recognition threshold is known to be about 1.5 to 2 times the detection threshold (Yuki Yamauchi et al., "WHOLE MOUTH GUSTATORY TEST (PART1) - BASIC CONSIDERATIONS AND PRINCIPAL COMPONENT ANALYSIS -", Journal of The Oto-Rhino-Laryngological Society of Japan, vol. 98 (1995) No. 1, p.119-129, and Reiko Ohmori, "Comparisons of the taste sensitivity between three generations", The bulletin of the Faculty of Education, Utsunomiya University, Section 1 (2013) Vol. 63 p.201-210)).

In the present invention, it is preferable that a measured value be used as the taste recognition threshold of an amino acid. A taste recognition threshold of an amino acid can be determined by preparing amino acid-containing aqueous solutions in several concentration levels and tasting in the order from low concentrations to high concentrations to carry out a sensory test by which the taste can be sensed or not. A concentration at which a difference from water is detected is defined as a detection threshold and a concentration at which a taste is recognized is defined as a recognition threshold. For example, for an amino acid for which a theoretical value (a literature value) is already established, aqueous solutions in several concentration levels close to such a concentration are prepared and several persons who received sensory trainings carry out the test thereby to determine these thresholds. In the case of L-alanine, a detection threshold described in literatures is 16.2 mM and a theoretical recognition threshold calculated from such a detection threshold is 32.4 mM, and a sensory test using aqueous solutions in several levels selected from 5 mM, 10 mM, 15 mM, 20 mM, 25 mM, 30 mM, and 35 mM is carried out thereby to measure a recognition threshold. In an embodiment of the present invention, the taste recognition threshold of an amino acid means a taste recognition threshold in pure water. The taste recognition threshold in pure water means a minimum concentration at which such a taste can be recognized when only an amino acid is added to water without addition of any sweetener or the like.

In an embodiment of the present invention, the flavored water contains glycine and a content of glycine may be more than 0 mM and 80 mM or less, 75 mM or less, less than 75 mM, 70 mM or less, 65 mM or less, 60 mM or less, 55 mM or less, 50 mM or less, less than 50 mM, 45 mM or less, 40 mM or less, 35 mM or less, 30 mM or less, 25 mM or less, 20 mM or less, 15 mM or less, or 10 mM or less. Alternatively, such a content may be 10 to 80 mM, 20 to 80 mM, 30 to 80 mM, 40 to 80 mM, 50 to 80 mM, 60 to 80 mM, 70 to 80 mM, 10 to 70 mM, 20 to 70 mM, 30 to 70 mM, 40 to 70 mM, 50 to 70 mM, 60 to 70 mM, 10 to 60 mM, 20 to 60 mM, 30 to 60 mM, 40 to 60 mM, 50 to 60 mM, 10 to 50 mM, 20 to 50 mM, 30 to 50 mM, 40 to 50 mM, 10 to 40 mM, 20 to 40 mM, 30 to 40 mM, 10 to 30 mM or 20 to 30 mM.

In an embodiment of the present invention, the sparkling beverage contains alanine and a content of alanine may be more than 0 mM and 32.4 mM or less, 30 mM or less, less than 30 mM, 25 mM or less, 20 mM or less, less than 20 mM, 15 mM or less, or 10 mM or less. Alternatively, such a content may be 1 to 30 mM, 5 to 30 mM, 10 to 30 mM, 15 to 30 mM, 20 to 30 mM, 25 to 30 mM, 1 to 25 mM, 5 to 25 mM, 10 to 25 mM, 15 to 25 mM, 20 to 25 mM, 1 to 20 mM, 5 to 20 mM, 10 to 20 mM, 15 to 20 mM, 1 mM or more and less than 20 mM, 1 to 19 mM, 5 to 19 mM, 10 to 19 mM, 15 to 19 mM, 1 to 18 mM, 5 to 18 mM, 10 to 18 mM, 15 to 18 mM, 1 to 17 mM, 5 to 17 mM, 10 to 17 mM, 15 to 17 mM, 1 to 16 mM, 5 to 16 mM, 10 to 16 mM, or 15 to 16 mM. Alanine may be either the L-configuration, the D-configuration, or the racemic configuration (DL-configuration) but is preferably the L-configuration.

In an embodiment of the present invention, the sparkling beverage contains valine and a content of valine may be more than 0 mM and 50 mM or less, less than 50 mM, 45 mM or less, 40 mM or less, less than 40 mM, 35 mM or less, 30 mM or less, less than 30 mM, 25 mM or less, 20 mM or less, 15 mM or less, or 10 mM or less. Alternatively, such a content may be 1 to 50 mM, 5 to 50 mM, 10 to 50 mM, 15 to 50 mM, 20 to 50 mM, 25 to 50 mM, 1 to 50 mM, 5 to 50 mM, 10 to 50 mM, 15 to 50 mM, 20 to 50 mM, 25 to 50 mM, 30 to 50 mM, 35 to 50 mM, 40 to 50 mM, 45 to 50 mM, 1 to 45 mM, 5 to 45 mM, 10 to 45 mM, 15 to 45 mM, 20 to 45 mM, 25 to 45 mM, 1 to 45 mM, 5 to 45 mM, 10 to 45 mM, 15 to 45 mM, 20 to 45 mM, 25 to 45 mM, 30 to 45 mM, 35 to 45 mM, 40 to 45 mM, 1 to 40 mM, 1 mM or more and less than 40 mM, 5 to 40 mM, 10 to 40 mM, 15 to 40 mM, 20 to 40 mM, 25 to 40 mM, 1 to 40 mM, 5 to 40 mM, 10 to 40 mM, 15 to 40 mM, 20 to 40 mM, 25 to 40 mM, 30 to 40 mM, 35 to 40 mM, 1 to 40 mM, 5 to 40 mM, 10 to 40 mM, 15 to 40 mM, 20 to 40 mM, 25 to 40 mM, 1 to 35 mM, 5 to 35 mM, 10 to 35 mM, 15 to 35 mM, 20 to 35 mM, 25 to 35 mM, 30 to 35 mM, 1 to 30 mM, 1 mM or more and less than 30 mM, 5 to 30 mM, 10 to 30 mM, 15 to 30 mM, 20 to 30 mM, 25 to 30 mM, 1 to 25 mM, 5 to 25 mM, 10 to 25 mM, 15 to 25 mM, 20 to 25 mM, 1 to 20 mM, 5 to 20 mM, 10 to 20 mM, 10 to 15 mM, or 15 to 20 mM. Valine may be either the L-configuration, the D-configuration, or the racemic configuration (DL-configuration) but is preferably the L-configuration.

In an embodiment of the present invention, the sparkling beverage contains isoleucine and a content of isoleucine may be more than 0 mM and 25 mM or less, 20 mM or less, 15 mM or less, 10 mM or less, or 5 mM or less. Alternatively, such a content may be 1 to 25 mM, 5 to 25 mM, 10 to 25 mM, 15 to 25 mM, 20 to 25 mM, 1 to 20 mM, 5 to 20 mM, 10 to 20 mM, 15 to 20 mM, 1 to 15 mM, 5 to 15 mM, or 10 to 15 mM. Isoleucine may be either the L-configuration, the D-configuration, or the racemic configuration (DL-configuration) but is preferably the L-configuration.

In an embodiment of the present invention, the sparkling beverage contains leucine and a content of leucine may be more than 0 mM and 50 mM or less, 45 mM or less, 40 mM or less, 35 mM or less, 30 mM or less, less than 30 mM, 25 mM or less, 20 mM or less, less than 20 mM, 15 mM or less, 13 mM or less, 12 mM or less, 11 mM or less, 10 mM or less, less than 10 mM, 9 mM or less, 8 mM or less, 7 mM or less, 6 mM or less, 5 mM or less, 4 mM or less, 3 mM or less, 2 mM or less, or 1 mM or less. Alternatively, such a content may be 1 to 50 mM, 2 to 50 mM, 3 to 50 mM, 4 to 50 mM, 5 to 50 mM, 6 to 50 mM, 7 to 50 mM, 8 to 50 mM, 9 to 50 mM, 10 to 50 mM, 1 to 40 mM, 2 to 40 mM, 3 to 40 mM, 4 to 40 mM, 5 to 40 mM, 6 to 40 mM, 7 to 40 mM, 8 to 40 mM, 9 to 40 mM, 10 to 40 mM, 1 to 30 mM, 2 to 30 mM, 3 to 30 mM, 4 to 30 mM, 5 to 30 mM, 6 to 30 mM, 7 to 30 mM, 8 to 30 mM, 9 to 30 mM, 1 to 20 mM, 1 mM or more and less than 20 mM, 2 to 20 mM, 3 to 20 mM, 4 to 20 mM, 5 to 20 mM, 6 to 20 mM, 7 to 20 mM, 8 to 20 mM, 9 to 20 mM, 15 to 50 mM, 15 to 45 mM, 15 to 40 mM, 15 to 35 mM, 15 to 30 mM, 15 to 25 mM, 15 to 20 mM, 1 to 15 mM, 2 to 15 mM, 3 to 15 mM, 4 to 15 mM, 5 to 15 mM, 6 to 15 mM, 7 to 15 mM, 8 to 15 mM, 9 to 15 mM, 10 to 15 mM, 1 to 12 mM, 2 to 12 mM, 3 to 12 mM, 4 to 12 mM, 5 to 12 mM, 6 to 12 mM, 7 to 12 mM, 8 to 12 mM, 9 to 12 mM, 10 to 12 mM, 1 to 10 mM, 1 mM or more and less than 10 mM, 2 to 10 mM, 3 to 10 mM, 4 to 10 mM, 5 to 10 mM, 6 to 10 mM, 7 to 10 mM, 8 to 10 mM, or 9 to 10 mM. Leucine may be either the L-configuration, the D-configuration, or the racemic configuration (DL-configuration) but is preferably the L-configuration.

In an embodiment of the present invention, the sparkling beverage contains serine and a content of serine may be more than 0 mM and 130 mM or less, 100 mM or less, 80 mM or less, 50 mM or less, less than 50 mM, 45 mM or less, 40 mM or less, less than 40 mM, 35 mM or less, 30 mM or less, 25 mM or less, 20 mM or less, 15 mM or less, or 10 mM or less. Alternatively, such a content may be 10 to 130 mM, 10 to 100 mM, 10 to 80 mM, 20 to 80 mM, 30 to 80 mM, 40 to 80 mM, 50 to 80 mM, 60 to 80 mM, 70 to 80 mM, 10 to 70 mM, 20 to 70 mM, 30 to 70 mM, 40 to 70 mM, 50 to 70 mM, 60 to 70 mM, 10 to 60 mM, 20 to 60 mM, 30 to 60 mM, 40 to 60 mM, 50 to 60 mM, 10 to 50 mM, 20 to 50 mM, 30 to 50 mM, 40 to 50 mM, 10 to 40 mM, 20 to 40 mM, 30 to 40 mM, 10 to 30 mM, 20 to 30 mM, 5 to 45 mM, 5 to 40 mM, 5 to 35 mM, 5 to 30 mM, 5 to 25 mM, 5 to 20 mM, 5 to 15 mM, 5 to 10 mM, 1 to 45 mM, 1 to 40 mM, 1 mM or more and less than 40 mM, 1 to 35 mM, 1 to 30 mM, 1 to 25 mM, 1 to 20 mM, 1 to 15 mM, or 1 to 10 mM. Serine may be either the L-configuration, the D-configuration, or the racemic configuration (DL-configuration) but is preferably the L-configuration.

In an embodiment of the present invention, the sparkling beverage contains threonine and a content of threonine may be more than 0 mM and 70 mM or less, 65 mM or less, 60 mM or less, 55 mM or less, 50 mM or less, less than 50 mM, 45 mM or less, 40 mM or less, less than 40 mM, 35 mM or less, 30 mM or less, 25 mM or less, 20 mM or less, 15 mM or less, or 10 mM or less. Alternatively, such a content may be 1 to 70 mM, 1 to 65 mM, 1 to 60 mM, 1 to 55 mM, 1 to 50 mM, 5 to 50 mM, 10 to 50 mM, 15 to 50 mM, 20 to 50 mM, 25 to 50 mM, 1 to 50 mM, 5 to 50 mM, 10 to 50 mM, 15 to 50 mM, 20 to 50 mM, 25 to 50 mM, 30 to 50 mM, 35 to 50 mM, 40 to 50 mM, 45 to 50 mM, 1 to 45 mM, 5 to 45 mM, 10 to 45 mM, 15 to 45 mM, 20 to 45 mM, 25 to 45 mM, 1 to 45 mM, 5 to 45 mM, 10 to 45 mM, 15 to 45 mM, 20 to 45 mM, 25 to 45 mM, 30 to 45 mM, 35 to 45 mM, 40 to 45 mM, 1 to 40 mM, 1 mM or more and less than 40 mM, 5 to 40 mM, 10 to 40 mM, 15 to 40 mM, 20 to 40 mM, 25 to 40 mM, 1 to 40 mM, 5 to 40 mM, 10 to 40 mM, 15 to 40 mM, 20 to 40 mM, 25 to 40 mM, 30 to 40 mM, 35 to 40 mM, 1 to 40 mM, 5 to 40 mM, 10 to 40 mM, 15 to 40 mM, 20 to 40 mM, 25 to 40 mM, 1 to 35 mM, 5 to 35 mM, 10 to 35 mM, 15 to 35 mM, 20 to 35 mM, 25 to 35 mM, 30 to 35 mM, 1 to 30 mM, 5 to 30 mM, 10 to 30 mM, 15 to 30 mM, 20 to 30 mM, 25 to 30 mM, 1 to 25 mM, 5 to 25 mM, 10 to 25 mM, 15 to 25 mM, 20 to 25 mM, 1 to 20 mM, 5 to 20 mM, 10 to 20 mM, or 15 to 20 mM. Threonine may be either the L-configuration, the D-configuration, or the racemic configuration (DL-configuration) but is preferably the L-configuration.

In an embodiment of the present invention, the sparkling beverage contains phenylalanine and a content of phenylalanine may be more than 0 mM and 15 mM or less, 13 mM or less, 12 mM or less, 11 mM or less, 10 mM or less, 9 mM or less, 8 mM or less, 7 mM or less, 6 mM or less, 5 mM or less, 4 mM or less, 3 mM or less, 2 mM or less, or 1 mM or less. Alternatively, such a content may be 1 to 15 mM, 2 to 15 mM, 3 to 15 mM, 4 to 15 mM, 5 to 15 mM, 6 to 15 mM, 7 to 15 mM, 8 to 15 mM, 9 to 15 mM, 10 to 15 mM, 1 to 12 mM, 2 to 12 mM, 3 to 12 mM, 4 to 12 mM, 5 to 12 mM, 6 to 12 mM, 7 to 12 mM, 8 to 12 mM, 9 to 12 mM, 10 to 12 mM, 1 to 10 mM, 2 to 10 mM, 3 to 10 mM, 4 to 10 mM, 5 to 10 mM, 6 to 10 mM, 7 to 10 mM, 8 to 10 mM, or 9 to 10 mM. Phenylalanine may be either the L-configuration, the D-configuration, or the racemic configuration (DL-configuration) but is preferably the L-configuration.

In an embodiment of the present invention, the sparkling beverage contains tryptophan and a content of tryptophan may be more than 0 mM and 5 mM or less, 4 mM or less, 3 mM or less, 2 mM or less, or 1 mM or less. Alternatively, such a content may be 1 to 5 mM, 2 to 5 mM, 3 to 5 mM, or 4 to 5 mM. Tryptophan may be either the L-configuration, the D-configuration, or the racemic configuration (DL-configuration) but is preferably the L-configuration.

In an embodiment of the present invention, the sparkling beverage contains methionine and a content of methionine may be more than 0 mM and 10 mM or less, 9 mM or less, 8 mM or less, 7 mM or less, 6 mM or less, 5 mM or less, 4 mM or less, 3 mM or less, 2 mM or less, or 1 mM or less. Alternatively, such a content may be 1 to 10 mM, 2 to 10 mM, 3 to 10 mM, 4 to 10 mM, 5 to 10 mM, 6 to 10 mM, 7 to 10 mM, 8 to 10 mM, or 9 to 10 mM. Methionine may be either the L-configuration, the D-configuration, or the racemic configuration (DL-configuration) but is preferably the L-configuration.

In an embodiment of the present invention, the sparkling beverage contains proline and a content of proline may be more than 0 mM and 120 mM or less, 100 mM or less, 80 mM or less, 50 mM or less, less than 50 mM, 45 mM or less, 40 mM or less, less than 40 mM, 35 mM or less, 30 mM or less, 25 mM or less, 20 mM or less, 15 mM or less, or 10 mM or less. Alternatively, such a content may be 10 to 120 mM, 10 to 100 mM, 10 to 80 mM, 20 to 80 mM, 30 to 80 mM, 40 to 80 mM, 50 to 80 mM, 60 to 80 mM, 70 to 80 mM, 10 to 70 mM, 20 to 70 mM, 30 to 70 mM, 40 to 70 mM, 50 to 70 mM, 60 to 70 mM, 10 to 60 mM, 20 to 60 mM, 30 to 60 mM, 40 to 60 mM, 50 to 60 mM, 10 to 50 mM, 20 to 50 mM, 30 to 50 mM, 40 to 50 mM, 1 mM or more and less than 40 mM, 10 to 40 mM, 20 to 40 mM, 30 to 40 mM, 1 to 30 mM, 5 to 30 mM, 10 to 30 mM, 15 to 30 mM, 20 to 30 mM, or 25 to 30 mM. Proline may be either the L-configuration, the D-configuration, or the racemic configuration (DL-configuration) but is preferably the L-configuration.

In an embodiment of the present invention, the sparkling beverage contains glutamine and a content of glutamine may be more than 0 mM and 20 mM or less, 19 mM or less, 18 mM or less, 17 mM or less, 16 mM or less, 15 mM or less, 14 mM or less, 13 mM or less, 12 mM or less, 11 mM or less, 10 mM or less, less than 10 mM, 9 mM or less, 8 mM or less, 7 mM or less, 6 mM or less, 5 mM or less, less than 5 mM, 4 mM or less, 3 mM or less, 2 mM or less, or 1 mM or less. Alternatively, such a content may be 1 to 20 mM, 1 to 18 mM, 1 to 15 mM, 2 to 15 mM, 3 to 15 mM, 4 to 15 mM, 5 to 15 mM, 6 to 15 mM, 7 to 15 mM, 8 to 15 mM, 9 to 15 mM, 10 to 15 mM, 1 to 12 mM, 2 to 12 mM, 3 to 12 mM, 4 to 12 mM, 5 to 12 mM, 6 to 12 mM, 7 to 12 mM, 8 to 12 mM, 9 to 12 mM, 10 to 12 mM, 1 to 10 mM, 2 to 10 mM, 3 to 10 mM, 4 to 10 mM, 5 to 10 mM, 6 to 10 mM, 7 to 10 mM, 8 to 10 mM, 9 to 10 mM, 1 to 8 mM, 2 to 8 mM, 3 to 8 mM, 4 to 8 mM, 5 to 8 mM, 6 to 8 mM, 7 to 8 mM, 1 to 7 mM, 2 to 7 mM, 3 to 7 mM, 4 to 7 mM, 5 to 7 mM, 6 to 7 mM, 1 to 6 mM, 2 to 6 mM, 3 to 6 mM, 4 to 6 mM, 5 to 6 mM, 1 to 5 mM, 1 mM or more and less than 5 mM, 2 to 5 mM, 3 to 5 mM, 4 to 5 mM, 1 to 4 mM, 2 to 4 mM, 3 to 4 mM, 1 to 3 mM, or 2 to 3 mM. Glutamine may be either the L-configuration, the D-configuration, or the racemic configuration (DL-configuration) but is preferably the L-configuration.

In an embodiment of the present invention, the sparkling beverage contains asparagine and a content of asparagine may be more than 0 mM and 20 mM or less, less than 20 mM, 19 mM or less, 18 mM or less, 17 mM or less, 16 mM or less, 15 mM or less, 14 mM or less, 13 mM or less, 12 mM or less, 11 mM or less, 10 mM or less, less than 10 mM, 9 mM or less, 8 mM or less, 7 mM or less, 6 mM or less, 5 mM or less, 4 mM or less, 5 mM or less, 2 mM or less, or 1 mM or less. Alternatively, such a content may be 1 to 20 mM, 1 to 18 mM, 1 to 15 mM, 2 to 15 mM, 3 to 15 mM, 4 to 15 mM, 5 to 15 mM, 6 to 15 mM, 7 to 15 mM, 8 to 15 mM, 9 to 15 mM, 10 to 15 mM, 1 to 12 mM, 2 to 12 mM, 3 to 12 mM, 4 to 12 mM, 5 to 12 mM, 6 to 12 mM, 7 to 12 mM, 8 to 12 mM, 9 to 12 mM, 10 to 12 mM, 1 to 10 mM, 1 mM or more and less than 10 mM, 2 to 10 mM, 3 to 10 mM, 4 to 10 mM, 5 to 10 mM, 6 to 10 mM, 7 to 10 mM, 8 to 10 mM, 9 to 10 mM, 0.1 to 3.0 mM, 0.1 to 2.5 mM, 0.1 to 2.0 mM, 0.1 to 1.5 mM, 0.1 to 1.0 mM, 0.1 to 0.5 mM, 0.5 to 3.0 mM, 0.5 to 2.5 mM, 0.5 to 2.0 mM, 0.5 to 1.5 mM, or 0.5 to 1.0 mM. Asparagine may be either the L-configuration, the D-configuration, or the racemic configuration (DL-configuration) but is preferably the L-configuration.

In an embodiment of the present invention, the sparkling beverage contains arginine and a content of arginine may be more than 0 mM and 4.0 mM or less, 3.5 mM or less, 3.0 mM or less, 2.5 mM or less, less than 2.5 mM, 2.0 mM or less, 1.5 mM or less, 1.0 mM or less, less than 1.0 mM, or 0.5 mM or less. Alternatively, such a content may be 0.1 to 4.0 mM, 0.1 to 3.5 mM, 0.1 to 3.0 mM, 0.1 to 2.5 mM, 0.1 to 2.0 mM, 0.1 to 1.5 mM, 0.1 to 1.0 mM, 0.1 mM or more and less than 1.0 mM, 0.1 to 0.5 mM, 0.5 to 4.0 mM, 0.5 to 3.5 mM, 0.5 to 3.0 mM, 0.5 to 2.5 mM, 0.5 to 2.0 mM, 0.5 to 1.5 mM, or 0.5 to 1.0 mM. Arginine may be either the L-configuration, the D-configuration, or the racemic configuration (DL-configuration) but is preferably the L-configuration.

In an embodiment of the present invention, the sparkling beverage contains lysine and a content of lysine may be more than 0 mM and 3.0 mM or less, 2.5 mM or less, 2.0 mM or less, 1.5 mM or less, 1.0 mM or less, or 0.5 mM or less. Alternatively, such a content may be 0.1 to 3.0 mM, 0.1 to 2.5 mM, 0.1 to 2.0 mM, 0.1 to 1.5 mM, 0.1 to 1.0 mM, 0.1 to 0.5 mM, 0.5 to 3.0 mM, 0.5 to 2.5 mM, 0.5 to 2.0 mM, 0.5 to 1.5 mM, or 0.5 to 1.0 mM. Lysine may be either the L-configuration, the D-configuration, or the racemic configuration (DL-configuration) but is preferably the L-configuration.

In an embodiment of the present invention, the sparkling beverage contains lysine hydrochloride and a content of lysine hydrochloride may be more than 0 mM and 1.0 mM or less, 0.9 mM or less, 0.8 mM or less, 0.7 mM or less, 0.6 mM or less, 0.5 mM or less, less than 0.5 mM, 0.4 mM or less, less than 0.4 mM, 0.3 mM or less, or 0.2 mM or less. Alternatively, such a content may be 0.1 to 1.0 mM, 0.1 to 0.9 mM, 0.1 to 0.8 mM, 0.1 to 0.7 mM, 0.1 to 0.6 mM, 0.1 to 0.5 mM, 0.1 to 0.4 mM, 0.1 mM or more and less than 0.4 mM, 0.1 to 0.3 mM, 0.1 to 0.2 mM, 0.2 to 1.0 mM, 0.5 to 0.8 mM, 0.2 to 0.6 mM, 0.2 to 0.4 mM, or 0.3 to 0.5 mM. Lysine may be either the L-configuration, the D-configuration, or the racemic configuration (DL-configuration) but is preferably the L-configuration.

In an embodiment of the present invention, the sparkling beverage contains histidine and a content of histidine may be more than 0 mM and 4.0 mM or less, 3.5 mM or less, 3.0 mM or less, 2.5 mM or less, 2.0 mM or less, 1.5 mM or less, 1.0 mM or less, or 0.5 mM or less. Alternatively, such a content may be 0.1 to 4.0 mM, 0.1 to 3.5 mM, 0.1 to 3.0 mM, 0.1 to 2.5 mM, 0.1 to 2.0 mM, 0.1 to 1.5 mM, 0.1 to 1.0 mM, 0.1 to 0.5 mM, 0.5 to 4.0 mM, 0.5 to 3.5 mM, 0.5 to 3.0 mM, 0.5 to 2.5 mM, 0.5 to 2.0 mM, 0.5 to 1.5 mM, or 0.5 to 1.0 mM. Histidine may be either the L-configuration, the D-configuration, or the racemic configuration (DL-configuration) but is preferably the L-configuration.

In an embodiment of the present invention, the sparkling beverage contains glutamic acid and a content of glutamic acid may be more than 0 mM and 0.50 mM or less, less than 0.50 mM, 0.40 mM or less, less than 0.40 mM, 0.35 mM or less, 0.30 mM or less, 0.25 mM or less, less than 0.25 mM, 0.20 mM or less, 0.15 mM or less, 0.14 mM or less, 0.13 mM or less, 0.12 mM or less, 0.11 mM or less, 0.10 mM or less, 0.09 mM or less, 0.08 mM or less, 0.07 mM or less, 0.06 mM or less, 0.05 mM or less, 0.04 mM or less, 0.03 mM or less, 0.02 mM or less, or 0.01 mM or less. Alternatively, such a content may be 0.01 to 0.15 mM, 0.02 to 0.15 mM, 0.03 to 0.15 mM, 0.04 to 0.15 mM, 0.05 to 0.15 mM, 0.06 to 0.15 mM, 0.07 to 0.15 mM, 0.08 to 0.15 mM, 0.09 to 0.15 mM, 0.10 to 0.15 mM, 0.01 to 0.12 mM, 0.02 to 0.12 mM, 0.03 to 0.12 mM, 0.04 to 0.12 mM, 0.05 to 0.12 mM, 0.06 to 0.12 mM, 0.07 to 0.12 mM, 0.08 to 0.12 mM, 0.09 to 0.12 mM, 0.10 to 0.12 mM, 0.01 to 0.10 mM, 0.02 to 0.10 mM, 0.03 to 0.10 mM, 0.04 to 0.10 mM, 0.05 to 0.10 mM, 0.06 to 0.10 mM, 0.07 to 0.10 mM, 0.08 to 0.10 mM, 0.09 to 0.10 mM, 0.10 to 0.40 mM, 0.10 to 0.35 mM, 0.10 to 0.30 mM, 0.10 to 0.25 mM, 0.10 mM or more and less than 0.25 mM, 0.10 to 0.20 mM, 0.10 to 0.15 mM, 0.20 to 0.40 mM, 0.20 to 0.35 mM, 0.20 to 0.30 mM, 0.20 to 0.25 mM, or 0.30 to 0.40 mM. Glutamic acid may be either the L-configuration, the D-configuration, or the racemic configuration (DL-configuration) but is preferably the L-configuration.

In an embodiment of the present invention, the sparkling beverage contains aspartic acid and a content of aspartic acid may be more than 0 mM and 1.5 mM or less, 1.4 mM or less, 1.3 mM or less, 1.2 mM or less, 1.1 mM or less, 1.0 mM or less, 0.9 mM or less, 0.8 mM or less, 0.7 mM or less, 0.6 mM or less, 0.5 mM or less, 0.4 mM or less, 0.3 mM or less, 0.2 mM or less, or 0.1 mM or less. Alternatively, such a content may be 0.1 to 1.5 mM, 0.2 to 1.5 mM, 0.3 to 1.5 mM, 0.4 to 1.5 mM, 0.5 to 1.5 mM, 0.6 to 1.5 mM, 0.7 to 1.5 mM, 0.8 to 1.5 mM, 0.9 to 1.5 mM, 1.0 to 1.5 mM, 0.1 to 1.2 mM, 0.2 to 1.2 mM, 0.3 to 1.2 mM, 0.4 to 1.2 mM, 0.5 to 1.2 mM, 0.6 to 1.2 mM, 0.7 to 1.2 mM, 0.8 to 1.2 mM, 0.9 to 1.2 mM, 1.0 to 1.2 mM, 0.1 to 1.0 mM, 0.2 to 1.0 mM, 0.3 to 1.0 mM, 0.4 to 1.0 mM, 0.5 to 1.0 mM, 0.6 to 1.0 mM, 0.7 to 1.0 mM, 0.8 to 1.0 mM, or 0.9 to 1.0 mM. Aspartic acid may be either the L-configuration, the D-configuration, or the racemic configuration (DL-configuration) but is preferably the L-configuration.

The sparkling beverage in an embodiment of the present invention does not contain monosodium aspartate as the amino acid salt.

An amino acid content can be measured by an amino acid automatic analysis method or high-performance liquid chromatography. When an amount of the amino acid contained in the beverage is known, a value calculated from the amount contained may be adopted.

In an embodiment of the present invention, when other raw material such as a fruit juice is used and an amino acid is contained in such other raw material, such an amino acid is also encompassed in the amino acid in the sparkling beverage of the present invention. Thus, an amount of the amino acid contained in the sparkling beverage of the present invention is a total value of amounts of such other raw material-derived one and one added externally. In an embodiment of the present invention, when a plurality of amino acids are contained in the sparkling beverage, a content of at least one of such amino acids may be less than the taste recognition threshold, or contents of some of such amino acids may be more than the taste recognition threshold. In other embodiments of the present invention, when a plurality of amino acids are contained in the sparkling beverage, a content of each of such amino acids may be less than the taste recognition threshold. The carbonated beverage in still another embodiment of the present invention may contain one or more amino acids selected from less than 20 mM of DL-alanine, less than 40 mM of L-serine, less than 50 mM of glycine, less than 1 mM of L-arginine, less than 0.25 mM of L-glutamic acid, less than 40 mM of L-valine, less than 5 mM of L-glutamine, less than 20 mM of L-leucine, less than 40 mM of L-threonine, less than 40 mM of L-proline, less than 10 mM of L-asparagine, and less than 0.4 mM of L-lysine hydrochloride. The sparkling beverage in still other embodiment of the present invention may contain one or more amino acids selected from 1 mM or more and less than 20 mM of DL-alanine, 1 mM or more and less than 40 mM of L-serine, 1 mM or more and less than 50 mM of glycine, 0.1 mM or more and less than 1.0 mM of L-arginine, 0.10 mM or more and less than 0.25 mM of L-glutamic acid, 1 mM or more and less than 40 mM of L-valine, 1 mM or more and less than 5 mM of L-glutamine, 1 mM or more and less than 20 mM of L-leucine, 1 mM or more and less than 40 mM of L-threonine, 1 mM or more and less than 40 mM of L-proline, 1 mM or more and less than 10 mM of L-asparagine, and 0.1 mM or more and less than 0.4 mM of L-lysine hydrochloride.

### [Sodium]

The sparkling beverage of the present invention comprises (c) 6 to 60 mg/100 ml of sodium, and it is meant that a content of sodium atom is 6 to 60 mg/100 ml. A content of sodium may be, depending on an embodiment, a content of 6 to 60 mg/100 ml, 6 to 55 mg/100 ml, 6 to 50 mg/100 ml, 6 to 45 mg/100 ml, 6 to 40 mg/100 ml, 6 to 35 mg/100 ml, 6 to 30 mg/100 ml, 6 to 25 mg/100 ml, 6 to 20 mg/100 ml, 6 to 19 mg/100 ml, 6 to 18 mg/100 ml, 6 to 17 mg/100 ml, 6 to 16 mg/100 ml, 6 to 15 mg/100 ml, 6 to 14 mg/100 ml, 6 to 13 mg/100 ml, 6 to 12 mg/100 ml, 6 to 11 mg/100 ml, 6 to 10 mg/100 ml, 10 to 60 mg/100 ml, 10 to 55 mg/100 ml, 10 to 50 mg/100 ml, 10 to 45 mg/100 ml, 10 to 40 mg/100 ml, 10 to 35 mg/100 ml, 10 to 30 mg/100 ml, 10 to 25 mg/100 ml, 10 to 20 mg/100 ml, 10 to 19 mg/100 ml, 10 to 18 mg/100 ml, 10 to 17 mg/100 ml, 10 to 16 mg/100 ml, 10 to 15 mg/100 ml, 15 to 60 mg/100 ml, 15 to 55 mg/100 ml, 15 to 50 mg/100 ml, 15 to 45 mg/100 ml, 15 to 40 mg/100 ml, 15 to 35 mg/100 ml, 15 to 30 mg/100 ml, 15 to 25 mg/100 ml, 15 to 20 mg/100 ml, 20 to 60 mg/100 ml, 20 to 55 mg/100 ml, 20 to 50 mg/100 ml, 20 to 45 mg/100 ml, 20 to 40 mg/100 ml, 20 to 35 mg/100 ml, 20 to 30 mg/100 ml, 20 to 25 mg/100 ml, 25 to 60 mg/100 ml, 25 to 55 mg/100 ml, 25 to 50 mg/100 ml, 25 to 45 mg/100 ml, 25 to 40 mg/100 ml, 25 to 35 mg/100 ml, 25 to 30 mg/100 ml, 30 to 60 mg/100 ml, 30 to 55 mg/100 ml, 30 to 50 mg/100 ml, 30 to 45 mg/100 ml, 30 to 40 mg/100 ml, 30 to 35 mg/100 ml, 335 to 60 mg/100 ml, 35 to 55 mg/100 ml, 35 to 50 mg/100 ml, 35 to 45 mg/100 ml, 35 to 40 mg/100 ml, 40 to 60 mg/100 ml, 40 to 55 mg/100 ml, 40 to 50 mg/100 ml, 40 to 45 mg/100 ml, 7 to 60 mg/100 ml, 7 to 55 mg/100 ml, 7 to 50 mg/100 ml, 7 to 45 mg/100 ml, 7 to 40 mg/100 ml, 7 to 35 mg/100 ml, 7 to 30 mg/100 ml, 7 to 25 mg/100 ml, 7 to 20 mg/100 ml, 7 to 19 mg/100 ml, 7 to 18 mg/100 ml, 7 to 17 mg/100 ml, 7 to 16 mg/100 ml, 7 to 15 mg/100 ml, 7 to 14 mg/100 ml, 7 to 13 mg/100 ml, 7 to 12 mg/100 ml, 7 to 11 mg/100 ml, 7 to 10 mg/100 ml, 8 to 60 mg/100 ml, 8 to 55 mg/100 ml, 8 to 50 mg/100 ml, 8 to 45 mg/100 ml, 8 to 40 mg/100 ml, 8 to 35 mg/100 ml, 8 to 30 mg/100 ml, 8 to 25 mg/100 ml, 8 to 20 mg/100 ml, 8 to 19 mg/100 ml, 8 to 18 mg/100 ml, 8 to 17 mg/100 ml, 8 to 16 mg/100 ml, 8 to 15 mg/100 ml, 8 to 14 mg/100 ml, 8 to 13 mg/100 ml, 8 to 12 mg/100 ml, 8 to 11 mg/100 ml, 8 to 10 mg/100 ml, 9 to 60 mg/100 ml, 9 to 55 mg/100 ml, 9 to 50 mg/100 ml, 9 to 45 mg/100 ml, 9 to 40 mg/100 ml, 9 to 35 mg/100 ml, 9 to 30 mg/100 ml, 9 to 25 mg/100 ml, 9 to 20 mg/100 ml, 9 to 19 mg/100 ml, 9 to 18 mg/100 ml, 9 to 17 mg/100 ml, 9 to 16 mg/100 ml, 9 to 15 mg/100 ml, 9 to 14 mg/100 ml, 9 to 13 mg/100 ml, 9 to 12 mg/100 ml, 9 to 11 mg/100 ml, or 9 to 10 mg/100 ml.

Further, a content of sodium may be, depending on an embodiment, a content of 6 to 34 mg/100 ml, 6 to 33 mg/100 ml, 6 to 32 mg/100 ml, 6 to 31 mg/100 ml, 6 to 29 mg/100 ml, 6 to 22 mg/100 ml, 6 to 21 mg/100 ml, 10 to 34 mg/100 ml, 10 to 33 mg/100 ml, 10 to 32 mg/100 ml, 10 to 31 mg/100 ml, 10 to 29 mg/100 ml, 10 to 22 mg/100 ml, 10 to 21 mg/100 ml, 11.5 to 34 mg/100 ml, 11.5 to 33 mg/100 ml, 11.5 to 32 mg/100 ml, 11.5 to 31 mg/100 ml, 11.5 to 30 mg/100 ml, 11.5 to 29 mg/100 ml, 11.5 to 22 mg/100 ml, 11.5 to 21 mg/100 ml, 11.5 to 20 mg/100 ml, 11.5 to 19 mg/100 ml, 11.5 to 18 mg/100 ml, 11.5 to 17 mg/100 ml, 11.5 to 16 mg/100 ml, 11.5 to 15 mg/100 ml, 11.5 to 14 mg/100 ml, 11.5 to 13 mg/100 ml, 11.5 to 12 mg/100 ml, 5.75 to 34.5 mg/100 ml, 5.75 to 28.75 mg/100 ml, 5.75 to 23 mg/100 ml, 5.75 to 17.25 mg/100 ml, 5.75 to 11.5 mg/100 ml, 11.5 to 34.5 mg/100 ml, 11.5 to 28.75 mg/100 ml, 11.5 to 23 mg/100 ml, 11.5 to 17.25 mg/100 ml, 17.25 to 34.5 mg/100 ml, 17.25 to 28.75 mg/100 ml, 17.25 to 23 mg/100 ml, 23 to 34.5 mg/100 ml, 23 to 28.75 mg/100 ml, or 28.75 to 34.5 mg/100 ml.

When sodium is added to the sparkling beverage, an amount thereof added may be an amount added of 0.1 to 60 mg/100 ml, 0.1 to 55 mg/100 ml, 1 to 60 mg/100 ml, 1 to 55 mg/100 ml, 5 to 60 mg/100 ml, 5 to 55 mg/100 ml, 10 to 60 mg/100 ml, 10 to 55 mg/100 ml, 15 to 60 mg/100 ml, 15 to 55 mg/100 ml, 20 to 60 mg/100 ml, 20 to 55 mg/100 ml, 30 to 60 mg/100 ml, 30 to 55 mg/100 ml, 40 to 60 mg/100 ml, 40 to 55 mg/100 ml, 6 to 60 mg/100 ml, 6 to 55 mg/100 ml, 6 to 50 mg/100 ml, 6 to 45 mg/100 ml, 6 to 40 mg/100 ml, 6 to 35 mg/100 ml, 6 to 30 mg/100 ml, 6 to 25 mg/100 ml, 6 to 20 mg/100 ml, 6 to 19 mg/100 ml, 6 to 18 mg/100 ml, 6 to 17 mg/100 ml, 6 to 16 mg/100 ml, 6 to 15 mg/100 ml, 6 to 14 mg/100 ml, 6 to 13 mg/100 ml, 6 to 12 mg/100 ml, 6 to 11 mg/100 ml, 6 to 10 mg/100 ml, 8 to 60 mg/100 ml, 8 to 55 mg/100 ml, 8 to 50 mg/100 ml, 8 to 45 mg/100 ml, 8 to 40 mg/100 ml, 8 to 35 mg/100 ml, 8 to 30 mg/100 ml, 8 to 25 mg/100 ml, 8 to 20 mg/100 ml, 8 to 19 mg/100 ml, 8 to 18 mg/100 ml, 8 to 17 mg/100 ml, 8 to 16 mg/100 ml, 8 to 15 mg/100 ml, 8 to 14 mg/100 ml, 8 to 13 mg/100 ml, 8 to 12 mg/100 ml, 8 to 11 mg/100 ml, 8 to 10 mg/100 ml, 9 to 60 mg/100 ml, 9 to 55 mg/100 ml, 9 to 50 mg/100 ml, 9 to 45 mg/100 ml, 9 to 40 mg/100 ml, 9 to 35 mg/100 ml, 9 to 30 mg/100 ml, 9 to 25 mg/100 ml, 9 to 20 mg/100 ml, 9 to 19 mg/100 ml, 9 to 18 mg/100 ml, 9 to 17 mg/100 ml, 9 to 16 mg/100 ml, 9 to 15 mg/100 ml, 9 to 14 mg/100 ml, 9 to 13 mg/100 ml, 9 to 12 mg/100 ml, 9 to 11 mg/100 ml, 9 to 10 mg/100 ml, 0.1 to 50 mg/100 ml, 0.1 to 45 mg/100 ml, 0.1 to 40 mg/100 ml, 0.1 to 35 mg/100 ml, 0.1 to 30 mg/100 ml, 0.1 to 25 mg/100 ml, 0.1 to 20 mg/100 ml, 0.1 to 19 mg/100 ml, 0.1 to 18 mg/100 ml, 0.1 to 17 mg/100 ml, 0.1 to 16 mg/100 ml, 0.1 to 15 mg/100 ml, 0.1 to 14 mg/100 ml, 0.1 to 13 mg/100 ml, 0.1 to 12 mg/100 ml, 0.1 to 11 mg/100 ml, 0.1 to 10 mg/100 ml, 1 to 50 mg/100 ml, 1 to 45 mg/100 ml, 1 to 40 mg/100 ml, 1 to 35 mg/100 ml, 1 to 30 mg/100 ml, 1 to 25 mg/100 ml, 1 to 20 mg/100 ml, 1 to 19 mg/100 ml, 1 to 18 mg/100 ml, 1 to 17 mg/100 ml, 1 to 16 mg/100 ml, 1 to 15 mg/100 ml, 1 to 14 mg/100 ml, 1 to 13 mg/100 ml, 1 to 12 mg/100 ml, 1 to 11 mg/100 ml, 1 to 10 mg/100 ml, 5 to 50 mg/100 ml, 5 to 45 mg/100 ml, 5 to 40 mg/100 ml, 5 to 35 mg/100 ml, 5 to 30 mg/100 ml, 5 to 25 mg/100 ml, 5 to 20 mg/100 ml, 5 to 19 mg/100 ml, 5 to 18 mg/100 ml, 5 to 17 mg/100 ml, 5 to 16 mg/100 ml, 5 to 15 mg/100 ml, 5 to 14 mg/100 ml, 5 to 13 mg/100 ml, 5 to 12 mg/100 ml, 5 to 11 mg/100 ml, 5 to 10 mg/100 ml, 7 to 50 mg/100 ml, 7 to 45 mg/100 ml, 7 to 40 mg/100 ml, 7 to 35 mg/100 ml, 7 to 30 mg/100 ml, 7 to 25 mg/100 ml, 7 to 20 mg/100 ml, 7 to 19 mg/100 ml, 7 to 18 mg/100 ml, 7 to 17 mg/100 ml, 7 to 16 mg/100 ml, 7 to 15 mg/100 ml, 10 to 50 mg/100 ml, 10 to 45 mg/100 ml, 10 to 40 mg/100 ml, 10 to 35 mg/100 ml, 10 to 30 mg/100 ml, 10 to 25 mg/100 ml, 10 to 20 mg/100 ml, 10 to 19 mg/100 ml, 10 to 18 mg/100 ml, 10 to 17 mg/100 ml, 10 to 16 mg/100 ml, 10 to 15 mg/100 ml, 15 to 50 mg/100 ml, 15 to 45 mg/100 ml, 15 to 40 mg/100 ml, 15 to 35 mg/100 ml, 15 to 30 mg/100 ml, 15 to 25 mg/100 ml, 15 to 20 mg/100 ml, 20 to 50 mg/100 ml, 20 to 45 mg/100 ml, 20 to 40 mg/100 ml, 20 to 35 mg/100 ml, 20 to 30 mg/100 ml, 20 to 25 mg/100 ml, 25 to 50 mg/100 ml, 25 to 45 mg/100 ml, 25 to 40 mg/100 ml, 25 to 35 mg/100 ml, or 25 to 30 mg/100 ml.

The sodium is not particularly limited in terms of the form thereof as long as it is contained in an ingestible form in the sparkling beverage of the present invention, and may be, for example, in the form of at least one selected from the group consisting of sodium chloride, sodium hydroxide, sodium malate, sodium sulfate, sodium citrate, sodium phosphate, sodium carbonate, sodium disulfide, sodium bicarbonate, sodium alginate, sodium arginate, sodium glucoheptanoate, sodium gluconate, monosodium glutamate, sodium tartrate, monosodium aspartate, sodium lactate, sodium caseinate, sodium ascorbate, and a mixture thereof.

Further, sodium is also sometimes contained in water, a flavor, a milk content such as milk, bovine milk, and a dairy product, and/or other component such as a fruit juice, and thus such sodium is also encompassed in the sodium contained in the sparkling beverage of the present invention.

In an embodiment of the present invention, sodium derived from a sodium component (for example, sodium benzoate, sodium sulfite, sodium hyposulfite, sodium dehydroacetate, sodium pyrosulfite, and sodium propionate) used as a preservative is not substantially included in the component (c).

The content of sodium in the beverage can be herein measured by an atomic absorption spectrometry. Note that, when an amount of a sodium-containing compound contained in the beverage is known, a value calculated from the contained amount may also be adopted.

In an embodiment of the present invention, an amount of sodium contained in the sparkling beverage may be defined as an amount of sodium source. The "sodium source" means a compound which generates sodium ions when the sparkling beverage is put in the mouth. The amount of the sodium source may be less than 20 mM. In other embodiments of the present invention, an amount of the sodium source is about 19 mM or less, about 18 mM or less, about 17 mM or less, about 16 mM or less, about 15 mM or less, about 14 mM or less, about 13 mM or less, about 12 mM or less, about 11 mM or less, about 10 mM or less, about 9.0 mM or less, about 8.5 mM or less, about 8.0 mM or less, about 8.5 mM or less, about 7.0 mM or less, about 7.5 mM or less, about 6.0 mM or less, about 5.5 mM or less, about 5.0 mM or less, about 4.5 mM or less, about 4.0 mM or less, about 3.5 mM or less, about 2.0 mM or less, about 1.5 mM or less, about 1.0 mM or less, or about 0.5 mM or less. In other embodiments, an amount of the sodium source may be in ranges from about 0.1 to about 19 mM, about 0.5 to about 19 mM, about 1.0 to about 19 mM, about 1.5 to about 19 mM, about 2.0 to about 19 mM, about 2.5 to about 19 mM, about 3.0 to about 19 mM, about 3.5 to about 19 mM, about 4.0 to about 19 mM, about 4.5 to about 19 mM, about 5.0 to about 19 mM, about 5.5 to about 19 mM, about 6.0 to about 19 mM, about 6.5 to about 19 mM, about 7.0 to about 19 mM, about 7.5 to about 19 mM, about 8.0 to about 19 mM, about 8.5 to about 19 mM, about 9.0 to about 19 mM, about 9.5 to about 19 mM, about 0.1 to about 15 mM, about 0.5 to about 15 mM, about 1.0 to about 15 mM, about 1.5 to about 15 mM, about 2.0 to about 15 mM, about 2.5 to about 15 mM, about 3.0 to about 15 mM, about 3.5 to about 15 mM, about 4.0 to about 15 mM, about 4.5 to about 15 mM, about 5.0 to about 15 mM, about 5.5 to about 15 mM, about 6.0 to about 15 mM, about 6.5 to about 15 mM, about 7.0 to about 15 mM, about 7.5 to about 15 mM, about 8.0 to about 15 mM, about 8.5 to about 15 mM, about 9.0 to about 15 mM, about 9.5 to about 15 mM, about 0.1 to about 9.9 mM, about 0.5 to about 9.9 mM, about 1.0 to about 9.9 mM, about 1.5 to about 9.9 mM, about 2.0 to about 9.9 mM, about 2.5 to about 9.9 mM, about 3.0 to about 9.9 mM, about 3.5 to about 9.9 mM, about 4.0 to about 9.9 mM, about 4.5 to about 9.9 mM, about 5.0 to about 9.9 mM, about 5.5 to about 9.9 mM, about 6.0 to about 9.9 mM, about 6.5 to about 9.9 mM, about 7.0 to about 9.9 mM, about 7.5 to about 9.9 mM, about 8.0 to about 9.9 mM, about 8.5 to about 9.9 mM, about 9.0 to about 9.9 mM, about 9.5 to about 9.9 mM, about 0.1 to about 9.5 mM, about 0.1 to about 9.0 mM, about 0.1 to about 8.5 mM, about 0.1 to about 8.0 mM, about 0.1 to about 7.5 mM, about 0.1 to about 7.0 mM, about 0.1 to about 6.5 mM, about 0.1 to about 6.0 mM, about 0.1 to about 5.5 mM, about 0.1 to about 5.0 mM, about 0.1 to about 4.5 mM, about 0.1 to about 4.0 mM, about 0.1 to about 3.5 mM, about 0.1 to about 3.0 mM, about 0.1 to about 2.5 mM, about 0.1 to about 2.0 mM, about 0.1 to about 1.5 mM, about 0.1 to about 1.0 mM, about 0.1 to about 0.5 mM, about 0.5 to about 9.5 mM, about 0.5 to about 9.5 mM, about 0.5 to about 9.0 mM, about 0.5 to about 8.5 mM, about 0.5 to about 8.0 mM, about 0.5 to about 7.5 mM, about 0.5 to about 7.0 mM, about 0.5 to about 6.5 mM, about 0.5 to about 6.0 mM, about 0.5 to about 5.5 mM, about 0.5 to about 5.0 mM, about 0.5 to about 4.5 mM, about 0.5 to about 4.0 mM, about 0.5 to about 3.5 mM, about 0.5 to about 3.0 mM, about 0.5 to about 2.5 mM, about 0.5 to about 2.0 mM, about 0.5 to about 1.5 mM, about 0.5 to about 1.0 mM, about 1.0 to about 9.5 mM, about 1.0 to about 9.0 mM, about 1.0 to about 8.5 mM, about 1.0 to about 8.0 mM, about 1.0 to about 7.5 mM, about 1.0 to about 7.0 mM, about 1.0 to about 6.5 mM, about 1.0 to about 6.0 mM, about 1.0 to about 5.5 mM, about 1.0 to about 5.0 mM, about 1.0 to about 4.5 mM, about 1.0 to about 4.0 mM, about 1.0 to about 3.5 mM, about 1.0 to about 3.0 mM, about 1.0 to about 2.5 mM, about 1.0 to about 2.0 mM, about 1.0 to about 1.5 mM, about 1.5 to about 9.5 mM, about 1.5 to about 9.0 mM, about 1.5 to about 8.5 mM, about 1.5 to about 8.0 mM, about 1.5 to about 7.5 mM, about 1.5 to about 7.0 mM, about 1.5 to about 6.5 mM, about 1.5 to about 6.0 mM, about 1.5 to about 5.5 mM, about 1.5 to about 5.0 mM, about 1.5 to about 4.5 mM, about 1.5 to about 4.0 mM, about 1.5 to about 3.5 mM, about 1.5 to about 3.0 mM, about 1.5 to about 2.5 mM, about 1.5 to about 2.0 mM, about 2.0 to about 9.5 mM, about 2.0 to about 9.0 mM, about 2.0 to about 8.5 mM, about 2.0 to about 8.0 mM, about 2.0 to about 7.5 mM, about 2.0 to about 7.0 mM, about 2.0 to about 6.5 mM, about 2.0 to about 6.0 mM, about 2.0 to about 5.5 mM, about 2.0 to about 5.0 mM, about 2.0 to about 4.5 mM, about 2.0 to about 4.0 mM, about 2.0 to about 3.5 mM, about 2.0 to about 3.0 mM, about 2.0 to about 2.5 mM, about 2.5 to about 9.5 mM, about 2.5 to about 9.0 mM, about 2.5 to about 8.5 mM, about 2.5 to about 8.0 mM, about 2.5 to about 7.5 mM, about 2.5 to about 7.0 mM, about 2.5 to about 6.5 mM, about 2.5 to about 6.0 mM, about 2.5 to about 5.5 mM, about 2.5 to about 5.0 mM, about 2.5 to about 4.5 mM, about 2.5 to about 4.0 mM, about 2.5 to about 3.5 mM, about 2.5 to about 3.0 mM, about 3.0 to about 9.5 mM, about 3.0 to about 9.0 mM, about 3.0 to about 8.5 mM, about 3.0 to about 8.0 mM, about 3.0 to about 7.5 mM, about 3.0 to about 7.0 mM, about 3.0 to about 6.5 mM, about 3.0 to about 6.0 mM, about 3.0 to about 5.5 mM, about 3.0 to about 5.0 mM, about 3.0 to about 4.5 mM, about 3.0 to about 4.0 mM, about 3.0 to about 3.5 mM, about 3.5 to about 9.5 mM, about 3.5 to about 9.0 mM, about 3.5 to about 8.5 mM, about 3.5 to about 8.0 mM, about 3.5 to about 7.5 mM, about 3.5 to about 7.0 mM, about 3.5 to about 6.5 mM, about 3.5 to about 6.0 mM, about 3.5 to about 5.5 mM, about 3.5 to about 5.0 mM, about 3.5 to about 4.5 mM, about 3.5 to about 4.0 mM, about 4.0 to about 9.5 mM, about 4.0 to about 9.0 mM, about 4.0 to about 8.5 mM, about 4.0 to about 8.0 mM, about 4.0 to about 7.5 mM, about 4.0 to about 7.0 mM, about 4.0 to about 6.5 mM, about 4.0 to about 6.0 mM, about 4.0 to about 5.5 mM, about 4.0 to about 5.0 mM, about 4.0 to about 4.5 mM, about 4.5 to about 9.5 mM, about 4.5 to about 9.0 mM, about 4.5 to about 8.5 mM, about 4.5 to about 8.0 mM, about 4.5 to about 7.5 mM, about 4.5 to about 7.0 mM, about 4.5 to about 6.5 mM, about 4.5 to about 6.0 mM, about 4.5 to about 5.5 mM, about 4.5 to about 5.0 mM, about 5.0 to about 9.5 mM, about 5.0 to about 9.0 mM, about 5.0 to about 8.5 mM, about 5.0 to about 8.0 mM, about 5.0 to about 7.5 mM, about 5.0 to about 7.0 mM, about 5.0 to about 6.5 mM, about 5.0 to about 6.0 mM, about 5.0 to about 5.5 mM, about 5.5 to about 9.5 mM, about 5.5 to about 9.0 mM, about 5.5 to about 8.5 mM, about 5.5 to about 8.0 mM, about 5.5 to about 7.5 mM, about 5.5 to about 7.0 mM, about 5.5 to about 6.5 mM, about 5.5 to about 6.0 mM, about 6.0 to about 9.5 mM, about 6.0 to about 9.0 mM, about 6.0 to about 8.5 mM, about 6.0 to about 8.0 mM, about 6.0 to about 7.5 mM, about 6.0 to about 7.0 mM, about 6.0 to about 6.5 mM, about 6.5 to about 9.5 mM, about 6.5 to about 9.0 mM, about 6.5 to about 8.5 mM, about 6.5 to about 8.0 mM, about 6.5 to about 7.5 mM, about 6.5 to about 7.0 mM, about 7.0 to about 9.5 mM, about 7.0 to about 9.0 mM, about 7.0 to about 8.5 mM, about 7.0 to about 8.0 mM, or about 7.0 to about 7.5 mM.

### [Optional component]

### (Sweetener)

The sparkling beverage of the present invention may contain a sweetener other than the high-intensity sweetener of the component (a). In the present description, the "sweetener" means any substance or a substance group which causes a sweetness response. Sweeteners can be classified into carbohydrate sweeteners and non-carbohydrate sweeteners based on structural characteristics and also into low-intensity sweeteners and high-intensity sweeteners based on the degree of sweetness. Further, sweet substances can also be classified based on the energy (calorie) into caloric sweeteners and non-caloric sweeteners. Further, sweet substances can also be classified based on the availability into natural sweeteners and artificial sweeteners. Note that, when other components including sweeteners such as fruit juices and milk contents are contained, such sweeteners are also encompassed in the sweeteners here described.

The carbohydrate sweetener is not limited and examples include starch sugars such as sucrose, lactose, glucose, maltose, starch syrup, a high-fructose corn syrup, and fructose, sugar alcohols such as erythritol, sorbitol, mannitol, maltitol, xylitol, and palatinit, sucrose, palatinose, fructooligosaccharide, Coupling Sugar^{(R)}, galactooligosaccharide, lactosucrose, raffinose, soyoligosaccharide, and honey. Further, the carbohydrate sweetener includes rare sugars.

The rare sugar refers to a monosaccharide that occurs in very small quantities in nature and derivatives thereof. For example, the rare sugar includes naturally occurring aldoses other than D-glucose, D-galactose, D-mannose, D-ribose, D-xylose, and L-arabinose, naturally occurring ketoses other than D-fructose, and naturally occurring sugar alcohols other than D-sorbitol. Nonrestrictive examples of the rare sugar include ketoses such as D-tagatose, D-sorbose, D-allulose (D-psicose), L-fructose, L-allulose (L-psicose), L-tagatose, and L-sorbose, aldoses such as altrose and D-allose, and sugar alcohols such as xylitol, erythritol, and D-talitol.

The caloric sweetener typically means sweet substances having an energy of 4 kcal/g. An energy of a sweet substance is already known or can be determined by measuring a content by HPLC or the like and calculating by multiplying the content by an energy conversion factor, or measuring a heat of physical combustion using a calorie meter (for example, bomb calorimeter) and correcting the heat with a digestion-absorption rate, an excreted heat or the like. Nonrestrictive examples of the caloric sweetener include sucrose, lactose, glucose, maltose, starch syrup, a high-fructose corn syrup, fructose.

The non-caloric sweeteners typically refer to those having the nature of being difficult to be digested in the body and consequently having a reduced energy to be taken into and mean sweet substances having an energy of less than 2 kcal/g, preferably less than 1 kcal/g, and further preferably less than 0.5 kcal/g. Nonrestrictive examples of the non-caloric sweetener include non-caloric hexoses such as allulose (psicose) and allose, non-caloric pentoses such as xylose and arabinose, non-caloric tetroses such as erythrose and threose, and non-caloric sugar alcohols such as erythritol and allitol.

Further, the sweet substances can also be classified based on the energy (calorie) level. For example, the sweet substances can be classified into sweet substances having an energy of 4 kcal/g or more and sweet substances having an energy of less than 4 kcal/g. The sweet substance having an energy of less than 4 kcal/g can further be classified into sweet substances having an energy of less than 3 kcal/g, sweet substances having an energy of less than 2.5 kcal/g, sweet substances having an energy of less than 2 kcal/g, sweet substances having an energy of less than 1.5 kcal/g, sweet substances having an energy of less than 1 kcal/g, sweet substances having an energy of less than 0.5 kcal/g, sweet substances having an energy of 1 kcal/g or more and less than 4 kcal/g, sweet substances having an energy of 2 kcal/g or more and less than 4 kcal/g, sweet substances having an energy of 3 kcal/g or more and less than 4 kcal/g, sweet substances having an energy of 2 kcal/g or more and less than 3 kcal/g, sweet substances having an energy of 1 kcal/g or more and less than 2 kcal/g, sweet substances having an energy of 0 kcal/g or more and less than 2 kcal/g, and sweet substances having an energy of 0 kcal/g or more and less than 1 kcal/g. Examples of the sweet substance having an energy of 4 kcal/g or more include sucrose, lactose, glucose, maltose, starch syrup, a high-fructose corn syrup, and fructose, examples of the sweet substance having an energy of 2 kcal/g or more and less than 4 kcal/g include sorbitol, xylitol, D-xylose, D-ribose, D-tagatose, and arabinose, and examples of the sweet substance having an energy of 0 kcal/g or more and less than 2 kcal/g include D-allulose, erythritol, allose, erythrose, threose, and allitol.

The low-intensity sweetener means a compound having about the same degree of sweetness as that of sucrose (for example, less than 5 times, about 0.1 to 2 times, about 0.5 to 1.5 times that of sucrose). Nonrestrictive examples of the low-intensity sweetener include low-intensity sugar sweeteners such as sucrose, a high-fructose corn syrup, glucose, fructose, lactose, maltose, xylose, lactulose, fructooligosaccharide, maltooligosaccharide, isomaltooligosaccharide, galactooligosaccharide, Coupling Sugar(R), and palatinose, and sugar alcohol low-intensity sweeteners such as maltitol, sorbitol, erythritol, xylitol, lactitol, palatinit, and reduced starch saccharified products. Further, the low-intensity sweetener includes rare sugars, caloric sweeteners, non-caloric sweeteners, carbohydrate sweeteners, non-carbohydrate sweeteners, natural sweeteners, and artificial sweeteners as long as the degree of sweetness is in the above range.

The sparkling beverage in an embodiment of the present invention contains a low-intensity sweetener. In other embodiments of the present invention, the following sparkling beverage (hereinafter, also referred to as the sparkling beverage of Embodiment A) is provided.

A sparkling beverage comprising:
(a) a high-intensity sweetener in an amount corresponding to a sweetness intensity X1,
(b) an amino acid or a derivative or a salt thereof in an amount less than a taste recognition threshold,
(c) 6 to 60 mg/100 ml of sodium, and
(d) a low-intensity sweetener in an amount corresponding to a sweetness intensity X4 (hereinafter, sometimes abbreviated as the "component (d)".),
   wherein the sparkling beverage has a sweetness of a sweetness intensity X5 exhibited by the components (a) to (d) and 0.1 < X1 + X4 < X5 is satisfied. The sparkling beverage in an embodiment of the present invention does not contain a component as a sweetener other than (a) a high-intensity sweetener in an amount corresponding to a sweetness intensity X1 and (d) a low-intensity sweetener in an amount corresponding to a sweetness intensity X4. Note that, when other components including low-intensity sweeteners (for example, fructose and lactose) such as fruit juices and milk contents are contained in the sparkling beverage, such low-intensity sweeteners are encompassed in the low-intensity sweetener (d).

In an embodiment of the present invention, the low-intensity sweetener contains a sweetener selected from hexose, pentose, tetrose, a polysaccharide having a terminal sugar of aldose or ketose, sugar alcohol, and a combination thereof. In other embodiments of the present invention, the low-intensity sweetener contains a sweetener selected from glucose, sucrose, fructose, maltose, an oligosaccharide, a high-fructose corn syrup, lactose, psicose, allose, tagatose, xylose, ribose, and a combination thereof. In still other embodiment of the present invention, the low-intensity sweetener contains a sweetener selected from glucose, sucrose, fructose, and a combination thereof.

The X4 in the "sweetness intensity X4" may be 0 to 0.5, 0 to 1.0, 0 to 1.5, 0 to 2.0, 0 to 2.5, 0 to 3.0, 0 to 3.5, 0 to 4.0, 0 to 4.5, 0 to 5.0, 0 to 5.5, 0 to 6.0, 0 to 6.5, 0 to 7.0, 0 to 7.5, 0 to 8.0, 0 to 8.25, 0 to 8.5, 0 to 8.75, 0 to 9.0, 0 to 9.25, 0 to 9.5, 0 to 9.75, 0 to 10.0, 0.05 to 0.5, 0.05 to 1.0, 0.05 to 1.5, 0.05 to 2.0, 0.05 to 2.5, 0.05 to 3.0, 0.05 to 3.5, 0.05 to 4.0, 0.05 to 4.5, 0.05 to 5.0, 0.05 to 5.5, 0.05 to 6.0, 0.05 to 6.5, 0.05 to 7.0, 0.05 to 7.5, 0.05 to 8.0, 0.05 to 8.25, 0.05 to 8.5, 0.05 to 8.75, 0.05 to 9.0, 0.05 to 9.25, 0.05 to 9.5, 0.05 to 9.75, 0.05 to 10.0, 0.1 to 0.5, 0.1 to 1.0, 0.1 to 1.5, 0.1 to 2.0, 0.1 to 2.5, 0.1 to 3.0, 0.1 to 3.5, 0.1 to 4.0, 0.1 to 4.5, 0.1 to 5.0, 0.1 to 5.5, 0.1 to 6.0, 0.1 to 6.5, 0.1 to 7.0, 0.1 to 7.5, 0.1 to 8.0, 0.1 to 8.25, 0.1 to 8.5, 0.1 to 8.75, 0.1 to 9.0, 0.1 to 9.25, 0.1 to 9.5, 0.1 to 9.75, 0.1 to 10.0, 0.5 to 0.5, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 0.5 to 6.0, 0.5 to 6.5, 0.5 to 7.0, 0.5 to 7.5, 0.5 to 8.0, 0.5 to 8.25, 0.5 to 8.5, 0.5 to 8.75, 0.5 to 9.0, 0.5 to 9.25, 0.5 to 9.5, 0.5 to 9.75, 0.5 to 10.0, 1.0 to 0.5, 1.0 to 1.0, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.0 to 6.0, 1.0 to 6.5, 1.0 to 7.0, 1.0 to 7.5, 1.0 to 8.0, 1.0 to 8.25, 1.0 to 8.5, 1.0 to 8.75, 1.0 to 9.0, 1.0 to 9.25, 1.0 to 9.5, 1.0 to 9.75, 1.0 to 10.0, 1.5 to 0.5, 1.5 to 1.0, 1.5 to 1.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 1.5 to 6.0, 1.5 to 6.5, 1.5 to 7.0, 1.5 to 7.5, 1.5 to 8.0, 1.5 to 8.25, 1.5 to 8.5, 1.5 to 8.75, 1.5 to 9.0, 1.5 to 9.25, 1.5 to 9.5, 1.5 to 9.75, 1.5 to 10.0, 2.0 to 0.5, 2.0 to 1.0, 2.0 to 1.5, 2.0 to 2.0, 2.0 to 2.5, 2.0 to 3.0, 2.0 to 3.5, 2.0 to 4.0, 2.0 to 4.5, 2.0 to 5.0, 2.0 to 5.5, 2.0 to 6.0, 2.0 to 6.5, 2.0 to 7.0, 2.0 to 7.5, 2.0 to 8.0, 2.0 to 8.25, 2.0 to 8.5, 2.0 to 8.75, 2.0 to 9.0, 2.0 to 9.25, 2.0 to 9.5, 2.0 to 9.75, 2.0 to 10.0, 2.5 to 0.5, 2.5 to 1.0, 2.5 to 1.5, 2.5 to 2.0, 2.5 to 2.5, 2.5 to 3.0, 2.5 to 3.5, 2.5 to 4.0, 2.5 to 4.5, 2.5 to 5.0, 2.5 to 5.5, 2.5 to 6.0, 2.5 to 6.5, 2.5 to 7.0, 2.5 to 7.5, 2.5 to 8.0, 2.5 to 8.25, 2.5 to 8.5, 2.5 to 8.75, 2.5 to 9.0, 2.5 to 9.25, 2.5 to 9.5, 2.5 to 9.75, 2.5 to 10.0, 0.1 to 5.9, 3.0 to 3.5, 3.0 to 4.0, 3.0 to 4.5, 3.0 to 5.0, or 3.0 to 5.5.

The X4 may also be 0 to 10.5, 0 to 11.0, 0 to 11.5, 0 to 12.0, 0 to 12.5, 0 to 13.0, 0 to 13.5, 0 to 14.0, 0 to 14.5, 0 to 15.0, 0.05 to 10.5, 0.05 to 11.0, 0.05 to 11.5, 0.05 to 12.0, 0.05 to 12.5, 0.05 to 13.0, 0.05 to 13.5, 0.05 to 14.0, 0.05 to 14.5, 0.05 to 15.0, 0.1 to 10.5, 0.1 to 11.0, 0.1 to 11.5, 0.1 to 12.0, 0.1 to 12.5, 0.1 to 13.0, 0.1 to 13.5, 0.1 to 14.0, 0.1 to 14.5, 0.1 to 15.0, 0.5 to 10.5, 0.5 to 11.0, 0.5 to 11.5, 0.5 to 12.0, 0.5 to 12.5, 0.5 to 13.0, 0.5 to 13.5, 0.5 to 14.0, 0.5 to 14.5, 0.5 to 15.0, 1.0 to 10.5, 1.0 to 11.0, 1.0 to 11.5, 1.0 to 12.0, 1.0 to 12.5, 1.0 to 13.0, 1.0 to 13.5, 1.0 to 14.0, 1.0 to 14.5, 1.0 to 15.0, 1.5 to 10.5, 1.5 to 11.0, 1.5 to 11.5, 1.5 to 12.0, 1.5 to 12.5, 1.5 to 13.0, 1.5 to 13.5, 1.5 to 14.0, 1.5 to 14.5, 1.5 to 15.0, 2.0 to 10.5, 2.0 to 11.0, 2.0 to 11.5, 2.0 to 12.0, 2.0 to 12.5, 2.0 to 13.0, 2.0 to 13.5, 2.0 to 14.0, 2.0 to 14.5, 2.0 to 15.0, 2.5 to 10.5, 2.5 to 11.0, 2.5 to 11.5, 2.5 to 12.0, 2.5 to 12.5, 2.5 to 13.0, 2.5 to 13.5, 2.5 to 14.0, 2.5 to 14.5, or 2.5 to 15.0.

In an embodiment of the present invention, the X4 is preferably 0.05 to 6.0, more preferably 0.05 to 5.0, and still more preferably 0.1 to 4.0.

The amount corresponding to a sweetness intensity X4 of a low-intensity sweetener refers to an amount (concentration) which provides a sweetness of a sweetness intensity X4 under the conditions when the low-intensity sweetener is dissolved in water having the same volume as the sparkling beverage of the present invention at 20°C.

The X5 is not particularly limited as long as it is greater than X1 + X4 and may be 4.0 to 20, 4.0 to 15, 4.0 to 12.5, 4.0 to 10, 4.5 to 20, 4.5 to 15, 4.5 to 12.5, 4.5 to 10, 5.0 to 20, 5.0 to 15, 5.0 to 12.5, 5.0 to 10, 5.5 to 20, 5.5 to 15, 5.5 to 12.5, 5.5 to 10, 6.0 to 20, 6.0 to 15, 6.0 to 12.5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8.0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15, or 10.5 to 12.5. The X5 may also be 4.0 to 18, 4.0 to 16, 4.0 to 15.5, 4.0 to 14, 4.5 to 18, 4.5 to 16, 4.5 to 15.5, 4.5 to 14, 5.0 to 18, 5.0 to 16, 5.0 to 15.5, 5.0 to 14, 5.5 to 18, 5.5 to 16, 5.5 to 15.5, 5.5 to 14, 6.0 to 18, 6.0 to 16, 6.0 to 15.5, 6.0 to 14, 6.5 to 18, 6.5 to 16, 6.5 to 15.5, 6.5 to 14, 7.0 to 18, 7.0 to 16, 7.0 to 15.5, 7.0 to 14, 7.5 to 18, 7.5 to 16, 7.5 to 15.5, 7.5 to 14, 7.5 to 9, 7.5 to 8, 8.0 to 18, 8.0 to 18, 8.0 to 16, 8.0 to 15.5, 8.0 to 14, 8.5 to 18, 8.5 to 16, 8.5 to 15.5, 8.5 to 14, 9.0 to 18, 9.0 to 16, 9.0 to 15.5, 9.0 to 14, 9.5 to 18, 9.5 to 16, 9.5 to 15.5, 9.5 to 14, 10.0 to 18, 10.0 to 16, 10.0 to 15.5, 10.5 to 18, 10.5 to 16, or 10.5 to 15.5.

### (Other components)

The sparkling beverage of the present invention can suitably contain an antioxidant (sodium erythorbate or the like), an emulsifier (sucrose esters of fatty acids, sorbitan esters of fatty acids, polyglycerin esters of fatty acids or the like), an acidulant (phosphoric acid, citric acid, malic acid or the like), and a flavor, as long as the effects of the present invention are not affected.

The sparkling beverage of the present invention may contain one or more selected from the group consisting of caramel, cinnamaldehyde, phosphoric acid, vanilla and caffeine. The caffeine here may be in the form of not only a purified product (a purified product having a content of caffeine of 98.5% or more) usable as a food additive or a roughly purified product (having a content of caffeine of 50 to 98.5%) usable as a food product, but also an extract of any plant (tea leaf, cola seed, coffee bean, guarana, or the like) containing caffeine, or a concentrate thereof. In an embodiment of the present invention, a content of caffeine in the sparkling beverage can be 1 to 200 ppm. The amount of caffeine can be determined by use of any method, and can be determined by, for example, filtering the sparkling beverage with a membrane filter (cellulose acetate membrane 0.45 µm, manufactured by Advantec Co., Ltd.) and subjecting a sample to high-performance liquid chromatography (HPLC).

In another embodiment, the sparkling beverage of the present invention can contain cinnamaldehyde. Such cinnamaldehyde (C₆H₃CH=CH-CHO, molecular weight 132.16) is one aromatic aldehyde known as a cinnamon aroma component, and can be available as a flavor formulation. In an embodiment of the present invention, the sparkling beverage can contain cinnamaldehyde in an amount falling within a specific range. For example, the content of cinnamaldehyde in the sparkling beverage of the present invention is 0.5 to 50 ppm and preferably 0.5 to 32 ppm, and can be 1.0 to 20 ppm. The amount of cinnamaldehyde can be determined by, for example, a method using gas chromatography, a mass spectrometer, or the like.

In still another embodiment, the sparkling beverage of the present invention can contain caramel (or a caramel coloring). Such caramel used herein can be a known caramel coloring suitable for edible use. For example, one obtained by heat treatment of an edible carbohydrate typified by sugar or glucose, or one obtained by heat treatment of an edible carbohydrate with addition of acid or alkali can be used. A caramel formed from a sugar content contained in a fruit juice or a vegetable juice can also be used, and in this case, a caramel can be formed from a sugar content by heating treatment, treatment with acid or alkali, or the like. The sparkling beverage of the present invention can contain a caramel coloring in a content falling within a specific range.

### [Exemplary embodiments of the sparkling beverage of D1-th embodiment of the present invention]

In an embodiment of the present invention, a sparkling beverage is provided comprising:
(a) a high-intensity sweetener in an amount corresponding to a sweetness intensity X1,
(b) an amino acid or a derivative or a salt thereof in an amount less than a taste recognition threshold, and
(c) 6 to 60 mg/100 ml, 6 to 50 mg/100 ml or 6 to 35 mg/100 ml of sodium,

wherein the sparkling beverage has a sweetness of a sweetness intensity X2 exhibited by the components (a) to (c) and 0.1 < X1 < X2 is satisfied,
wherein the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof,
X1 is 0.5 to 5.5, preferably 1.0 to 5.5, and more preferably 2.0 to 5.0, and
the amino acid or a derivative or a salt thereof comprises an amino acid selected from DL-alanine, L-serine, glycine, L-arginine, L-glutamic acid, L-valine, and L-glutamine. In the present embodiment, an amount of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm.

In an embodiment of the present invention, a sparkling beverage is provided comprising:
(a) a high-intensity sweetener in an amount corresponding to a sweetness intensity X1,
(b) an amino acid or a derivative or a salt thereof in an amount less than a taste recognition threshold, and
(c) 6 to 60 mg/100 ml, 6 to 50 mg/100 ml or 6 to 35 mg/100 ml of sodium,

wherein the sparkling beverage has a sweetness of a sweetness intensity X2 exhibited by the components (a) to (c) and 0.1 < X1 < X2 is satisfied,
wherein the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof,
X1 is 0.5 to 10.0, preferably 1.5 to 9.0, and more preferably 2.0 to 8.0, and
the amino acid or a derivative or a salt thereof comprises an amino acid selected from DL-alanine, L-serine, glycine, L-arginine, L-glutamic acid, L-valine, and L-glutamine. In the present embodiment, an amount of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm.

In an embodiment of the present invention, a sparkling beverage is provided comprising:
(a) a high-intensity sweetener in an amount corresponding to a sweetness intensity X1,
(b) an amino acid or a derivative or a salt thereof in an amount less than a taste recognition threshold,
(c) 6 to 60 mg/100 ml, 6 to 50 mg/100 ml or 6 to 35 mg/100 ml, and
(d) a low-intensity sweetener in an amount corresponding to a sweetness intensity X4,

wherein the sparkling beverage has a sweetness of a sweetness intensity X5 exhibited by the components (a) to (d) and 0.1 < X1 + X4 < X5 is satisfied,
wherein the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof,
X1 is 0.5 to 5.5, preferably 1.0 to 5.5, and more preferably 2.0 to 5.0,
the amino acid or a derivative or a salt thereof comprises an amino acid selected from DL-alanine, L-serine, glycine, L-arginine, L-glutamic acid, L-valine, and L-glutamine,
the low-intensity sweetener comprises a sweetener selected from glucose, sucrose, fructose, maltose, an oligosaccharide, a high-fructose corn syrup, lactose, psicose, allose, tagatose, xylose, ribose, and a combination thereof, and
X4 is 0.05 to 6.0, preferably 0.05 to 5.0, and more preferably 0.1 to 4.0. In the present embodiment, an amount of the high-intensity sweetener may be about 20 to about 600 ppm, about 30 to about 550 ppm, about 55 to about 490 ppm, about 20 to about 200 ppm, about 100 to about 500 ppm or about 150 to about 350 ppm.

In an embodiment of the present invention, a sparkling beverage is provided comprising:
(a) a high-intensity sweetener in an amount corresponding to a sweetness intensity X1,
(b) an amino acid or a derivative or a salt thereof in an amount less than a taste recognition threshold,
(c) 6 to 60 mg/100 ml, 6 to 50 mg/100 ml or 6 to 35 mg/100 ml, and
(d) a low-intensity sweetener in an amount corresponding to a sweetness intensity X4,

wherein the sparkling beverage has a sweetness of a sweetness intensity X5 exhibited by the components (a) to (d) and 0.1 < X1 + X4 < X5 is satisfied,
wherein the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof,
X1 is 0.5 to 5.5, preferably 1.0 to 5.5, and more preferably 2.0 to 5.0,
the amino acid or a derivative or a salt thereof comprises an amino acid selected from less than 20 mM of DL-alanine, less than 40 mM of L-serine, less than 50 mM of glycine, less than 1 mM of L-arginine, less than 0.25 mM of L-glutamic acid, less than 40 mM of L-valine, less than 5 mM of L-glutamine, less than 20 mM of L-leucine, less than 40 mM of L-threonine, less than 40 mM of L-proline, less than 10 mM of L-asparagine, and less than 0.4 mM of L-lysine hydrochloride,
the low-intensity sweetener comprises a sweetener selected from glucose, sucrose, fructose, maltose, an oligosaccharide, a high-fructose corn syrup, lactose, psicose, allose, tagatose, xylose, ribose, and a combination thereof, and
X4 is 0.05 to 6.0, preferably 0.05 to 5.0, and more preferably 0.1 to 4.0. In the present embodiment, an amount of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm.

In an embodiment of the present invention, a sparkling beverage is provided comprising:
(a) a high-intensity sweetener in an amount corresponding to a sweetness intensity X1,
(b) an amino acid or a derivative or a salt thereof in an amount less than a taste recognition threshold,
(c) 6 to 60 mg/100 ml, 6 to 50 mg/100 ml or 6 to 35 mg/100 ml, and
(d) a low-intensity sweetener in an amount corresponding to a sweetness intensity X4,

wherein the sparkling beverage has a sweetness of a sweetness intensity X5 exhibited by the components (a) to (d) and 0.1 < X1 + X4 < X5 is satisfied,
wherein the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof,
X1 is 0.5 to 5.5, preferably 1.0 to 5.5, and more preferably 2.0 to 5.0,
the amino acid or a derivative or a salt thereof comprises an amino acid selected from arginine, lysine, histidine, phenylalanine, tyrosine, leucine, isoleucine, methionine, valine, alanine, glycine, proline, glutamic acid, serine, threonine, aspartic acid, and tryptophan,
the low-intensity sweetener comprises a sweetener selected from glucose, sucrose, fructose, and a combination thereof, and
X4 is 0.05 to 6.0, preferably 0.05 to 5.0, and more preferably 0.1 to 4.0. In the present embodiment, an amount of the high-intensity sweetener may be about 20 to about 600 ppm, about 30 to about 550 ppm, about 55 to about 490 ppm, about 20 to about 200 ppm, about 100 to about 500 ppm or about 150 to about 350 ppm.

In an embodiment of the present invention, a sparkling beverage is provided comprising:
(a) a high-intensity sweetener in an amount corresponding to a sweetness intensity X1,
(b) an amino acid or a derivative or a salt thereof in an amount less than a taste recognition threshold,
(c) 6 to 60 mg/100 ml, 6 to 50 mg/100 ml or 6 to 35 mg/100 ml, and
(d) a low-intensity sweetener in an amount corresponding to a sweetness intensity X4,

wherein the sparkling beverage has a sweetness of a sweetness intensity X5 exhibited by the components (a) to (d) and 0.1 < X1 + X4 < X5 is satisfied,
wherein the high-intensity sweetener comprises a high-intensity sweetener selected from rebaudioside A, rebaudioside D, rebaudioside M, mogroside V, a luo han guo extract, and a combination thereof, preferably a high-intensity sweetener selected from rebaudioside D, rebaudioside M, and a combination thereof,
X1 is 0.5 to 5.5, preferably 1.0 to 5.5, and more preferably 2.0 to 5.0,
the amino acid or a derivative or a salt thereof comprises an amino acid selected from arginine, valine, alanine, glycine, proline, glutamic acid, serine, threonine, aspartic acid, and tryptophan,
the low-intensity sweetener comprises a sweetener selected from glucose, sucrose, fructose, and a combination thereof, and
X4 is 0.05 to 6.0, preferably 0.05 to 5.0, and more preferably 0.1 to 4.0. In the present embodiment, an amount of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm.

In an embodiment of the present invention, a sparkling beverage is provided comprising:
(a) a high-intensity sweetener in an amount corresponding to a sweetness intensity X1,
(b) an amino acid or a derivative or a salt thereof in an amount less than a taste recognition threshold,
(c) 6 to 60 mg/100 ml, 6 to 50 mg/100 ml or 6 to 35 mg/100 ml, and
(d) a low-intensity sweetener in an amount corresponding to a sweetness intensity X4,

wherein the sparkling beverage has a sweetness of a sweetness intensity X5 exhibited by the components (a) to (d) and 0.1 < X1 + X4 < X5 is satisfied,
the sparkling beverage comprises one or more amino acids selected from alanine, serine, and glycine, and 6 to 50 mg/100 ml of sodium, an energy is 50 Kcal/100 ml or less, and X1 + X4 is 6 or more.

In an embodiment of the present invention, a sparkling beverage is provided comprising:
(a) a high-intensity sweetener in an amount corresponding to a sweetness intensity X1,
(b) one or more amino acids selected from alanine, serine, and glycine,
(c) 6 to 35 mg/100 ml of sodium, and
(d) a low-intensity sweetener in an amount corresponding to a sweetness intensity X4,

wherein the sparkling beverage has a sweetness of a sweetness intensity X5 exhibited by the components (a) to (d) and 0.1 < X1 + X4 < X5 is satisfied, and
an energy is 50 Kcal/100 ml or less, and X1 + X4 is 6 or more. In the present embodiment, an amount of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm.

### 2. Method for producing a beverage

### <<Second embodiment>>

The present invention provides, as the second embodiment, the following method for producing a beverage with an enhanced sweetness (hereinafter referred to as "the production method of the present invention").

A method for producing a beverage of the present invention, comprising, to a raw material,
(a) adding a high-intensity sweetener in an amount corresponding to a sweetness intensity X1, and
(b) adding an amino acid or a derivative or a salt thereof in an amount less than a taste recognition threshold. In the present embodiment, X1 and X3 respectively correspond to Xa and Xb in the A2-th embodiment (Corresponding to Japanese Patent Applications No. 2020-147865/2020-185301) and the C2-th embodiment (Corresponding to Japanese Patent Applications No. 2020-147855/2020-185326).

### 2-1. Method for producing flavored water

### <<A2-th embodiment>>

The present invention provides, as the A2-th embodiment, the following method for producing flavored water with an enhanced sweetness (hereinafter also referred to as "the production method A of the present invention").

A method for producing flavored water of the present invention, comprising, to a raw material,
(a) adding a high-intensity sweetener in an amount corresponding to a sweetness intensity Xa, and
(b) adding an amino acid or a derivative or a salt thereof in an amount less than a taste recognition threshold.

The flavored water produced by the method of the present invention is the flavored water A of the present invention described in the above section "1-1. Flavored water with an enhanced sweetness." Additionally, the "raw material" in the production method A of the present invention may be each material or a mixture thereof required for the production of the flavored water, and may further include any components such as a preservative, a flavor, a carrier. The "raw material" may be made up of several materials.

In the production method of the present invention, any of the following (a) and (b) may be carried out first.
(a) adding a high-intensity sweetener in an amount corresponding to a sweetness intensity Xa,
(b) adding an amino acid or a derivative or a salt thereof in an amount less than a taste recognition threshold.

Two steps may be carried out simultaneously. For example, (a) and (b) may be carried out simultaneously.

In Step (a), a high-intensity sweetener in an amount corresponding to a sweetness intensity Xa is added to the raw material but a high-intensity sweetener in an amount corresponding to a sweetness intensity Xa does not need to be added at once but may be added in several divided batches.

Similarly, when an amino acid of less than a taste recognition threshold is added in Step (b), the amino acid of less than a taste recognition threshold does not need to be added at once but may be added in several divided batches. The amino acid or a derivative thereof, or a salt thereof, added to the raw material in Step (b) may be selected from the amino acids or derivatives thereof, or salts thereof described in the A1-th embodiment of the above section "1-1. Flavored water with an enhanced sweetness."

The "addition" herein means not only the actual operation of adding either of the components (a) and (b) to the raw materials but also the operation of adjusting amounts of the components (a) and (b) to predetermined amounts respectively in the flavored water to be finally produced through the production process of the flavored water A of the present invention.

For example, a case in which when the first raw material contains a fruit juice, a grain, a bean, and extracts thereof and accordingly the raw material contains one or more of any of the components (a) and (b) in advance, and the second raw material to be mixed with the first raw material also contains the components (a) and (b) whereby the flavored water A of the present invention may be produced by mixing the first and the second raw materials, the operation of individually adding the components (a) and (b) to the raw materials is not carried out but in the method of the present invention Steps (a) and (b) are considered to have been carried out as long as the flavored water of the present invention to be finally produced comprises (a) a high-intensity sweetener in an amount corresponding to a sweetness intensity Xa and (b) an amino acid or a derivative or a salt thereof in an amount less than a taste recognition threshold.

The production method of an embodiment of the present invention (hereinafter, also referred to as the production method A of Embodiment A) further comprises adding (c) a low-intensity sweetener in an amount corresponding to a sweetness intensity Xc. The production method of Embodiment A enables the production of the flavored water of Embodiment A. Steps (a) to (c) may be carried out separately, or 2 or more steps may be carried out simultaneously. For example, (a) and (b), (a) and (c), (b) and (c), or (a) and (b) and (c) may be carried out simultaneously.

In a case where the flavored water of the present invention is a beverage packed in a container, the method for producing the beverage of the present invention comprises a step of filling the flavored water in a container. In a case where the flavored water is a beverage packed in a container, the flavored water is preferably sterilized before or after filling of the flavored water in a container because it can be preserved for a long storage. For example, the flavored water, which is in a can, can be obtained by filling a predetermined amount of the flavored water in a can and heating and sterilizing it by, for example, retort sterilization at 120 to 125°C for about 5 to 20 minutes. Further, the flavored water, which is a beverage in a PET bottle, a carton, or a bottle, can be obtained as a beverage packed in a container by performing, for example, UHT sterilization for retention at 130 to 145°C for about 2 to 120 seconds and filling in a predetermined amount by hot-pack filling or aseptic filling at a low temperature.

In the method of the present invention, the "flavored water", "sweetness intensity Xa", "high-intensity sweetener", "sweetness intensity Xb", "amino acid or a derivative or a salt thereof", "optional component", "low-intensity sweetener", "sweetness intensity Xc", "sweetness intensity Xd", "other components" and energy are defined as described in the above section for the A1-th embodiment of the flavored water, and the numerical values described in the above section for the A1-th embodiment of the flavored water are applicable to the numerical values as they are.

### <<B2-th embodiment>>

The present invention provides, as the B2-th embodiment, the following method for producing flavored water with an enhanced sweetness (hereinafter also referred to as "the production method B of the present invention").

A method for producing flavored water of the present invention, comprising, to a raw material,
(a) adding a high-intensity sweetener in an amount corresponding to a sweetness intensity X1,
(b) adding an amino acid or a derivative or a salt thereof in an amount less than a taste recognition threshold, and
(c) adding sodium so that a content of sodium in the beverage is less than 50 mg/100 ml.

The flavored water produced by the method of the present invention is the flavored water B of the present invention described in the above section "1-1. Flavored water with an enhanced sweetness". Additionally, the "raw material" in the method of the present invention may be each material or a mixture thereof required for the production of the flavored water, and may further include optional components such as a preservative, a flavor, and a carrier. The "raw material" may be made up of several materials.

In the production method of the present invention, any of the following (a) to (c) may be carried out first.
(a) adding a high-intensity sweetener in an amount corresponding to a sweetness intensity X1
(b) adding an amino acid or a derivative or a salt thereof in an amount less than a taste recognition threshold
(c) adding sodium so that a content of sodium in the beverage is less than 50 mg/100 ml.

Two or more steps may be carried out simultaneously. For example, (a) and (b), (a) and (c), (b) and (c), or (a) and (b) and (c) may be carried out simultaneously.

In Step (a), a high-intensity sweetener in an amount corresponding to a sweetness intensity X1 is added to the raw material but the high-intensity sweetener in an amount corresponding to a sweetness intensity X1 does not need to be added at once but may be added in several divided batches.

Similarly, when an amino acid of less than a taste recognition threshold is added in Step (b), the amino acid of less than a taste recognition threshold does not need to be added at once but may be added in several divided batches. The amino acid or a derivative, or a salt thereof, added to the raw material in Step (b), can be selected from the amino acids or derivatives, or salts thereof described with respect to the B1-th embodiment in the above section "1-1. Flavored water with an enhanced sweetness".

Similarly, when sodium is added in Step (c) so that a content of sodium in the beverage is less than 50 mg/100 ml, the sodium does not need to be added at once but may be added in several divided batches. The sodium (or sodium source) added to the raw material in Step (c) can be selected from the sodium (or sodium source) described with respect to the B1-th embodiment in the above section "1-1. Flavored water with an enhanced sweetness".

The "addition" herein means not only the actual operation of adding either of the components (a), (b) and (c) to the raw materials but also the operation of adjusting amounts of the components (a), (b) and (c) to predetermined amounts respectively in the flavored water to be finally produced through the production process of the flavored water B of the present invention.

For example, a case in which when the first raw material contains a fruit juice, a grain, a bean, and extracts thereof and accordingly the raw material contains one or more of any of the components (a), (b) and (c) in advance, and the second raw material to be mixed with the first raw material also contains the components (a), (b) and (c) whereby the flavored water B of the present invention may be produced by mixing the first and the second raw materials, the operation of individually adding the components (a), (b) and (c) to the raw materials is not carried out but in the method of the present invention Steps (a) to (c) are considered to have been carried out as long as the flavored water of the present invention to be finally produced comprises (a) a high-intensity sweetener in an amount corresponding to a sweetness intensity X1, (b) an amino acid or a derivative or a salt thereof in an amount less than a taste recognition threshold and (c) less than 50 mg/100 ml of sodium.

The production method of an embodiment of the present invention (hereinafter, also referred to as the production method B of Embodiment A) further comprises adding (d) a low-intensity sweetener in an amount corresponding to a sweetness intensity X4. The production method of Embodiment A enables the production of the flavored water of the Embodiment A. Steps (a) to (d) may be carried out separately, or 2 or more steps may be carried out simultaneously. For example, (a) and (b), (a) and (c), (a) and (d), (b) and (c), (b) and (d), (c) and (d), (a) and (b) and (c), (a) and (b) and (d), (a) and (c) and (d), (b) and (c) and (d), or (a) and (b) and (c) and (d) may be carried out simultaneously.

In a case where the flavored water of the present invention is a beverage packed in a container, the method for producing the beverage of the present invention comprises a step of filling the flavored water in a container. In a case where the flavored water is a beverage packed in a container, the flavored water is preferably sterilized before or after filling of the flavored water in a container because it can be preserved for a long storage. For example, the flavored water, which is in a can, can be obtained by filling a predetermined amount of the flavored water in a can and heating and sterilizing it by, for example, retort sterilization at 120 to 125°C for about 5 to 20 minutes. Further, the flavored water, which is a beverage in a PET bottle, a carton, or a bottle, can be obtained as a beverage packed in a container by performing, for example, UHT sterilization for retention at 130 to 145°C for about 2 to 120 seconds and filling in a predetermined amount by hot-pack filling or aseptic filling at a low temperature.

In the method of the present invention, the "flavored water", "sweetness intensity X1", "high-intensity sweetener", "sweetness intensity X2", amount of sodium, form of sodium in the flavored water, "amino acid or a derivative or a salt thereof", "sweetness intensity X3", "optional component", "low-intensity sweetener", "sweetness intensity X4", "sweetness intensity X5", "other components" and energy are defined as described in the above section for the B1-th embodiment of the flavored water, and the numerical values described in the above section for the B1-th embodiment of the flavored water are applicable to the numerical values as they are.

### 2-2. Method for producing a sparkling beverage

### <<C2-th embodiment>>

The present invention provides, as the C2-th embodiment, the following method for producing a sparkling beverage with an enhanced sweetness (hereinafter also referred to as "the production method C of the present invention").

A method for producing a sparkling beverage of the present invention, comprising, to a raw material,
(a) adding a high-intensity sweetener in an amount corresponding to a sweetness intensity Xa, and
(b) adding an amino acid or a derivative or a salt thereof in an amount less than a taste recognition threshold.

The sparkling beverage produced by the method of the present invention is the sparkling beverage C of the present invention described in the above section "1-2. Sparkling beverage with an enhanced sweetness". Additionally, the "raw material" in the production method C of the present invention may be each material or a mixture thereof required for the production of the sparkling beverage, and may further include optional components such as a preservative, a flavor, and a carrier. The "raw material" may be made up of several materials.

In the production method of the present invention, any of the following (a) and (b) may be carried out first.
(a) adding a high-intensity sweetener in an amount corresponding to a sweetness intensity Xa
(b) adding an amino acid or a derivative or a salt thereof in an amount less than a taste recognition threshold

Two steps may be carried out simultaneously. For example, (a) and (b) may be carried out simultaneously.

In Step (a), a high-intensity sweetener in an amount corresponding to a sweetness intensity Xa is added to the raw material but the high-intensity sweetener in an amount corresponding to a sweetness intensity Xa does not need to be added at once but may be added in several divided batches.

Similarly, when an amino acid of less than a taste recognition threshold is added in Step (b), the amino acid of less than a taste recognition threshold does not need to be added at once but may be added in several divided batches. The amino acid or a derivative, or a salt thereof, added to the raw material in Step (b), can be selected from the amino acids or derivatives, or salts thereof described with respect to the C1-th embodiment in the above section "1-2. Sparkling beverage with an enhanced sweetness".

The "addition" herein means not only the actual operation of adding either of the components (a) and (b) to the raw materials but also the operation of adjusting amounts of the components (a) and (b) to predetermined amounts respectively in the sparkling beverage to be finally produced through the production process of the sparkling beverage C of the present invention.

For example, a case in which when the first raw material contains a fruit juice, a milk content, a grain, a bean, and extracts thereof and accordingly the raw material contains one or more of any of the components (a) and (b) in advance, and the second raw material to be mixed with the first raw material also contains the components (a) and (b) whereby the sparkling beverage C of the present invention may be produced by mixing the first and the second raw materials, the operation of individually adding the components (a) and (b) to the raw materials is not carried out but in the method of the present invention Steps (a) and (b) are considered to have been carried out as long as the sparkling beverage of the present invention to be finally produced comprises (a) a high-intensity sweetener in an amount corresponding to a sweetness intensity Xa and (b) an amino acid or a derivative or a salt thereof in an amount less than a taste recognition threshold.

The production method of an embodiment of the present invention (hereinafter, also referred to as the production method C of Embodiment A) further comprises adding (c) a low-intensity sweetener in an amount corresponding to a sweetness intensity Xc. The production method of Embodiment A enables the production of the sparkling beverage of Embodiment A. Steps (a) to (c) may be carried out separately, or 2 or more steps may be carried out simultaneously. For example, (a) and (b), (a) and (c), (b) and (c), or (a) and (b) and (c) may be carried out simultaneously.

In an embodiment of the present invention, the sparkling beverage may be prepared by preparing a syrup in which the components to be contained in the sparkling beverage of the present invention are concentrated and adding sparkling drinking water thereto for adjustment to a predetermined concentration or adding non-sparkling drinking water thereto and then feeding a carbon dioxide gas. Alternatively, the sparkling beverage of the present invention may also be prepared by directly adding predetermined components to a sparkling drink without preparation of the above syrup.

In a case where the sparkling beverage of the present invention is a beverage packed in a container, the method for producing the beverage of the present invention comprises a step of filling the sparkling beverage in a container. In a case where the sparkling beverage is a beverage packed in a container, the sparkling beverage is preferably sterilized before or after filling of the sparkling beverage in a container because it can be preserved for a long storage. The type of heating and sterilizing is not particularly limited, and, for example, a usual procedure such as UHT sterilization and retort sterilization can be adopted. The temperature in the heating and sterilizing step is not particularly limited, and the step is made, for example, at 65 to 130°C, preferably 85 to 120°C, for 10 to 40 minutes. Herein, any sterilization at an appropriate temperature for several seconds, for example, 5 to 30 seconds can be adopted as long as the same sterilization value as that under the above conditions is obtained. For example, the sparkling beverage, which is in a can, can be obtained by filling a predetermined amount of the sparkling beverage in a can and heating and sterilizing it by, for example, retort sterilization at 120 to 125°C for about 5 to 20 minutes. Further, the sparkling beverage, which is a beverage in a PET bottle, a carton, or a bottle, can be obtained as a beverage packed in a container by performing, for example, UHT sterilization for retention at 130 to 145°C for about 2 to 120 seconds and filling in a predetermined amount by hot-pack filling or aseptic filling at a low temperature.

In the method of the present invention, the "sparkling beverage", "sweetness intensity Xa", "high-intensity sweetener ", "sweetness intensity Xb", "amino acid or a derivative or a salt thereof", "optional component", "low-intensity sweetener", "sweetness intensity Xc", "sweetness intensity Xd", "other components" and energy are defined as described in the above section for the C1-th embodiment of the sparkling beverage, and the numerical values described in the above section for the C1-th embodiment of the sparkling beverage are applicable to the numerical values as they are.

### <<D2-th embodiment>>

The present invention provides, as the D2-th embodiment, the following method for producing a sparkling beverage with an enhanced sweetness (hereinafter also referred to as "the production method D of the present invention").

A method for producing a sparkling beverage of the present invention, comprising, to a raw material,
(a) adding a high-intensity sweetener in an amount corresponding to a sweetness intensity X1,
(b) adding an amino acid or a derivative or a salt thereof in an amount less than a taste recognition threshold, and
(c) adding sodium so that a content of sodium in the beverage is 6 to 60 mg/100 ml.

The sparkling beverage produced by the method of the present invention is the sparkling beverage D of the present invention described in the above section "1-2. Sparkling beverage with an enhanced sweetness". Additionally, the "raw material" in the production method of the present invention may be each material or a mixture thereof required for the production of the sparkling beverage, and may further include optional components such as a preservative, a flavor, and a carrier. The "raw material" may be made up of several materials.

In the production method of the present invention, any of the following (a) to (c) may be carried out first.
(a) adding a high-intensity sweetener in an amount corresponding to a sweetness intensity X1
(b) adding an amino acid or a derivative or a salt thereof in an amount less than a taste recognition threshold
(c) adding sodium so that a content of sodium in the beverage is 6 to 60 mg/100 ml.

Two or more steps may be carried out simultaneously. For example, (a) and (b), (a) and (c), (b) and (c), or (a) and (b) and (c) may be carried out simultaneously.

In Step (a), a high-intensity sweetener in an amount corresponding to a sweetness intensity X1 is added to the raw material but the high-intensity sweetener in an amount corresponding to a sweetness intensity X1 does not need to be added at once but may be added in several divided batches.

Similarly, when an amino acid of less than a taste recognition threshold is added in Step (b), the amino acid of less than a taste recognition threshold does not need to be added at once but may be added in several divided batches. The amino acid or a derivative, or a salt thereof, added to the raw material in Step (b), can be selected from the amino acids or derivatives, or salts thereof described with respect to the D1-th embodiment in the above section "1-2. Sparkling beverage with an enhanced sweetness".

Similarly, when sodium is added in Step (c) so that a content of sodium in the beverage is 6 to 60 mg/100 ml, the sodium does not need to be added at once but may be added in several divided batches. The sodium (or sodium source) added to the raw material in Step (c) may be selected from the sodium (or sodium source) described in the above section "1-2. Sparkling beverage with an enhanced sweetness".

The "addition" herein means not only the actual operation of adding either of the components (a), (b) and (c) to the raw materials but also the operation of adjusting amounts of the components (a), (b) and (c) to predetermined amounts respectively in the sparkling beverage to be finally produced through the production process of the sparkling beverage D of the present invention.

For example, a case in which when the first raw material contains a fruit juice, a milk content, a grain, a bean, and extracts thereof and accordingly the raw material contains one or more of any of the components (a), (b), and (c) in advance, and the second raw material to be mixed with the first raw material also contains the components (a), (b) and (c) whereby the sparkling beverage D of the present invention may be produced by mixing the first and the second raw materials, the operation of individually adding the components (a), (b) and (c) to the raw materials is not carried out but in the method of the present invention Steps (a) to (c) are considered to have been carried out as long as the sparkling beverage of the present invention to be finally produced comprises (a) a high-intensity sweetener in an amount corresponding to a sweetness intensity X1, (b) an amino acid or a derivative or a salt thereof in an amount less than a taste recognition threshold and (c) 6 to 60 mg/100 ml of sodium.

The production method of an embodiment of the present invention (hereinafter, also referred to as the production method D of Embodiment A) further comprises adding (d) a low-intensity sweetener in an amount corresponding to a sweetness intensity X4. The production method of Embodiment A enables the production of the sparkling beverage of Embodiment A. Steps (a) to (d) may be carried out separately, or 2 or more steps may be carried out simultaneously. For example, (a) and (b), (a) and (c), (a) and (d), (b) and (c), (b) and (d), (c) and (d), (a) and (b) and (c), (a) and (b) and (d), (a) and (c) and (d), (b) and (c) and (d), or (a) and (b) and (c) and (d) may be carried out simultaneously.

In an embodiment of the present invention, the sparkling beverage may be prepared by preparing a syrup in which the components to be contained in the sparkling beverage of the present invention are concentrated and adding sparkling drinking water thereto for adjustment to a predetermined concentration or adding non-sparkling drinking water thereto and then feeding a carbon dioxide gas. Alternatively, the sparkling beverage of the present invention may also be prepared by directly adding predetermined components to a sparkling drink without preparation of the above syrup.

In a case where the sparkling beverage of the present invention is a beverage packed in a container, the method for producing the beverage of the present invention comprises a step of filling the sparkling beverage in a container. In a case where the sparkling beverage is a beverage packed in a container, the sparkling beverage is preferably sterilized before or after filling of the sparkling beverage in a container because it can be preserved for a long storage. The type of heating and sterilizing is not particularly limited, and, for example, a usual procedure such as UHT sterilization and retort sterilization can be adopted. The temperature in the heating and sterilizing step is not particularly limited, and the step is made, for example, at 65 to 130°C, preferably 85 to 120°C, for 10 to 40 minutes. Herein, any sterilization at an appropriate temperature for several seconds, for example, 5 to 30 seconds can be adopted as long as the same sterilization value as that under the above conditions is obtained. For example, the sparkling beverage, which is in a can, can be obtained by filling a predetermined amount of the sparkling beverage in a can and performing heating and sterilizing it by, for example, retort sterilization at 120 to 125°C for about 5 to 20 minutes. Further, the sparkling beverage, which is a beverage in a PET bottle, a carton, or a bottle, can be obtained as a beverage packed in a container by performing, for example, UHT sterilization for retention at 130 to 145°C for about 2 to 120 seconds and filling in a predetermined amount by hot-pack filling or aseptic filling at a low temperature.

In the method of the present invention, the "sparkling beverage", "sweetness intensity X1", "high-intensity sweetener", "sweetness intensity X2", amount of sodium, form of sodium in the sparkling beverage, "amino acid or a derivative or a salt thereof", "sweetness intensity X3", "optional component", "low-intensity sweetener", "sweetness intensity X4", "sweetness intensity X5", "other components" and energy are defined as described in the above section for the D1-th embodiment of the sparkling beverage, and the numerical values described in the above section for the D1-th embodiment of the sparkling beverage are applicable to the numerical values as they are.

### 3. Method for enhancing a sweetness intensity of a beverage

### <<Third embodiment>>

The present invention provides, as the third embodiment, a method for enhancing a sweetness intensity of a beverage (hereinafter referred to as the enhancement method of the present invention").

In an embodiment of the enhancement method of the present invention, a method for enhancing a sweetness intensity of a beverage is provided,
wherein the beverage contains
(a) a high-intensity sweetener in an amount corresponding to a sweetness intensity X1, and
(b) an amino acid or a derivative or a salt thereof in an amount less than a taste recognition threshold. In the present embodiment, X1 corresponds to Xa in the A3-the embodiment (Corresponding to Japanese Patent Applications No. 2020-147865/2020-185301) and the C3-th embodiment (Corresponding to Japanese Patent Applications No. 2020-147855/2020-185326).

### 3-1. Method for enhancing a sweetness intensity of flavored water

### <<A3-th embodiment>>

The present invention provides, as the A3-the embodiment, a method for enhancing a sweetness intensity of flavored water (hereinafter also referred to as "the enhancement method A of the present invention").

In an embodiment of the enhancement method of the present invention, a method for enhancing a sweetness intensity of flavored water is provided,
wherein the flavored water contains
(a) a high-intensity sweetener in an amount corresponding to a sweetness intensity Xa, and
(b) an amino acid or a derivative or a salt thereof in an amount less than a taste recognition threshold.

According to an embodiment of the enhancement method of the present invention, a sweetness of the flavored water is enhanced and flavored water having a sweetness more than a sweetness intensity obtained when the component (a) is simply added to the flavored water may be provided. Specifically, an amino acid is added simultaneously or separately to the flavored water containing a predetermined amount of a high-intensity sweetener, and after addition, an amino acid of less than a taste recognition threshold is contained in the flavored water thereby to provide the flavored water with a sweetness more than a sweetness intensity obtained when the high-intensity sweetener alone is added. The type and amount of the amino acid or a derivative or a salt thereof to be added can be selected so as to be any type and content of the amino acid or a derivative or a salt thereof in the flavored water described with respect to the A1-th embodiment of the above section "1-1. Flavored water with an enhanced sweetness". For example, an amino acid selected from glycine, alanine, valine, isoleucine, leucine, serine, threonine, glutamine, asparagine, arginine, lysine, histidine, and a combination thereof may be added to the flavored water in any amount described with respect to the A1-th embodiment of the above section "1-1. Flavored water with an enhanced sweetness".

In another embodiment of the enhancement method of the present invention, (c) a low-intensity sweetener in an amount corresponding to a sweetness intensity Xc may be further contained.

According to the enhancement method of the present embodiment, a sweetness of the flavored water is enhanced and flavored water having a sweetness more than a sweetness intensity obtained when the component (a) and the component (c) are simply added to the flavored water may be provided. Specifically, an amino acid is added simultaneously or separately to the flavored water containing predetermined amounts of a high-intensity sweetener and a low-intensity sweetener, and after addition, an amino acid of less than a taste recognition threshold is contained in the flavored water thereby to provide the flavored water with a sweetness more than a sweetness intensity obtained when the high-intensity sweetener alone is added.

In still another embodiment of the enhancement method of the present invention, a method for enhancing a sweetness intensity of flavored water is provided,
wherein the flavored water contains
(b) an amino acid or a derivative or a salt thereof in an amount less than a taste recognition threshold, and
(c) a low-intensity sweetener in an amount corresponding to a sweetness intensity Xc.

According to the enhancement method of the present embodiment, a sweetness of the flavored water is enhanced and flavored water having a sweetness more than a sweetness intensity obtained when the component (c) is simply added to the flavored water can be provided. Specifically, an amino acid is added simultaneously or separately to the flavored water containing a predetermined amount of a low-intensity sweetener, and after addition, an amino acid of less than a taste recognition threshold is contained in the flavored water thereby to provide the flavored water with a sweetness more than a sweetness intensity obtained when the low-intensity sweetener alone is added. The type and amount of the amino acid or a derivative or a salt thereof to be added may be selected so as to be any type and content of the amino acid or a derivative or a salt thereof in the flavored water described with respect to the A1-th embodiment of the above section "1-1. Flavored water with an enhanced sweetness". For example, an amino acid selected from glycine, alanine, valine, isoleucine, leucine, serine, threonine, glutamine, asparagine, arginine, lysine, histidine, and a combination thereof may be added to the flavored water in any amount described with respect to the A1-th embodiment of the above section "1-1. Flavored water with an enhanced sweetness".

In an embodiment of the present invention, an amino acid of less than a taste recognition threshold is added to the flavored water containing a high-intensity sweetener in an amount corresponding to a sweetness intensity Xa and/or a low-intensity sweetener in an amount corresponding to a sweetness intensity Xc.

Additionally, in an embodiment of the present invention, an amount of an amino acid added may be an amount so that an amount of the amino acid in the flavored water is 100 mM or less, 90 mM or less, 80 mM or less, 70 mM or less, 60 mM or less, 50 mM or less, 40 mM or less, 30 mM or less, 20 mM or less, 15 mM or less, 14 mM or less, 13 mM or less, 12 mM or less, 11 mM or less, 10 mM or less, 9.5 mM or less, 9.0 mM or less, 8.5 mM or less, 8.0 mM or less, 7.5 mM or less, 7.0 mM or less, 6.5 mM or less, 6.0 mM or less, 5.5 mM or less, 5.0 mM or less, 4.5 mM or less, 4.0 mM or less, 3.5 mM or less, 3.0 mM or less, 2.5 mM or less, 2.0 mM or less, 1.5 mM or less, 1.0 mM or less, 0.5 mM or less, 0.5 to 100 mM, 1.0 to 100 mM, 1.5 to 100 mM, 2.0 to 100 mM, 2.5 to 100 mM, 3.0 to 100 mM, 3.5 to 100 mM, 4.0 to 100 mM, 4.5 to 100 mM, 5.0 to 100 mM, 5.5 to 100 mM, 6.0 to 100 mM, 6.5 to 100 mM, 7.0 to 100 mM, 7.5 to 100 mM, 8.0 to 100 mM, 8.5 to 100 mM, 9.0 to 100 mM, 9.5 to 100 mM, 10 to 100 mM, 11 to 100 mM, 12 to 100 mM, 13 to 100 mM, 14 to 100 mM, 15 to 100 mM, 20 to 100 mM, 30 to 100 mM, 40 to 100 mM, 50 to 100 mM, 60 to 100 mM, 70 to 100 mM, 80 to 100 mM, 90 to 100 mM, 0.5 to 90 mM, 1.0 to 90 mM, 1.5 to 90 mM, 2.0 to 90 mM, 2.5 to 90 mM, 3.0 to 90 mM, 3.5 to 90 mM, 4.0 to 90 mM, 4.5 to 90 mM, 5.0 to 90 mM, 5.5 to 90 mM, 6.0 to 90 mM, 6.5 to 90 mM, 7.0 to 90 mM, 7.5 to 90 mM, 8.0 to 90 mM, 8.5 to 90 mM, 9.0 to 90 mM, 9.5 to 90 mM, 10 to 90 mM, 11 to 90 mM, 12 to 90 mM, 13 to 90 mM, 14 to 90 mM, 15 to 90 mM, 20 to 90 mM, 30 to 90 mM, 40 to 90 mM, 50 to 90 mM, 60 to 90 mM, 70 to 90 mM, 80 to 90 mM, 0.5 to 80 mM, 1.0 to 80 mM, 1.5 to 80 mM, 2.0 to 80 mM, 2.5 to 80 mM, 3.0 to 80 mM, 3.5 to 80 mM, 4.0 to 80 mM, 4.5 to 80 mM, 5.0 to 80 mM, 5.5 to 80 mM, 6.0 to 80 mM, 6.5 to 80 mM, 7.0 to 80 mM, 7.5 to 80 mM, 8.0 to 80 mM, 8.5 to 80 mM, 9.0 to 80 mM, 9.5 to 80 mM, 10 to 80 mM, 11 to 80 mM, 12 to 80 mM, 13 to 80 mM, 14 to 80 mM, 15 to 80 mM, 20 to 80 mM, 30 to 80 mM, 40 to 80 mM, 50 to 80 mM, 60 to 80 mM, 70 to 80 mM, 0.5 to 70 mM, 1.0 to 70 mM, 1.5 to 70 mM, 2.0 to 70 mM, 2.5 to 70 mM, 3.0 to 70 mM, 3.5 to 70 mM, 4.0 to 70 mM, 4.5 to 70 mM, 5.0 to 70 mM, 5.5 to 70 mM, 6.0 to 70 mM, 6.5 to 70 mM, 7.0 to 70 mM, 7.5 to 70 mM, 8.0 to 70 mM, 8.5 to 70 mM, 9.0 to 70 mM, 9.5 to 70 mM, 10 to 70 mM, 11 to 70 mM, 12 to 70 mM, 13 to 70 mM, 14 to 70 mM, 15 to 70 mM, 20 to 70 mM, 30 to 70 mM, 40 to 70 mM, 50 to 70 mM, 60 to 70 mM, 0.5 to 60 mM, 1.0 to 60 mM, 1.5 to 60 mM, 2.0 to 60 mM, 2.5 to 60 mM, 3.0 to 60 mM, 3.5 to 60 mM, 4.0 to 60 mM, 4.5 to 60 mM, 5.0 to 60 mM, 5.5 to 60 mM, 6.0 to 60 mM, 6.5 to 60 mM, 7.0 to 60 mM, 7.5 to 60 mM, 8.0 to 60 mM, 8.5 to 60 mM, 9.0 to 60 mM, 9.5 to 60 mM, 10 to 60 mM, 11 to 60 mM, 12 to 60 mM, 13 to 60 mM, 14 to 60 mM, 15 to 60 mM, 20 to 60 mM, 30 to 60 mM, 40 to 60 mM, 50 to 60 mM, 0.5 to 50 mM, 1.0 to 50 mM, 1.5 to 50 mM, 2.0 to 50 mM, 2.5 to 50 mM, 3.0 to 50 mM, 3.5 to 50 mM, 4.0 to 50 mM, 4.5 to 50 mM, 5.0 to 50 mM, 5.5 to 50 mM, 6.0 to 50 mM, 6.5 to 50 mM, 7.0 to 50 mM, 7.5 to 50 mM, 8.0 to 50 mM, 8.5 to 50 mM, 9.0 to 50 mM, 9.5 to 50 mM, 10 to 50 mM, 11 to 50 mM, 12 to 50 mM, 13 to 50 mM, 14 to 50 mM, 15 to 50 mM, 20 to 50 mM, 30 to 50 mM, 40 to 50 mM, 0.5 to 40 mM, 1.0 to 40 mM, 1.5 to 40 mM, 2.0 to 40 mM, 2.5 to 40 mM, 3.0 to 40 mM, 3.5 to 40 mM, 4.0 to 40 mM, 4.5 to 40 mM, 5.0 to 40 mM, 5.5 to 40 mM, 6.0 to 40 mM, 6.5 to 40 mM, 7.0 to 40 mM, 7.5 to 40 mM, 8.0 to 40 mM, 8.5 to 40 mM, 9.0 to 40 mM, 9.5 to 40 mM, 10 to 40 mM, 11 to 40 mM, 12 to 40 mM, 13 to 40 mM, 14 to 40 mM, 15 to 40 mM, 20 to 40 mM, 30 to 40 mM, 0.5 to 30 mM, 1.0 to 30 mM, 1.5 to 30 mM, 2.0 to 30 mM, 2.5 to 30 mM, 3.0 to 30 mM, 3.5 to 30 mM, 4.0 to 30 mM, 4.5 to 30 mM, 5.0 to 30 mM, 5.5 to 30 mM, 6.0 to 30 mM, 6.5 to 30 mM, 7.0 to 30 mM, 7.5 to 30 mM, 8.0 to 30 mM, 8.5 to 30 mM, 9.0 to 30 mM, 9.5 to 30 mM, 10 to 30 mM, 11 to 30 mM, 12 to 30 mM, 13 to 30 mM, 14 to 30 mM, 15 to 30 mM, 20 to 30 mM, 0.5 to 20 mM, 1.0 to 20 mM, 1.5 to 20 mM, 2.0 to 20 mM, 2.5 to 20 mM, 3.0 to 20 mM, 3.5 to 20 mM, 4.0 to 20 mM, 4.5 to 20 mM, 5.0 to 20 mM, 5.5 to 20 mM, 6.0 to 20 mM, 6.5 to 20 mM, 7.0 to 20 mM, 7.5 to 20 mM, 8.0 to 20 mM, 8.5 to 20 mM, 9.0 to 20 mM, 9.5 to 20 mM, 10 to 20 mM, 11 to 20 mM, 12 to 20 mM, 13 to 20 mM, 14 to 20 mM or 15 to 20 mM.

In the sweetness enhancement method of the present invention, the "flavored water", "sweetness intensity Xa", "high-intensity sweetener", "sweetness intensity Xb", "amino acid or a derivative or a salt thereof", "optional component", "low-intensity sweetener", "sweetness intensity Xc", "sweetness intensity Xd", "other components" and energy are defined as described in the above section for the A1-th embodiment of the flavored water, and the numerical values described in the above section for the A1-th embodiment of the flavored water are applicable to the numerical values as they are.

### <<B3-th embodiment>>

The present invention provides, as the B3-th embodiment, a method for enhancing a sweetness intensity of flavored water (hereinafter also referred to as "the enhancement method B of the present invention").

In an embodiment of the enhancement method of the present invention, a method for enhancing a sweetness intensity of flavored water is provided,
wherein the flavored water contains
(a) a high-intensity sweetener in an amount corresponding to a sweetness intensity X1,
(b) an amino acid or a derivative or a salt thereof in an amount less than a taste recognition threshold, and
(c) less than 50 mg/100 ml of sodium.

According to an embodiment of the enhancement method of the present invention, a sweetness of the flavored water is enhanced and flavored water having a sweetness more than a sweetness intensity obtained when the component (a) is simply added to the flavored water can be provided. Specifically, sodium (or sodium source) and an amino acid are added simultaneously or separately to the flavored water containing a predetermined amount of a high-intensity sweetener, and after addition, less than 50 mg/100 ml of sodium and an amino acid of less than a taste recognition threshold are contained in the flavored water thereby to provide the flavored water with a sweetness more than a sweetness intensity obtained when the high-intensity sweetener alone is added. The amount of sodium (or sodium source) to be added can be selected from amounts described with respect to the B1-th embodiment of the above section "1-1. Flavored water with an enhanced sweetness". The type and amount of the amino acid or a derivative or a salt thereof to be added can be selected so as to be any type and content of the amino acid or a derivative or a salt thereof in the flavored water described with respect to the B1-th embodiment of the above section "1-1. Flavored water with an enhanced sweetness". For example, an amino acid selected from glycine, alanine, valine, isoleucine, leucine, serine, threonine, glutamine, asparagine, arginine, lysine, histidine, and a combination thereof may be added to the flavored water in any amount described with respect to the B1-th embodiment of the above section "1-1. Flavored water with an enhanced sweetness".

In another embodiment of the enhancement method of the present invention, (d) a low-intensity sweetener in an amount corresponding to a sweetness intensity X4 may be further contained.

According to the enhancement method of the present embodiment, a sweetness of the flavored water is enhanced and flavored water having a sweetness more than a sweetness intensity obtained when the component (a) and the component (d) are simply added to the flavored water can be provided. Specifically, sodium (or sodium source) and an amino acid are added simultaneously or separately to the flavored water containing predetermined amounts of a high-intensity sweetener and a low-intensity sweetener, and after addition, less than 50 mg/100 ml of sodium and an amino acid of less than a taste recognition threshold are contained in the flavored water thereby to provide the flavored water with a sweetness more than a sweetness intensity obtained when the high-intensity sweetener alone is added.

In still another embodiment of the enhancement method of the present invention, a method for enhancing a sweetness intensity of flavored water is provided,
wherein the flavored water contains
(b) an amino acid or a derivative or a salt thereof in an amount less than a taste recognition threshold,
(c) less than 50 mg/100 ml of sodium, and
(d) a low-intensity sweetener in an amount corresponding to a sweetness intensity X4.

According to the enhancement method of the present embodiment, a sweetness of the flavored water is enhanced and flavored water having a sweetness more than a sweetness intensity obtained when the component (d) is simply added to the flavored water can be provided. Specifically, sodium (or sodium source) and an amino acid are added simultaneously or separately to the flavored water containing a predetermined amount of a low-intensity sweetener, and after addition, less than 50 mg/100 ml, 0.1 to 40 mg/100 ml, 1 to 30 mg/100 ml or 5 to 25 mg/100 ml of sodium and an amino acid of less than a taste recognition threshold are contained in the flavored water thereby to provide the flavored water with a sweetness more than a sweetness intensity obtained when the low-intensity sweetener alone is added. Also in this embodiment, the amount of sodium (or sodium source) to be added can be selected from amounts described with respect to the B1-th embodiment of the above section "1-1. Flavored water with an enhanced sweetness". The type and amount of the amino acid or a derivative or a salt thereof to be added can be selected so as to be any type and content of the amino acid or a derivative or a salt thereof in the flavored water described with respect to the B1-th embodiment of the above section "1-1. Flavored water with an enhanced sweetness". For example, an amino acid selected from glycine, alanine, valine, isoleucine, leucine, serine, threonine, glutamine, asparagine, arginine, lysine, histidine, and a combination thereof may be added to the flavored water in any amount described with respect to the B1-th embodiment of the above section "1-1. Flavored water with an enhanced sweetness".

In an embodiment of the present invention, less than 50 mg/100 ml of sodium and an amino acid of less than a taste recognition threshold are added to the flavored water containing a high-intensity sweetener in an amount corresponding to a sweetness intensity X1 and/or a low-intensity sweetener in an amount corresponding to a sweetness intensity X4. In other embodiments of the present invention, an amount of a sodium source added is an amount so that the amount of sodium in the flavored water is 0.1 to 40 mg/100 ml, 1 to 30 mg/100 ml or 5 to 25 mg/100 ml. In other embodiments, an amount of sodium may be an amount so that an amount of sodium in the flavored water ranges from 0.1 to 45 mg/100 ml, 0.1 to 40 mg/100 ml, 0.1 to 35 mg/100 ml, 0.1 to 30 mg/100 ml, 0.1 to 25 mg/100 ml, 0.1 to 20 mg/100 ml, 0.1 to 19 mg/100 ml, 0.1 to 18 mg/100 ml, 0.1 to 17 mg/100 ml, 0.1 to 16 mg/100 ml, 0.1 to 15 mg/100 ml, 0.1 to 14 mg/100 ml, 0.1 to 13 mg/100 ml, 0.1 to 12 mg/100 ml, 0.1 to 11 mg/100 ml, 0.1 to 10 mg/100 ml, 1 mg/100 ml or more and less than 50 mg/100 ml, 1 to 45 mg/100 ml, 1 to 40 mg/100 ml, 1 to 35 mg/100 ml, 1 to 30 mg/100 ml, 1 to 25 mg/100 ml, 1 to 20 mg/100 ml, 1 to 19 mg/100 ml, 1 to 18 mg/100 ml, 1 to 17 mg/100 ml, 1 to 16 mg/100 ml, 1 to 15 mg/100 ml, 1 to 14 mg/100 ml, 1 to 13 mg/100 ml, 1 to 12 mg/100 ml, 1 to 11 mg/100 ml, 1 to 10 mg/100 ml, 5 mg/100 ml or more and less than 50 mg/100 ml, 5 to 45 mg/100 ml, 5 to 40 mg/100 ml, 5 to 35 mg/100 ml, 5 to 30 mg/100 ml, 5 to 25 mg/100 ml, 5 to 20 mg/100 ml, 5 to 19 mg/100 ml, 5 to 18 mg/100 ml, 5 to 17 mg/100 ml, 5 to 16 mg/100 ml, 5 to 15 mg/100 ml, 5 to 14 mg/100 ml, 5 to 13 mg/100 ml, 5 to 12 mg/100 ml, 5 to 11 mg/100 ml, 5 to 10 mg/100 ml, 7 mg/100 ml or more and less than 50 mg/100 ml, 7 to 45 mg/100 ml, 7 to 40 mg/100 ml, 7 to 35 mg/100 ml, 7 to 30 mg/100 ml, 7 to 25 mg/100 ml, 7 to 20 mg/100 ml, 7 to 19 mg/100 ml, 7 to 18 mg/100 ml, 7 to 17 mg/100 ml, 7 to 16 mg/100 ml, 7 to 15 mg/100 ml, 10 mg/100 ml or more and less than 50 mg/100 ml, 10 to 45 mg/100 ml, 10 to 40 mg/100 ml, 10 to 35 mg/100 ml, 10 to 30 mg/100 ml, 10 to 25 mg/100 ml, 10 to 20 mg/100 ml, 10 to 19 mg/100 ml, 10 to 18 mg/100 ml, 10 to 17 mg/100 ml, 10 to 16 mg/100 ml, 10 to 15 mg/100 ml, 15 mg/100 ml or more and less than 50 mg/100 ml, 15 to 45 mg/100 ml, 15 to 40 mg/100 ml, 15 to 35 mg/100 ml, 15 to 30 mg/100 ml, 15 to 25 mg/100 ml, 15 to 20 mg/100 ml, 20 mg/100 ml or more and less than 50 mg/100 ml, 20 to 45 mg/100 ml, 20 to 40 mg/100 ml, 20 to 35 mg/100 ml, 20 to 30 mg/100 ml, 20 to 25 mg/100 ml, 25 mg/100 ml or more and less than 50 mg/100 ml, 25 to 45 mg/100 ml, 25 to 40 mg/100 ml, 25 to 35 mg/100 ml, or 25 to 30 mg/100 ml.

In an embodiment of the present invention, an amount of an amino acid added may be an amount so that an amount of the amino acid in the flavored water is 100 mM or less, 90 mM or less, 80 mM or less, 70 mM or less, 60 mM or less, 50 mM or less, 40 mM or less, 30 mM or less, 20 mM or less, 15 mM or less, 14 mM or less, 13 mM or less, 12 mM or less, 11 mM or less, 10 mM or less, 9.5 mM or less, 9.0 mM or less, 8.5 mM or less, 8.0 mM or less, 7.5 mM or less, 7.0 mM or less, 6.5 mM or less, 6.0 mM or less, 5.5 mM or less, 5.0 mM or less, 4.5 mM or less, 4.0 mM or less, 3.5 mM or less, 3.0 mM or less, 2.5 mM or less, 2.0 mM or less, 1.5 mM or less, 1.0 mM or less, 0.5 mM or less, 0.5 to 100 mM, 1.0 to 100 mM, 1.5 to 100 mM, 2.0 to 100 mM, 2.5 to 100 mM, 3.0 to 100 mM, 3.5 to 100 mM, 4.0 to 100 mM, 4.5 to 100 mM, 5.0 to 100 mM, 5.5 to 100 mM, 6.0 to 100 mM, 6.5 to 100 mM, 7.0 to 100 mM, 7.5 to 100 mM, 8.0 to 100 mM, 8.5 to 100 mM, 9.0 to 100 mM, 9.5 to 100 mM, 10 to 100 mM, 11 to 100 mM, 12 to 100 mM, 13 to 100 mM, 14 to 100 mM, 15 to 100 mM, 20 to 100 mM, 30 to 100 mM, 40 to 100 mM, 50 to 100 mM, 60 to 100 mM, 70 to 100 mM, 80 to 100 mM, 90 to 100 mM, 0.5 to 90 mM, 1.0 to 90 mM, 1.5 to 90 mM, 2.0 to 90 mM, 2.5 to 90 mM, 3.0 to 90 mM, 3.5 to 90 mM, 4.0 to 90 mM, 4.5 to 90 mM, 5.0 to 90 mM, 5.5 to 90 mM, 6.0 to 90 mM, 6.5 to 90 mM, 7.0 to 90 mM, 7.5 to 90 mM, 8.0 to 90 mM, 8.5 to 90 mM, 9.0 to 90 mM, 9.5 to 90 mM, 10 to 90 mM, 11 to 90 mM, 12 to 90 mM, 13 to 90 mM, 14 to 90 mM, 15 to 90 mM, 20 to 90 mM, 30 to 90 mM, 40 to 90 mM, 50 to 90 mM, 60 to 90 mM, 70 to 90 mM, 80 to 90 mM, 0.5 to 80 mM, 1.0 to 80 mM, 1.5 to 80 mM, 2.0 to 80 mM, 2.5 to 80 mM, 3.0 to 80 mM, 3.5 to 80 mM, 4.0 to 80 mM, 4.5 to 80 mM, 5.0 to 80 mM, 5.5 to 80 mM, 6.0 to 80 mM, 6.5 to 80 mM, 7.0 to 80 mM, 7.5 to 80 mM, 8.0 to 80 mM, 8.5 to 80 mM, 9.0 to 80 mM, 9.5 to 80 mM, 10 to 80 mM, 11 to 80 mM, 12 to 80 mM, 13 to 80 mM, 14 to 80 mM, 15 to 80 mM, 20 to 80 mM, 30 to 80 mM, 40 to 80 mM, 50 to 80 mM, 60 to 80 mM, 70 to 80 mM, 0.5 to 70 mM, 1.0 to 70 mM, 1.5 to 70 mM, 2.0 to 70 mM, 2.5 to 70 mM, 3.0 to 70 mM, 3.5 to 70 mM, 4.0 to 70 mM, 4.5 to 70 mM, 5.0 to 70 mM, 5.5 to 70 mM, 6.0 to 70 mM, 6.5 to 70 mM, 7.0 to 70 mM, 7.5 to 70 mM, 8.0 to 70 mM, 8.5 to 70 mM, 9.0 to 70 mM, 9.5 to 70 mM, 10 to 70 mM, 11 to 70 mM, 12 to 70 mM, 13 to 70 mM, 14 to 70 mM, 15 to 70 mM, 20 to 70 mM, 30 to 70 mM, 40 to 70 mM, 50 to 70 mM, 60 to 70 mM, 0.5 to 60 mM, 1.0 to 60 mM, 1.5 to 60 mM, 2.0 to 60 mM, 2.5 to 60 mM, 3.0 to 60 mM, 3.5 to 60 mM, 4.0 to 60 mM, 4.5 to 60 mM, 5.0 to 60 mM, 5.5 to 60 mM, 6.0 to 60 mM, 6.5 to 60 mM, 7.0 to 60 mM, 7.5 to 60 mM, 8.0 to 60 mM, 8.5 to 60 mM, 9.0 to 60 mM, 9.5 to 60 mM, 10 to 60 mM, 11 to 60 mM, 12 to 60 mM, 13 to 60 mM, 14 to 60 mM, 15 to 60 mM, 20 to 60 mM, 30 to 60 mM, 40 to 60 mM, 50 to 60 mM, 0.5 to 50 mM, 1.0 to 50 mM, 1.5 to 50 mM, 2.0 to 50 mM, 2.5 to 50 mM, 3.0 to 50 mM, 3.5 to 50 mM, 4.0 to 50 mM, 4.5 to 50 mM, 5.0 to 50 mM, 5.5 to 50 mM, 6.0 to 50 mM, 6.5 to 50 mM, 7.0 to 50 mM, 7.5 to 50 mM, 8.0 to 50 mM, 8.5 to 50 mM, 9.0 to 50 mM, 9.5 to 50 mM, 10 to 50 mM, 11 to 50 mM, 12 to 50 mM, 13 to 50 mM, 14 to 50 mM, 15 to 50 mM, 20 to 50 mM, 30 to 50 mM, 40 to 50 mM, 0.5 to 40 mM, 1.0 to 40 mM, 1.5 to 40 mM, 2.0 to 40 mM, 2.5 to 40 mM, 3.0 to 40 mM, 3.5 to 40 mM, 4.0 to 40 mM, 4.5 to 40 mM, 5.0 to 40 mM, 5.5 to 40 mM, 6.0 to 40 mM, 6.5 to 40 mM, 7.0 to 40 mM, 7.5 to 40 mM, 8.0 to 40 mM, 8.5 to 40 mM, 9.0 to 40 mM, 9.5 to 40 mM, 10 to 40 mM, 11 to 40 mM, 12 to 40 mM, 13 to 40 mM, 14 to 40 mM, 15 to 40 mM, 20 to 40 mM, 30 to 40 mM, 0.5 to 30 mM, 1.0 to 30 mM, 1.5 to 30 mM, 2.0 to 30 mM, 2.5 to 30 mM, 3.0 to 30 mM, 3.5 to 30 mM, 4.0 to 30 mM, 4.5 to 30 mM, 5.0 to 30 mM, 5.5 to 30 mM, 6.0 to 30 mM, 6.5 to 30 mM, 7.0 to 30 mM, 7.5 to 30 mM, 8.0 to 30 mM, 8.5 to 30 mM, 9.0 to 30 mM, 9.5 to 30 mM, 10 to 30 mM, 11 to 30 mM, 12 to 30 mM, 13 to 30 mM, 14 to 30 mM, 15 to 30 mM, 20 to 30 mM, 0.5 to 20 mM, 1.0 to 20 mM, 1.5 to 20 mM, 2.0 to 20 mM, 2.5 to 20 mM, 3.0 to 20 mM, 3.5 to 20 mM, 4.0 to 20 mM, 4.5 to 20 mM, 5.0 to 20 mM, 5.5 to 20 mM, 6.0 to 20 mM, 6.5 to 20 mM, 7.0 to 20 mM, 7.5 to 20 mM, 8.0 to 20 mM, 8.5 to 20 mM, 9.0 to 20 mM, 9.5 to 20 mM, 10 to 20 mM, 11 to 20 mM, 12 to 20 mM, 13 to 20 mM, 14 to 20 mM, or 15 to 20 mM.

In the sweetness enhancement method of the present invention, the "flavored water", "sweetness intensity X1", "high-intensity sweetener", "sweetness intensity X2", amount of sodium, form of sodium in the flavored water, "amino acid or a derivative or a salt thereof", "sweetness intensity X3", "optional component", "low-intensity sweetener", "sweetness intensity X4" , "sweetness intensity X5", "other components" and energy are defined as described in the above section for the B1-th embodiment of the flavored water, and the numerical values described in the above section for the B1-th embodiment of the flavored water are applicable to the numerical values as they are.

### 3-2. Method for enhancing a sweetness intensity of a sparkling beverage

### <<C3-th embodiment>>

The present invention provides, as the C3-th embodiment, a method for enhancing a sweetness intensity of a sparkling beverage (hereinafter also referred to as "the enhancement method C of the present invention").

In an embodiment of the enhancement method of the present invention, a method for enhancing a sweetness intensity of a sparkling beverage is provided,
wherein the sparkling beverage contains
(a) a high-intensity sweetener in an amount corresponding to a sweetness intensity Xa, and
(b) an amino acid or a derivative or a salt thereof in an amount less than a taste recognition threshold.

According to an embodiment of the enhancement method of the present invention, a sweetness of the sparkling beverage is enhanced and a sparkling beverage having a sweetness more than a sweetness intensity obtained when the component (a) is simply added to the sparkling beverage can be provided. Specifically, an amino acid is added simultaneously or separately to the sparkling beverage containing a predetermined amount of a high-intensity sweetener, and after addition, an amino acid of less than a taste recognition threshold is contained in the sparkling beverage thereby to provide the sparkling beverage with a sweetness more than a sweetness intensity obtained when the high-intensity sweetener alone is added. The type and amount of the amino acid or a derivative or a salt thereof to be added can be selected so as to be any type and content of the amino acid or a derivative or a salt thereof in the sparkling beverage described with respect to the C1-th embodiment of the above section "1-2. Sparkling beverage with an enhanced sweetness". For example, an amino acid selected from glycine, alanine, valine, isoleucine, leucine, serine, threonine, glutamine, asparagine, arginine, lysine, histidine, and a combination thereof may be added to the sparkling beverage in any amount described with respect to the C1-th embodiment of the above section "1-2. Sparkling beverage with an enhanced sweetness".

In another embodiment of the enhancement method of the present invention, (c) a low-intensity sweetener in an amount corresponding to a sweetness intensity Xc may be further contained.

According to the enhancement method of the present embodiment, a sweetness of the sparkling beverage is enhanced and a sparkling beverage having a sweetness more than a sweetness intensity obtained when the component (a) and the component (c) are simply added to the sparkling beverage can be provided. Specifically, an amino acid is added simultaneously or separately to the sparkling beverage containing predetermined amounts of a high-intensity sweetener and a low-intensity sweetener, and after addition, an amino acid of less than a taste recognition threshold is contained thereby to provide the sparkling beverage with a sweetness more than a sweetness intensity obtained when only the high-intensity sweetener and the low-intensity sweetener are added. The type and amount of the amino acid or a derivative or a salt thereof to be added can be selected so as to be any type and content of the amino acid or a derivative or a salt thereof in the sparkling beverage described with respect to the C1-th embodiment of the above section "1-2. Sparkling beverage with an enhanced sweetness". For example, an amino acid selected from glycine, alanine, valine, isoleucine, leucine, serine, threonine, glutamine, asparagine, arginine, lysine, histidine, and a combination thereof may be added to the sparkling beverage in any amount described with respect to the C1-th embodiment of the above section "1-2. Sparkling beverage with an enhanced sweetness".

In still another embodiment of the enhancement method of the present invention, a method for enhancing a sweetness intensity of a sparkling beverage is provided,
wherein the sparkling beverage contains
(b) an amino acid or a derivative or a salt thereof in an amount less than a taste recognition threshold, and
(c) a low-intensity sweetener in an amount corresponding to a sweetness intensity Xc.

According to the enhancement method of the present embodiment, a sweetness of the sparkling beverage is enhanced and a sparkling beverage having a sweetness more than a sweetness intensity obtained when the component (c) is simply added to the sparkling beverage can be provided. Specifically, an amino acid is added simultaneously or separately to the sparkling beverage containing a predetermined amount of a low-intensity sweetener, and after addition, an amino acid of less than a taste recognition threshold is contained in the sparkling beverage thereby to provide the sparkling beverage with a sweetness more than a sweetness intensity obtained when the low-intensity sweetener alone is added.

In an embodiment of the present invention, an amino acid of less than a taste recognition threshold is added to the sparkling beverage containing a high-intensity sweetener in an amount corresponding to a sweetness intensity Xa and/or a low-intensity sweetener in an amount corresponding to a sweetness intensity Xc.

In an embodiment of the present invention, an amount of an amino acid added may be an amount so that an amount of the amino acid in the sparkling beverage is 100 mM or less, 90 mM or less, 80 mM or less, 70 mM or less, 60 mM or less, 50 mM or less, 40 mM or less, 30 mM or less, 20 mM or less, 15 mM or less, 14 mM or less, 13 mM or less, 12 mM or less, 11 mM or less, 10 mM or less, 9.5 mM or less, 9.0 mM or less, 8.5 mM or less, 8.0 mM or less, 7.5 mM or less, 7.0 mM or less, 6.5 mM or less, 6.0 mM or less, 5.5 mM or less, 5.0 mM or less, 4.5 mM or less, 4.0 mM or less, 3.5 mM or less, 3.0 mM or less, 2.5 mM or less, 2.0 mM or less, 1.5 mM or less, 1.0 mM or less, 0.5 mM or less, 0.5 to 100 mM, 1.0 to 100 mM, 1.5 to 100 mM, 2.0 to 100 mM, 2.5 to 100 mM, 3.0 to 100 mM, 3.5 to 100 mM, 4.0 to 100 mM, 4.5 to 100 mM, 5.0 to 100 mM, 5.5 to 100 mM, 6.0 to 100 mM, 6.5 to 100 mM, 7.0 to 100 mM, 7.5 to 100 mM, 8.0 to 100 mM, 8.5 to 100 mM, 9.0 to 100 mM, 9.5 to 100 mM, 10 to 100 mM, 11 to 100 mM, 12 to 100 mM, 13 to 100 mM, 14 to 100 mM, 15 to 100 mM, 20 to 100 mM, 30 to 100 mM, 40 to 100 mM, 50 to 100 mM, 60 to 100 mM, 70 to 100 mM, 80 to 100 mM, 90 to 100 mM, 0.5 to 90 mM, 1.0 to 90 mM, 1.5 to 90 mM, 2.0 to 90 mM, 2.5 to 90 mM, 3.0 to 90 mM, 3.5 to 90 mM, 4.0 to 90 mM, 4.5 to 90 mM, 5.0 to 90 mM, 5.5 to 90 mM, 6.0 to 90 mM, 6.5 to 90 mM, 7.0 to 90 mM, 7.5 to 90 mM, 8.0 to 90 mM, 8.5 to 90 mM, 9.0 to 90 mM, 9.5 to 90 mM, 10 to 90 mM, 11 to 90 mM, 12 to 90 mM, 13 to 90 mM, 14 to 90 mM, 15 to 90 mM, 20 to 90 mM, 30 to 90 mM, 40 to 90 mM, 50 to 90 mM, 60 to 90 mM, 70 to 90 mM, 80 to 90 mM, 0.5 to 80 mM, 1.0 to 80 mM, 1.5 to 80 mM, 2.0 to 80 mM, 2.5 to 80 mM, 3.0 to 80 mM, 3.5 to 80 mM, 4.0 to 80 mM, 4.5 to 80 mM, 5.0 to 80 mM, 5.5 to 80 mM, 6.0 to 80 mM, 6.5 to 80 mM, 7.0 to 80 mM, 7.5 to 80 mM, 8.0 to 80 mM, 8.5 to 80 mM, 9.0 to 80 mM, 9.5 to 80 mM, 10 to 80 mM, 11 to 80 mM, 12 to 80 mM, 13 to 80 mM, 14 to 80 mM, 15 to 80 mM, 20 to 80 mM, 30 to 80 mM, 40 to 80 mM, 50 to 80 mM, 60 to 80 mM, 70 to 80 mM, 0.5 to 70 mM, 1.0 to 70 mM, 1.5 to 70 mM, 2.0 to 70 mM, 2.5 to 70 mM, 3.0 to 70 mM, 3.5 to 70 mM, 4.0 to 70 mM, 4.5 to 70 mM, 5.0 to 70 mM, 5.5 to 70 mM, 6.0 to 70 mM, 6.5 to 70 mM, 7.0 to 70 mM, 7.5 to 70 mM, 8.0 to 70 mM, 8.5 to 70 mM, 9.0 to 70 mM, 9.5 to 70 mM, 10 to 70 mM, 11 to 70 mM, 12 to 70 mM, 13 to 70 mM, 14 to 70 mM, 15 to 70 mM, 20 to 70 mM, 30 to 70 mM, 40 to 70 mM, 50 to 70 mM, 60 to 70 mM, 0.5 to 60 mM, 1.0 to 60 mM, 1.5 to 60 mM, 2.0 to 60 mM, 2.5 to 60 mM, 3.0 to 60 mM, 3.5 to 60 mM, 4.0 to 60 mM, 4.5 to 60 mM, 5.0 to 60 mM, 5.5 to 60 mM, 6.0 to 60 mM, 6.5 to 60 mM, 7.0 to 60 mM, 7.5 to 60 mM, 8.0 to 60 mM, 8.5 to 60 mM, 9.0 to 60 mM, 9.5 to 60 mM, 10 to 60 mM, 11 to 60 mM, 12 to 60 mM, 13 to 60 mM, 14 to 60 mM, 15 to 60 mM, 20 to 60 mM, 30 to 60 mM, 40 to 60 mM, 50 to 60 mM, 0.5 to 50 mM, 1.0 to 50 mM, 1.5 to 50 mM, 2.0 to 50 mM, 2.5 to 50 mM, 3.0 to 50 mM, 3.5 to 50 mM, 4.0 to 50 mM, 4.5 to 50 mM, 5.0 to 50 mM, 5.5 to 50 mM, 6.0 to 50 mM, 6.5 to 50 mM, 7.0 to 50 mM, 7.5 to 50 mM, 8.0 to 50 mM, 8.5 to 50 mM, 9.0 to 50 mM, 9.5 to 50 mM, 10 to 50 mM, 11 to 50 mM, 12 to 50 mM, 13 to 50 mM, 14 to 50 mM, 15 to 50 mM, 20 to 50 mM, 30 to 50 mM, 40 to 50 mM, 0.5 to 40 mM, 1.0 to 40 mM, 1.5 to 40 mM, 2.0 to 40 mM, 2.5 to 40 mM, 3.0 to 40 mM, 3.5 to 40 mM, 4.0 to 40 mM, 4.5 to 40 mM, 5.0 to 40 mM, 5.5 to 40 mM, 6.0 to 40 mM, 6.5 to 40 mM, 7.0 to 40 mM, 7.5 to 40 mM, 8.0 to 40 mM, 8.5 to 40 mM, 9.0 to 40 mM, 9.5 to 40 mM, 10 to 40 mM, 11 to 40 mM, 12 to 40 mM, 13 to 40 mM, 14 to 40 mM, 15 to 40 mM, 20 to 40 mM, 30 to 40 mM, 0.5 to 30 mM, 1.0 to 30 mM, 1.5 to 30 mM, 2.0 to 30 mM, 2.5 to 30 mM, 3.0 to 30 mM, 3.5 to 30 mM, 4.0 to 30 mM, 4.5 to 30 mM, 5.0 to 30 mM, 5.5 to 30 mM, 6.0 to 30 mM, 6.5 to 30 mM, 7.0 to 30 mM, 7.5 to 30 mM, 8.0 to 30 mM, 8.5 to 30 mM, 9.0 to 30 mM, 9.5 to 30 mM, 10 to 30 mM, 11 to 30 mM, 12 to 30 mM, 13 to 30 mM, 14 to 30 mM, 15 to 30 mM, 20 to 30 mM, 0.5 to 20 mM, 1.0 to 20 mM, 1.5 to 20 mM, 2.0 to 20 mM, 2.5 to 20 mM, 3.0 to 20 mM, 3.5 to 20 mM, 4.0 to 20 mM, 4.5 to 20 mM, 5.0 to 20 mM, 5.5 to 20 mM, 6.0 to 20 mM, 6.5 to 20 mM, 7.0 to 20 mM, 7.5 to 20 mM, 8.0 to 20 mM, 8.5 to 20 mM, 9.0 to 20 mM, 9.5 to 20 mM, 10 to 20 mM, 11 to 20 mM, 12 to 20 mM, 13 to 20 mM, 14 to 20 mM, 15 to 20 mM, 9 to 41 mM, 9 to 42 mM, or 9 to 43 mM.

In the sweetness enhancement method of the present invention, the "sparkling beverage", "sweetness intensity Xa", "high-intensity sweetener", "sweetness intensity Xb", "amino acid or a derivative or a salt thereof", "optional component", "low-intensity sweetener", "sweetness intensity Xc", "sweetness intensity Xd", "other components" and energy are defined as described in the above section for the C1-th embodiment of the sparkling beverage, and the numerical values described in the above section for the C1-th embodiment of the sparkling beverage are applicable to the numerical values as they are.

### <<D3-th embodiment>>

The present invention provides, as the D3-th embodiment, a method for enhancing a sweetness intensity of a sparkling beverage (hereinafter also referred to as "the enhancement method D of the present invention").

In an embodiment of the enhancement method of the present invention, a method for enhancing a sweetness intensity of a sparkling beverage is provided,
wherein the sparkling beverage contains
(a) a high-intensity sweetener in an amount corresponding to a sweetness intensity X1,
(b) an amino acid or a derivative or a salt thereof in an amount less than a taste recognition threshold, and
(c) 6 to 60 mg/100 ml of sodium.

According to an embodiment of the enhancement method of the present invention, a sweetness of the sparkling beverage is enhanced and a sparkling beverage having a sweetness more than a sweetness intensity obtained when the component (a) is simply added to the sparkling beverage can be provided. Specifically, sodium (or sodium source) and an amino acid are added simultaneously or separately to the sparkling beverage containing a predetermined amount of a high-intensity sweetener, and after addition, 6 to 60 mg/100 ml of sodium and an amino acid of less than a taste recognition threshold are contained in the sparkling beverage thereby to provide the sparkling beverage with a sweetness more than a sweetness intensity obtained when the high-intensity sweetener alone is added. The amount of sodium (or sodium source) to be added can be selected from amounts described with respect to the D1-th embodiment of the above section "1-2. Sparkling beverage with an enhanced sweetness". The type and amount of the amino acid or a derivative or a salt thereof to be added can be selected so as to be any type and content of the amino acid or a derivative or a salt thereof in the sparkling beverage described with respect to the D1-th embodiment of the above section "1-2. Sparkling beverage with an enhanced sweetness". For example, an amino acid selected from glycine, alanine, valine, isoleucine, leucine, serine, threonine, glutamine, asparagine, arginine, lysine, histidine, and a combination thereof may be added to the sparkling beverage in any amount described with respect to the D1-th embodiment of the above section "1-2. Sparkling beverage with an enhanced sweetness".

In another embodiment of the enhancement method of the present invention, (d) a low-intensity sweetener in an amount corresponding to a sweetness intensity X4 may be further contained.

According to the enhancement method of the present embodiment, a sweetness of the sparkling beverage is enhanced and a sparkling beverage having a sweetness more than a sweetness intensity obtained when the component (a) and the component (d) are simply added to the sparkling beverage can be provided. Specifically, sodium (or sodium source) and an amino acid are added simultaneously or separately to the sparkling beverage containing predetermined amounts of a high-intensity sweetener and a low-intensity sweetener, and after addition, 6 to 60 mg/100 ml of sodium and an amino acid of less than a taste recognition threshold are contained in the sparkling beverage thereby to provide the sparkling beverage with a sweetness more than a sweetness intensity obtained when only the high-intensity sweetener and the low-intensity sweetener are added.

In still another embodiment of the enhancement method of the present invention, a method for enhancing a sweetness intensity of a sparkling beverage is provided,
wherein the sparkling beverage contains
(b) an amino acid or a derivative or a salt thereof in an amount less than a taste recognition threshold,
(c) 6 to 60 mg/100 ml of sodium, and
(d) a low-intensity sweetener in an amount corresponding to a sweetness intensity X4.

According to the enhancement method of the present embodiment, a sweetness of the sparkling beverage is enhanced and a sparkling beverage having a sweetness more than a sweetness intensity obtained when the component (d) is simply added to the sparkling beverage can be provided. Specifically, sodium (or sodium source) and an amino acid are added simultaneously or separately to the sparkling beverage containing a predetermined amount of a low-intensity sweetener, and after addition, 6 to 60 mg/100 ml, 6 to 50 mg/100 ml or 6 to 35 mg/100 ml of sodium and an amino acid of less than a taste recognition threshold are contained in the sparkling beverage thereby to provide the sparkling beverage with a sweetness more than a sweetness intensity obtained when the low-intensity sweetener alone is added. Also in this embodiment, the amount of sodium (or sodium source) to be added can be selected from amounts described with respect to the D1-th embodiment of the above section "1-2. Sparkling beverage with an enhanced sweetness". The type and amount of the amino acid or a derivative or a salt thereof to be added can be selected so as to be any type and content of the amino acid or a derivative or a salt thereof in the sparkling beverage described with respect to the D1-th embodiment of the above section "1-2. Sparkling beverage with an enhanced sweetness". For example, an amino acid selected from glycine, alanine, valine, isoleucine, leucine, serine, threonine, glutamine, asparagine, arginine, lysine, histidine, and a combination thereof may be added to the sparkling beverage in any amount described with respect to the D1-th embodiment of the above section "1-2. Sparkling beverage with an enhanced sweetness".

In an embodiment of the present invention, 6 to 60 mg/100 ml of sodium and an amino acid of less than a taste recognition threshold are added to the sparkling beverage containing a high-intensity sweetener in an amount corresponding to a sweetness intensity X1 and/or a low-intensity sweetener in an amount corresponding to a sweetness intensity X4. In other embodiments of the present invention, an amount of a sodium source added is an amount so that the amount of sodium in the sparkling beverage is 0.1 to 40 mg/100 ml, 1 to 30 mg/100 ml or 5 to 25 mg/100 ml. In other embodiments, an amount of sodium may be an amount so that an amount of sodium in the sparkling beverage ranges from 0.1 to 45 mg/100 ml, 0.1 to 40 mg/100 ml, 0.1 to 35 mg/100 ml, 0.1 to 30 mg/100 ml, 0.1 to 25 mg/100 ml, 0.1 to 20 mg/100 ml, 0.1 to 19 mg/100 ml, 0.1 to 18 mg/100 ml, 0.1 to 17 mg/100 ml, 0.1 to 16 mg/100 ml, 0.1 to 15 mg/100 ml, 0.1 to 14 mg/100 ml, 0.1 to 13 mg/100 ml, 0.1 to 12 mg/100 ml, 0.1 to 11 mg/100 ml, 0.1 to 10 mg/100 ml, 1 mg/100 ml or more and less than 50 mg/100 ml, 1 to 45 mg/100 ml, 1 to 40 mg/100 ml, 1 to 35 mg/100 ml, 1 to 30 mg/100 ml, 1 to 25 mg/100 ml, 1 to 20 mg/100 ml, 1 to 19 mg/100 ml, 1 to 18 mg/100 ml, 1 to 17 mg/100 ml, 1 to 16 mg/100 ml, 1 to 15 mg/100 ml, 1 to 14 mg/100 ml, 1 to 13 mg/100 ml, 1 to 12 mg/100 ml, 1 to 11 mg/100 ml, 1 to 10 mg/100 ml, 5 mg/100 ml or more and less than 50 mg/100 ml, 5 to 45 mg/100 ml, 5 to 40 mg/100 ml, 5 to 35 mg/100 ml, 5 to 30 mg/100 ml, 5 to 25 mg/100 ml, 5 to 20 mg/100 ml, 5 to 19 mg/100 ml, 5 to 18 mg/100 ml, 5 to 17 mg/100 ml, 5 to 16 mg/100 ml, 5 to 15 mg/100 ml, 5 to 14 mg/100 ml, 5 to 13 mg/100 ml, 5 to 12 mg/100 ml, 5 to 11 mg/100 ml, 5 to 10 mg/100 ml, 7 mg/100 ml or more and less than 50 mg/100 ml, 7 to 45 mg/100 ml, 7 to 40 mg/100 ml, 7 to 35 mg/100 ml, 7 to 30 mg/100 ml, 7 to 25 mg/100 ml, 7 to 20 mg/100 ml, 7 to 19 mg/100 ml, 7 to 18 mg/100 ml, 7 to 17 mg/100 ml, 7 to 16 mg/100 ml, 7 to 15 mg/100 ml, 10 mg/100 ml or more and less than 50 mg/100 ml, 10 to 45 mg/100 ml, 10 to 40 mg/100 ml, 10 to 35 mg/100 ml, 10 to 30 mg/100 ml, 10 to 25 mg/100 ml, 10 to 20 mg/100 ml, 10 to 19 mg/100 ml, 10 to 18 mg/100 ml, 10 to 17 mg/100 ml, 10 to 16 mg/100 ml, 10 to 15 mg/100 ml, 15 mg/100 ml or more and less than 50 mg/100 ml, 15 to 45 mg/100 ml, 15 to 40 mg/100 ml, 15 to 35 mg/100 ml, 15 to 30 mg/100 ml, 15 to 25 mg/100 ml, 15 to 20 mg/100 ml, 20 mg/100 ml or more and less than 50 mg/100 ml, 20 to 45 mg/100 ml, 20 to 40 mg/100 ml, 20 to 35 mg/100 ml, 20 to 30 mg/100 ml, 20 to 25 mg/100 ml, 25 mg/100 ml or more and less than 50 mg/100 ml, 25 to 45 mg/100 ml, 25 to 40 mg/100 ml, 25 to 35 mg/100 ml, 25 to 30 mg/100 ml, 6 to 60 mg/100 ml, 6 to 55 mg/100 ml, 6 to 50 mg/100 ml, 6 to 45 mg/100 ml, 6 to 40 mg/100 ml, 6 to 35 mg/100 ml, 6 to 30 mg/100 ml, 6 to 25 mg/100 ml, 6 to 20 mg/100 ml, 6 to 19 mg/100 ml, 6 to 18 mg/100 ml, 6 to 17 mg/100 ml, 6 to 16 mg/100 ml, 6 to 15 mg/100 ml, 6 to 14 mg/100 ml, 6 to 13 mg/100 ml, 6 to 12 mg/100 ml, 6 to 11 mg/100 ml, 6 to 10 mg/100 ml, 8 to 60 mg/100 ml, 8 to 55 mg/100 ml, 8 to 50 mg/100 ml, 8 to 45 mg/100 ml, 8 to 40 mg/100 ml, 8 to 35 mg/100 ml, 8 to 30 mg/100 ml, 8 to 25 mg/100 ml, 8 to 20 mg/100 ml, 8 to 19 mg/100 ml, 8 to 18 mg/100 ml, 8 to 17 mg/100 ml, 8 to 16 mg/100 ml, 8 to 15 mg/100 ml, 8 to 14 mg/100 ml, 8 to 13 mg/100 ml, 8 to 12 mg/100 ml, 8 to 11 mg/100 ml, 8 to 10 mg/100 ml, 9 to 60 mg/100 ml, 9 to 55 mg/100 ml, 9 to 50 mg/100 ml, 9 to 45 mg/100 ml, 9 to 40 mg/100 ml, 9 to 35 mg/100 ml, 9 to 30 mg/100 ml, 9 to 25 mg/100 ml, 9 to 20 mg/100 ml, 9 to 19 mg/100 ml, 9 to 18 mg/100 ml, 9 to 17 mg/100 ml, 9 to 16 mg/100 ml, 9 to 15 mg/100 ml, 9 to 14 mg/100 ml, 9 to 13 mg/100 ml, 9 to 12 mg/100 ml, 9 to 11 mg/100 ml, or 9 to 10 mg/100 ml.

In an embodiment of the present invention, an amount of an amino acid added may be an amount so that an amount of the amino acid in the sparkling beverage is 100 mM or less, 90 mM or less, 80 mM or less, 70 mM or less, 60 mM or less, 50 mM or less, 40 mM or less, 30 mM or less, 20 mM or less, 15 mM or less, 14 mM or less, 13 mM or less, 12 mM or less, 11 mM or less, 10 mM or less, 9.5 mM or less, 9.0 mM or less, 8.5 mM or less, 8.0 mM or less, 7.5 mM or less, 7.0 mM or less, 6.5 mM or less, 6.0 mM or less, 5.5 mM or less, 5.0 mM or less, 4.5 mM or less, 4.0 mM or less, 3.5 mM or less, 3.0 mM or less, 2.5 mM or less, 2.0 mM or less, 1.5 mM or less, 1.0 mM or less, 0.5 mM or less, 0.5 to 100 mM, 1.0 to 100 mM, 1.5 to 100 mM, 2.0 to 100 mM, 2.5 to 100 mM, 3.0 to 100 mM, 3.5 to 100 mM, 4.0 to 100 mM, 4.5 to 100 mM, 5.0 to 100 mM, 5.5 to 100 mM, 6.0 to 100 mM, 6.5 to 100 mM, 7.0 to 100 mM, 7.5 to 100 mM, 8.0 to 100 mM, 8.5 to 100 mM, 9.0 to 100 mM, 9.5 to 100 mM, 10 to 100 mM, 11 to 100 mM, 12 to 100 mM, 13 to 100 mM, 14 to 100 mM, 15 to 100 mM, 20 to 100 mM, 30 to 100 mM, 40 to 100 mM, 50 to 100 mM, 60 to 100 mM, 70 to 100 mM, 80 to 100 mM, 90 to 100 mM, 0.5 to 90 mM, 1.0 to 90 mM, 1.5 to 90 mM, 2.0 to 90 mM, 2.5 to 90 mM, 3.0 to 90 mM, 3.5 to 90 mM, 4.0 to 90 mM, 4.5 to 90 mM, 5.0 to 90 mM, 5.5 to 90 mM, 6.0 to 90 mM, 6.5 to 90 mM, 7.0 to 90 mM, 7.5 to 90 mM, 8.0 to 90 mM, 8.5 to 90 mM, 9.0 to 90 mM, 9.5 to 90 mM, 10 to 90 mM, 11 to 90 mM, 12 to 90 mM, 13 to 90 mM, 14 to 90 mM, 15 to 90 mM, 20 to 90 mM, 30 to 90 mM, 40 to 90 mM, 50 to 90 mM, 60 to 90 mM, 70 to 90 mM, 80 to 90 mM, 0.5 to 80 mM, 1.0 to 80 mM, 1.5 to 80 mM, 2.0 to 80 mM, 2.5 to 80 mM, 3.0 to 80 mM, 3.5 to 80 mM, 4.0 to 80 mM, 4.5 to 80 mM, 5.0 to 80 mM, 5.5 to 80 mM, 6.0 to 80 mM, 6.5 to 80 mM, 7.0 to 80 mM, 7.5 to 80 mM, 8.0 to 80 mM, 8.5 to 80 mM, 9.0 to 80 mM, 9.5 to 80 mM, 10 to 80 mM, 11 to 80 mM, 12 to 80 mM, 13 to 80 mM, 14 to 80 mM, 15 to 80 mM, 20 to 80 mM, 30 to 80 mM, 40 to 80 mM, 50 to 80 mM, 60 to 80 mM, 70 to 80 mM, 0.5 to 70 mM, 1.0 to 70 mM, 1.5 to 70 mM, 2.0 to 70 mM, 2.5 to 70 mM, 3.0 to 70 mM, 3.5 to 70 mM, 4.0 to 70 mM, 4.5 to 70 mM, 5.0 to 70 mM, 5.5 to 70 mM, 6.0 to 70 mM, 6.5 to 70 mM, 7.0 to 70 mM, 7.5 to 70 mM, 8.0 to 70 mM, 8.5 to 70 mM, 9.0 to 70 mM, 9.5 to 70 mM, 10 to 70 mM, 11 to 70 mM, 12 to 70 mM, 13 to 70 mM, 14 to 70 mM, 15 to 70 mM, 20 to 70 mM, 30 to 70 mM, 40 to 70 mM, 50 to 70 mM, 60 to 70 mM, 0.5 to 60 mM, 1.0 to 60 mM, 1.5 to 60 mM, 2.0 to 60 mM, 2.5 to 60 mM, 3.0 to 60 mM, 3.5 to 60 mM, 4.0 to 60 mM, 4.5 to 60 mM, 5.0 to 60 mM, 5.5 to 60 mM, 6.0 to 60 mM, 6.5 to 60 mM, 7.0 to 60 mM, 7.5 to 60 mM, 8.0 to 60 mM, 8.5 to 60 mM, 9.0 to 60 mM, 9.5 to 60 mM, 10 to 60 mM, 11 to 60 mM, 12 to 60 mM, 13 to 60 mM, 14 to 60 mM, 15 to 60 mM, 20 to 60 mM, 30 to 60 mM, 40 to 60 mM, 50 to 60 mM, 0.5 to 50 mM, 1.0 to 50 mM, 1.5 to 50 mM, 2.0 to 50 mM, 2.5 to 50 mM, 3.0 to 50 mM, 3.5 to 50 mM, 4.0 to 50 mM, 4.5 to 50 mM, 5.0 to 50 mM, 5.5 to 50 mM, 6.0 to 50 mM, 6.5 to 50 mM, 7.0 to 50 mM, 7.5 to 50 mM, 8.0 to 50 mM, 8.5 to 50 mM, 9.0 to 50 mM, 9.5 to 50 mM, 10 to 50 mM, 11 to 50 mM, 12 to 50 mM, 13 to 50 mM, 14 to 50 mM, 15 to 50 mM, 20 to 50 mM, 30 to 50 mM, 40 to 50 mM, 0.5 to 40 mM, 1.0 to 40 mM, 1.5 to 40 mM, 2.0 to 40 mM, 2.5 to 40 mM, 3.0 to 40 mM, 3.5 to 40 mM, 4.0 to 40 mM, 4.5 to 40 mM, 5.0 to 40 mM, 5.5 to 40 mM, 6.0 to 40 mM, 6.5 to 40 mM, 7.0 to 40 mM, 7.5 to 40 mM, 8.0 to 40 mM, 8.5 to 40 mM, 9.0 to 40 mM, 9.5 to 40 mM, 10 to 40 mM, 11 to 40 mM, 12 to 40 mM, 13 to 40 mM, 14 to 40 mM, 15 to 40 mM, 20 to 40 mM, 30 to 40 mM, 0.5 to 30 mM, 1.0 to 30 mM, 1.5 to 30 mM, 2.0 to 30 mM, 2.5 to 30 mM, 3.0 to 30 mM, 3.5 to 30 mM, 4.0 to 30 mM, 4.5 to 30 mM, 5.0 to 30 mM, 5.5 to 30 mM, 6.0 to 30 mM, 6.5 to 30 mM, 7.0 to 30 mM, 7.5 to 30 mM, 8.0 to 30 mM, 8.5 to 30 mM, 9.0 to 30 mM, 9.5 to 30 mM, 10 to 30 mM, 11 to 30 mM, 12 to 30 mM, 13 to 30 mM, 14 to 30 mM, 15 to 30 mM, 20 to 30 mM, 0.5 to 20 mM, 1.0 to 20 mM, 1.5 to 20 mM, 2.0 to 20 mM, 2.5 to 20 mM, 3.0 to 20 mM, 3.5 to 20 mM, 4.0 to 20 mM, 4.5 to 20 mM, 5.0 to 20 mM, 5.5 to 20 mM, 6.0 to 20 mM, 6.5 to 20 mM, 7.0 to 20 mM, 7.5 to 20 mM, 8.0 to 20 mM, 8.5 to 20 mM, 9.0 to 20 mM, 9.5 to 20 mM, 10 to 20 mM, 11 to 20 mM, 12 to 20 mM, 13 to 20 mM, 14 to 20 mM, 15 to 20 mM, 9 to 41 mM, 9 to 42 mM, or 9 to 43 mM.

In the sweetness enhancement method of the present invention, the "sparkling beverage", "sweetness intensity X1", "high-intensity sweetener", "sweetness intensity X2", amount of sodium, form of sodium in the sparkling beverage, "amino acid or a derivative or a salt thereof", "sweetness intensity X3", "optional component", "low-intensity sweetener", "sweetness intensity X4", "sweetness intensity X5", "other components" and energy are defined as described in the above section for the D1-th embodiment of the sparkling beverage, and the numerical values described in the above section for the D1-th embodiment of the sparkling beverage are applicable to the numerical values as they are.

### 4. Concentrate for providing the beverage

### <<Fourth embodiment>>

The present invention provides, as the fourth embodiment, a concentrate for providing the following beverage (hereinafter referred to as "the concentrate of the present invention").

The beverage comprising:
(a) a high-intensity sweetener in an amount corresponding to a sweetness intensity X1, and
(b) an amino acid or a derivative or a salt thereof in an amount less than a taste recognition threshold,
   wherein the beverage has a sweetness of a sweetness intensity X3 exhibited by the components (a) and (b) and 0.1 < X1 < X3 is satisfied. In the present embodiment, X1 and X3 respectively correspond to Xa and Xb in the A4-th embodiment (Corresponding to Japanese Patent Applications No. 2020-147865/2020-185301) and the C4-th embodiment (Corresponding to Japanese Patent Applications No. 2020-147855/2020-185326).

### 4-1. Concentrate for providing the flavored water

### <<A4-th embodiment>>

The present invention provides, as the A4-th embodiment, a concentrate for providing the following flavored water (hereinafter also referred to as "the concentrate A of the present invention").

The flavored water comprising:
(a) a high-intensity sweetener in an amount corresponding to a sweetness intensity Xaa, and
(b) an amino acid or a derivative or a salt thereof in an amount less than a taste recognition threshold,
   wherein the flavored water has a sweetness of a sweetness intensity Xb exhibited by the components (a) and (b) and 0.1 < Xa < Xb is satisfied.

In a preferable embodiment of the present invention, a concentrate for providing the flavored water is provided comprising:
(a) a high-intensity sweetener in an amount corresponding to a sweetness intensity Xaa, and
(b) an amino acid or a derivative or a salt thereof in an amount less than 10 fold of a taste recognition threshold.

The concentrate of the present invention is diluted in any ratio and used for providing the flavored water. The "flavored water " is the same as described in the A1-th embodiment in "1-1. Flavored water with an enhanced sweetness." For example, the concentrate of the present invention can be used as a syrup or an undiluted solution in a beverage. In this instance, the concentrate can be diluted 2-fold, 3-fold, 4-fold, 5-fold, 6-fold, 7-fold, 8-fold, 9-fold, or 10-fold and used. Further, the concentrate of the present invention is preferable in the aspects of preservability and transportability because it is concentrated. The concentrate of the present invention may be solid or liquid.

The concentrate of the present invention is 2 to 10-fold concentrate, preferably 3 to 9-fold concentrate, more preferably 4 to 8-fold concentrate, and further preferably 5 to 7-fold concentrate, of the flavored water of the present invention.

The concentrate in an embodiment of the present invention is 5-fold concentrate of the flavored water of the present invention and comprises:
(a) a high-intensity sweetener having a good taste quality in an amount corresponding to a sweetness intensity Xaa, and
(b) an amino acid or a derivative or a salt thereof in an amount less than 5 fold of a taste recognition threshold,
   wherein the concentrate has a sweetness of a sweetness intensity Xba exhibited by the components (a) and (b) and 0.5 < Xaa < Xba, preferably 1.0 < Xaa < Xba, and more preferably 2.0 < X1a < X2a < 25 is satisfied.

The concentrate in another embodiment of the present invention is 10-fold concentrate of the flavored water of the present invention and comprises:
(a) a high-intensity sweetener in an amount corresponding to a sweetness intensity Xab, and
(b) an amino acid or a derivative or a salt thereof in an amount less than 10 fold of a taste recognition threshold,
   wherein the concentrate has a sweetness of a sweetness intensity Xbb exhibited by the components (a) and (b) and 1.0 < Xab < Xbb, preferably 2.0 < Xab < Xbb, and more preferably 4.0 < Xab < Xbb is satisfied.

The concentrate in an embodiment of the present invention is 5-fold concentrate of the flavored water of the present invention and comprises:
(a) a high-intensity sweetener in an amount corresponding to a sweetness intensity Xaa,
(b) an amino acid or a derivative or a salt thereof in an amount less than 5 fold of a taste recognition threshold, and
(c) a low-intensity sweetener in an amount corresponding to a sweetness intensity Xca,
   wherein the concentrate has a sweetness of a sweetness intensity Xda exhibited by the components (a) to (c) and 0.5 < Xaa + Xca < Xda, preferably 1.0 < Xaa + Xca < Xda, and more preferably 2.0 < Xaa + Xca < Xda is satisfied.

The concentrate in an embodiment of the present invention is 10-fold concentrate of the flavored water of the present invention and comprises:
(a) a high-intensity sweetener in an amount corresponding to a sweetness intensity Xaa,
(b) an amino acid or a derivative or a salt thereof in an amount less than 10 fold of a taste recognition threshold, and
(c) a low-intensity sweetener in an amount corresponding to a sweetness intensity Xca,
   wherein the concentrate has a sweetness of a sweetness intensity Xda exhibited by the components (a) to (c) and 1.0 < Xaa + Xca < Xda, preferably 2.0 < Xaa + Xca < Xda, and more preferably 4.0 < Xaa + Xca < Xda is satisfied.

### <<B4-th embodiment>>

The present invention provides, as the B4-th embodiment, a concentrate for providing the following flavored water (hereinafter also referred to as "the concentrate B of the present invention").

The flavored water comprising:
(a) a high-intensity sweetener in an amount corresponding to a sweetness intensity X1,
(b) an amino acid or a derivative or a salt thereof in an amount less than a taste recognition threshold, and
(c) less than 50 mg/100 ml of sodium,
   wherein the flavored water has a sweetness of a sweetness intensity X2 exhibited by the components (a) to (c) and 0.1 < X1 < X2 is satisfied.

In a preferable embodiment of the present invention, a concentrate for providing the flavored water is provided comprising:
(a) a high-intensity sweetener in an amount corresponding to a sweetness intensity X1a,
(b) an amino acid or a derivative or a salt thereof in an amount less than 10 fold of a taste recognition threshold, and
(c) less than 500 mg/100 ml of sodium.

The concentrate of the present invention is diluted in any ratio and used for providing the flavored water. The "flavored water" is the same as described with respect to the B1-th embodiment in "1-1. Flavored water with an enhanced sweetness". For example, the concentrate of the present invention can be used as a syrup or an undiluted solution in a beverage. In this instance, the concentrate can be diluted 2-fold, 3-fold, 4-fold, 5-fold, 6-fold, 7-fold, 8-fold, 9-fold or 10-fold and used. Further, the concentrate of the present invention is preferable in the aspects of preservability and transportability because it is concentrated. The concentrate of the present invention may be solid or liquid.

The concentrate of the present invention is 2 to 10-fold concentrate, preferably 3 to 9-fold concentrate, more preferably 4 to 8-fold concentrate, and further preferably 5 to 7-fold concentrate, of the flavored water of the present invention.

The concentrate in an embodiment of the present invention is 5-fold concentrate of the flavored water of the present invention and comprises:
(a) a high-intensity sweetener in an amount corresponding to a sweetness intensity X1a,
(b) an amino acid or a derivative or a salt thereof in an amount less than 5 fold of a taste recognition threshold, and
(c) less than 250 mg/100 ml of sodium,
   wherein the concentrate has a sweetness of a sweetness intensity X2a exhibited by the components (a) to (c) and 0.5 < X1a < X2a, preferably 1.0 < X1a < X2a, and more preferably 2.0 < X1a < X2a is satisfied.

The concentrate in another embodiment of the present invention is 10-fold concentrate of the flavored water of the present invention and comprises:
(a) a high-intensity sweetener in an amount corresponding to a sweetness intensity X1b,
(b) an amino acid or a derivative or a salt thereof in an amount less than 10 fold of a taste recognition threshold, and
(c) less than 500 mg/100 ml of sodium,
   wherein the concentrate has a sweetness of a sweetness intensity X2b exhibited by the components (a) to (c) and 1.0 < X1b < X2b, preferably 2.0 < X1b < X2b, and more preferably 4.0 < X1b < X2b is satisfied.

The concentrate in an embodiment of the present invention is 5-fold concentrate of the flavored water of the present invention and comprises:
(a) a high-intensity sweetener in an amount corresponding to a sweetness intensity X1a,
(b) an amino acid or a derivative or a salt thereof in an amount less than 5 fold of a taste recognition threshold,
(c) less than 250 mg/100 ml of sodium, and
(d) a low-intensity sweetener in an amount corresponding to a sweetness intensity X4a,
   wherein the concentrate has a sweetness of a sweetness intensity X5a exhibited by the components (a) to (d) and 0.5 < X1a + X4a < X5a, preferably 1.0 < X1a + X4a < X5a, and more preferably 2.0 < X1a + X4a < X5a is satisfied.

The concentrate in an embodiment of the present invention is 10-fold concentrate of the flavored water of the present invention and comprises:
(a) a high-intensity sweetener in an amount corresponding to a sweetness intensity X1a,
(b) an amino acid or a derivative or a salt thereof in an amount less than 10 fold of a taste recognition threshold,
(c) less than 500 mg/100 ml of sodium, and
(d) a low-intensity sweetener in an amount corresponding to a sweetness intensity X4a,
   wherein the concentrate has a sweetness of a sweetness intensity X5a exhibited by the components (a) to (d) and 1.0 < X1a + X4a < X5a, preferably 2.0 < X1a + X4a < X5a, and more preferably 4.0 < X1a + X4a < X5a is satisfied.

### 4-2. Concentrate for providing the sparkling beverage

### <<C4-th embodiment>>

The present invention provides, as the C4-th embodiment, a concentrate for providing the following sparkling beverage (hereinafter also referred to as "the concentrate C of the present invention").

The sparkling beverage comprising:
(a) a high-intensity sweetener in an amount corresponding to a sweetness intensity Xa, and
(b) an amino acid or a derivative or a salt thereof in an amount less than a taste recognition threshold,
   wherein the sparkling beverage has a sweetness of a sweetness intensity Xb exhibited by the components (a) and (b) and 0.1 < Xa < Xb is satisfied.

In a preferable embodiment of the present invention, a concentrate for providing the sparkling beverage is provided comprising:
(a) a high-intensity sweetener in an amount corresponding to a sweetness intensity Xaa, and
(b) an amino acid or a derivative or a salt thereof in an amount less than 10 fold of a taste recognition threshold.

The concentrate of the present invention is diluted in any ratio and used for providing the sparkling beverage. The "sparkling beverage" is the same as described with respect to the C1-th embodiment in "1-2. Sparkling beverage with an enhanced sweetness". For example, the concentrate of the present invention can be used as a syrup or an undiluted solution in a beverage. In this instance, the concentrate can be diluted 2-fold, 3-fold, 4-fold, 5-fold, 6-fold, 7-fold, 8-fold, 9-fold or 10-fold and used. Further, the concentrate of the present invention is preferable in the aspects of preservability and transportability because it is concentrated. The concentrate of the present invention may be solid or liquid.

The concentrate of the present invention is 2 to 10-fold concentrate, preferably 3 to 9-fold concentrate, more preferably, 4 to 8-fold concentrate, and further preferably 5 to 7-fold concentrate, of the sparkling beverage of the present invention.

The concentrate in an embodiment of the present invention is 5-fold concentrate of the sparkling beverage of the present invention and comprises:
(a) a high-intensity sweetener in an amount corresponding to a sweetness intensity Xaa, and
(b) an amino acid or a derivative or a salt thereof in an amount less than 5 fold of a taste recognition threshold,
   wherein the concentrate has a sweetness of a sweetness intensity Xba exhibited by the components (a) and (b) and 0.5 < Xaa < Xba, preferably 1.0 < Xaa < Xba, and more preferably 2.0 < Xaa < Xba is satisfied.

The concentrate in another embodiment of the present invention is 10-fold concentrate of the sparkling beverage of the present invention and comprises:
(a) a high-intensity sweetener in an amount corresponding to a sweetness intensity Xab, and
(b) an amino acid or a derivative or a salt thereof in an amount less than 10 fold of a taste recognition threshold,
   wherein the concentrate has a sweetness of a sweetness intensity Xbb exhibited by the components (a) and (b) and 1.0 < Xab < Xbb, preferably 2.0 < Xab < Xbb, and more preferably 4.0 < Xab < Xbb is satisfied.

The concentrate in an embodiment of the present invention is 5-fold concentrate of the sparkling beverage of the present invention and comprises:
(a) a high-intensity sweetener in an amount corresponding to a sweetness intensity Xaa,
(b) an amino acid or a derivative or a salt thereof in an amount less than 5 fold of a taste recognition threshold, and
(c) a low-intensity sweetener in an amount corresponding to a sweetness intensity Xca,
   wherein the concentrate has a sweetness of a sweetness intensity Xda exhibited by the components (a) to (c) and 0.5 < Xaa + Xca < Xda, preferably 1.0 < Xaa + Xca < Xda, and more preferably 2.0 < Xaa + Xca < Xda is satisfied.

The concentrate in an embodiment of the present invention is 10-fold concentrate of the sparkling beverage of the present invention and comprises:
(a) a high-intensity sweetener in an amount corresponding to a sweetness intensity Xaa,
(b) an amino acid or a derivative or a salt thereof in an amount less than 10 fold of a taste recognition threshold, and
(c) a low-intensity sweetener in an amount corresponding to a sweetness intensity Xca,
   wherein the concentrate has a sweetness of a sweetness intensity Xda exhibited by the components (a) to (c) and 1.0 < Xaa + Xca < Xda, preferably 2.0 < Xaa + Xca < Xda, and more preferably 4.0 < Xaa + Xca < Xda is satisfied.

### <<D4-th embodiment>>

The present invention provides, as the D4-th embodiment, a concentrate for providing the following sparkling beverage (hereinafter also referred to as "the concentrate D of the present invention").

The sparkling beverage comprising:
(a) a high-intensity sweetener in an amount corresponding to a sweetness intensity X1,
(b) an amino acid or a derivative or a salt thereof in an amount less than a taste recognition threshold, and
(c) 6 to 60 mg/100 ml of sodium,
   wherein the sparkling beverage has a sweetness of a sweetness intensity X2 exhibited by the components (a) to (c) and 0.1 < X1 < X2 is satisfied.

In a preferable embodiment of the present invention, a concentrate for providing the sparkling beverage is provided comprising:
(a) a high-intensity sweetener in an amount corresponding to a sweetness intensity X1a,
(b) an amino acid or a derivative or a salt thereof in an amount less than 10 fold of a taste recognition threshold, and
(c) 60 to 600 mg/100 ml of sodium.

The concentrate of the present invention is diluted in any ratio and used for providing the sparkling beverage. The "sparkling beverage" is the same as described with respect to the D1-th embodiment in "1-2. Sparkling beverage with an enhanced sweetness". For example, the concentrate of the present invention can be used as a syrup or an undiluted solution in a beverage. In this instance, the concentrate can be diluted 2-fold, 3-fold, 4-fold, 5-fold, 6-fold, 7-fold, 8-fold, 9-fold or 10-fold and used. Further, the concentrate of the present invention is preferable in the aspects of preservability and transportability because it is concentrated. The concentrate of the present invention may be solid or liquid.

The concentrate of the present invention is 2 to 10-fold concentrate, preferably 3 to 9-fold concentrate, more preferably 4 to 8-fold concentrate, and further preferably 5 to 7-fold concentrate, of the sparkling beverage of the present invention.

The concentrate in an embodiment of the present invention is 5-fold concentrate of the sparkling beverage of the present invention and comprises:
(a) a high-intensity sweetener in an amount corresponding to a sweetness intensity X1a,
(b) an amino acid or a derivative or a salt thereof in an amount less than 5 fold of a taste recognition threshold, and
(c) 30 to 300 mg/100 ml of sodium,
   wherein the concentrate has a sweetness of a sweetness intensity X2a exhibited by the components (a) to (c) and 0.5 < X1a < X2a, preferably 1.0 < X1a < X2a, and more preferably 2.0 < X1a < X2a is satisfied.

The concentrate in another embodiment of the present invention is 10-fold concentrate of the sparkling beverage of the present invention and comprises:
(a) a high-intensity sweetener in an amount corresponding to a sweetness intensity X1b,
(b) an amino acid or a derivative or a salt thereof in an amount less than 10 fold of a taste recognition threshold, and
(c) 60 to 600 mg/100 ml of sodium,
   wherein the concentrate has a sweetness of a sweetness intensity X2b exhibited by the components (a) to (c) and 1.0 < X1b < X2b, preferably 2.0 < X1b < X2b, and more preferably 4.0 < X1b < X2b is satisfied.

The concentrate in an embodiment of the present invention is 5-fold concentrate of the sparkling beverage of the present invention and comprises:
(a) a high-intensity sweetener in an amount corresponding to a sweetness intensity X1a,
(b) an amino acid or a derivative or a salt thereof in an amount less than 5 fold of a taste recognition threshold,
(c) 30 to 300 mg/100 ml of sodium, and
(d) a low-intensity sweetener in an amount corresponding to a sweetness intensity X4a,
   wherein the concentrate has a sweetness of a sweetness intensity X5a exhibited by the components (a) to (d) and 0.5 < X1a + X4a < X5a, preferably 1.0 < X1a + X4a < X5a, and more preferably 2.0 < X1a + X4a < X5a is satisfied.

The concentrate in an embodiment of the present invention is 10-fold concentrate of the sparkling beverage of the present invention and comprises:
(a) a high-intensity sweetener in an amount corresponding to a sweetness intensity X1a,
(b) an amino acid or a derivative or a salt thereof in an amount less than 10 fold of a taste recognition threshold,
(c) 60 to 600 mg/100 ml of sodium, and
(d) a low-intensity sweetener in an amount corresponding to a sweetness intensity X4a,
   wherein the concentrate has a sweetness of a sweetness intensity X5a exhibited by the components (a) to (d), and 1.0 < X1a + X4a < X5a, preferably 2.0 < X1a + X4a < X5a, and more preferably 4.0 < X1a + X4a < X5a is satisfied.

In the present description, the term "about" means that a subject matter is in ranges of ±25%, ±10%, ±5%, ±3%, ±2%, or ±1%, of the numerical value following the "about." For example, "about 10" means a range from 7.5 to 12.5. In the present description, the "mM" means a molar concentration and means 1 × 10-³ mol/L.

### Example

Hereinafter, the present invention will be specifically described in reference with examples but the present invention is not limited to the following examples.

### [Reference Example 1] Actual measurement of taste recognition thresholds of several amino acids

Aqueous solutions of DL-alanine (purity 98% or more), L-serine (purity 98.5% or more), glycine (purity 98.5% or more), L-arginine (purity 98.5% or more), L-glutamic acid (purity 99% or more), L-valine (purity 98% or more) and L-glutamine (purity 98% or more) at the concentrations shown in Table 1 below were prepared with pure water. Each of the samples contained only water and the amino acid. These samples were evaluated by those (5 to 6 persons) who received sensory trainings as panelists using the criteria below.

### Evaluation criteria

A: No taste is sensed other than water
B: Taste different from water but maynot specify
C: Taste is sensed
D: Extremely intense taste is sensed

The evaluation results are shown in Table 2 below.

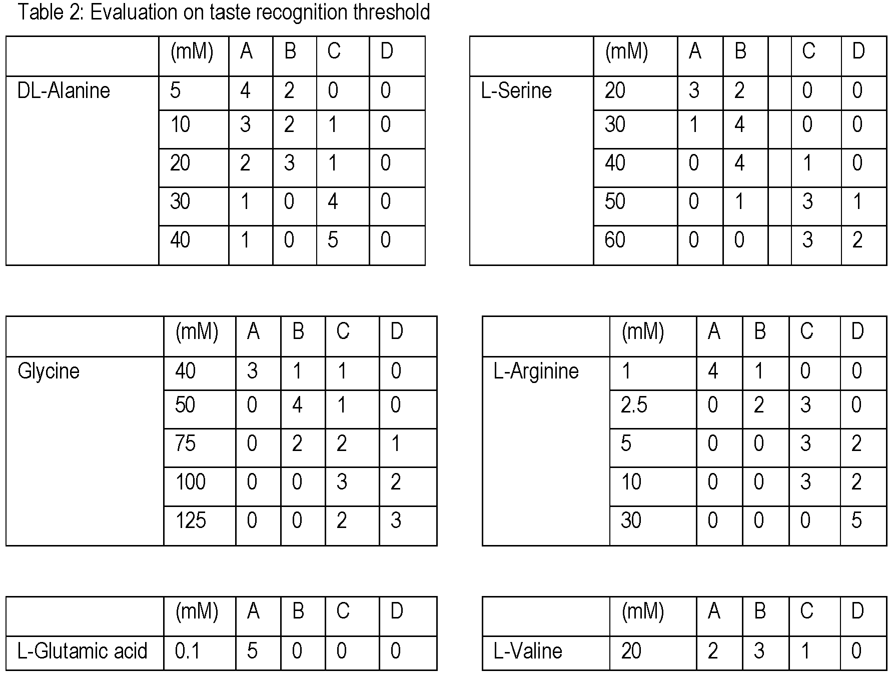

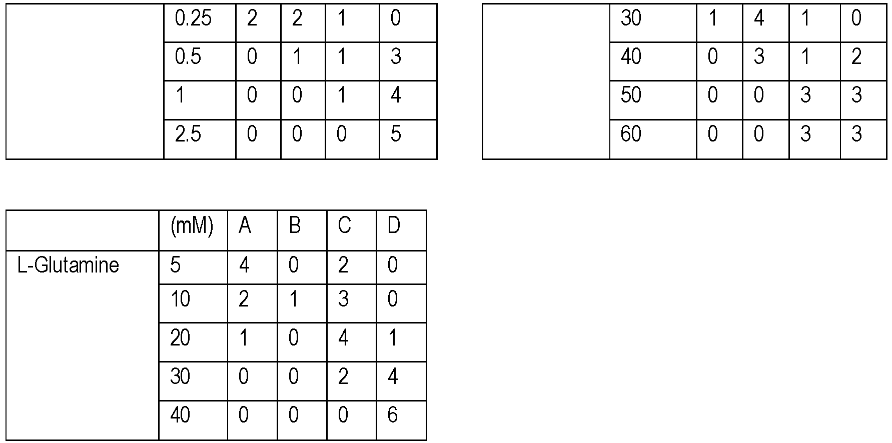

Based on the results in the above table, a taste recognition threshold of each of the amino acids was calculated based on the concentration at which a half or more of the sensory testers sensed as "Taste is sensed" and shown in Table 3 below.

**Table 3**

| Amino acid | Taste recognition threshold (mM) |
|---|---|
| DL-Alanine | 20 to 30 |
| L-Serine | 40 to 50 |
| Glycine | 50 to 75 |
| L-Arginine | 1 to 2.5 |
| L-Glutamic acid | 0.25 to 0.5 |
| L-Valine | 40 to 50 |
| L-Glutamine | 5 to 10 |

### [Reference Example 2] Actual measurement of taste recognition thresholds

Several amino acids or salts thereof were actually measured for the taste recognition threshold by the same method as in Reference Example 1. Aqueous solutions of L-leucine (purity 98.0% or more), L-threonine (purity 98.0% or more), L-proline (purity 98.0% or more), L-asparagine (purity 99.0% or more) and L-lysine hydrochloride (purity 98.0% or more) at the concentrations shown in Table 4 below were prepared with pure water. Each of the samples contained only water and the amino acid. These samples were evaluated by those (6 to 7 persons) who received sensory trainings as panelists using the criteria below.

### Evaluation criteria

A: No taste is sensed other than water
B: Taste different from water but maynot specify
C: Taste is sensed
D: Extremely intense taste is sensed

The evaluation results are shown in Table 4 below.

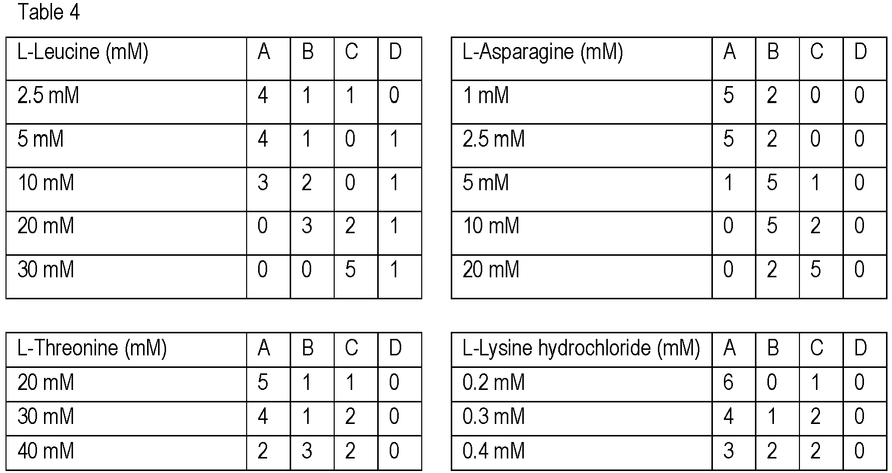

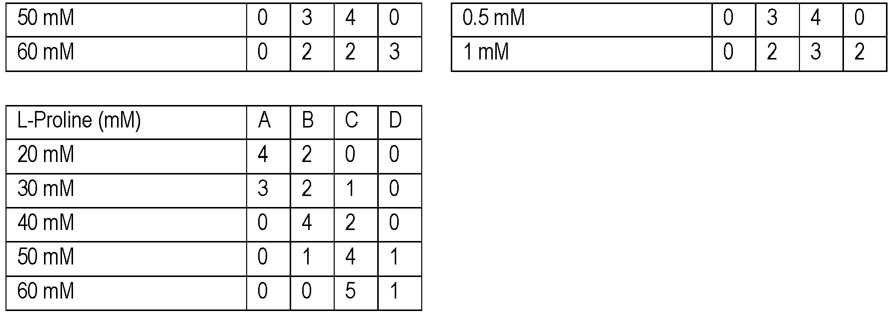

Based on the results in the above table, a taste recognition threshold of each of the amino acids was calculated based on the concentration at which a half or more of the sensory testers sensed as "Taste is sensed" and shown in Table 5 below.

**Table 5**

| Amino acid or salt thereof | Taste recognition threshold (mM) |
|---|---|
| L-Leucine | 20 to 30 mM |
| L-Threonine | 40 to 50 mM |
| L-Proline | 40 to 50 mM |
| L-Asparagine | 10 to 20 mM |
| L-Lysine hydrochloride | 0.4 to 0.5 mM |

Hereinafter, examples for evaluation on a taste quality improvement effect of the flavored water by an amino acid or an amino acid and sodium will be shown.

First, a measurement method of an amino acid is shown.

### (Measurement method of amino acid)

Seventeen amino acids of arginine, lysine, histidine, phenylalanine, tyrosine, leucine, isoleucine, valine, alanine, glycine, proline, glutamic acid, serine, threonine, aspartic acid, cystine and methionine were extracted by addition of a 10% sulfosalicylic acid solution to a sample, then a 3 mol/l sodium hydroxide solution was added to adjust a pH to 2.2, then a sodium citrate buffer (pH 2.2) was added for volume fixation, the resultant was subjected to filtration and thereafter appropriate dilution, and thus a test solution was adjusted. The test solution can be measured under the following two conditions, depending on a dilution factor and a type of an amino acid to be measured.
Condition 1
   Type of equipment: Model L-8900 High-Speed Amino Acid Analyzer (manufactured by Hitachi High-Technologies Corporation)
   Column: Hitachi Custom Ion-Exchange Resin, Φ4.6 mm × 60 mm (manufactured by Hitachi High-Technologies Corporation)
   Mobile phase: buffer for biological fluid analysis, PF KANTO (PF-1 to PF-4) (Kanto Chemical Co., Inc.)
   Reaction liquid: Ninhydrin Coloring Solution Kit for HITACHI (FUJIFILM Wako Pure Chemical Corporation)
   Flow rate: mobile phase 0.35 ml/min, reaction liquid 0.30 ml/min
   Measurement wavelength: 570 nm (16 types except for proline), 440 nm (proline)
Condition 2
   Type of equipment: JLC-500/V2 (manufactured by JEOL Ltd.)
   Column: LCR-6, Φ4 mm × 120 mm (manufactured by JEOL Ltd.)
   Mobile phase: lithium citrate buffer (P-12 to P-15, P-21) (manufactured by JEOL Ltd.)
   Reaction liquid: Ninhydrin Coloring Solution Kit-II for JEOL (FUJIFILM Wako Pure Chemical Corporation)
   Flow rate: mobile phase 0.50 ml/min, reaction liquid 0.30 ml/min
   Measurement wavelength: 570 nm (16 types except for proline), 440 nm (proline)

A test solution for tryptophan was adjusted in the same manner as in the above seventeen types, adjusted by an aqueous 3 mol/l sodium hydroxide solution so as to be slightly alkaline, subjected to volume fixation, and thereafter measured with high-performance liquid chromatography (LC-20AD, manufactured by Shimadzu Corporation). Measurement conditions were as follows.
Detector: fluorescence spectrophotometer RF-20A_{XS} (manufactured by Shimadzu Corporation)
Column: CAPCELL PAK C18 AQ, Φ4.6 mm × 250 mm (manufactured by Osaka Soda Co., Ltd.)
Mobile phase: mixed liquid of 20 mmol/l perchloric acid and methanol (80:20)
Flow rate: 0.7 ml/min
Fluorescence excitation wavelength: 285 nm
Fluorescence measurement wavelength: 348 nm
Column temperature: 40°C

### [Example 1] Evaluation on taste quality improvement effect by alanine or alanine and sodium

### Experiment method

Natural sugar {sucrose (manufactured by Pacific Sugar Mfg. Co., Ltd.), glucose (manufactured by Showa Sangyo Co., Ltd.)}, rebaudioside D (RebD) (purity 95% or more), sodium gluconate (purity 98% or more) and DL-alanine (purity 98% or more) were dissolved in sugar-free orange or peach-flavored water (sodium content: 0 (mg/100 ml), energy: 0 (kcal/100 ml)) in the ratios shown in Tables 6 and 7 below to prepare beverage samples (absorbance at a wavelength of 660 nm: 0.01 or less, ΔE value of transmitted light: 3.5 or less). The sugar-free orange or peach-flavored water contained an orange or peach flavor. A lemon-concentrated fruit juice and an acidulant were also added to the sugar-free orange or peach-flavored water. Further, Examples A1 and B1 were control samples to which neither alanine, nor sodium was added. In the present example and subsequent Example 2, a sodium content contained in a beverage serving as a base was measured by atomic absorption spectrometry with SpectrAA240FS (manufactured by Agilent Technologies Japan, Ltd.).

Contents of amino acids (eighteen amino acids of arginine, lysine, histidine, phenylalanine, tyrosine, leucine, isoleucine, valine, alanine, glycine, proline, glutamic acid, serine, threonine, aspartic acid, cystine, methionine and tryptophan) contained in a lemon-concentrated fruit juice used in a beverage base were calculated based on measurement values determined by measuring amino acids contained in a concentrated fruit juice before dilution, in an analytical institution by use of an amino acid automatic analysis method (in the case of tryptophan, high-performance liquid chromatography) under the above conditions. Contents of the above eighteen amino acids contained in the lemon-concentrated fruit juice were each less than 1.0 mg/100 g.

A content of sodium in each beverage in Tables 6 and 7 was measured by atomic absorption spectrometry with SpectrAA240FS (manufactured by Agilent Technologies Japan, Ltd.), a content of alanine was measured in an analytical institution by use of an amino acid automatic analysis method according to a known method, and an energy (kcal/100 ml) was calculated under the assumption that an energy of each component derived from an acidulant, a flavor, RebD and sodium was 0 (kcal/100 ml). Brix (amount of soluble solid) was calculated by determining a refractive index of a specimen with a digital refractometer manufactured by Atago Co., Ltd., and performing conversion into wt% of a sucrose liquid corresponding to the value.

A sweetness intensity of a low-intensity sweetener satisfies 1 (sucrose content (Brix)) + 3.5 (glucose content (Brix)) × 0.65 (coefficient of degree of sweetness of glucose to sucrose) = 3.275, and a sweetness intensity of RebD satisfies 0.0208 × 225 = 4.68. Thus, sweetness intensities of an orange-flavored water and a peach-flavored water, to which Na and an amino acid were not added, were each 7.955.

**Table 6: Orange NW**

| Raw material added (amount added) | Example A1 | Example A2 | Example A3 | Example A4 | Example A5 | Example A6 | Example A7 |
|---|---|---|---|---|---|---|---|
| Sucrose (g/L) | 10 | 10 | 10 | 10 | 10 | 10 | 10 |
| Glucose (g/L) | 35 | 35 | 35 | 35 | 35 | 35 | 35 |
| RebD (g/L) | 0.208 | 0.208 | 0.208 | 0.208 | 0.208 | 0.208 | 0.208 |
| Sodium gluconate (g/L) | 0 | 0 | 0 | 0.948 | 0.948 | 1.897 | 1.897 |
| Alanine (g/L) | 0 | 0.89 | 1.34 | 0.89 | 1.34 | 0.89 | 1.34 |

| Content | | | | | | | |
|---|---|---|---|---|---|---|---|
| Brix (amount of soluble solid) | 4.28 | 4.37 | 4.43 | 4.49 | 4.54 | 4.59 | 4.64 |
| Sodium (mg/100 g) | ND¹⁾ | ND¹⁾ | ND¹⁾ | 9.7 | 9.8 | 19.2 | 19.2 |
| Free alanine (mg/100 g) | ND²⁾ | 84 | 129 | 83 | 128 | 85 | 130 |
| Free alanine (mM) | - | 9 | 14 | 9 | 14 | 10 | 15 |
| Energy (Kcal/100 ml) | 17.1 | 17.9 | 18.2 | 18.4 | 18.6 | 18.9 | 19.1 |

| | | | | | | | |
|---|---|---|---|---|---|---|---|
| *1: ND means "Not Detected", and means that a content of sodium and an amount of free alanine are respectively 1) a lower limit of quantitation of less than 1.0 mg/100 g and 2) a lower limit of quantitation of less than 1.0 mg/100 g. *2: A "mM" value of free alanine is calculated from a value of "mg/100 g" under the assumption that a specific gravity is 1. "-" means that calculation maynot be made. | | | | | | | |

**Table 7: Peach NW**

| Raw material added (amount added) | Example B1 | Example B2 | Example B3 | Example B4 | Example B5 | Example B6 | Example B7 |
|---|---|---|---|---|---|---|---|
| Sucrose (g/L) | 10 | 10 | 10 | 10 | 10 | 10 | 10 |
| Glucose (g/L) | 35 | 35 | 35 | 35 | 35 | 35 | 35 |
| RebD (g/L) | 0.208 | 0.208 | 0.208 | 0.208 | 0.208 | 0.208 | 0.208 |
| Sodium gluconate (g/L) | 0 | 0 | 0 | 0.948 | 0.948 | 1.897 | 1.897 |
| Alanine (g/L) | 0 | 0.89 | 1.34 | 0.89 | 1.34 | 0.89 | 1.34 |

| Content | | | | | | | |
|---|---|---|---|---|---|---|---|
| Brix (amount of soluble solid) | 4.28 | 4.38 | 4.42 | 4.48 | 4.54 | 4.58 | 4.65 |
| Sodium (mg/100 g) | ND¹⁾ | ND¹⁾ | ND¹⁾ | 9.8 | 9.7 | 19.1 | 19.1 |
| Free alanine (mg/100 g) | ND²⁾ | 84 | 128 | 85 | 128 | 85 | 128 |
| Free alanine (mM) | - | 9 | 14 | 10 | 14 | 10 | 14 |
| Energy (Kcal/100 ml) | 17.1 | 17.9 | 18.2 | 18.3 | 18.6 | 18.7 | 19.1 |

| | | | | | | | |
|---|---|---|---|---|---|---|---|
| *1: ND means "Not Detected", and means that a content of sodium and an amount of free alanine are respectively 1) a lower limit of quantitation of less than 1.0 mg/100 g and 2) a lower limit of quantitation of less than 1.0 mg/100 g. *2: A "mM" value of free alanine is calculated from a value of "mg/100 g" under the assumption that a specific gravity is 1. "-" means that calculation cannot be made. | | | | | | | |

The taste quality improvement effect by alanine or alanine and sodium was verified by the sensory comparison of taste qualities of these beverage samples. The taste qualities as sensory evaluation items were "total sweetness", "reduced aftertaste of sweetness", "body, thickness", "flavor intensity", "reduced unpleasant tastes (bitterness, astringency, and the like)" and "saltiness", and were verified by those (4 persons) who received sensory trainings as panelists. Further, sterilization was appropriately carried out before the sensory evaluation.

First, the "sensory evaluation score" with respect to each taste quality of each beverage sample was calculated based on the common taste quality determination criteria possessed by panelists due to routine trainings.

The "sensory evaluation score" is obtained by numerical conversion of the difference in taste quality from a control sample in a range from -3.0 to +3.0 under the assumption that the degrees of taste qualities in Example A1 and Example B1 (control samples for each flavored water sample) are each "0" (standard). The criteria of "sensory evaluation score" with respect to each item are as follows.

### (Sensory evaluation score)

· "+3.0": a taste quality of interest is sensed to be very strong as compared with that of a control sample.
• "+2.0": a taste quality of interest is sensed to be strong as compared with that of a control sample.
• "+1.0": a taste quality of interest is sensed to be slightly strong as compared with that of a control sample.
· "0": a taste quality of interest is the same as that of a control sample.
• "-1.0": a taste quality of interest is sensed to be slightly weak as compared with that of a control sample.
• "-2.0": a taste quality of interest is sensed to be weak as compared with that of a control sample.
• "-3.0": a taste quality of interest is sensed to be very weak as compared with that of a control sample.

In view of the above criteria, for example, when a taste quality was determined to be rated between "+1.0" and "+2.0", scoring was made by 0.5, for example, "+1.5". For example, a higher score of "total sweetness" means a stronger sweetness, a higher score of "reduced aftertaste of sweetness" means a more suppressed aftertaste of sweetness, a higher score of "body, thickness" means increased body and thickness, a higher score of "flavor intensity" means a stronger flavor, a higher score of "reduced unpleasant tastes (bitterness, astringency, and the like)" means more suppressed unpleasant tastes, and a lower store of "saltiness" means more suppressed saltiness.

### Results

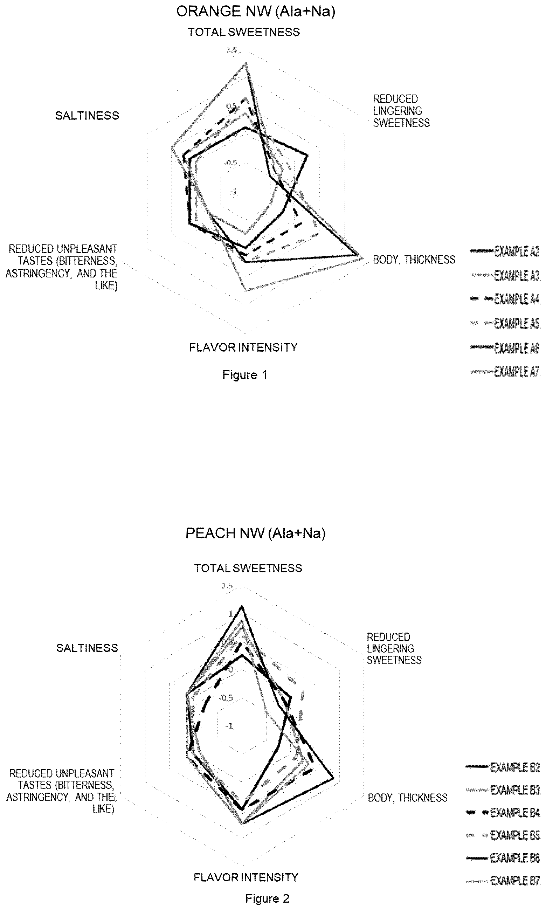

An average score of sensory evaluation on each taste quality is shown in Tables 8 and 9 and Figures 1 and 2.

| Table 8 | Example A2 | Example A3 | Example A4 | Example A5 | Example A6 | Example A7 |
|---|---|---|---|---|---|---|
| Total sweetness | 0.125 | 0.375 | 0.625 | 0.625 | 1.25 | 1.25 |
| Reduced aftertaste of sweetness | 0.25 | -0.25 | -0.375 | -0.125 | -0.5 | -0.375 |
| Body, thickness | -0.25 | -0.5 | 0.125 | 0.5 | 1.25 | 1.375 |
| Flavor intensity | 0 | -0.25 | 0.125 | 0.25 | 0.25 | 0.75 |
| Reduced unpleasant tastes (bitterness, astringency, and the like) | 0.125 | -0.25 | 0.125 | 0 | -0.25 | -0.25 |
| Saltiness | 0.125 | 0.25 | 0.25 | 0 | 0.5 | 0.5 |

| Table 9 | Example B2 | Example B3 | Example B4 | Example B5 | Example B6 | Example B7 |
|---|---|---|---|---|---|---|
| Total sweetness | 0.25 | 0.75 | 0.5 | 0.625 | 1.125 | 0.875 |
| Reduced aftertaste of sweetness | 0 | -0.125 | -0.125 | 0.25 | -0.25 | -0.5 |
| Body, thickness | -0.25 | 0.25 | 0.5 | 0.125 | 0.875 | 0.375 |
| Flavor intensity | 0.5 | 0.75 | 0.5 | 0.375 | 0.75 | 0.75 |
| Reduced unpleasant tastes (bitterness, astringency, and the like) | 0 | -0.125 | 0.125 | 0 | 0.125 | 0.125 |
| Saltiness | 0.125 | 0.125 | -0.25 | 0 | 0.125 | 0.125 |

### [Example 2] Evaluation on taste quality improvement effect by different amino acid or different amino acid and sodium

### Experiment method

Natural sugar {sucrose (manufactured by Pacific Sugar Mfg. Co., Ltd.), glucose (manufactured by Showa Sangyo Co., Ltd.)}, rebaudioside D (RebD) (purity 95% or more), sodium gluconate (purity 98% or more), L-serine (purity 98.5% or more) and glycine (purity 98.5% or more) were dissolved in sugar-free orange or peach-flavored water (sodium content: 0 (mg/100 ml), energy: 0 (kcal/100 ml)) in the ratios shown in Table 10 and 11 below to prepare beverage samples (absorbance at a wavelength of 660 nm: 0.01 or less, ΔE value of transmitted light: 3.5 or less), in the same manner as in Example 1. The sugar-free orange or peach-flavored water contained an orange or peach flavor. A lemon-concentrated fruit juice and an acidulant were also added to the sugar-free orange or peach-flavored water. Further, Examples C1 and D1 were control samples to which neither any amino acid, nor sodium was added.

A content of sodium in each beverage in Tables 10 and 11 was measured by atomic absorption spectrometry with SpectrAA240FS (manufactured by Agilent Technologies Japan, Ltd.), contents of serine and glycine were measured in an analytical institution by use of an amino acid automatic analysis method according to a known method, and an energy (kcal/100 ml) was calculated under the assumption that an energy of each component derived from an acidulant, a flavor, RebD and sodium was 0 (kcal/100 ml). Brix (amount of soluble solid) was calculated by determining a refractive index of a specimen with a digital refractometer manufactured by Atago Co., Ltd., and performing conversion into wt% of a sucrose liquid corresponding to the value.

**Table 10: Orange NW**

| Raw material added (amount added) | Example C1 | Example C2 | Example C3 | Example C4 | Example C5 | Example C6 | Example C7 |
|---|---|---|---|---|---|---|---|
| Sucrose (g/L) | 10 | 10 | 10 | 10 | 10 | 10 | 10 |
| Glucose (g/L) | 35 | 35 | 35 | 35 | 35 | 35 | 35 |
| RebD (g/L) | 0.208 | 0.208 | 0.208 | 0.208 | 0.208 | 0.208 | 0.208 |
| Sodium gluconate (g/L) | 0 | 0 | 0 | 0.948 | 0.948 | 1.897 | 1.897 |
| Serine (g/L) | 0 | 2.1 | 0 | 2.1 | 0 | 2.1 | 0 |
| Glycine (g/L) | 0 | 0 | 3 | 0 | 3 | 0 | 3 |

| Content | | | | | | | |
|---|---|---|---|---|---|---|---|
| Brix (amount of soluble solid) | 4.28 | 4.52 | 4.64 | 4.63 | 4.73 | 4.74 | 4.85 |
| Sodium (mg/100 g) | ND¹⁾ | ND¹⁾ | ND¹⁾ | 10 | 9.9 | 19.4 | 19.9 |
| Free serine (mg/100 g) | ND²⁾ | 207 | ND²⁾ | 205 | ND²⁾ | 207 | ND²⁾ |
| Free serine (mM) | - | 20 | - | 20 | - | 20 | - |
| Free glycine (mg/100 g) | ND²⁾ | ND²⁾ | 310 | ND²⁾ | 296 | ND²⁾ | 300 |
| Free glycine (mM) | - | - | 41 | - | 39 | - | 40 |
| Energy (Kcal/100 ml) | 17.1 | 18.9 | 19.8 | 19.3 | 20.1 | 20.2 | 20.6 |

| | | | | | | | |
|---|---|---|---|---|---|---|---|
| *1: ND means "Not Detected", and means that a content of sodium and an amount of free serine or free glycine are respectively 1) a lower limit of quantitation of less than 1.0 mg/100 g and 2) a lower limit of quantitation of less than 1.0 mg/100 g. *2: Each "mM" value of free serine and free glycine is calculated from a value of "mg/100 g" under the assumption that a specific gravity is 1. "-" means that calculation cannot be made. | | | | | | | |

**Table 11: Peach NW**

| Raw material added (amount added) | Example D1 | Example D2 | Example D3 | Example D4 | Example D5 | Example D6 | Example D7 |
|---|---|---|---|---|---|---|---|
| Sucrose (g/L) | 10 | 10 | 10 | 10 | 10 | 10 | 10 |
| Glucose (g/L) | 35 | 35 | 35 | 35 | 35 | 35 | 35 |
| RebD (g/L) | 0.208 | 0.208 | 0.208 | 0.208 | 0.208 | 0.208 | 0.208 |
| Sodium gluconate (g/L) | 0 | 0 | 0 | 0.948 | 0.948 | 1.897 | 1.897 |
| Serine (g/L) | 0 | 2.1 | 0 | 2.1 | 0 | 2.1 | 0 |
| Glycine (g/L) | 0 | 0 | 3 | 0 | 3 | 0 | 3 |

| Content | | | | | | | |
|---|---|---|---|---|---|---|---|
| Brix (amount of soluble solid) | 4.29 | 4.54 | 4.62 | 4.63 | 4.77 | 4.75 | 4.87 |
| Sodium (mg/100 g) | ND¹⁾ | ND¹⁾ | ND¹⁾ | 10 | 10 | 19.4 | 19.3 |
| Free serine (mg/100 g) | ND²⁾ | 205 | ND²⁾ | 207 | ND²⁾ | 209 | ND²⁾ |
| Free serine (mM) | - | 20 | - | 20 | - | 20 | - |
| Free glycine (mg/100 g) | ND²⁾ | ND²⁾ | 299 | ND²⁾ | 302 | ND²⁾ | 297 |
| Free glycine (mM) | - | - | 40 | - | 40 | - | 40 |
| Energy (Kcal/100 ml) | 17.2 | 19.0 | 19.7 | 19.3 | 20.3 | 20.2 | 20.7 |

| | | | | | | | |
|---|---|---|---|---|---|---|---|
| *1: ND means "Not Detected", and means that a content of sodium and an amount of free serine or free glycine are respectively 1) a lower limit of quantitation of less than 1.0 mg/100 g and 2) a lower limit of quantitation of less than 1.0 mg/100 g. *2: Each "mM" value of free serine and free glycine is calculated from a value of "mg/100 g" under the assumption that a specific gravity is 1. "-" means that calculation cannot be made. | | | | | | | |

The taste quality improvement effect by serine or glycine, or serine or glycine and sodium was verified by the sensory comparison of taste qualities of these beverage samples. The taste qualities as sensory evaluation items were "total sweetness", "reduced aftertaste of sweetness", "body, thickness", "flavor intensity", "reduced unpleasant tastes (bitterness, astringency, and the like)" and "saltiness" as in Example 1, and were verified by those (4 persons) who received sensory trainings as panelists. Further, sterilization was appropriately carried out before the sensory evaluation.

First, the "sensory evaluation score" with respect to each taste quality of each beverage sample was calculated based on the common taste quality determination criteria possessed by panelists due to routine trainings.

### Results

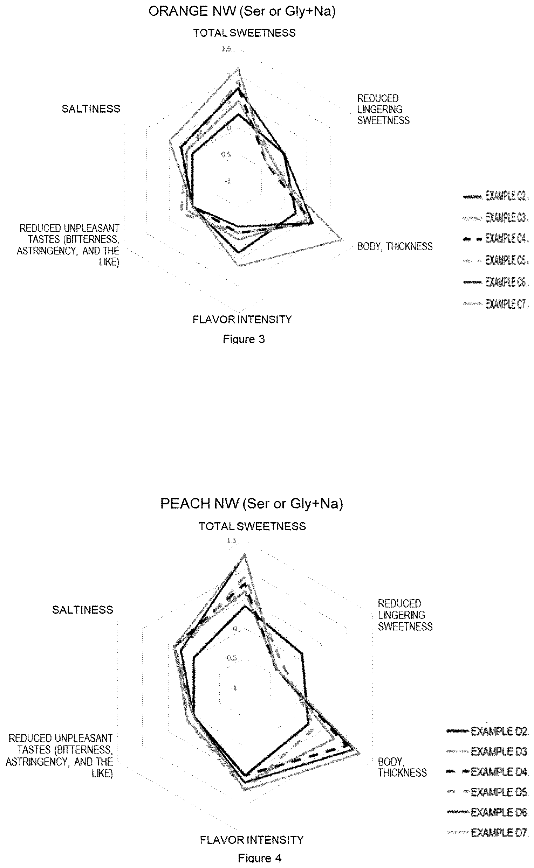

An average value of sensory evaluation score of each taste quality is shown in Tables 12 and 13 and Figures 3 and 4.

| Table 12 | Example C2 | Example C3 | Example C4 | Example C5 | Example C6 | Example C7 |
|---|---|---|---|---|---|---|
| Total sweetness | 0.25 | 0.5 | 0.75 | 0.875 | 0.75 | 1.125 |
| Reduced aftertaste of sweetness | 0 | -0.25 | -0.375 | -0.25 | 0 | -0.375 |
| Body, thickness | 0.25 | 0.5 | 0.625 | 0.625 | 0.625 | 1.25 |
| Flavor intensity | 0.375 | 0.125 | 0 | 0 | -0.125 | 0.625 |
| Reduced unpleasant tastes (bitterness, astringency, and the like) | 0 | 0.125 | 0 | 0.25 | 0 | 0 |
| Saltiness | 0 | 0.125 | 0.25 | 0.125 | 0.25 | 0.5 |

| Table 13 | Example D2 | Example D3 | Example D4 | Example D5 | Example D6 | Example D7 |
|---|---|---|---|---|---|---|
| Total sweetness | 0.375 | 0.625 | 0.75 | 0.875 | 1.25 | 1.25 |
| Reduced aftertaste of sweetness | 0.125 | -0.375 | -0.375 | -0.25 | -0.375 | -0.375 |
| Body, thickness | 0.25 | 0.75 | 1 | 0.375 | 1.125 | 1.25 |
| Flavor intensity | 0.5 | 0.625 | 0.5 | 0.75 | 0.625 | 0.75 |
| Reduced unpleasant tastes (bitterness, astringency, and the like) | 0 | 0.125 | 0 | 0.125 | 0 | 0 |
| Saltiness | 0 | 0.375 | 0.375 | 0.25 | 0.25 | 0.375 |

### [Example 3] Evaluation on taste quality improvement effects by various sweeteners

### Experiment method

Natural sugar {sucrose (manufactured by Pacific Sugar Mfg. Co., Ltd.), glucose (manufactured by Showa Sangyo Co., Ltd.)}, rebaudioside D (RebD) (purity 95% or more), rebaudioside A (RebA) (purity 99% or more), rebaudioside M (RebM) (purity 98%), mogroside V (Mog V) (purity 97.7%), a luo han guo extract (water-extract of Luo han guo fruit, containing 40 wt% of mogroside V), sodium gluconate (purity 98% or more), and DL-alanine (purity 98% or more) were dissolved in sugar-free peach-flavored water (sodium content: 0 (mg/100 ml), energy: 0 (kcal/100 ml)) in the ratios shown in Tables 14 to 16 below to prepare beverage samples (absorbance at a wavelength of 660 nm: 0.01 or less, ΔE value of transmitted light: 3.5 or less), in the same manner as in Example 1. Examples E1, F1, G1, HI, I1 and J1 were control samples to which neither any amino acid, nor sodium was added.

A content of sodium in each beverage in Tables 14 to 16 was calculated from an amount of sodium gluconate added. Further, a content of free alanine was calculated from an amount of alanine added. An energy (kcal/100 ml) was calculated under the assumption that an energy of each component derived from an acidulant, a flavor, a high-intensity sweetener and sodium was 0 (kcal/100 ml). Brix (amount of soluble solid) was calculated by determining a refractive index of a specimen with a digital refractometer manufactured by Atago Co., Ltd., and performing conversion into wt% of a sucrose liquid corresponding to the value.

**Table 14: Samples containing RebD in different amounts**

| Raw material added (amount added) | Example E1 | Example E2 | Example E3 | Example F1 | Example F2 | Example F3 |
|---|---|---|---|---|---|---|
| Sucrose (g/L) | 10 | 10 | 10 | 10 | 10 | 10 |
| Glucose (g/L) | 35 | 35 | 35 | 35 | 35 | 35 |
| RebD (g/L) | 0.1 | 0.1 | 0.1 | 0.3 | 0.3 | 0.3 |
| Sodium gluconate (g/L) | 0 | 0 | 1.897 | 0 | 0 | 1.897 |
| Alanine (g/L) | 0 | 1.34 | 1.34 | 0 | 1.34 | 1.34 |

| Content | | | | | | |
|---|---|---|---|---|---|---|
| Brix (amount of soluble solid) | 4.25 | 4.43 | 4.63 | 4.21 | 4.36 | 4.57 |
| Sodium (mg/100 g) | 0 | 0 | 20 | 0 | 0 | 20 |
| Free alanine (mg/100 g) | 0 | 134 | 134 | 0 | 134 | 134 |
| Free alanine (mM) | 0 | 15 | 15 | 0 | 15 | 15 |
| Energy (Kcal/100 ml) | 17.0 | 18.2 | 19.0 | 16.8 | 17.9 | 18.8 |

| | | | | | | |
|---|---|---|---|---|---|---|
| *1: A "mM" value of free alanine is calculated from a value of "mg/100 g" under the assumption that a specific gravity is 1. | | | | | | |

**Table 15: Samples containing RebA or RebM**

| Raw material added (amount added) | Example G1 | Example G2 | Example G3 | Example H1 | Example H2 | Example H3 |
|---|---|---|---|---|---|---|
| Sucrose (g/L) | 10 | 10 | 10 | 10 | 10 | 10 |
| Glucose (g/L) | 35 | 35 | 35 | 35 | 35 | 35 |
| RebA (g/L) | 0.208 | 0.208 | 0.208 | 0 | 0 | 0 |
| RebM (g/L) | 0 | 0 | 0 | 0.208 | 0.208 | 0.208 |
| Sodium gluconate (g/L) | 0 | 0 | 1.897 | 0 | 0 | 1.897 |
| Alanine (g/L) | 0 | 1.34 | 1.34 | 0 | 1.34 | 1.34 |

| Content | | | | | | |
|---|---|---|---|---|---|---|
| Brix (amount of soluble solid) | 4.30 | 4.42 | 4.62 | 4.22 | 4.40 | 4.54 |
| Sodium (mg/100 g) | 0 | 0 | 20 | 0 | 0 | 20 |
| Free alanine (mg/100 g) | 0 | 134 | 134 | 0 | 134 | 134 |
| Free alanine (mM) | 0 | 15 | 15 | 0 | 15 | 15 |
| Energy (Kcal/100 ml) | 17.2 | 18.2 | 19.0 | 16.9 | 18.1 | 18.7 |

| | | | | | | |
|---|---|---|---|---|---|---|
| *1: A "mM" value of free alanine is calculated from a value of "mg/100 g" under the assumption that a specific gravity is 1. | | | | | | |

**Table 16: Samples containing MogV or luo han guo extract**

| Raw material added (amount added) | Example I1 | Example I2 | Example I3 | Example J1 | Example J2 | Example J3 |
|---|---|---|---|---|---|---|
| Sucrose (g/L) | 10 | 10 | 10 | 10 | 10 | 10 |
| Glucose (g/L) | 35 | 35 | 35 | 35 | 35 | 35 |
| MogV (g/L) | 0.208 | 0.208 | 0.208 | 0 | 0 | 0 |
| Luo han guo extract (g/L) | 0 | 0 | 0 | 0.208 | 0.208 | 0.208 |
| Sodium gluconate (g/L) | 0 | 0 | 1.897 | 0 | 0 | 1.897 |
| Alanine (g/L) | 0 | 1.34 | 1.34 | 0 | 1.34 | 1.34 |

| Content | | | | | | |
|---|---|---|---|---|---|---|
| Brix (amount of soluble solid) | 4.23 | 4.42 | 4.65 | 4.20 | 4.38 | 4.66 |
| Sodium (mg/100 g) | 0 | 0 | 20 | 0 | 0 | 20 |
| Free alanine (mg/100 g) | 0 | 134 | 134 | 0 | 134 | 134 |
| Free alanine (mM) | 0 | 15 | 15 | 0 | 15 | 15 |
| Energy (Kcal/100 ml) | 16.9 | 18.2 | 19.1 | 16.8 | 18.0 | 19.1 |

| | | | | | | |
|---|---|---|---|---|---|---|
| *1: A "mM" value of free alanine is calculated from a value of "mg/100 g" under the assumption that a specific gravity is 1. | | | | | | |

The taste quality improvement effect by alanine and sodium was verified by the sensory comparison of taste qualities of these beverage samples. The taste qualities as sensory evaluation items were "total sweetness", "reduced aftertaste of sweetness", "body, thickness", "flavor intensity", "reduced unpleasant tastes (bitterness, astringency, and the like)" and "saltiness" as in Example 1, and were verified by those (4 persons) who received sensory trainings as panelists.

First, the "sensory evaluation score" with respect to each taste quality of each beverage sample was calculated based on the common taste quality determination criteria possessed by panelists due to routine trainings.

### Results

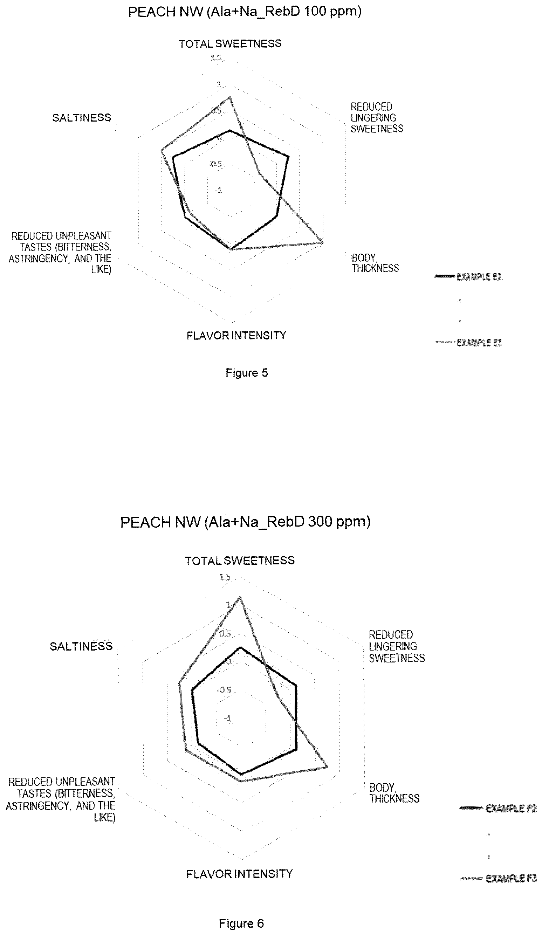

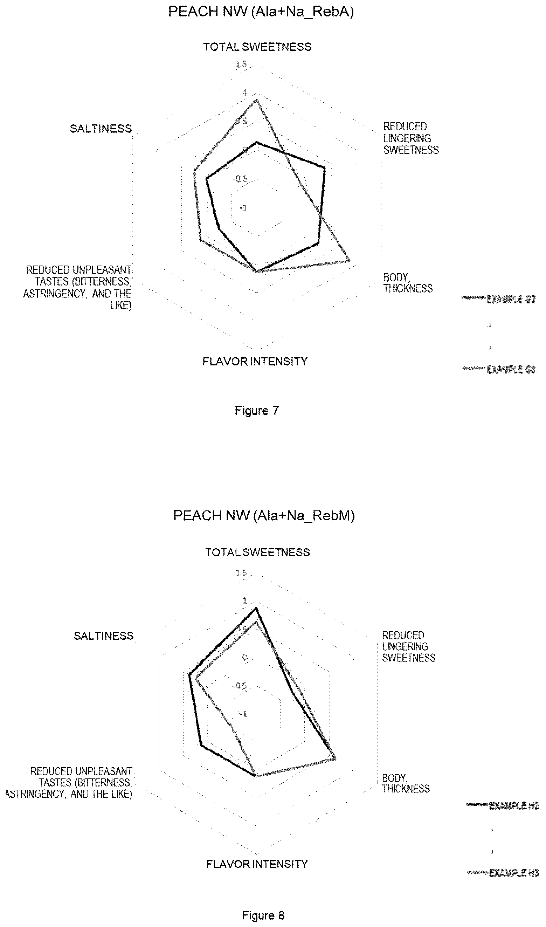

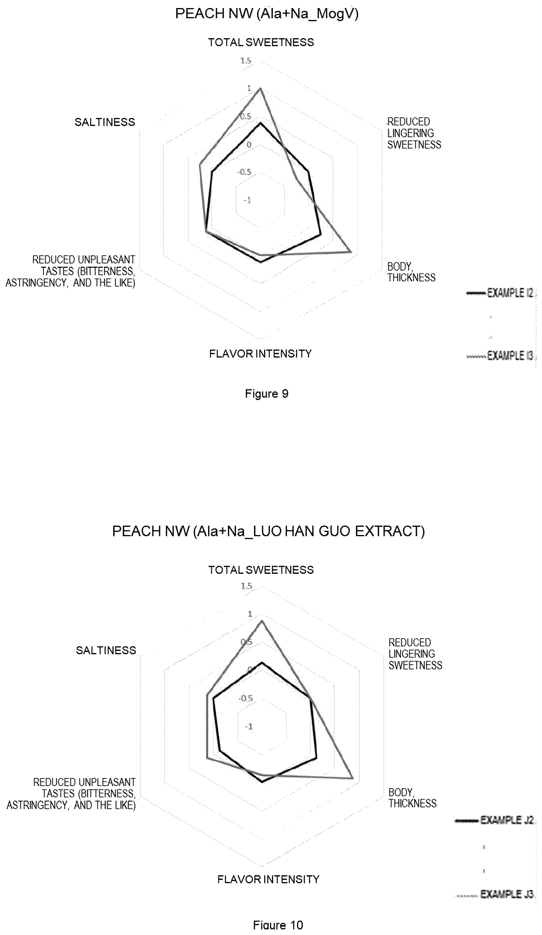

An average value of sensory evaluation score of each taste quality is shown in Tables 17 to 19 and Figures 5 to 10.

**Table 17: Evaluation on samples containing RebD in different amounts**

| | Example E2 | Example E3 | Example F2 | Example F3 |
|---|---|---|---|---|
| Total sweetness | 0.125 | 0.75 | 0.25 | 1.125 |
| Reduced aftertaste of sweetness | 0.25 | -0.375 | 0.125 | -0.25 |
| Body, thickness | 0 | 1 | 0.125 | 0.75 |
| Flavor intensity | 0.125 | 0.125 | 0 | 0.125 |
| Reduced unpleasant tastes (bitterness, astringency, and the like) | 0 | -0.125 | -0.125 | 0.125 |
| Saltiness | 0.25 | 0.5 | 0 | 0.25 |

**Table 18: Evaluation on samples containing RebA or RebM**

| | Example G2 | Example G3 | Example H2 | Example H3 |
|---|---|---|---|---|
| Total sweetness | 0.125 | 0.875 | 0.875 | 0.625 |
| Reduced aftertaste of sweetness | 0.375 | -0.125 | -0.25 | -0.125 |
| Body, thickness | 0.25 | 0.875 | 0.625 | 0.625 |
| Flavor intensity | 0.125 | 0.125 | 0.125 | 0.125 |
| Reduced unpleasant tastes (bitterness, astringency, and the like) | -0.25 | 0.125 | 0.125 | -0.5 |
| Saltiness | 0 | 0.25 | 0.375 | 0.25 |

**Table 19: Evaluation on samples containing MogV or luo han guo extract**

| | Example I2 | Example I3 | Example J2 | Example J3 |
|---|---|---|---|---|
| Total sweetness | 0.375 | 1 | 0.125 | 0.875 |
| Reduced aftertaste of sweetness | 0 | -0.25 | 0 | 0 |
| Body, thickness | 0.25 | 0.875 | 0.125 | 0.875 |
| Flavor intensity | 0.125 | 0 | 0 | -0.125 |
| Reduced unpleasant tastes (bitterness, astringency, and the like) | 0.125 | 0.125 | -0.125 | 0.125 |
| Saltiness | 0 | 0.25 | 0 | 0.125 |

### [Example 4] Effect in beverage containing high-intensity sweetener alone

### Experiment method

Rebaudioside D (RebD) (purity 95% or more), sodium gluconate (purity 98% or more), and DL-alanine (purity 98% or more) were dissolved in sugar-free peach-flavored water (sodium content: 0 (mg/100 ml), energy: 0 (kcal/100 ml)) in the ratios shown in Table 20 below to prepare beverage samples (absorbance at a wavelength of 660 nm: 0.01 or less, ΔE value of transmitted light: 3.5 or less), in the same manner as in Example 1. Example K1 was a control sample to which neither any amino acid, nor sodium was added.

A content of sodium in each beverage in Table 20 was calculated from an amount of sodium gluconate added. Further, a content of free alanine was calculated from an amount of alanine added. An energy (kcal/100 ml) was calculated under the assumption that an energy of each component derived from an acidulant, a flavor, a high-intensity sweetener and sodium was 0 (kcal/100 ml). Brix (amount of soluble solid) was calculated by determining a refractive index of a specimen with a digital refractometer manufactured by Atago Co., Ltd., and performing conversion into wt% of a sucrose liquid corresponding to the value.

**Table 20: Samples containing high-intensity sweetener alone**

| Raw material added (amount added) | Example K1 | Example K2 | Example K3 |
|---|---|---|---|
| RebD (g/L) | 0.208 | 0.208 | 0.208 |
| Sodium gluconate (g/L) | 0 | 0 | 1.897 |
| Alanine (g/L) | 0 | 1.34 | 1.34 |

| Content | | | |
|---|---|---|---|
| Brix (amount of soluble solid) | 0.12 | 0.29 | 0.45 |
| Sodium (mg/100 g) | 0 | 0 | 20 |
| Free alanine (mg/100 g) | 0 | 134 | 134 |
| Free alanine (mM) | 0 | 15 | 15 |
| Energy (Kcal/100 ml) | 0.5 | 1.7 | 2.3 |

| | | | |
|---|---|---|---|
| *1: A "mM" value of free alanine is calculated from a value of "mg/100 g" under the assumption that a specific gravity is 1. | | | |

The taste quality improvement effect by alanine or alanine and sodium was verified by the sensory comparison of taste qualities of these beverage samples. The taste qualities as sensory evaluation items were "total sweetness", "reduced aftertaste of sweetness", "body, thickness", "flavor intensity", "reduced unpleasant tastes (bitterness, astringency, and the like)" and "saltiness" as in Example 1, and were verified by those (4 persons) who received sensory trainings as panelists.

First, the "sensory evaluation score" with respect to each taste quality of each beverage sample was calculated based on the common taste quality determination criteria possessed by panelists due to routine trainings.

### Results

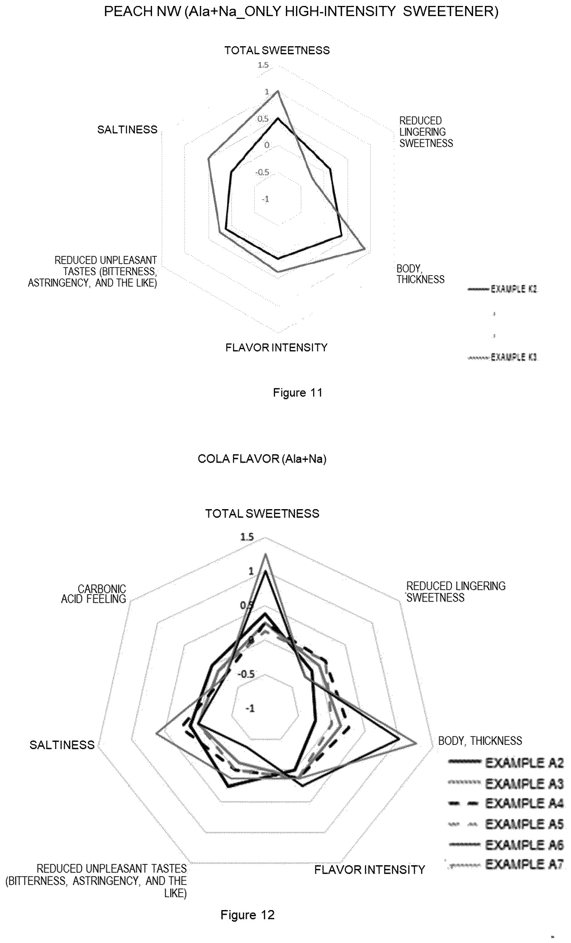

An average value of sensory evaluation score of each taste quality is shown in Table 21 and Figure 11.

**Table 21: Evaluation on samples containing high-intensity sweetener alone**

| | Example K2 | Example K3 |
|---|---|---|
| Total sweetness | 0.5 | 1 |
| Reduced aftertaste of sweetness | 0.125 | -0.25 |
| Body, thickness | 0.375 | 0.875 |
| Flavor intensity | 0.125 | 0.375 |
| Reduced unpleasant tastes (bitterness, astringency, and the like) | 0.125 | 0.25 |
| Saltiness | 0 | 0.5 |

Hereinafter, examples for evaluation on a taste quality improvement effect of the sparkling beverage by an amino acid or an amino acid and sodium will be shown.

First, various measurement methods are shown.

### (Measurement method of amino acid)

Seventeen amino acids of arginine, lysine, histidine, phenylalanine, tyrosine, leucine, isoleucine, valine, alanine, glycine, proline, glutamic acid, serine, threonine, aspartic acid, cystine and methionine were extracted by addition of a 10% sulfosalicylic acid solution to a sample, then a 3 mol/l sodium hydroxide solution was added to adjust a pH to 2.2, then a sodium citrate buffer (pH 2.2) was added for volume fixation, and thus a test solution was adjusted. The test solution was measured with Model L-8900 High-Speed Amino Acid Analyzer (manufactured by Hitachi High-Technologies Corporation). Measurement conditions were as follows.
Column: Hitachi Custom Ion-Exchange Resin, Φ4.6 mm × 60 mm (manufactured by Hitachi High-Technologies Corporation)
Mobile phase: buffer for biological fluid analysis, PF KANTO (PF-1 to PF-4) (Kanto Chemical Co., Inc.)
Reaction liquid: Ninhydrin Coloring Solution Kit for HITACHI (FUJIFILM Wako Pure Chemical Corporation)
Flow rate: mobile phase 0.35 ml/min, reaction liquid 0.30 ml/min
Measurement wavelength: 570 nm (16 types except for proline), 440 nm (proline)

A test solution for tryptophan was adjusted in the same manner as in the above seventeen types, adjusted by an aqueous 3 mol/l sodium hydroxide solution so as to be slightly alkaline, subjected to volume fixation, and thereafter measured with high-performance liquid chromatography (LC-20AD, manufactured by Shimadzu Corporation). Measurement conditions were as follows.
Detector: fluorescence spectrophotometer RF-20A_{XS} (manufactured by Shimadzu Corporation)
Column: CAPCELL PAK C18 AQ, Φ4.6 mm × 250 mm (manufactured by Osaka Soda Co., Ltd.)
Mobile phase: mixed liquid of 20 mmol/1 perchloric acid and methanol (80:20)
Flow rate: 0.7 ml/min
Fluorescence excitation wavelength: 285 nm
Fluorescence measurement wavelength: 348 nm
Column temperature: 40°C

### [Example 5] Evaluation on taste quality improvement effect by alanine or alanine and sodium

### Experiment method

### <Preparation of cola-flavored beverage>

Natural sugar {sucrose (manufactured by Pacific Sugar Mfg. Co., Ltd.), glucose (manufactured by Showa Sangyo Co., Ltd.)}, rebaudioside D (RebD) (purity 95% or more), sodium gluconate (purity 98% or more), and DL-alanine (purity 98% or more) were mixed with an acidulant and a flavor in the ratios shown in Table 22 below to prepare syrups, and the syrups obtained were each sterilized and filled in a PET bottle, and diluted with high-pressure soda water (3.0 kgf/cm²) to 1,000 ml, to prepare each cola-flavored beverage sample. Example A1 was a control sample to which neither alanine, nor sodium was added.

In the present example and subsequent Example 6, a sodium content contained in a beverage was measured by atomic absorption spectrometry with SpectrAA240FS (manufactured by Agilent Technologies Japan, Ltd.). A content of alanine was measured in an analytical institution by use of an amino acid automatic analysis method under the above conditions. An energy (kcal/100 ml) was calculated under the assumption that an energy of each component derived from an acidulant, a flavor, RebD and sodium was 0 (kcal/100 ml). Brix (amount of soluble solid) was calculated by determining a refractive index of a specimen with a digital refractometer manufactured by Atago Co., Ltd., and performing conversion into wt% of a sucrose liquid corresponding to the value.

**Table 22 Cola-flavored beverage**

| Raw material added (amount added) | Example A1 | Example A2 | Example A3 | Example A4 | Example A5 | Example A6 | Example A7 |
|---|---|---|---|---|---|---|---|
| Sucrose (g/L) | 10 | 10 | 10 | 10 | 10 | 10 | 10 |
| Glucose (g/L) | 35 | 35 | 35 | 35 | 35 | 35 | 35 |
| RebD (g/L) | 0.208 | 0.208 | 0.208 | 0.208 | 0.208 | 0.208 | 0.208 |
| Sodium gluconate (g/L) | 0 | 0 | 0 | 0.948 | 0.948 | 1.897 | 1.897 |
| Alanine (g/L) | 0 | 0.89 | 1.34 | 0.89 | 1.34 | 0.89 | 1.34 |

| Content | | | | | | | |
|---|---|---|---|---|---|---|---|
| Brix (amount of soluble solid) | 4.31 | 4.50 | 4.56 | 4.60 | 4.66 | 4.70 | 4.76 |
| Brix (250-fold syrup) (amount of soluble solid) | 10.78 | 11.26 | 11.39 | 11.5 | 11.66 | 11.76 | 11.9 |
| Sodium (mg/100 g) | ND¹⁾ | ND¹⁾ | ND¹⁾ | 9.9 | 10.1 | 19.5 | 19.7 |
| Free alanine(mg/100 g) | ND²⁾ | 89 | 135 | 89 | 134 | 88 | 135 |
| Free alanine (mM) | - | 10 | 15 | 10 | 15 | 10 | 15 |
| Energy (Kcal/100 ml) | 17.2 | 18.4 | 18.7 | 18.8 | 19.1 | 19.3 | 19.5 |

| | | | | | | | |
|---|---|---|---|---|---|---|---|
| *1: ND means "Not Detected", and means that a content of sodium and an amount of free alanine are respectively 1) a lower limit of quantitation of less than 1.0 mg/100 g and 2) a lower limit of quantitation of less than 1.0 mg/100 g. *2: A "mM" value of free alanine is calculated from a value of "mg/100 g" under the assumption that a specific gravity of a beverage is 1. "-" means that calculation cannot be made. | | | | | | | |

### <Preparation of energy drink-flavored beverage>

Natural sugar {sucrose (manufactured by Pacific Sugar Mfg. Co., Ltd.), glucose (manufactured by Showa Sangyo Co., Ltd.)}, rebaudioside D (RebD) (purity 95% or more), sodium gluconate (purity 98% or more), and DL-alanine (purity 98% or more) were mixed with caffeine and a flavor in the ratios shown in Table 23 below to prepare syrups, and the syrups obtained were each sterilized and filled in a PET bottle, and diluted with high-pressure soda water (3.0 kgf/cm²) to 1,000 ml, to prepare each energy drink-flavored beverage sample. Example B1 was a control sample to which neither alanine, nor sodium was added.

Such each energy drink-flavored beverage prepared did not substantially contain any amino acid other than free alanine in an amount shown in Table 23.

**Table 23 Energy drink-flavored beverage**

| Raw material added (amount added) | Example B1 | Example B2 | Example B3 | Example B4 | Example B5 | Example B6 | Example B7 |
|---|---|---|---|---|---|---|---|
| Sucrose (g/L) | 10 | 10 | 10 | 10 | 10 | 10 | 10 |
| Glucose (g/L) | 35 | 35 | 35 | 35 | 35 | 35 | 35 |
| RebD (g/L) | 0.208 | 0.208 | 0.208 | 0.208 | 0.208 | 0.208 | 0.208 |
| Sodium gluconate (g/L) | 0 | 0 | 0 | 0.948 | 0.948 | 1.897 | 1.897 |
| Alanine (g/L) | 0 | 0.89 | 1.34 | 0.89 | 1.34 | 0.89 | 1.34 |

| Content | | | | | | | |
|---|---|---|---|---|---|---|---|
| Brix (amount of soluble solid) | 4.23 | 4.34 | 4.39 | 4.45 | 4.50 | 4.55 | 4.60 |
| Brix (250-fold syrup) (amount of soluble solid) | 10.57 | 10.86 | 10.98 | 11.12 | 11.24 | 11.38 | 11.5 |
| Sodium (mg/100 g) | ND¹⁾ | ND¹⁾ | ND¹⁾ | 9.7 | 9.8 | 19.3 | 19.1 |
| Free alanine (mg/100 g) | ND²⁾ | 88 | 133 | 87 | 133 | 87 | 132 |
| Free alanine (mM) | | 10 | 15 | 10 | 15 | 10 | 15 |
| Energy (Kcal/100 ml) | 16.9 | 17.8 | 18.1 | 18.2 | 18.4 | 18.7 | 18.9 |

| | | | | | | | |
|---|---|---|---|---|---|---|---|
| *1: ND means "Not Detected", and means that a content of sodium and an amount of free alanine are respectively 1) a lower limit of quantitation of less than 1.0 mg/100 g and 2) a lower limit of quantitation of less than 1.0 mg/100 g. *2: A "mM" value of free alanine is calculated from a value of "mg/100 g" under the assumption that a specific gravity of a beverage is 1. "-" means that calculation cannot be made. | | | | | | | |

A sweetness intensity of a low-intensity sweetener satisfies 1 (sucrose content (Brix)) + 3.5 (glucose content (Brix)) × 0.65 (coefficient of degree of sweetness of glucose to sucrose) = 3.275, and a sweetness intensity of RebD satisfies 0.0208 × 225 = 4.68. Thus, sweetness intensities of a cola-flavored beverage and an energy drink-flavored beverage, to which Na and an amino acid were not added, were each 7.955.

### <Evaluation>

The taste quality improvement effect by alanine or alanine and sodium was verified by the sensory comparison of taste qualities of these beverage samples. The taste qualities as sensory evaluation items were "total sweetness", "reduced aftertaste of sweetness", "body, thickness", "flavor intensity", "reduced unpleasant tastes (bitterness, astringency, and the like)", "saltiness" and "carbonic acid feeling", and were verified by those (4 persons) who received sensory trainings as panelists. Further, sterilization was appropriately carried out before the sensory evaluation.

First, the "sensory evaluation score" with respect to each taste quality of each beverage sample was calculated based on the common taste quality determination criteria possessed by panelists due to routine trainings.

The "sensory evaluation score" is obtained by numerical conversion of the difference in taste quality from a control sample in a range from -3.0 to +3.0 under the assumption that the degrees of taste qualities in Example A1 and Example B1 (control samples for each beverage sample) are each "0" (standard). The criteria of "sensory evaluation score" with respect to each item are as follows.

### (Sensory evaluation score)

· "+3.0": a taste quality of interest is sensed to be very strong as compared with that of a control sample.
• "+2.0": a taste quality of interest is sensed to be strong as compared with that of a control sample.
• "+1.0": a taste quality of interest is sensed to be slightly strong as compared with that of a control sample.
· "0": a taste quality of interest is the same as that of a control sample.
• "-1.0": a taste quality of interest is sensed to be slightly weak as compared with that of a control sample.
• "-2.0": a taste quality of interest is sensed to be weak as compared with that of a control sample.
• "-3.0": a taste quality of interest is sensed to be very weak as compared with that of a control sample.

In view of the above criteria, for example, when a taste quality was determined to be rated between "+1.0" and "+2.0", scoring was made by 0.5, for example, "+1.5". A higher score of "total sweetness" means a stronger sweetness, a higher score of "reduced aftertaste of sweetness" means a more suppressed aftertaste of sweetness, a higher score of "body, thickness" means increased body and thickness, a higher score of "flavor intensity" means a stronger flavor, and a higher score of "reduced unpleasant tastes (bitterness, astringency, and the like)" means more suppressed unpleasant tastes. A lower store of "saltiness" means more suppressed saltiness, and a higher score and a lower score of "carbonic acid feeling" mean respectively more sharpness and milder.

### Results

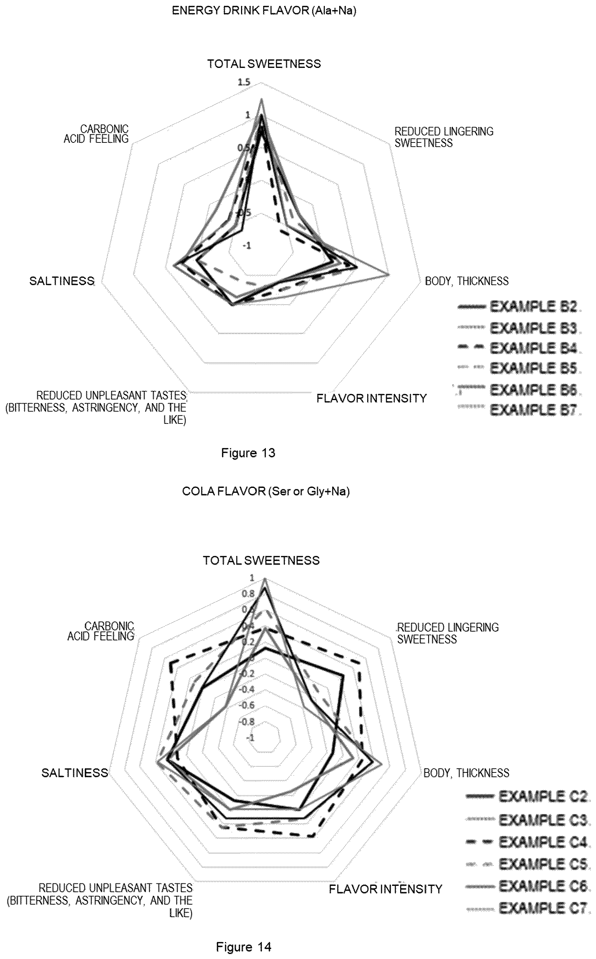

An average score of sensory evaluation on each taste quality is shown in Table 24 (cola flavor) and Table 25 (energy drink flavor) and Figures 12 and 13.

| Table 24 | Example A2 | Example A3 | Example A4 | Example A5 | Example A6 | Example A7 |
|---|---|---|---|---|---|---|
| Total sweetness | 0.375 | 0.25 | 0.25 | 0.125 | 1 | 1.25 |
| Reduced aftertaste of sweetness | -0.125 | 0 | 0.125 | 0.125 | -0.25 | -0.25 |
| Body, thickness | -0.25 | 0.125 | 0.25 | 0 | 1 | 1.25 |
| Flavor intensity | 0 | 0.125 | 0.125 | 0.125 | 0.25 | 0.125 |
| Reduced unpleasant tastes (bitterness, astringency, and the like) | 0.25 | -0.125 | 0 | 0 | -0.375 | 0.125 |
| Saltiness | 0.125 | 0 | 0.25 | 0 | 0 | 0.625 |
| Carbonic acid feeling | 0 | -0.125 | -0.25 | -0.125 | -0.25 | -0.25 |

| Table 25 | Example B2 | Example B3 | Example B4 | Example B5 | Example B6 | Example B7 |
|---|---|---|---|---|---|---|
| Total sweetness | 0.75 | 1 | 0.875 | 1 | 1 | 1.25 |
| Reduced aftertaste of sweetness | -0.25 | -0.25 | -0.625 | -0.375 | -0.5 | -0.5 |
| Body, thickness | 0.125 | 0.25 | 0.375 | 0.5 | 0.5 | 1 |
| Flavor intensity | -0.375 | -0.375 | -0.25 | -0.25 | -0.375 | -0.125 |
| Reduced unpleasant tastes (bitterness, astringency, and the like) | 0 | -0.125 | 0 | -0.375 | 0 | 0 |
| Saltiness | 0 | 0.25 | 0.25 | 0 | 0.375 | 0.375 |
| Carbonic acid feeling | -0.5 | -0.125 | -0.375 | -0.5 | -0.625 | -0.375 |

### [Example 6] Evaluation on taste quality improvement effect by different amino acid or different amino acid and sodium

### Experiment method

### <Preparation of cola-flavored beverage>

Natural sugar {sucrose (manufactured by Pacific Sugar Mfg. Co., Ltd.), glucose (manufactured by Showa Sangyo Co., Ltd.)}, rebaudioside D (RebD) (purity 95% or more), sodium gluconate (purity 98% or more), L-serine (purity 98.5% or more), and glycine (purity 98.5% or more) were mixed with an acidulant and a flavor in the ratios shown in Table 26 below to prepare syrups, and the syrups obtained were each sterilized and filled in a PET bottle, and diluted with high-pressure soda water (3.0 kgf/cm²) to 1,000 ml, to prepare each cola-flavored beverage sample, in the same manner as in Example 5. Example C1 was a control sample to which neither any amino acid, nor sodium was added.

A content of sodium, an energy (kcal/100 ml) and Brix (amount of soluble solid) in each beverage in Table 26 were determined in the same manner as in Example 5. Further, contents of serine and glycine were determined in the same manner as that of alanine in Example 5.

**Table 26 Cola-flavored beverage**

| Raw material added (amount added) | Example C1 | Example C2 | Example C3 | Example C4 | Example C5 | Example C6 | Example C7 |
|---|---|---|---|---|---|---|---|
| Sucrose (g/L) | 10 | 10 | 10 | 10 | 10 | 10 | 10 |
| Glucose (g/L) | 35 | 35 | 35 | 35 | 35 | 35 | 35 |
| RebD (g/L) | 0.208 | 0.208 | 0.208 | 0.208 | 0.208 | 0.208 | 0.208 |
| Sodium gluconate (g/L) | 0 | 0 | 0 | 0.948 | 0.948 | 1.897 | 1.897 |
| Serine (g/L) | 0 | 2.1 | 0 | 2.1 | 0 | 2.1 | 0 |
| Glycine (g/L) | 0 | 0 | 3 | 0 | 3 | 0 | 3 |

| Content | | | | | | | |
|---|---|---|---|---|---|---|---|
| Brix (amount of soluble solid) | 4.40 | 4.64 | 4.76 | 4.74 | 4.86 | 4.84 | 4.96 |
| Brix (250-fold syrup) (amount of soluble solid) | 11.01 | 11.59 | 11.91 | 11.85 | 12.15 | 12.10 | 12.41 |
| Sodium (mg/100 g) | ND¹⁾ | ND¹⁾ | ND¹⁾ | 10.1 | 10.1 | 19.6 | 19.6 |
| Free serine (mg/100 g) | ND²⁾ | 203 | ND²⁾ | 200 | ND²⁾ | 203 | ND²⁾ |
| Free serine (mM) | - | 19 | - | 19 | - | 19 | - |
| Free glycine (mg/100 g) | ND²⁾ | ND²⁾ | 299 | ND²⁾ | 299 | ND²⁾ | 307 |
| Free glycine (mM) | - | - | 40 | - | 40 | - | 41 |
| Energy (Kcal/100 ml) | 17.6 | 19.3 | 20.3 | 19.8 | 20.6 | 20.6 | 21.1 |

| | | | | | | | |
|---|---|---|---|---|---|---|---|
| *1: ND means "Not Detected", and means that a content of sodium and an amount of free serine or free glycine are respectively 1) a lower limit of quantitation of less than 1.0 mg/100 g and 2) a lower limit of quantitation of less than 1.0 mg/100 g. *2: Each "mM" value of free serine and free glycine is calculated from a value of "mg/100 g" under the assumption that a specific gravity is 1. | | | | | | | |

### <Preparation of energy drink-flavored beverage>

Natural sugar {sucrose (manufactured by Pacific Sugar Mfg. Co., Ltd.), glucose (manufactured by Showa Sangyo Co., Ltd.)}, rebaudioside D (RebD) (purity 95% or more), sodium gluconate (purity 98% or more), L-serine (purity 98.5% or more), and glycine (purity 98.5% or more) were mixed with caffeine and a flavor in the ratios shown in Table 27 below to prepare syrups, and the syrups obtained were each sterilized and filled in a PET bottle, and diluted with high-pressure soda water (3.0 kgf/cm²) to 1,000 ml, to prepare each energy drink-flavored beverage sample, in the same manner as in Example 5. Example D1 was a control sample to which neither any amino acid, nor sodium was added.

A content of sodium, an energy and Brix (amount of soluble solid) in each beverage in Table 27 were calculated in the same manner as in Example 5. Contents of serine and glycine were determined in the same manner as that of alanine in Example 5.

Such each energy drink-flavored beverage prepared did not substantially contain any amino acid other than free alanine in an amount shown in Table 27.

**Table 27 Energy drink-flavored beverage**

| Raw material added (amount added) | Example D1 | Example D2 | Example D3 | Example D4 | Example D5 | Example D6 | Example D7 |
|---|---|---|---|---|---|---|---|
| Sucrose (g/L) | 10 | 10 | 10 | 10 | 10 | 10 | 10 |
| Glucose (g/L) | 35 | 35 | 35 | 35 | 35 | 35 | 35 |
| RebD (g/L) | 0.208 | 0.208 | 0.208 | 0.208 | 0.208 | 0.208 | 0.208 |
| Sodium gluconate (g/L) | 0 | 0 | 0 | 0.948 | 0.948 | 1.897 | 1.897 |
| Serine (g/L) | 0 | 2.1 | 0 | 2.1 | 0 | 2.1 | 0 |
| Glycine (g/L) | 0 | 0 | 3 | 0 | 3 | 0 | 3 |

| Content | | | | | | | |
|---|---|---|---|---|---|---|---|
| Brix (amount of soluble solid) | 4.26 | 4.47 | 4.60 | 4.57 | 4.70 | 4.68 | 4.79 |
| Brix (250-fold syrup) (amount of soluble solid) | 10.65 | 11.17 | 11.5 | 11.43 | 11.75 | 11.7 | 11.98 |
| Sodium (mg/100 g) | ND¹⁾ | ND¹⁾ | ND¹⁾ | 10 | 9.9 | 19.5 | 19.6 |
| Free serine (mg/100 g) | ND²⁾ | 205 | ND²⁾ | 203 | ND²⁾ | 204 | ND²⁾ |
| Free serine (mM) | - | 20 | | 19 | | 19 | |
| Free glycine (mg/100 g) | ND²⁾ | ND²⁾ | 302 | ND²⁾ | 300 | ND²⁾ | 300 |
| Free glycine (mM) | | - | 40 | | 40 | | 40 |
| Energy (Kcal/100 ml) | 17.0 | 18.7 | 19.6 | 19.1 | 20.0 | 19.9 | 20.4 |

| | | | | | | | |
|---|---|---|---|---|---|---|---|
| *1: ND means "Not Detected", and means that a content of sodium and an amount of free serine or free glycine are respectively 1) a lower limit of quantitation of less than 1.0 mg/100 g and 2) a lower limit of quantitation of less than 1.0 mg/100 g. *2: Each "mM" value of free serine and free glycine is calculated from a value of "mg/100 g" under the assumption that a specific gravity is 1. | | | | | | | |

A sweetness intensity of a low-intensity sweetener satisfies 1 (sucrose content (Brix)) + 3.5 (glucose content (Brix)) × 0.65 (coefficient of degree of sweetness of glucose to sucrose) = 3.275, and a sweetness intensity of RebD satisfies 0.0208 × 225 = 4.68. Thus, sweetness intensities of a cola-flavored beverage and an energy drink-flavored beverage, to which Na and an amino acid were not added, were each 7.955.

The taste quality improvement effect by serine or glycine, or serine or glycine and sodium was verified by the sensory comparison of taste qualities of these beverage samples. The taste qualities as sensory evaluation items were "total sweetness", "reduced aftertaste of sweetness", "body, thickness", "flavor intensity", "reduced unpleasant tastes (bitterness, astringency, and the like)", "saltiness" and "carbonic acid feeling" as in Example 5, and were verified by those (4 persons) who received sensory trainings as panelists. Further, sterilization was appropriately carried out before the sensory evaluation.

First, the "sensory evaluation score" with respect to each taste quality of each beverage sample was calculated based on the common taste quality determination criteria possessed by panelists due to routine trainings.

### Results

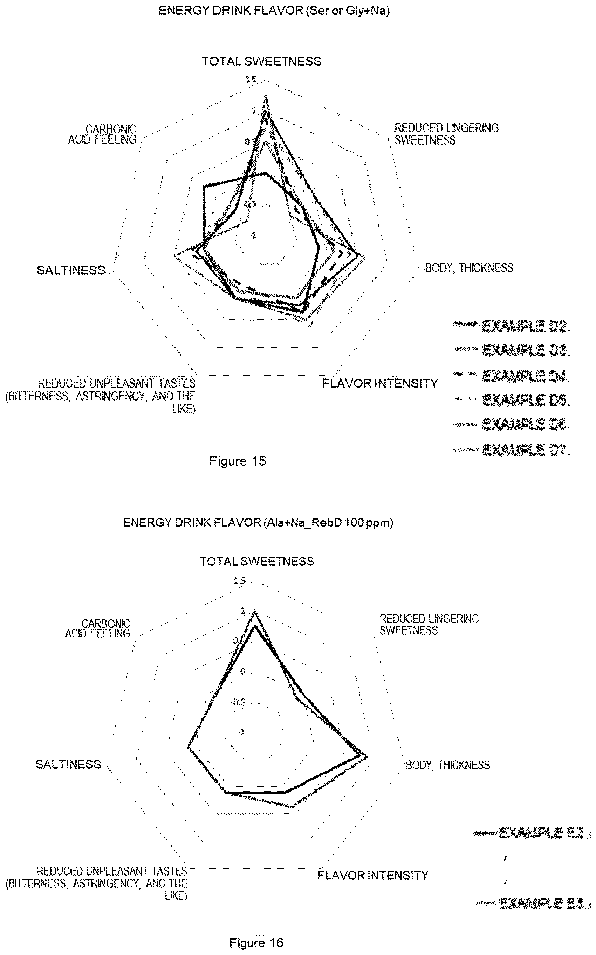

An average value of sensory evaluation score of each taste quality is shown in Tables 28 (cola flavor) and 29 (energy drink flavor) and Figures 14 and 15.

| Table 28 | Example C2 | Example C3 | Example C4 | Example C5 | Example C6 | Example C7 |
|---|---|---|---|---|---|---|
| Total sweetness | 0.125 | 0.375 | 0.375 | 0.625 | 0.875 | 1 |
| Reduced aftertaste of sweetness | 0.25 | -0.25 | 0.5 | -0.125 | -0.25 | -0.375 |
| Body, thickness | -0.125 | 0.125 | 0.25 | 0.375 | 0.375 | 0.5 |
| Flavor intensity | 0 | -0.25 | 0.375 | 0.125 | 0.125 | 0 |
| Reduced unpleasant tastes (bitterness, astringency, and the like) | -0.125 | 0 | 0.25 | 0.25 | 0.125 | 0 |
| Saltiness | 0.25 | 0.25 | 0.125 | 0.375 | 0.25 | 0.375 |
| Carbonic acid feeling | 0 | -0.375 | 0.5 | 0.125 | 0 | -0.375 |

| Table 29 | Example D2 | Example D3 | Example D4 | Example D5 | Example D6 | Example D7 |
|---|---|---|---|---|---|---|
| Total sweetness | 0 | 0.5 | 0.875 | 0.75 | 1 | 1.25 |
| Reduced aftertaste of sweetness | -0.25 | -0.25 | -0.375 | 0 | 0 | -0.5 |
| Body, thickness | -0.125 | 0.125 | 0.25 | 0.375 | 0.5 | 0.625 |
| Flavor intensity | 0.375 | 0.125 | 0.375 | 0.625 | 0.25 | 0.5 |
| Reduced unpleasant tastes (bitterness, astringency, and the like) | 0.125 | 0 | -0.125 | 0 | 0.125 | 0.125 |
| Saltiness | 0 | 0 | 0.25 | 0.125 | 0.125 | 0.5 |
| Carbonic acid feeling | 0.25 | -0.25 | -0.375 | -0.25 | -0.375 | -0.625 |

### [Example 7] Evaluation on taste quality improvement effects by various sweeteners

### Experiment method

Natural sugar {sucrose (manufactured by Pacific Sugar Mfg. Co., Ltd.), glucose (manufactured by Showa Sangyo Co., Ltd.)}, rebaudioside D (RebD) (purity 95% or more), rebaudioside A (RebA) (purity 99% or more), rebaudioside M (RebM) (purity 94% or more), mogroside V (Mog V) (purity 65% or more), a luo han guo extract (water-extract of Luo han guo fruit, containing 30 wt% or more of mogroside V), sodium gluconate (purity 98% or more), and DL-alanine (purity 98% or more) were mixed with caffeine and a flavor in the ratios shown in Tables 30 to 32 below to prepare syrups, and the syrups obtained were each sterilized and filled in a PET bottle, and diluted with high-pressure soda water (3.0 kgf/cm²) to 1,000 ml, to prepare each energy drink-flavored beverage sample, in the same manner as in Example 5. Examples E1, F1, G1, HI, I1 and J1 were control samples to which neither any amino acid, nor sodium was added.

A content of sodium in each beverage in Tables 30 to 32 was calculated from an amount of sodium gluconate added. Further, a content of free alanine was calculated from an amount of alanine added. An energy (kcal/100 ml) was calculated under the assumption that an energy of each component derived from caffeine, a flavor, a high-intensity sweetener and sodium was 0 (kcal/100 ml). Brix (amount of soluble solid) was calculated by determining a refractive index of a specimen with a digital refractometer manufactured by Atago Co., Ltd., and performing conversion into wt% of a sucrose liquid corresponding to the value.

**Table 30: Samples containing RebD in different amounts**

| Raw material added (amount added) | Example E1 | Example E2 | Example E3 | Example F1 | Example F2 | Example F3 |
|---|---|---|---|---|---|---|
| Sucrose (g/L) | 10 | 10 | 10 | 10 | 10 | 10 |
| Glucose (g/L) | 35 | 35 | 35 | 35 | 35 | 35 |
| RebD (g/L) | 0.1 | 0.1 | 0.1 | 0.3 | 0.3 | 0.3 |
| Sodium gluconate (g/L) | 0 | 0 | 1.897 | 0 | 0 | 1.897 |
| Alanine (g/L) | 0 | 1.34 | 1.34 | 0 | 1.34 | 1.34 |

| Content | | | | | | |
|---|---|---|---|---|---|---|
| Brix (amount of soluble solid) | 4.20 | 4.39 | 4.58 | 4.25 | 4.40 | 4.66 |
| Brix (250-fold syrup) (amount of soluble solid) | 10.51 | 10.97 | 11.46 | 10.62 | 11.01 | 11.64 |
| Sodium (mg/100 g) | 0 | 0 | 20 | 0 | 0 | 20 |
| Free alanine (mg/100 g) | 0 | 134 | 134 | 0 | 134 | 134 |
| Free alanine (mM) | 0 | 15 | 15 | 0 | 15 | 15 |
| Energy (Kcal/100 ml) | 16.8 | 18.1 | 18.8 | 17.0 | 18.1 | 19.1 |

| | | | | | | |
|---|---|---|---|---|---|---|
| *1: A "mM" value of free alanine is calculated from a value of "mg/100 g" under the assumption that a specific gravity is 1. | | | | | | |

**Table 31: Samples containing RebA or RebM**

| Raw material added (amount added) | Example G1 | Example G2 | Example G3 | Example H1 | Example H2 | Example H3 |
|---|---|---|---|---|---|---|
| Sucrose (g/L) | 10 | 10 | 10 | 10 | 10 | 10 |
| Glucose (g/L) | 35 | 35 | 35 | 35 | 35 | 35 |
| RebA (g/L) | 0.208 | 0.208 | 0.208 | 0 | 0 | 0 |
| RebM (g/L) | 0 | 0 | 0 | 0.208 | 0.208 | 0.208 |
| Sodium gluconate (g/L) | 0 | 0 | 1.897 | 0 | 0 | 1.897 |
| Alanine (g/L) | 0 | 1.34 | 1.34 | 0 | 1.34 | 1.34 |

| Content | | | | | | |
|---|---|---|---|---|---|---|
| Brix (amount of soluble solid) | 4.26 | 4.38 | 4.56 | 4.29 | 4.41 | 4.58 |
| Brix (250-fold syrup) (amount of soluble solid) | 10.64 | 10.94 | 11.41 | 10.73 | 11.03 | 11.46 |
| Sodium (mg/100 g) | 0 | 0 | 20 | 0 | 0 | 20 |
| Free alanine (mg/100 g) | 0 | 134 | 134 | 0 | 134 | 134 |
| Free alanine (mM) | 0 | 15 | 15 | 0 | 15 | 15 |
| Energy (Kcal/100 ml) | 17.0 | 18.0 | 18.8 | 17.2 | 18.1 | 18.8 |

| | | | | | | |
|---|---|---|---|---|---|---|
| *1: A "mM" value of free alanine is calculated from a value of "mg/100 g" under the assumption that a specific gravity is 1. | | | | | | |

**Table 32 Samples containing MogV or luo han guo extract**

| Raw material added (amount added) | Example I1 | Example I2 | Example I3 | Example J1 | Example J2 | Example J3 |
|---|---|---|---|---|---|---|
| Sucrose (g/L) | 10 | 10 | 10 | 10 | 10 | 10 |
| Glucose (g/L) | 35 | 35 | 35 | 35 | 35 | 35 |
| MogV (g/L) | 0.208 | 0.208 | 0.208 | 0 | 0 | 0 |
| Luo han guo extract (g/L) | 0 | 0 | 0 | 0.208 | 0.208 | 0.208 |
| Sodium gluconate (g/L) | 0 | 0 | 1.897 | 0 | 0 | 1.897 |
| Alanine (g/L) | 0 | 1.34 | 1.34 | 0 | 1.34 | 1.34 |

| Content | | | | | | |
|---|---|---|---|---|---|---|
| Brix (amount of soluble solid) | 4.24 | 4.38 | 4.58 | 4.25 | 4.40 | 4.60 |
| Brix (250-fold syrup) (amount of soluble solid) | 10.59 | 10.96 | 11.45 | 10.62 | 11.00 | 11.50 |
| Sodium (mg/100 g) | 0 | 0 | 20 | 0 | 0 | 20 |
| Free alanine (mg/100 g) | 0 | 134 | 134 | 0 | 134 | 134 |
| Free alanine (mM) | 0 | 15 | 15 | 0 | 15 | 15 |
| Energy (Kcal/100 ml) | 16.9 | 18.0 | 18.8 | 17.0 | 18.1 | 18.9 |

| | | | | | | |
|---|---|---|---|---|---|---|
| *1: A "mM" value of free alanine is calculated from a value of "mg/100 g" under the assumption that a specific gravity is 1. | | | | | | |

The taste quality improvement effect by alanine or alanine and sodium was verified by the sensory comparison of taste qualities of these beverage samples. The taste qualities as sensory evaluation items were "total sweetness", "reduced aftertaste of sweetness", "body, thickness", "flavor intensity", "reduced unpleasant tastes (bitterness, astringency, and the like)", "saltiness" and "carbonic acid feeling" as in Example 5, and were verified by those (4 persons) who received sensory trainings as panelists.

First, the "sensory evaluation score" with respect to each taste quality of each beverage sample was calculated based on the common taste quality determination criteria possessed by panelists due to routine trainings.

### Results

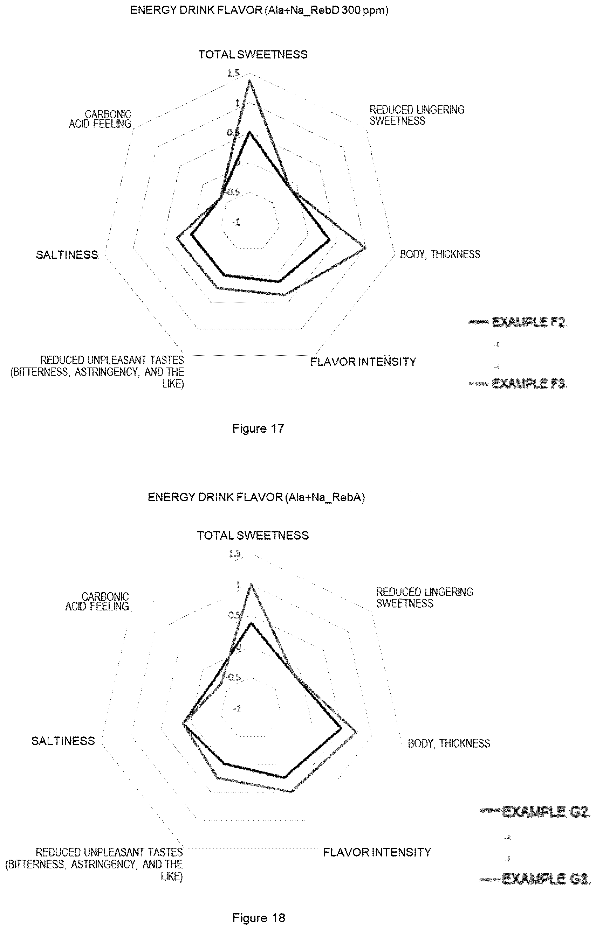

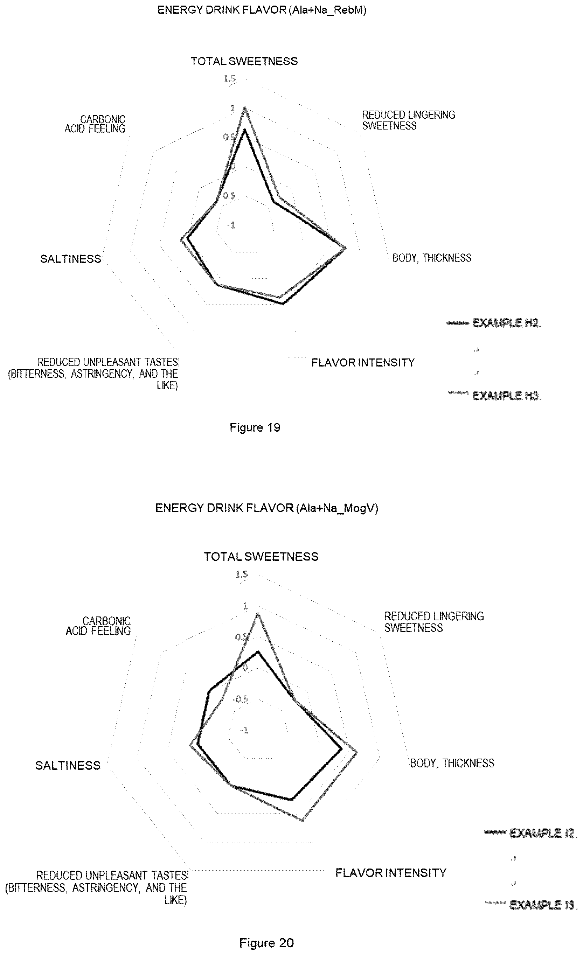

An average value of sensory evaluation score of each taste quality is shown in Tables 33 to 35 and Figures 16 to 21.

**Table 33: Evaluation on samples containing RebD in different amounts**

| | Example E2 | Example E3 | Example F2 | Example F3 |
|---|---|---|---|---|
| Total sweetness | 0.75 | 1 | 0.5 | 1.375 |
| Reduced aftertaste of sweetness | 0 | -0.125 | -0.125 | -0.125 |
| Body, thickness | 0.75 | 0.875 | 0.375 | 1 |
| Flavor intensity | 0.125 | 0.375 | 0.125 | 0.375 |
| Reduced unpleasant tastes (bitterness, astringency, and the like) | 0.125 | 0.125 | 0 | 0.25 |
| Saltiness | 0.125 | 0.125 | 0 | 0.25 |
| Carbonic acid feeling | -0.125 | -0.125 | -0.375 | -0.375 |

**Table 34: Evaluation on samples containing RebA or RebM**

| | Example G2 | Example G3 | Example H2 | Example H3 |
|---|---|---|---|---|
| Total sweetness | 0.375 | 1 | 0.625 | 1 |
| Reduced aftertaste of sweetness | -0.125 | -0.125 | -0.375 | -0.25 |
| Body, thickness | 0.5 | 0.75 | 0.75 | 0.75 |
| Flavor intensity | 0.25 | 0.5 | 0.5 | 0.375 |
| Reduced unpleasant tastes (bitterness, astringency, and the like) | 0 | 0.25 | 0.125 | 0.125 |
| Saltiness | 0.125 | 0.125 | 0 | 0.125 |
| Carbonic acid feeling | -0.25 | -0.375 | -0.375 | -0.375 |

**Table 35: Evaluation on samples containing MogV or luo han guo extract**

| | Example I2 | Example I3 | Example J2 | Example J3 |
|---|---|---|---|---|
| Total sweetness | 0.25 | 0.875 | 0.125 | 0.625 |
| Reduced aftertaste of sweetness | -0.25 | -0.25 | -0.25 | -0.125 |
| Body, thickness | 0.375 | 0.625 | 0.125 | 0.5 |
| Flavor intensity | 0.25 | 0.625 | 0.125 | 0.125 |
| Reduced unpleasant tastes (bitterness, astringency, and the like) | 0 | 0 | -0.125 | -0.25 |
| Saltiness | 0 | 0.125 | 0.125 | 0.25 |
| Carbonic acid feeling | 0 | -0.25 | 0 | -0.25 |

### [Example 8] Effect in beverage containing high-intensity sweetener alone

### Experiment method

Rebaudioside D (RebD) (purity 95% or more), sodium gluconate (purity 98% or more), and DL-alanine (purity 98% or more) were mixed with caffeine and a flavor in the ratios shown in Table 36 below to prepare syrups, and the syrups obtained were each sterilized and filled in a PET bottle, and diluted with high-pressure soda water (3.0 kgf/cm²) to 1,000 ml, to prepare each energy drink-flavored beverage sample, in the same manner as in Example 5. Example K1 was a control sample to which neither any amino acid, nor sodium was added.

A content of sodium in each beverage in Table 36 was calculated from an amount of sodium gluconate added. Further, a content of free alanine was calculated from an amount of alanine added. An energy (kcal/100 ml) was calculated under the assumption that an energy of each component derived from caffeine, a flavor, a high-intensity sweetener and sodium was 0 (kcal/100 ml). Brix (amount of soluble solid) was calculated by determining a refractive index of a specimen with a digital refractometer manufactured by Atago Co., Ltd., and performing conversion into wt% of a sucrose liquid corresponding to the value.

**Table 36: Samples containing high-intensity sweetener alone**

| Raw material added (amount added) | Example K1 | Example K2 | Example K3 |
|---|---|---|---|
| RebD (g/L) | 0.208 | 0.208 | 0.208 |
| Sodium gluconate (g/L) | 0 | 0 | 1.897 |
| Alanine (g/L) | 0 | 1.34 | 1.34 |

| Content | | | |
|---|---|---|---|
| Brix (amount of soluble solid) | 0.08 | 0.22 | 0.42 |
| Brix (250-fold syrup) (amount of soluble solid) | 0.19 | 0.55 | 1.05 |
| Sodium (mg/100 g) | 0 | 0 | 20 |
| Free alanine (mg/100 g) | 0 | 134 | 134 |
| Free alanine (mM) | 0 | 15 | 15 |
| Energy (Kcal/100 ml) | 0.3 | 1.4 | 2.2 |

| | | | |
|---|---|---|---|
| *1: A "mM" value of free alanine is calculated from a value of "mg/100 g" under the assumption that a specific gravity is 1. | | | |

The taste quality improvement effect by alanine or alanine and sodium was verified by the sensory comparison of taste qualities of these beverage samples. The taste qualities as sensory evaluation items were "total sweetness", "reduced aftertaste of sweetness", "body, thickness", "flavor intensity", "reduced unpleasant tastes (bitterness, astringency, and the like)", "saltiness" and "carbonic acid feeling" as in Example 5, and were verified by those (4 persons) who received sensory trainings as panelists.

First, the "sensory evaluation score" with respect to each taste quality of each beverage sample was calculated based on the common taste quality determination criteria possessed by panelists due to routine trainings.

### Results

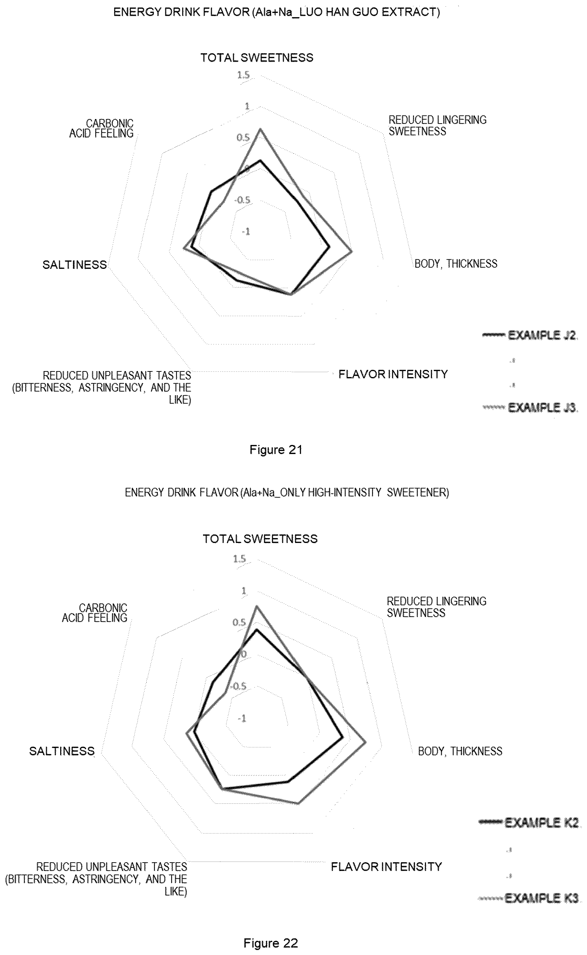

An average value of sensory evaluation score of each taste quality is shown in Table 37 and Figure 22.

**Table 37: Evaluation on samples containing high-intensity sweetener alone**

| | Example K2 | Example K3 |
|---|---|---|
| Total sweetness | 0.375 | 0.75 |
| Reduced aftertaste of sweetness | 0 | 0 |
| Body, thickness | 0.375 | 0.75 |
| Flavor intensity | 0.125 | 0.5 |
| Reduced unpleasant tastes (bitterness, astringency, and the like) | 0.25 | 0.25 |
| Saltiness | 0 | 0.125 |
| Carbonic acid feeling | -0.125 | -0.375 |

## Claims

1. A beverage comprising:
(a) a high-intensity sweetener in an amount corresponding to a sweetness intensity XI, and
(b) an amino acid or a derivative or a salt thereof in an amount less than a taste recognition threshold,
wherein the beverage has a sweetness of a sweetness intensity X3 exhibited by the components (a) and (b), 0.1 < X1 < X3 is satisfied, and the beverage is one selected from a sparkling beverage and flavored water.

2. A beverage comprising:
(a) a high-intensity sweetener in an amount corresponding to a sweetness intensity XI,
(b) an amino acid or a derivative or a salt thereof in an amount less than a taste recognition threshold, and
(c) 6 to 60 mg/100 ml of sodium,
wherein the beverage has a sweetness of a sweetness intensity X2 exhibited by the components (a) to (c), 0.1 < X1 < X2 is satisfied, and the beverage is a sparkling beverage.

3. A beverage comprising:
(a) a high-intensity sweetener in an amount corresponding to a sweetness intensity XI,
(b) an amino acid or a derivative or a salt thereof in an amount less than a taste recognition threshold, and
(c) less than 50 mg/100 ml of sodium,
wherein the beverage has a sweetness of a sweetness intensity X2 exhibited by the components (a) to (c), 0.1 < X1 < X2 is satisfied, and the beverage is flavored water.

4. The beverage according to any one of claims 1 to 3, further comprising a low-intensity sweetener.

5. The beverage according to any one of claims 1 to 4, wherein the amino acid comprises an amino acid selected from a basic amino acid, a neutral amino acid having an alkyl group, an OH group or an amide group on a side chain, and a combination thereof.

6. The beverage according to any one of claims 1 to 5, wherein the amino acid is one or more selected from an amino acid having a molecular weight of 70 to 260.

7. The beverage according to any one of claims 1 to 6, wherein the amino acid comprises an amino acid selected from glycine, alanine, valine, isoleucine, leucine, serine, threonine, glutamine, asparagine, arginine, lysine, histidine, and a combination thereof.

8. The beverage according to any one of claims 1 to 7, wherein an energy is 50 Kcal/100 ml or less.

9. The beverage according to any one of claims 4 to 8, wherein a sweetness intensity of the low-intensity sweetener is 0.1 to 5.9.

10. The beverage according to claim 2, wherein a gas pressure is 2.2 to 4.0 kgf/cm².

11. The beverage according to claim 2 or 10, wherein the beverage is an orange-flavored, lemon-flavored, lime-flavored, grape-flavored, ginger ale-flavored, energy drink-flavored, blackcurrant-flavored or cola-flavored beverage.

12. The beverage according to claim 3, wherein an absorbance at a wavelength of 660 nm of the flavored water is 0.06 or less.

13. The beverage according to claim 3 or 12, wherein a carbon dioxide pressure at 20°C of the flavored water is less than 1.0 kgf/cm².

14. The beverage according to any one of claims 4 to 9, wherein the low-intensity sweetener comprises at least one selected from the group consisting of glucose, sucrose, fructose, maltose, an oligosaccharide, a high-fructose corn syrup, lactose, psicose, allose, tagatose, and a combination thereof.

15. The beverage according to any one of claims 1 to 14, wherein the high-intensity sweetener comprises at least one selected from the group consisting of steviol glycoside, a luo han guo extract, mogrol glycoside, a Thaumataococcus daniellii Benth plant-containing sweet component, a Pentadiplandra brazzeana plant-containing sweet component, an artificial sweetener, and a combination thereof.

16. The beverage according to any one of claims 1 to 15, wherein the high-intensity sweetener comprises at least one selected from the group consisting of rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, Dulcoside A, Dulcoside C, rubusoside, steviol monoside, steviol bioside, stevioside, a luo han guo extract, mogroside V, thaumatin, brazzein, a Glycyrrhiza extract, saccharine, aspartame, acesulfame K, sucralose, and a combination thereof.

17. The beverage according to any one of claims 4 to 16, wherein the beverage comprises one or more amino acids selected from alanine, serine, and glycine, an energy is 50 Kcal/100 ml or less, and the total sweetness intensity of the high-intensity sweetener and the low-intensity sweetener is 6 or more.

18. The beverage according to any one of claims 1 to 17, wherein the beverage is packed in a container.

19. A method for producing the beverage according to any one of claims 1 and 4 to 18, comprising, to a raw material,
(a) adding a high-intensity sweetener in an amount corresponding to a sweetness intensity XI, and
(b) adding an amino acid or a derivative or a salt thereof in an amount less than a taste recognition threshold.

20. A method for producing the beverage according to any one of claims 2 and 4 to 18, comprising, to a raw material,
(a) adding a high-intensity sweetener in an amount corresponding to a sweetness intensity XI,
(b) adding an amino acid or a derivative or a salt thereof in an amount less than a taste recognition threshold, and
(c) adding sodium so that a content of sodium in the beverage is 6 to 60 mg/100 ml.

21. A method for producing the beverage according to any one of claims 3 to 18, comprising, to a raw material,
(a) adding a high-intensity sweetener in an amount corresponding to a sweetness intensity XI,
(b) adding an amino acid or a derivative or a salt thereof in an amount less than a taste recognition threshold, and
(c) adding sodium so that a content of sodium in the beverage is less than 50 mg/100 ml.

22. A concentrate for providing the beverage according to any one of claims 1 and 4 to 18, comprising:
(a) a high-intensity sweetener in an amount corresponding to a sweetness intensity Xla, and
(b) an amino acid or a derivative or a salt thereof in an amount less than 10 fold of a taste recognition threshold.

23. A concentrate for providing the beverage according to any one of claims 2 and 4 to 18, comprising:
(a) a high-intensity sweetener in an amount corresponding to a sweetness intensity Xla,
(b) an amino acid or a derivative or a salt thereof in an amount less than 10 fold of a taste recognition threshold, and
(c) 60 to 600 mg/100 ml of sodium.

24. A concentrate for providing the beverage according to any one of claims 3 to 18, comprising:
(a) a high-intensity sweetener in an amount corresponding to a sweetness intensity Xla,
(b) an amino acid or a derivative or a salt thereof in an amount less than 10 fold of a taste recognition threshold, and
(c) less than 500 mg/100 ml of sodium.
